# EUROPEAN PATENT APPLICATION

(11) **EP 0 770 958 A1**
(43) Date of publication of application: **02.05.1997**
(21) Application number: 96307735.9
(22) Date of filing: 25.10.1996
(51) Int. Cl.: G06F 9/455, G06F 13/10

(54) **WinSock network socket driver subsystem and method for windows emulator running under unix operating system**

(30) Priority: 27.10.1995 US 549372
(71) Applicant: SUN MICROSYSTEMS, INC., Mountain View, CA 94043 (US)
(72) Inventor: Horan, Jeffrey A., Hopkinton, Massachusetts 01748 (US); Karr, Ronald J., North Chelmsford, Massachusetts 01863 (US)
(74) Representative: W.P. Thompson & Co.

(57) **Abstract**

A computer system comprising at least one applications program, a Unix operating system API, and a WinSock socket driver. The applications program performs predetermined processing operations, and issues Windows operating system calls, including WinSock socket calls. The Unix operating system API provides, in response to Unix socket calls, Unix socket services in connection with at least one socket connection to another computer system over a network. The WinSock socket driver receives WinSock socket calls from said applications program and emulates the WinSock socket calls in connection with Unix socket calls to said Unix operating system API. In emulating at least some of the WinSock socket calls, the WinSock socket driver makes use of Unix socket calls at least some of which block, but effectively controls the computer system to execute such calls in a non-blocking manner.

## Description

The present invention relates generally to the field of digital computer systems and more specifically to arrangements for controlling communications among digital computer systems which may communicate over, for example, a network.

In particular, the present invention provides a WinSock network socket driver system and method for use in connection with a Windows emulator running under the Unix operating system program, to provide WinSock socket services to Windows applications programs.

The following references are incorporated herein by reference:-
a) "Windows Sockets: An Open Interface For Network Programming Under Microsoft® Windows™" Version 1.1, 20 January 1993, (hereinafter referred to as "the WinSock specification") attached hereto as a Appendix A; and
b) "The X Toolkit Intrinsics Reference Manual" (O'Reilly & Associates: 1990), copyright page and pages 86-88, 301 and 304 attached hereto as Appendix B.

In modern "enterprise" computing, personal computers and workstations distributed among workers in the enterprise are replacing the previously-used large and expensive, centrally-located and maintained mainframe computer systems. One advantage that mainframe systems have over more modern distributed arrangements, however, is that, since they are centrally-located, they more easily provide for sharing of data and programs, which can be important in an enterprise environment. To facilitate program and data sharing among personal computers and workstations, networks have been developed over which one personal computer or workstation can make use of data and programs on another "remote" device, in general by causing the data and programs to be "downloaded," that is, transferred to it for processing.

A number of network communication paradigms have been developed to help facilitate communications over a network, including, for example, virtual circuits, "sockets" or the like. Using such paradigms, an applications program executing on one computer system may transmit data to, or receive data from, another computer system over the network merely by referencing an underlying virtual circuit or socket. The network operating system will receive the data and perform the actual transfer. Indeed, the applications program may not even need to be aware that the data is being transferred to, or received from, another computer system.

A number of operating system programs may be used in the various computer systems connected to a network, including the well-known Unix operating system program and the Microsoft Windows operating system program. The socket network transfer paradigm was developed by the University of California at Berkeley, and have been popularized in its Berkeley Software Distribution ("BSD"). The BSD Unix Sockets paradigm defines a number of function calls which allow an applications program to control and access a number of network events. A similar socket paradigm has been developed for Windows, identified as "WinSock", which includes the Unix socket calls and a number of additional calls (Windows "extensions") provided to allow applications programs to have message-based, asynchronous access to a variety of network events. A number of the BSD Unix socket calls are "blocking," that is, when an applications program issues a socket call, the applications program does not receive the results until the operation requested in the call has been completed. A number of the socket calls may take an arbitrary period of time to complete. In connection with Windows, however, it is preferable that the WinSock calls be performed in a non-blocking manner.

### SUMMARY OF THE INVENTION

The invention provides a new and improved WinSock network socket driver system and method for use in connection with a Windows emulator operating under the Unix operating system program, to provide WinSock socket services for Windows applications programs operating under the Windows emulator.

In brief summary, in one aspect the invention provides a computer system comprising at least one applications program, a Unix operating system API, and a WinSock socket driver. The applications program performs predetermined processing operations, and issues Windows operating system calls, including WinSock socket calls. The Unix operating system API providing, in response to Unix socket calls, Unix socket services in connection with at least one socket connection to another computer system over a network. The WinSock socket driver receives WinSock socket calls from said applications program and emulates the WinSock socket calls in connection with Unix socket calls to said Unix operating system API.

In another aspect, the invention provides a non-pre-emptive multi-tasking emulator, for use in connection with a computer, for emulating a blockable call issued by an applications program. The blockable call has a duration parameter which specifies a duration over which a specified operation to be performed. The blockable call blocks other operations for the duration while the blockable call is being executed. The emulator emulates the blockable call in a non-blocking manner. The emulator comprises a timer, a blockable call issuer and a non-blockable iteration control element. The timer enables generation ofa timing indication at the end of a timing interval corresponding to the duration specified by the duration parameter. The blockable call issuer issues the blockable call with a duration parameter specifying an instantaneous duration thereby enabling the specified operation to be performed instantaneously. Finally, the non-blockable iteration control element, in a series of iterations, enables the blockable call issuer to issue the blockable call until the timer generates the timing indication. The non-blockable control element is non-pre-emptively interruptible during each iteration, at least while the blockable call is not being executed, thereby to provide for the non-blocking emulation of the otherwise blockable call.

The present invention will now be further described, by way of example, with reference to the accompanying drawings, in which:-
FIG. 1 depicts an illustrative computer system incorporating a network socket driver arrangement in accordance with the invention;
FIG. 2 schematically represents a functional block diagram of the network socket driver in relation to other functional elements of the computer system depicted in FIG. 1; and
FIGs. 3 and 4 depict flow diagrams illustrating operations performed by the network socket driver, which are useful in understanding the invention.

### DETAILED DESCRIPTION OF AN ILLUSTRATIVE EMBODIMENT

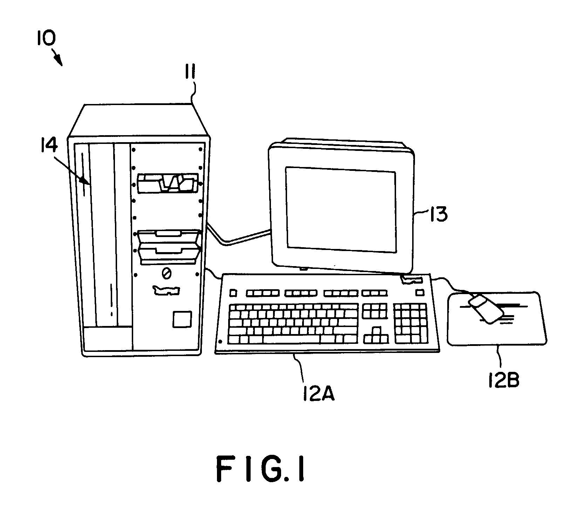

FIG. 1 depicts an illustrative computer system 10 constructed in accordance with the invention. With reference to FIG. 1, the computer system 10 in one embodiment includes a processor module 11 and operator interface elements comprising operator input components such as a keyboard 12A and/or a mouse 12B (generally identified as operator input element(s) 12) and an operator output element such as a video display device 13. The illustrative computer system 10 is of the conventional stored-program computer architecture. The processor module 11 includes, for example, processor, memory and mass storage devices such as disk and/or tape storage elements (not separately shown) which perform processing and storage operations in connection with digital data provided thereto. The operator input element(s) 12 are provided to permit an operator to input information for processing. The video display device 13 is provided to display output information generated by the processor module 11 on a screen 14 to the operator, including data that the operator may input for processing, information that the operator may input to control processing, as well as information generated during processing. The processor module 11 generates information for display by the video display device 13 using a so-called "graphical user interface" ("GUI"), in which information for various applications programs is displayed using various "windows." Although the computer system 10 is shown as comprising particular components, such as the keyboard 12A and mouse 12B for receiving input information from an operator, and a video display device 13 for displaying output information to the operator, it will be appreciated that the computer system 10 may include a variety of components in addition to or instead of those depicted in FIG. 1.

In addition, the processor module 11 includes one or more network ports, generally identified by reference numeral 14, which are connected to communication links which connect the computer system 10 in a computer network. The network ports enable the computer system 10 to transmit information to, and receive information from, other computer systems and other devices in the network. In a typical network organized according to, for example, the client-server paradigm, certain computer systems in the network are designated as servers, which store data and programs (generally, "information") for processing by the other, client computer systems, thereby to enable the client computer systems to conveniently share the information. A client computer system which needs access to information maintained by a particular server will enable the server to download the information to it over the network. After processing the data, the client computer system may also return the processed data to the server for storage. In addition to computer systems (including the above-described servers and clients), a network may also include, for example, printers and facsimile devices, digital audio or video storage and distribution devices, and the like, which may be shared among the various computer systems connected in the network. The communication links interconnecting the computer systems in the network may, as is conventional, comprise any convenient information-carrying medium, including wires, optical fibers or other media for carrying signals among the computer systems. Computer systems transfer information over the network by means of messages transferred over the communication links, with each message including information and an identifier identifying the device to receive the message.

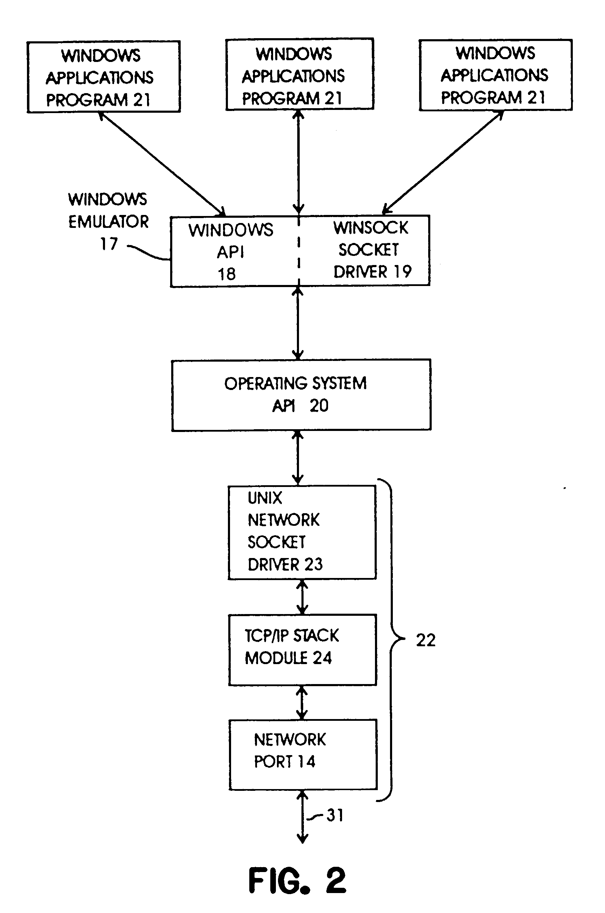

FIG. 2 depicts a functional block diagram of functional elements of the computer system 10 depicted in FIG. 1 useful in understanding the invention. With reference to FIG. 2, an applications programs 21 will initiate and engage in a communications session over the network by making appropriate calls through a Windows emulator 17, in particular to the Windows socket driver constructed in accordance with the invention. The applications programs 21 are conventional applications programs which run under the Microsoft Windows operating system program ("Windows™"), and the computer system 10 itself, instead of running Windows, runs the well-known Unix operating system program. In one embodiment, the computer system 10 runs Unix with XWindows extensions (hereinafter "Unix/XWindows"). The Windows emulator 17 also provides a Windows applications programming interface ("API") which receives Windows operating system calls from the Windows applications programs 21, processes them and generates Unix/XWindows operating system program calls as appropriate, which it provides to the Unix/XWindows operating system program through its API 20. The Windows emulator 17 further receives appropriate responses from the Unix/XWindows operating system program through the API 20, which it may process for use by the Windows applications program 21.

The Unix operating system program provides a number of operating system services to the Windows emulator, as well as to Unix applications programs (not shown in FIG. 2) which may be processed by the computer system 10, including those described in, for example, Kernighan and Pike, "The Unix Programming Environment", (Prentice-Hall, 1984), and the XWindows extensions are described in a number of publications, including "The X Toolkit Intrinsics Reference Manual" (O'Reilly & Associates: 1990). Illustrative services provided by the operating system program include, for example, receiving operator input from an operator input device, such as keyboard 12A or mouse 12B, for provision to the applications program 21, receiving information from the applications program for display to the operator and displaying it on the display device 13 in one or more windows, and retrieving data from stored on the computer system's storage devices for processing by the applications program and storing processed data thereon. In addition, the operating system program receives network communication session calls from an applications program 21 and provides them to a network path 22, which to handles communications with another computer system (not shown) during the session, and provides responses from the network path 22, which may include data to be processed, to the applications program 21.

The network path 22 includes a Unix network socket driver 23, a TCP/IP stack module 24 and the network port 14. In one embodiment, the network socket driver 23 provides network services in the form of a "socket," which is a well-known paradigm for facilitating communications between pairs of computer systems in a network (see, for example, A. Tanenbaum, Computer Networks, 2d Ed. (Prentice-Hall, 1988), pp. 434-435). A socket facilitates communications over a network between two computer systems which are connected to the network, including handling addressing, message buffering, message flow control, and so forth, to facilitate transfer of messages between pairs of computer systems for particular programs being processed by those computer systems, and provides a uniform interface to which TCP/IP stack modules from various manufacturers can interface. When one applications program 21 has information to be transferred to another applications program on another "remote" computer system, a socket arrangement will ensure that the transferring computer system will provide a message for the information which identifies the computer system as the intended recipient, and further that the message will identify the other applications program as the intended recipient of the information contained in the message.

The TCP/IP stack module 24 provides conventional TCP/IP services in connection with information provided thereto by the network socket driver 23 to be transmitted by the network port 14, and also in connection with messages received by the network port 14. The network port 14 transmits messages over the network communication links generally identified by reference numeral 31, and also receives messages from the network communication links 31 which were transmitted by other devices connected in the network. The network port 14 will determine from the addresses in the message whether the intended recipient for the message is the computer system 10, and if so it will pass the message to the TCP/IP stack module 24 for further handling.

The WinSock socket driver 19 provides emulation services conforming to the specification entitled "Windows Sockets: An Open Interface For Network Programming Under Microsoft Windows™," (hereinafter "the WinSock specification") which specifies the application programming interface ("API") for socket drivers for use in connection with Microsoft Windows™ operating system and applications programs operating thereunder. (The WinSock specification is attached hereto as a Appendix A and incorporated herein by reference.)

The WinSock specification defines an API which includes a number of calls based on a Unix sockets API which has been popularized in the Berkeley Software Distribution ("BSD") developed by the University of California at Berkeley (hereinafter "basic socket calls"), with a number of additional calls (Windows "extensions") provided to allow applications programs to have message-based, asynchronous access to a variety of network events. Services performed by the WinSock socket driver 19 in connection with WinSock calls include, for example, starting a socket connection to another computer system over the network, accepting a socket connection started from another computer system over the network, receiving data from an applications program 21 for transmission over the socket connection (corresponding to a "write" to the socket connection), receiving data from a socket connection for transfer to an applications program (corresponding to a "read" from the socket connection), selecting a socket to check its status, and closing a socket connection. It will be appreciated that the WinSock socket driver 19, in emulating at least some of the WinSock socket calls from a Windows applications program 21, will make calls through the Unix/XWindows operating system program API 20, which, in turn, depending on the call, may also enable the network path 22 to perform selected operations.

In accordance with the invention the WinSock socket driver 19 provides a WinSock API for Windows applications programs 21 which operate under the Unix operating system program with Xwindows extensions. Since the Unix operating system program performs multi-tasking in a pre-emptive manner, blocking in connection with a call by an applications program operating under the Unix operating system program, or Unix with XWindows extensions, does not interfere with operations in connection with other applications programs which may be executed contemporaneously with the calling applications program in a multi-tasked manner. The WinSock socket driver 19 provides emulation services in connection with the basic socket calls (that is, the calls corresponding to the socket calls as defined by BSD's Unix sockets API). A number of the basic socket calls defined by the BSD Unix sockets API are "blocking," that is, when an applications program issues a socket call, a value is not returned to the applications program 21 until the operation requested in the call has been completed. A number of the socket calls may take an arbitrary period of time to complete. The WinSock socket driver 19 emulates the socket calls corresponding to the basic socket calls defined by BSD's Unix sockets API, although it performs them in a non-blocking manner. Since Windows performs multi-tasking in a non-pre-emptive manner, blocking in connection with a call by an applications program operating under Windows can interfere with operations in connection with other applications programs which may be executed contemporaneously with the calling applications programs.

In addition, the WinSock socket driver 19 provides emulation services in connection with the Windows extension operations as defined by the WinSock specification, including a number of operations which are performed which are analogous to the operations which are performed in response to a BSD Unix socket API call which may block, but which will perform the operations in a non-blocking manner. When the WinSock socket driver 19 initiates processing of a Windows extension operation in response to a call from an applications program 21, it (the WinSock socket driver 19) initially provides an acknowledgment value which operates as an asynchronous task handle, or an identifier, which identifies the operation. After receiving the call acknowledgment from the WinSock socket driver 19, the applications program 21 may be able to continue performing its processing operations. When the WinSock socket driver 19 finishes the operation, it provides a notification to the applications program 21 that the operation has completed, along with the information, if any, as requested by the call, or an error indication indicating that an error has occurred in processing the request.

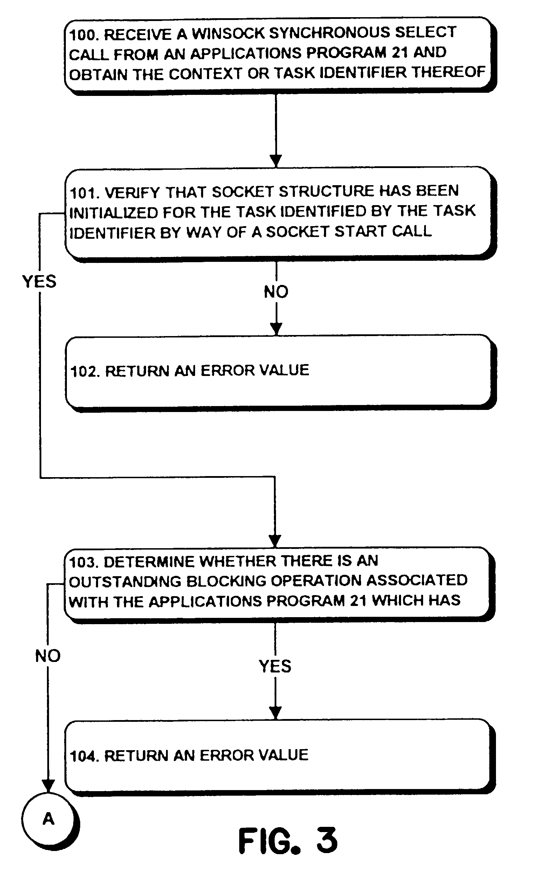

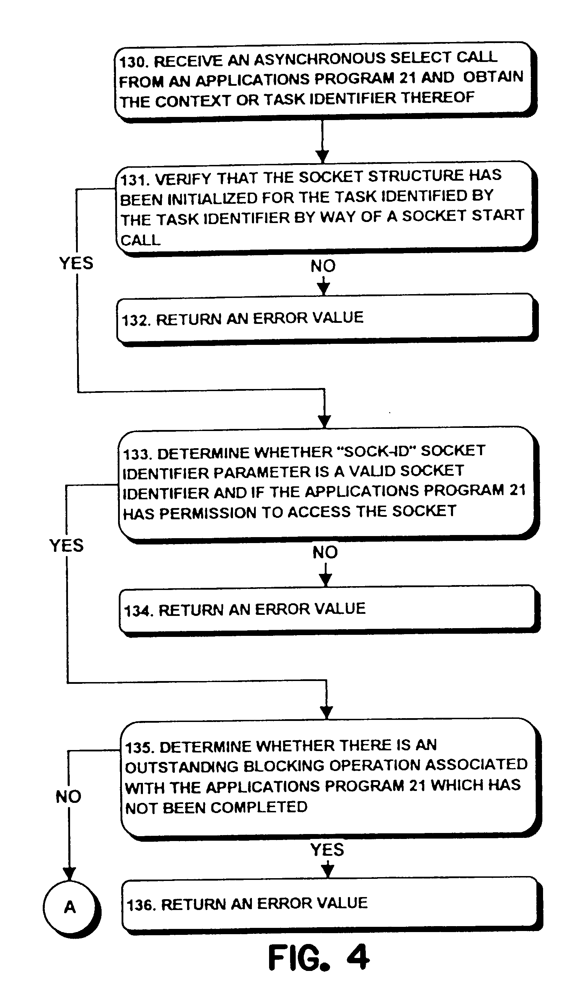

The operations performed by the WinSock socket driver 19 will be illustrated in connection with two WinSock calls which will be described in detail in connection with FIGs. 3 through 3 (CONT. C) and FIGs. 4 through 4 (CONT. C). Both of the calls provide information to a calling applications program as to the status of a socket connection. Generally, for WinSock calls which correspond to the Unix basic socket calls, the Unix/XWindows operating system API 20 is able to perform operations corresponding to those provided by the WinSock calls, although perhaps in a manner which may block, using the Unix/XWindows' call processing elements, and in that case the WinSock socket driver 19 will (a) generate parameters for the Unix basic socket call from parameters provided in the WinSock call and, if necessary, other information available to it, and (b) issue the Unix basic socket call with the parameters so generated to the Unix/XWindows operating system API 20 in a non-blocking manner, perhaps in a series of iterations until a required response is provided by the Unix/XWindows operating system API 20 or the call is cancelled by, for example, the calling applications program 21, On the other hand, for W1nSock calls which do not correspond to the Unix basic socket calls, the WinSock socket driver 19 will process the calls preferably without making use of Unix basic socket calls which may block, although it may make use of non-blocking Unix/XWindows calls.

These will be illustrated in connection with two specific WinSock calls, namely (1) the WinSock Synchronous Select call, which is a Winsock call that corresponds to a Unix basic socket call, and (2) the WinSock Asynchronous Select, which is a WinSock Windows Extension call, both of which will provide information to a calling applications program 21 as to the current status of a socket connection or monitor the socket connection over a period of time for the occurrence of selected events. As will be clear from the following, the WinSock socket driver 19, in executing the WinSock Synchronous Select call, makes use of the Unix Synchronous Select call, which under some circumstances may block, but the driver 19 uses the Unix Synchronous Select call in a "polling" manner to ensure that it does not block. In executing a WinSock Synchronous Select call which enables monitoring over a selected period of time, the WinSock socket driver 19 will make use of a non-blocking Xwindows extension call, namely, an XtAppAddTimeOut() call to the Unix/XWindows operating system API 20, which is described in "The X Toolkit Intrinsics Reference Manual" (OReilly & Associates: 1990), page 88, in Appendix B attached hereto. In response to the XtAppAddTimeOut() call, the Unix/XWindows operating system API 20 will notify the WinSock socket driver 19 at the end ofa selected time interval, identified in the call, following issuance of the call, which the Winsock socket driver may use to determine when the time period over which monitoring is to occur is to end.

On the other hand, in executing the WinSock Asynchronous Select Call, the WinSock socket driver 19 will not make use of a Unix basic socket call, but will make use of a non-blocking XWindows extension call, described below as an XtAppAddInput() call to the Unix/XWindows operating system API 20, which is described in "The X Toolkit Intrinsics Reference Manual" (O'Reilly & Associates: 1990), pages 86-87, in Appendix B attached hereto. In response to the XtAppAddInput() call, the Unix/XWindows operating system API 20 notifies the WinSock socket driver 19 of the occurrence of a particular event in connection with the computer system 10 as specified in a parameter in the XtAppAddInput(), in this case an event related to the socket connection to be monitored.

### 1. WinSock Synchronous Select: Select (rd-sock-ptr, wrt-sock-ptr, exc-sock-ptr, tm-out)

In response to a WinSock Synchronous Select call from an applications program 21, the WinSock socket driver 19 will monitor one or more sockets to determine when particular type(s) of event(s) have occurred. The WinSock Synchronous Select call includes a number of parameters and provides responses similar to a similarly-named Unix Synchronous Select call used in connection with the Berkeley Unix sockets as described above. In particular, the WinSock Synchronous Select call includes parameters including a "rd-sock-ptr" ("read socket pointer") parameter, a "wrt-sock-ptr" ("write socket pointer") parameter, an "exc-sock-ptr" ("exception socket pointer") parameter and a tm-out ("time-out") parameter. The "rd-sock-ptr" (read socket pointer) parameter comprises a pointer to a table which contains identifier(s) of one or more socket(s) which the WinSock socket driver 19 is to determine is "readable," that is, that it has data to be provided to the applications program. Similarly, the "wrt-sock-ptr" (write socket pointer) parameter comprises a pointer to a table which contains identifier(s) of one or more socket(s) which the WinSock socket driver 19 is to verify for writeability, that is, that the socket connection has been established and can accept data for transmission. The "exc-sock-ptr" (exception socket pointer) parameter comprises a pointer to a table which contains identifier(s) of one or more sockets which the WinSock socket driver 19 is to be checked for errors or other exception conditions, such as unexpected or "out-of-band" data. It will be appreciated that any of the "rd-sock-ptr" ("read socket pointer"), the "wrt-sock-ptr" ("write socket pointer") parameter, or the "exc-sock-ptr" ("exception socket pointer") parameter may comprise a null value, in which case the WinSock socket driver 19 is not to perform the readability, writeability or error/exception checking operation, respectively for any socket. The "tm-out" ("time-out") parameter specifies the maximum amount of time the WinSock socket driver 19 will perform monitoring operations in connection with the identified sockets prior to providing a response. If a null value is provided for the "tm-out" parameter, the WinSock socket driver 19 may wait indefinitely until an event occurs in connection with one of the identified sockets. On the other hand, if a zero value is provided for the "tm-out" timeout parameter, the WinSock socket driver 19 will provide an immediate response, in which case the applications program 21 will essentially be using the synchronous Select call to poll the status of the socket(s) identified in the table(s) pointed to by the other parameters.

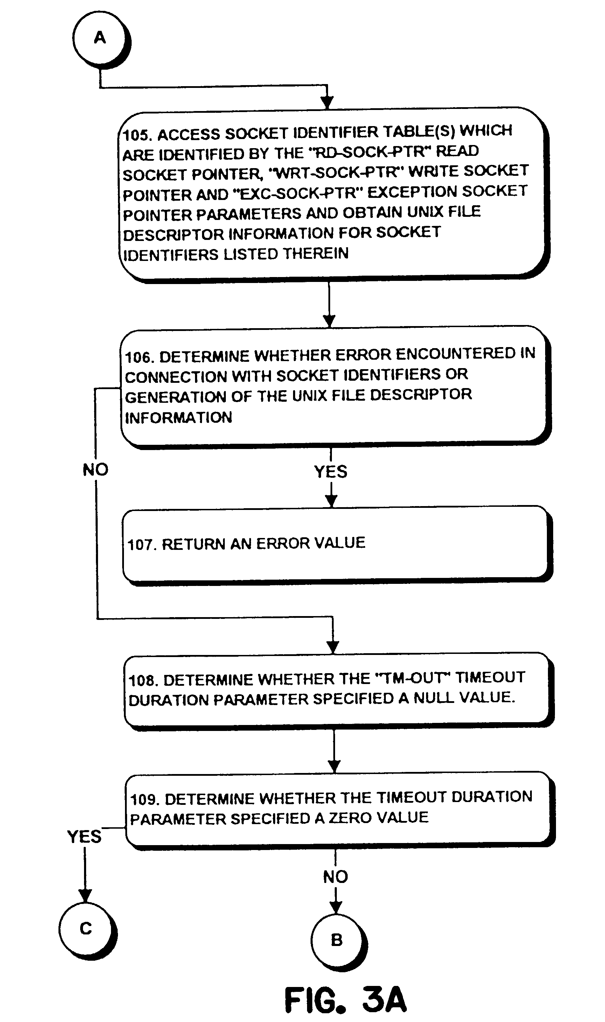

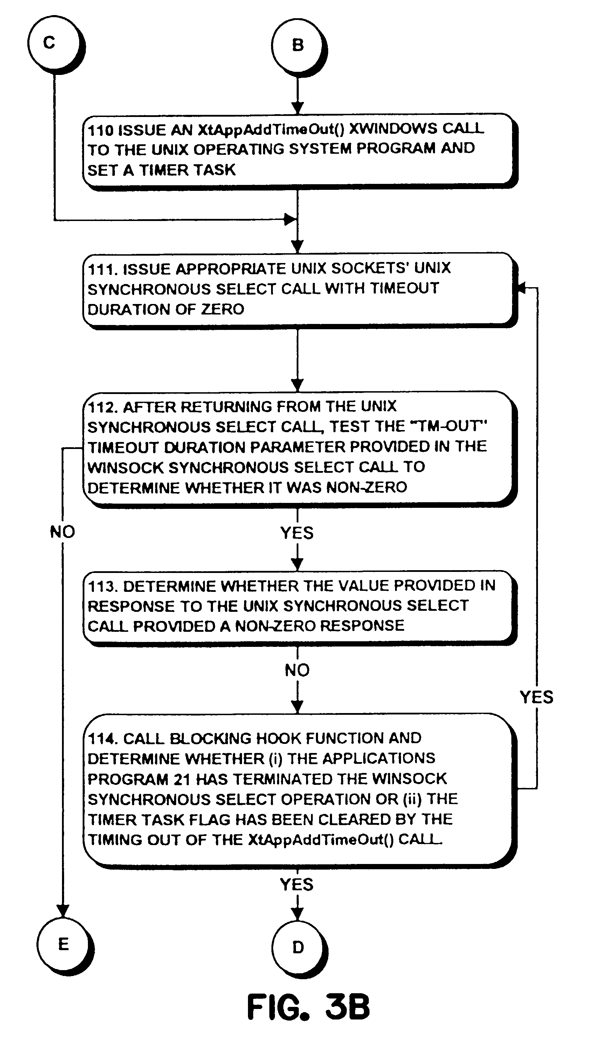

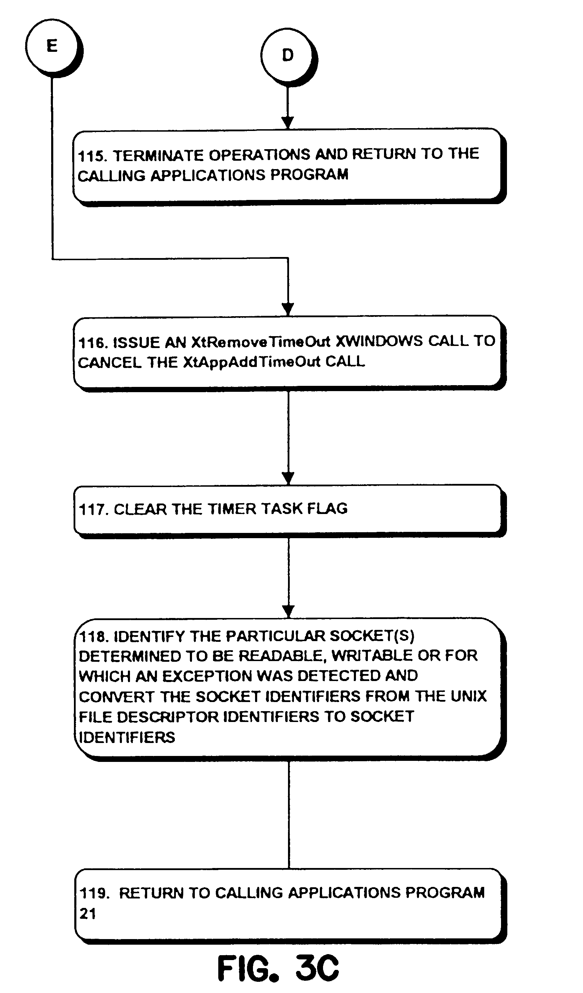

With this background, operations performed by the WinSock socket driver 19 in connection with a WinSock Synchronous Select call will be described in connection with FIGs. 3 through 3 (CONT. C). With reference to FIG. 3, after receiving the WinSock Synchronous Select call, the WinSock socket driver 19 initially obtains the context or task identifier of the current task, that is, the applications program 21, from the operating system program (step 100). Thereafter, the WinSock socket driver 19 performs a number of operations to verify that is permitted to perform the operations required by the WinSock Synchronous Select call. Initially, the WinSock socket driver 19 will determine whether the socket structure has been initialized for the task identified by the task identifier by way of a Socket Start call (step 101), and if not, will return an error value (step 102). If the WinSock socket driver 19 makes a positive determination in step 101, it will sequence to step 103 to determine whether there is an outstanding blocking operation associated with the applications program 21 (step 103), that is, an operation which must be completed before another operation can be performed. If the WinSock socket driver 19 makes a positive determination in step 103, it also will return an error value (step 104).

Returning to step 103, if the WinSock socket driver 19 makes a negative determination in that step (that is, if it determines that there is no outstanding blocking operation for applications program 21), it will sequence to step 105. In that step, the WinSock socket driver 19 accesses the socket identifier table(s) which are identified by the "rd-sock-ptr" read socket pointer, "wrt-sock-ptr" write socket pointer and "exc-sock-ptr" exception socket pointer parameters and uses the socket identifiers in the table(s) to obtain the Unix file descriptor information therefor. In this operation, the WinSock socket driver 19 will determine whether an error is encountered in connection with the socket identifiers or generation of the Unix file descriptor information (step 106), and, if so, it will return an error to the calling applications program 21 (step 107). An error may occur if, for example, the socket identifier values are outside of a selected range or if the calling applications program 21 does not have the right to access the socket.

On the other hand, if the WinSock socket driver 19 determines in step 106 that no error was encountered, it will sequence to step 108 to determine the timeout duration, ifany, as called for by the "tm-out" timeout duration parameter in the WinSock Synchronous Select call. As noted above, the "tm-out" timeout duration parameter may have (i) a value of zero, in which case the WinSock Synchronous Select call has a duration of zero and the call is effectively a poll of the sockets identified in the tables, or (ii) a non-zero value, in which case the call has a duration specified in the call, or alternatively (iii) a value of "null," in which case the WinSock socket driver 19 will continue monitoring until an event occurs or the call is cancelled. In step 108, the WinSock socket driver 19 will initially determine whether the "tm-out" timeout duration parameter specified a null value. If not, the WinSock socket driver 19 will determine whether the timeout value was zero (step 109). If the WinSock socket driver 19 makes a negative determination in step 109 (that is, if the "tm-out" timeout duration parameter specified neither a null value nor a zero value), the WinSock socket driver 19 will issue an XtAppAddTimeOut() XWindows call to the Unix/XWindows operating system API 20, providing the "tm-out" timeout duration parameter to the call, and will set a timer task flag (step 110). In response to the XtAppAddTimeOut() XWindows call, the timer task flag will be reset after a selected time period. It will be appreciated that the timer task flag may also be reset if the Winsock socket driver 19 issues an XtRemoveTimeOut() XWindows call through the Unix/XWindows operating system API 20.

After issuing the XtAppAddTimeOut() call, the WinSock socket driver 19 will use the Unix sockets' Unix Synchronous Select call to determine when a socket identified in the table pointed to by the "rd-sock-ptr" read socket pointer provided in the WinSock Synchronous Select call becomes readable, a socket identified in the table pointed to by the "wrt-sock-ptr" write socket pointer provided in the WinSock Synchronous Select call becomes writeable, or an exception occurs in a socket identified in the table pointed to by the "exc-sock-ptr" exception socket pointer provided in the WinSock Synchronous Select call. To provide that the Unix Synchronous Select call does not block, the WinSock socket driver 19 will issue the Unix Synchronous Select with the "tm-out" timeout parameter set to zero (step 111). In that case, the Unix Synchronous Select call will return immedialely with a value identifying the total number of sockets, if any, which (i) are identified in the table pointed to by the "rd-sock-ptr" read socket pointer provided in the WinSock Synchronous Select call and are readable, or (ii) are identified in the table pointed to by the "wrt-sock-ptr" write socket pointer provided in the WinSock Synchronous Select call and are writeable, or (iii) for which an exception occurs in and are identified in the table pointed to by the "exc-sock-ptr" exception socket pointer provided in the WinSock Synchronous Select call.

After returning from the Unix Synchronous Select call the WinSock socket driver 19 will again test the "tm-out" timeout duration parameter provided in the WinSock Synchronous Select call to determine whether it was non-zero (step 112) to verify that the WinSock Synchronous Select operation is not a polling operation. If the WinSock socket driver 19 makes a positive determination in step 112 (that is, the WinSock synchronous Select operation is not a poll), it then determines whether the value provided in response to the Unix Synchronous Select call provided a non-zero response value (step 113). If the WinSock socket driver 19 makes a negative determination in step 113 (that is, if the Unix Synchronous Select call provided a zero value), it will call a "blocking hook" function, which ensures that the WinSock Synchronous Select call will not block, allowing other applications the opportunity to run, and will determine whether (i) the applications program 21 has terminated the WinSock Synchronous Select operation or (ii) the timer task flag has been cleared by the timing out of the XtAppAddTimeOut() call (step 114). Ifthe WinSock socket driver 19 makes a negative determination in step 114, it will return to step 111 to return to the Unix Synchronous Select call. On the other hand, if the WinSock socket driver 19 makes a positive determination in step 1 14 (that is, if it determines that the calling applications program 21 has terminated the WinSock Synchronous Select operation or that the timer task flag has been cleared), it will terminate operations and return to the calling applications program 21 (step 115).

The WinSock socket driver 19 will repeat the operations described above in connection with steps 111 through 114 through a series of iterations, until it determines in step 114 that the calling applications program 21 has terminated the WinSock Synchronous Select operation or that the timer task flag has been cleared (as described above), or until it determines in step 112 that the Unix synchronous Select call has returned a non-zero value. If the WinSock socket driver 19 determines in step 112 that the Unix Synchronous Select call has returned a non-zero value, it will sequence to a series of steps to generate a WinSock Synchronous Select response to the applications program's WinSock Synchronous Select call. Initially, the WinSock socket driver 19 will issue an XtRemoveTimeOut() call to the Unix/XWindows operating system API 20 to cancel the XtAppAddTimeOut call (step 116) and clear the timer task flag (step 117). Thereafter, the WinSock socket driver 19 will identify the particular socket(s) determined to be readable, writable or for which an exception was detected (step 118), and in that operation, will convert the socket identifiers from the Unix file descriptor identifiers to socket identifiers. The WinSock socket driver 19 will then return to the calling applications program 21, providing a value corresponding to the number of sockets identified in step 116 along with the socket identifiers themselves (step 119).

Returning to step 109, if the WinSock socket driver 19 determines in that step that the WinSock Synchronous Select call's "tm-out" timeout duration parameter was zero, indicating that the Synchronous Select is a poll, it will skip step 110 and sequence directly to step 111 to issue a Unix Synchronous Select call in the same manner as described above, namely, with the timeout parameter set to zero. As described above, the Unix Synchronous Select call will return a value identifying the total number of sockets, if any, which (i) are identified in the table pointed to by the "rd-sock-ptr" read socket pointer provided in the WinSock Synchronous Select call and are readable, or (ii) are identified in the table pointed to by the "wrt-sock-ptr" write socket pointer provided in the WinSock Synchronous Select call and are writeable, or (iii) for which an exception occurs in and are identified in the table pointed to by the "exc-sock-ptr" exception socket pointer provided in the WinSock Synchronous Select call. Following the return from the Unix Synchronous Select call, the WinSock socket driver 19 will determine in step 112 that the "tm-out" timeout duration parameter of the WinSock Synchronous Select call was zero, in which case it will skip steps 113 through 117 and sequence directly to step 117 to clear the timer task flag and identify the particular socket(s) determined to be readable, writable or for which an exception was detected (step 118). The WinSock socket driver 19 will then return to the calling applications program 21, providing a value corresponding to the number of sockets identified in step 111 along with the socket identifiers themselves (step 119).

### 2. Asynchronous Select: "Async Select (sock-id, win-handle, msg, ev-id)"

In response to a WinSock Asynchronous Select call from an applications program 21, the WinSock socket driver 19, after providing the call acknowledgment to the applications program 21, will monitor the socket identified by a "sock-id" ("socket identifier") parameter to determine when a particular type of network event, which is identified by parameter "ev-id" ("event identifier") has occurred. A number of diverse types of network events can be monitored as identified by the "ev-id" event identifier parameter, including a read-readiness event, a write-readiness event, an "out-of-band" data arrival event, an incoming network connection acceptance event, a completed network connection event and a connection close event. The WinSock Asynchronous Select call will provide a positive response in connection with monitoring of the various events if:
(i) in connection with monitoring of a read-readiness event, if the socket identified by the "sock-id" (socket identifier) parameter has data to be transferred to the calling applications program 21;
(ii) in connection with monitoring of a write-readiness event, if the socket identified by the "sock-id" (socket identifier) parameter can receive data from the calling applications program 21 for transmission over the network port 14;
(iii) in connection with monitoring of an out-of-band" data arrival event, if the socket identified by the "sock-id" (socket identifier) parameter has received "out-of-band," or unexpected, data to be transferred to the calling applications program 21;
(iv) in connection with monitoring of an incoming network connection acceptance event, if the socket identified by the "sock-id" (socket identifier) parameter has been set up in response to a socket connection establishment request received from another device connected to the network;
(v) in connection with monitoring of a completed network connection event, if the socket identified by the "sock-id" (socket identifier) parameter has been set up in response to a socket connection establishment request from an applications program 21; and
(vi) in connection with monitoring of close-connection event, if the socket identified by the "sock-id" (socket identifier) parameter has been closed.
(While monitoring of the above-identified network events is specified in the WinSock Specification as attached hereto, it will be appreciated that the WinSock socket driver 19 may additionally or instead monitor a variety of other types of network events in connection with a WinSock Asynchronous Select call.)

When the Winsock socket driver 19 determines that an event of the type "ev-id" has occurred, it provides a message, which corresponds to the "msg" ("message") parameter of the call, to a window identified by the "win-handle" ("window handle") parameter. The window identified by the "win-handle" parameter will, in turn, normally be associated with the applications program 21 which issued the WinSock asynchronous Select call, in which case the provision of the message to the window identified by the "win-handle" parameter the WinSock socket driver 19 constitutes the required response to the applications program 21. If the WinSock socket driver 19 encounters an error while executing the Asynchronous Select call, it will return an error value instead of the message parameter. The WinSock socket driver 19 may encounter an error if it determines that, for example, no socket exists corresponding to the "sock-id" parameter, the applications program 21 does not have access privileges to the socket identified by the "sock-id" parameter, no event corresponds to the "ev-id" parameter, and the like.

As will be described below in detail in connection with FIGs. 4 through 4 (CONT. C), in monitoring the socket to determine when the required type of event has occurred, the WinSock socket driver 19 makes use various calls to the Unix/XWindows calls, in particular an XtAppAddInput(), which is described in "The X Toolkit Intrinsics Reference Manual" (O'Reilly & Associates: 1990), pages 86-87, and an XtRemovelnput() call, which is described at page 301 of The X Toolkit Intrinsics Reference Manual. (Pages 86- 88, 301 and 304 of The X Toolkit Intrinsics Reference Manual are attached hereto as Appendix B and incorporated herein by reference).

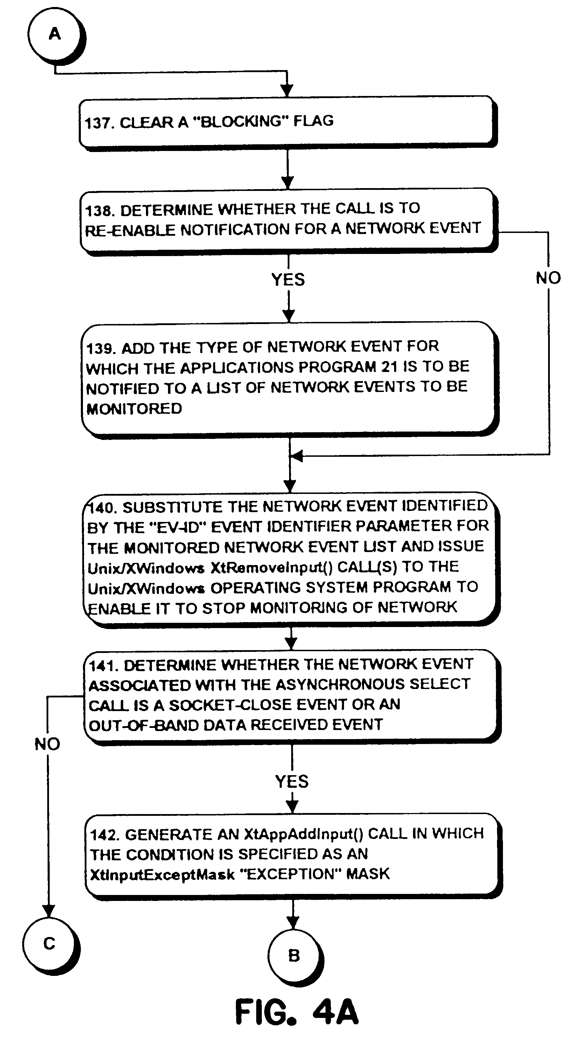

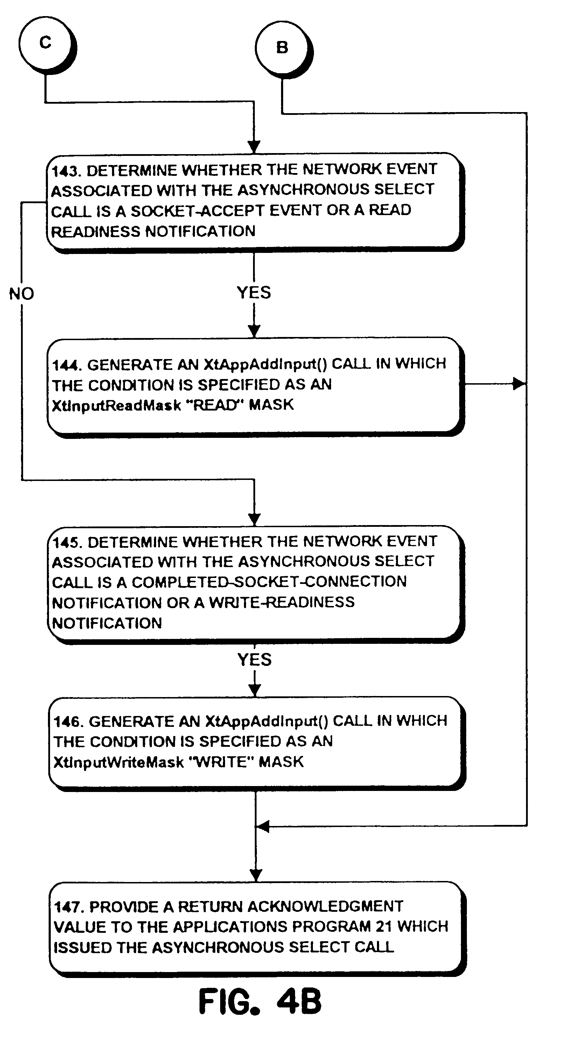

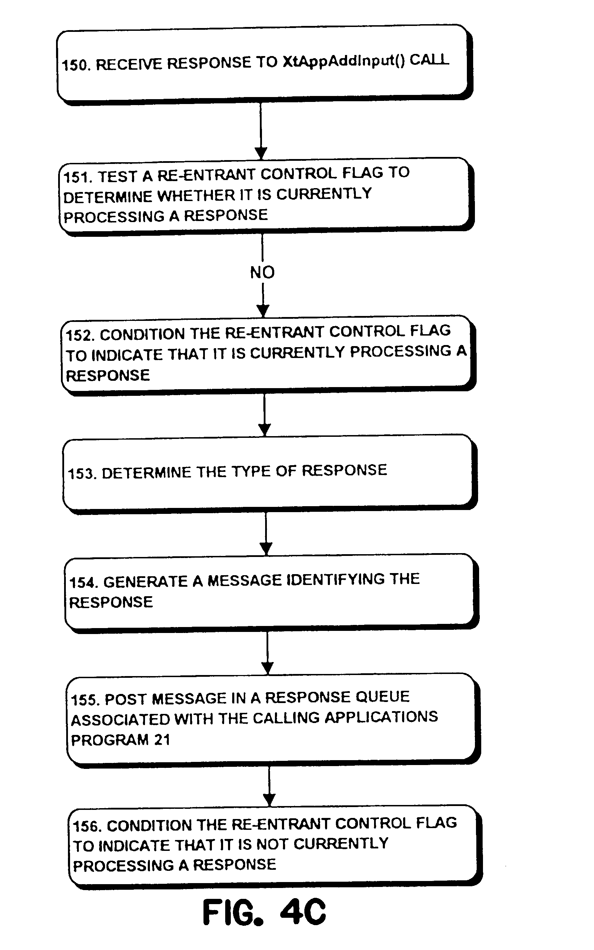

The specific operations performed by the WinSock socket driver 19 in connection with the Asynchronous Select call will be described in detail in connection with the flow chart in FIGs. 4 through 4 (CONT. C). With reference to FIG. 4, after receiving an Asynchronous Select call, the WinSock socket driver 19 initially obtains the context or task identifier of the current task, that is, the applications program 21, from the operating system program (step 130). Thereafter, the WinSock socket driver 19 perform a number of operations to verify that it can perform the operations required by the Asynchronous Select call. Initially, the WinSock socket driver 19 will verify that the socket structure has been initialized for the task identified by the task identifier by way of a Socket Start call (step 131), and if not, will return an error value (step 132). On the other hand, if the WinSock socket driver 19 makes a positive determination in step 131, it will sequence to step 133, in which it determines whether the socket identifier "sock-id" is a valid socket identifier and if the applications program 21 has permission to access the socket. If the WinSock socket driver 19 makes a negative determination in step 133, it will return an error value (step 134). Returning to step 133, if the WinSock socket driver 19 makes a positive determination in that step, that is, if it determines that the applications program 21 has permission to access the socket, it will sequence to step 135, in which it determines whether there is an outstanding blocking operation associated with the applications program 21 which has not been completed. If the WinSock socket driver 19 makes a positive determination in step 135, it will return an error value (step 136).

If the WinSock socket driver 19 makes a negative determination in step 135, it can execute the WinSock asynchronous Select call issued by the applications program 21. In that case, it will sequence to step 137 to clear a BLOCKING flag which it maintains in a socket information data structure. Clearing the BLOCKING flag will ensure that subsequent WinSock calls which are issued by the applications program 21 which may block, will not block while the WinSock Asynchronous Select call is being processed. Thereafter, the WinSock socket driver 19 determines whether the call is to implicitly re-enable notification for a network event (step 138) by one of the re-enabling functions as described on page 90 of the WinSock specification (Appendix A attached hereto). If the WinSock socket driver 19 makes a positive determination in step 138, it adds the type ofnetwork event for which the applications program 21 is to be notified to a list of network events to be monitored (step 139). On the other hand, if the WinSock socket driver 19 makes a negative determination in step 138, it will substitute the network event identified by the "ev-id" event identifier parameter for the monitored network event list and issue Unix/XWindows XtRemoveInput() call(s) to the Unix/XWindows operating system program to enable it to stop monitoring of network events for which monitoring was previously enabled (step 140).

Following step 140, the WinSock socket driver 19 performs a series of steps to register for monitoring of a network event, identified by the "ev-id" event identifier parameter, using the Unix/XWindows XtAppAddlnput() call, with the particular parameters of the XtAppAddInput() call being determined by the type of event which the Asynchronous Select call requested to be monitored. The Unix/XWindows XtAppAddlnput() call provides for five parameters, including a context identifier, a source, a condition, a procedure identifier and client data. The context identifier identifies the context of the calling routine, which, in this case, corresponds to the context identifier of the applications program 21 which issued the Asynchronous Select call. The source parameter identifies the resource whose condition is to be monitored, which in this case corresponds to the socket identified by the "sock-id" socket identifier parameter obtained from the WinSock asynchronous Select call. The condition parameter identifies the condition which is to be monitored in response to the XtAppAddlnput() call; the XtAppAddInput() call will return when the source has the specified condition. The condition parameter corresponds to the ev-id event identifier parameter of the Asynchronous Select call. The procedure identifier identifies the procedure to be called when the condition is satisfied, and corresponds to an identifier which identifies the portion of the Asynchronous Select call processing routine that is to receive the return value from the XtAppAddInput () routine. Finally, the client data parameter identifies the data which the XtAppAddInput() call will provide to the procedure identified by the procedure identifier when the condition identified by the condition identifier is satisfied. The client data parameter in one embodiment is a function of the socket identifier incremented by a value which differs among the various conditions to be monitored.

As described above, following step 140, the WinSock socket driver 19 performs a series of steps to register for a callback using the XWindows XtAppAddInput() call, with the particular parameters of the XtAppAddInput() call being determined by the type of event which the Asynchronous Select call requested to be monitored. In particular, the WinSock socket driver 19 will initially determine whether the network event associated with the Asynchronous Select call is a socket-close event or an out-of-band data received event (step 141). In response to a positive determination in step 141, the WinSock socket driver 19 will generate an XtAppAddInput() call in which the condition is specified as an XtInputExceptMask "exception" mask (step 142). On the other hand, if the WinSock socket driver 19 makes a negative determination in step 141, it will sequence to step 143 to determine whether the network event associated with the Asynchronous Select call is a socket-accept event or a read readiness notification. In response to a positive determination in step 143, the WinSock socket driver 19 will generate an XtAppAddInput() call in which the condition is specified as an XtInputReadMask "read" mask (step 144). If the WinSock socket driver 19 makes a negative determination in step 143, it will sequence to step 145 to determine whether the network event associated with the Asynchronous Select call is a completed-socket-connection notification or a write-readiness notification. In response to a positive determination in step 145, the WinSock socket driver 19 will generate an XtAppAddInput() call in which the condition is specified as an XtInputWriteMask "write" mask (step 146).

Following step 142, 144 or 146, or following step 145 if the WinSock socket driver 19 makes a negative determination in that step, the WinSock socket driver 19 returns to the applications program 21 which issued the Asynchronous Select call, providing a return value which identifies the return as an acknowledgment to the Asynchronous Select call (step 147).

Following step 147, the WinSock socket driver 19 will perform no further operations in connection with the Asynchronous Select call until it receives a response from the XtAppAddInput() call. It will be appreciated that it may perform operations in connection with other calls from the same or other applications programs 21, including other Asynchronous Select calls. In addition, it may cancel the monitoring operation by the XtAppAddInput() call by issuing an XtRemovelnput call in response to a subsequent Asynchronous Select call as described above in connection with step 140 as described above.

However, if the Unix/XWindows XtAppAddlnput() call provides a response to the WinSock socket driver 19 before the WinSock socket driver 19 cancels the monitoring operation, the WinSock socket driver 19 receives the response (step 150). Initially, the WinSock socket driver 19 will test a reentrant control flag to determine whether it is currently processing a response (step 151). If the WinSock socket driver 19 makes a positive determination in step 151, it returns, in which case it will not accept the response from the Unix/XWindows XtAppAddlnput() call at that point. The operating system program will attempt to provide the response to the Unix/XWindows XtAppAddInput() call response at a later point.

If the WinSock socket driver 19 makes a negative determination in step 151, it is not currently processing a response to the XtAppAddInput() call. In that case, the WinSock socket driver 19 will sequence to step 152 to condition the re-entrant control flag to indicate that it is currently processing a response, and sequence to a series of steps to process the response and provide it to the applications program 21. As described above, the response provided by the XtAppAddInput() call corresponds to the client data parameter provided in the call itself, which in turn, identifies the type of socket event being monitored by the Unix/XWindows XtAppAddInput() call. Accordingly, after receiving the response, the WinSock socket driver 19 will determine the type of response (step 153), and will generate a message idenfifiing the response (step 154) and post it in a response queue associated with the calling applications program 21 (step 155). Thereafter, the WinSock socket driver 19 will condition the reentrant control flag to indicate that it is not currently processing a response, to enable it (the WinSock socket driver 19) to process another XtAppAddlnput() call (step 156).

While the operations performed by the WinSock socket driver 19 in performing non-blocking calls defined by the WinSock API in connection with the Unix/XWindows operating system program have been illustrated in connection with only two WinSock calls, namely the WinSock Synchronous Select call and the WinSock Asynchronous Select call, it will be appreciated that it may execute other calls in a similar manner.

The invention provides a number of advantages. In particular, it provides a WinSock socket driver 19 that performs function calls under the Unix operating system program as defined by the WinSock specification in a non-blocking manner, as is preferred in connection with Windows application programming.

The foregoing description has been limited to a specific embodiment of this invention. It will be apparent, however, that various variations and modifications may be made to the invention, with the attainment of some or all of the advantages of the invention. It is the object of the appended claims to cover these and such other variations and modifications as come within the true spirit and scope of the invention.

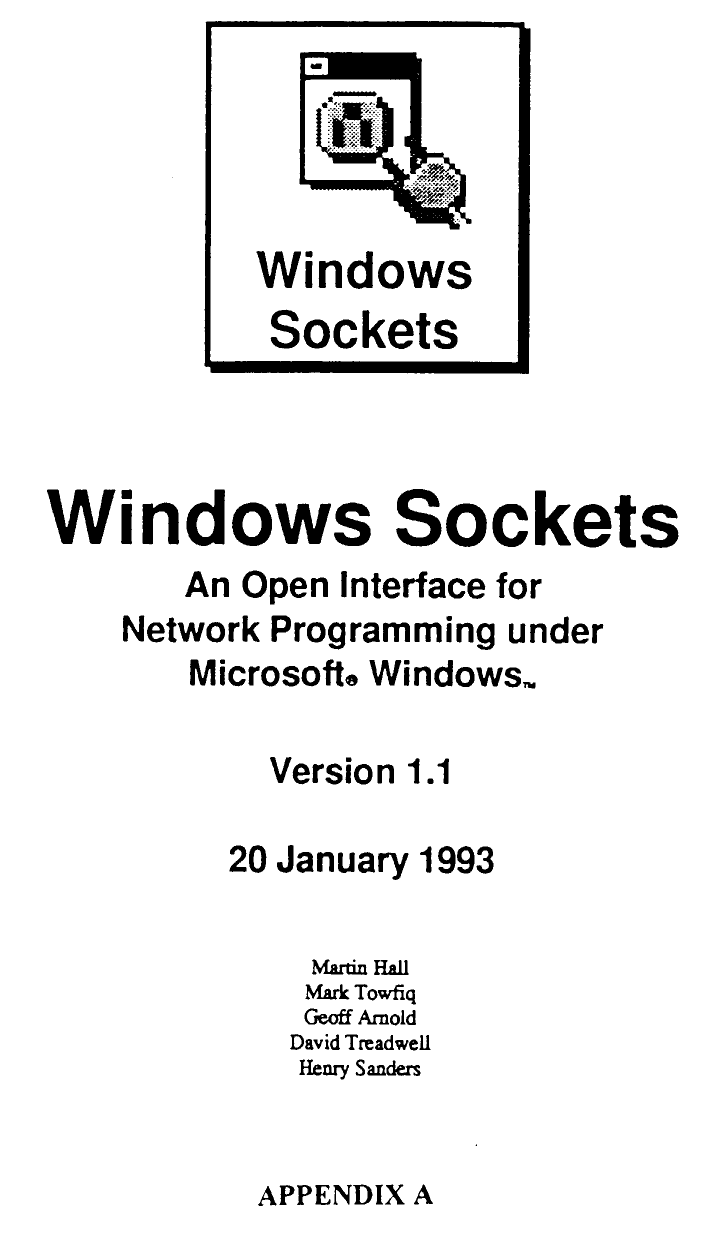

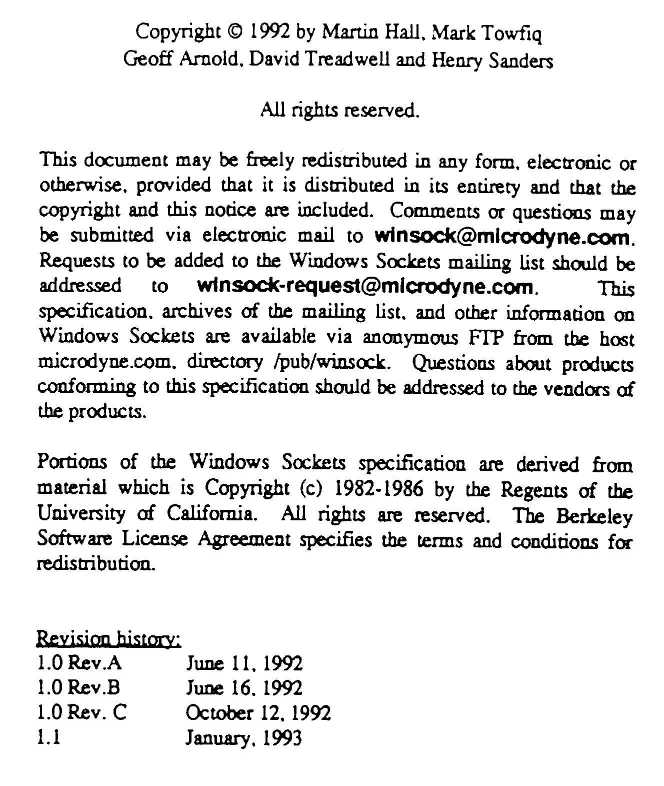

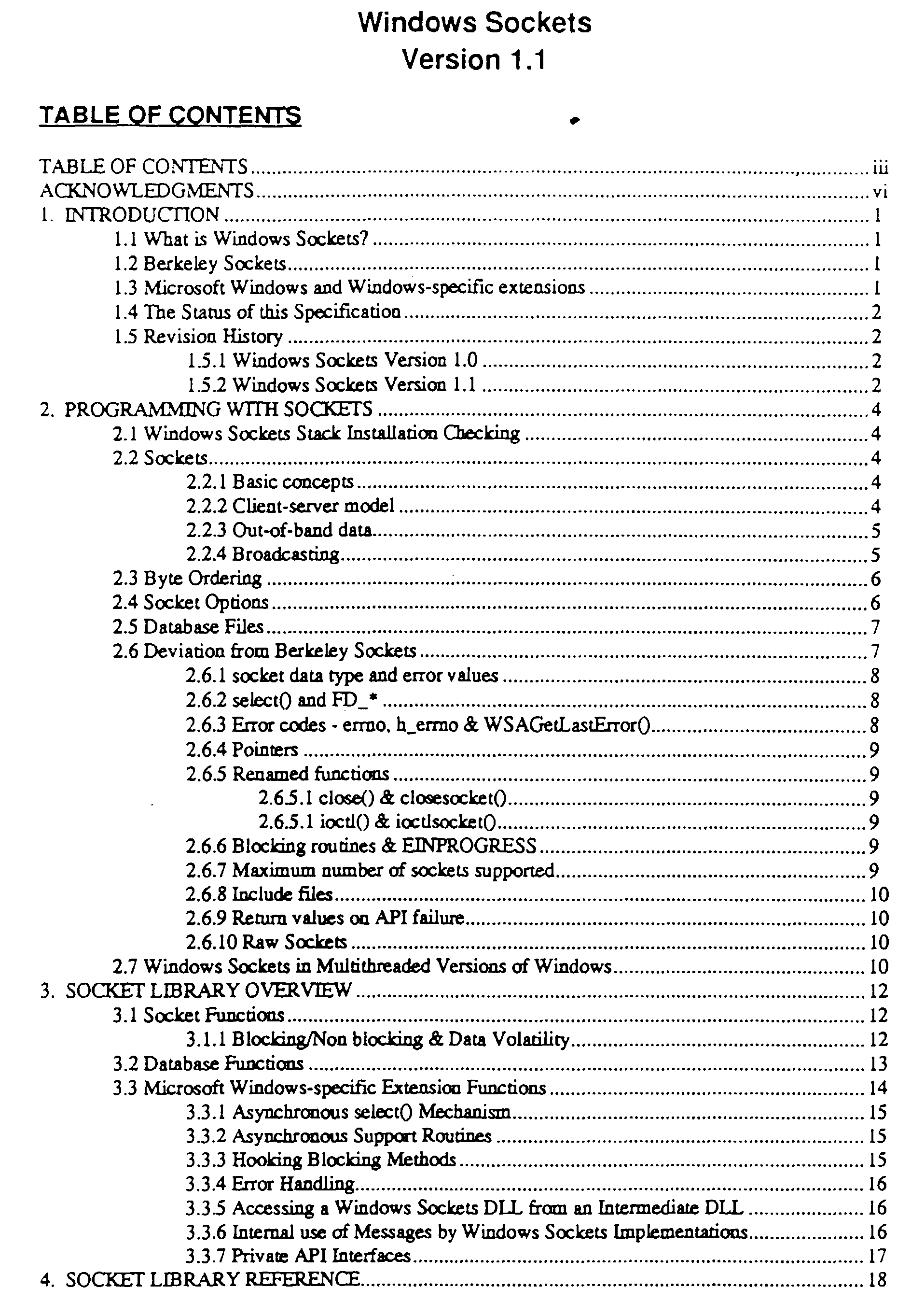

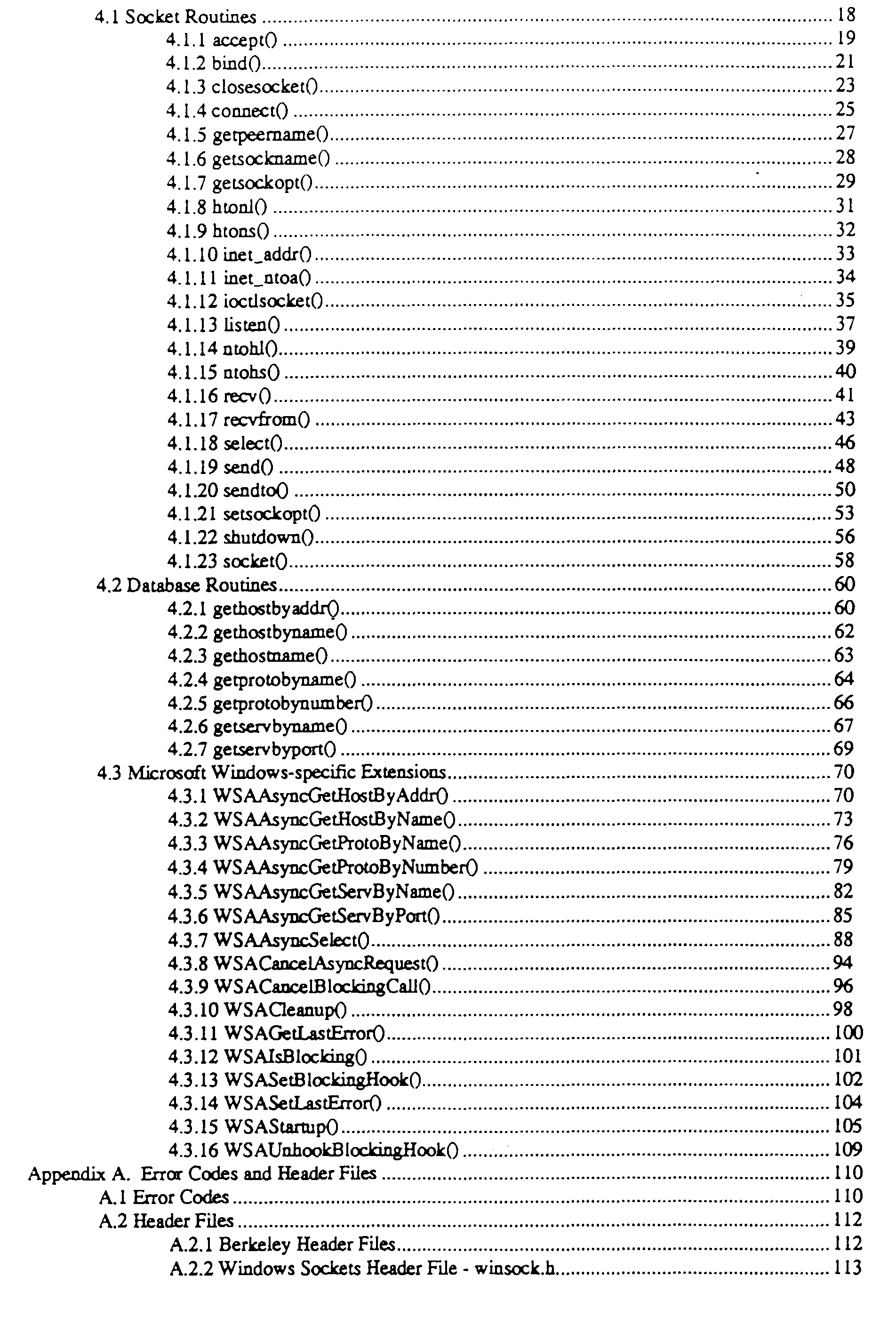

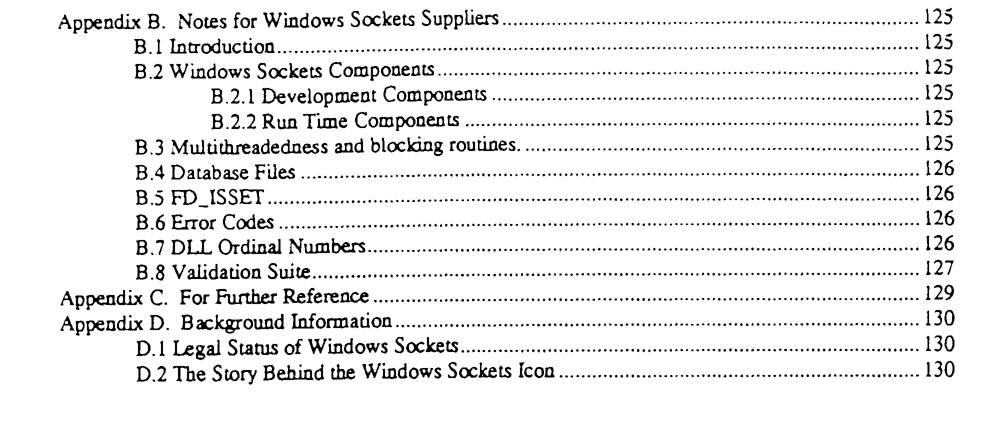

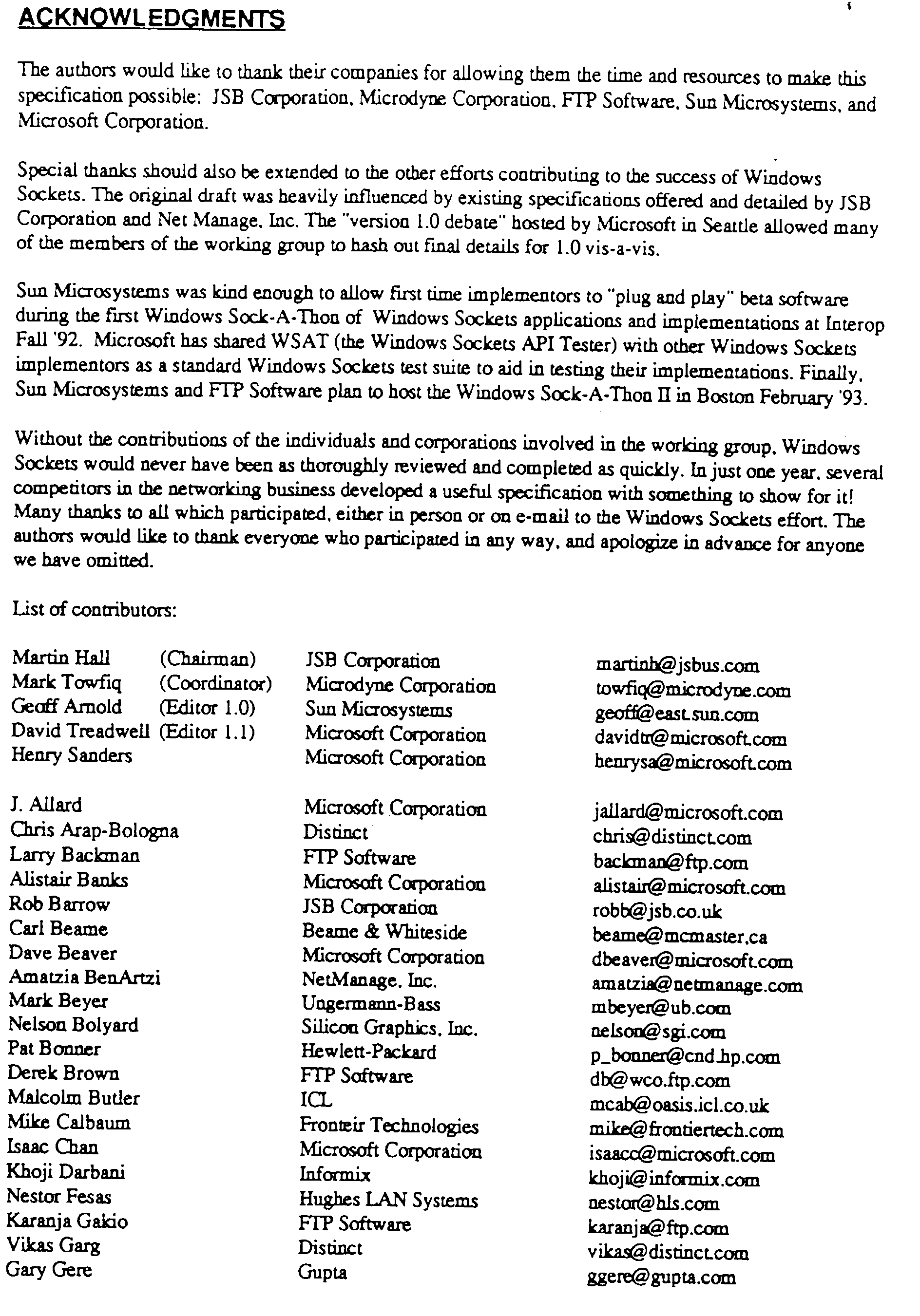

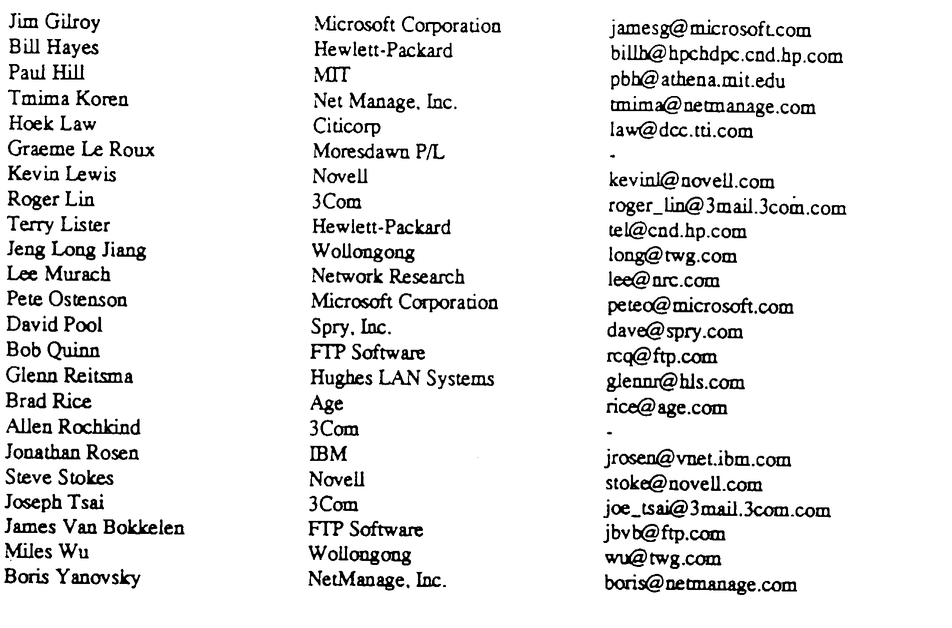

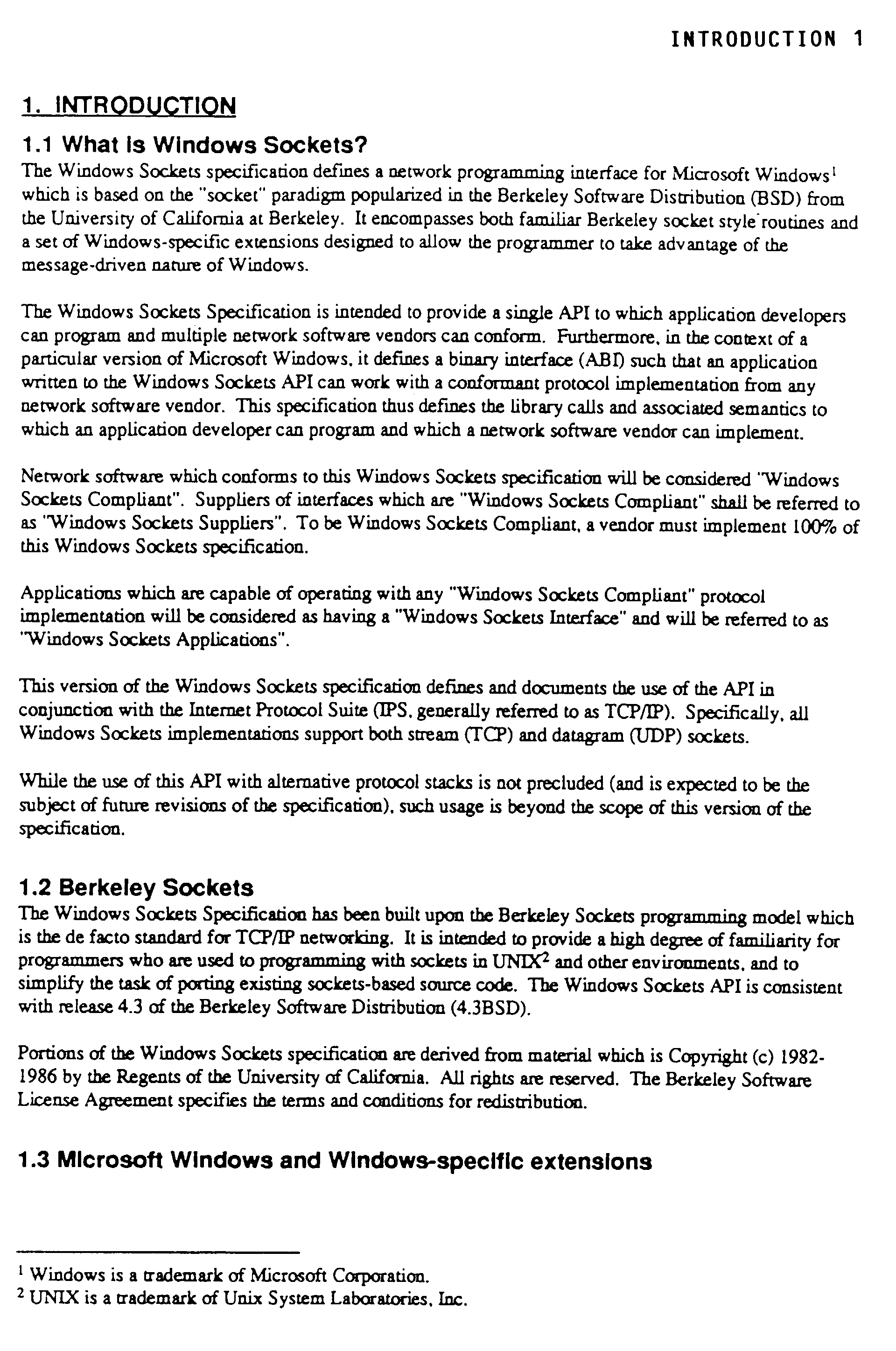

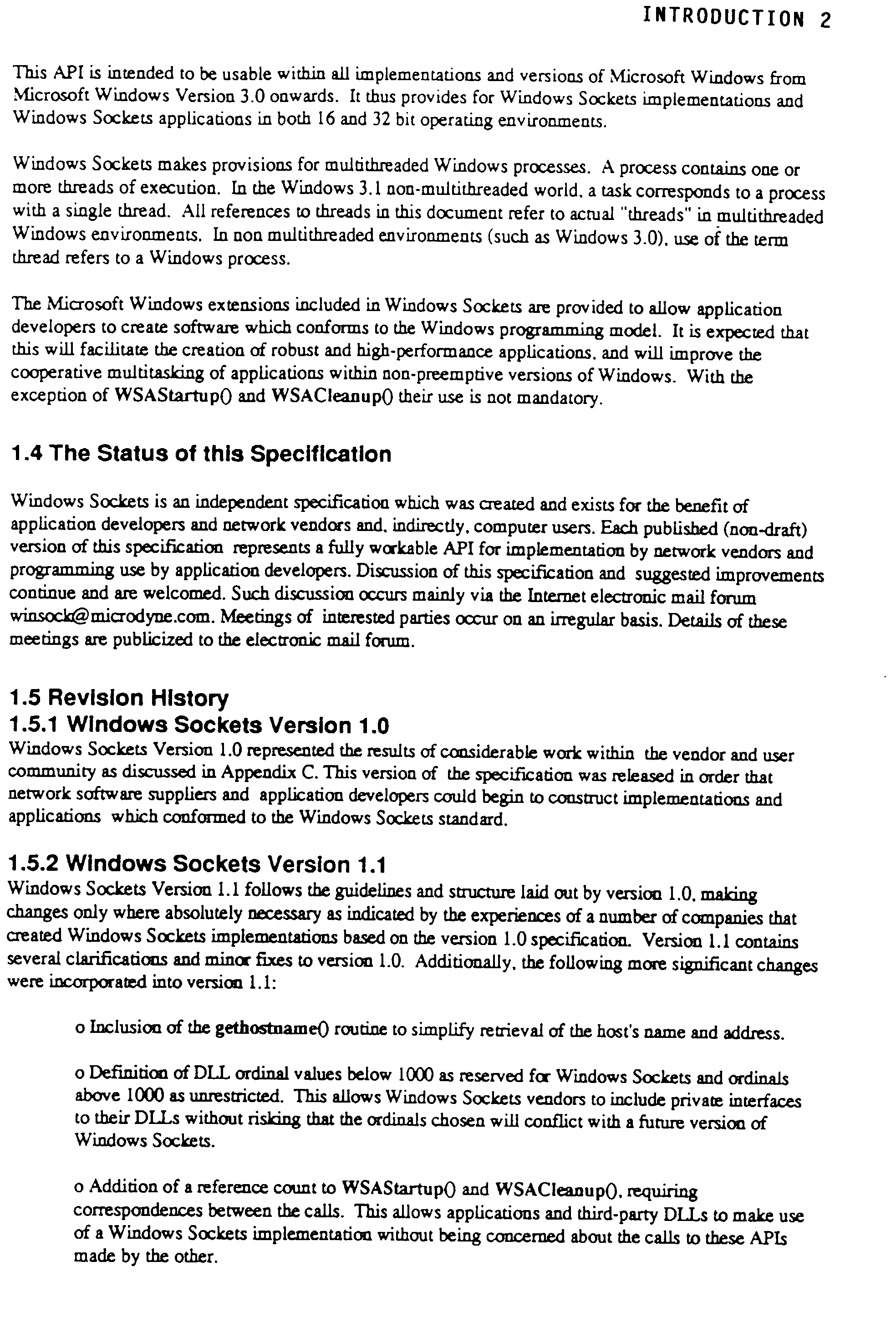

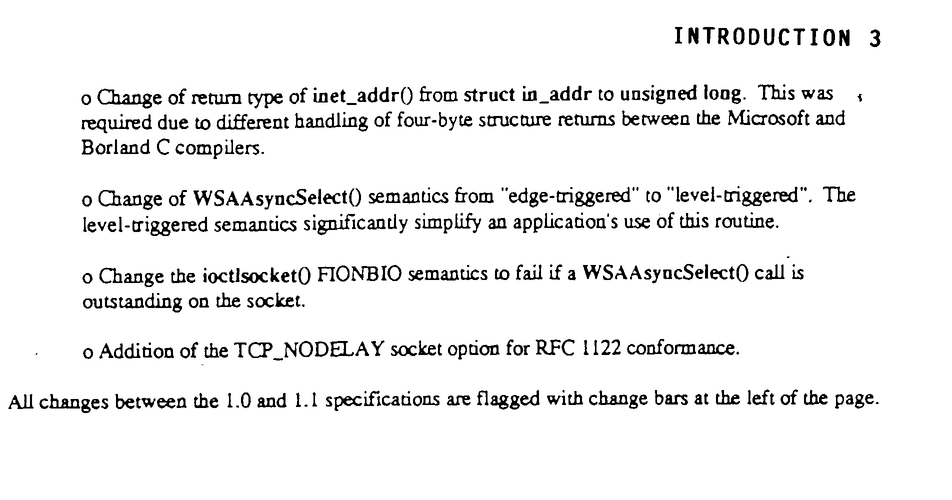

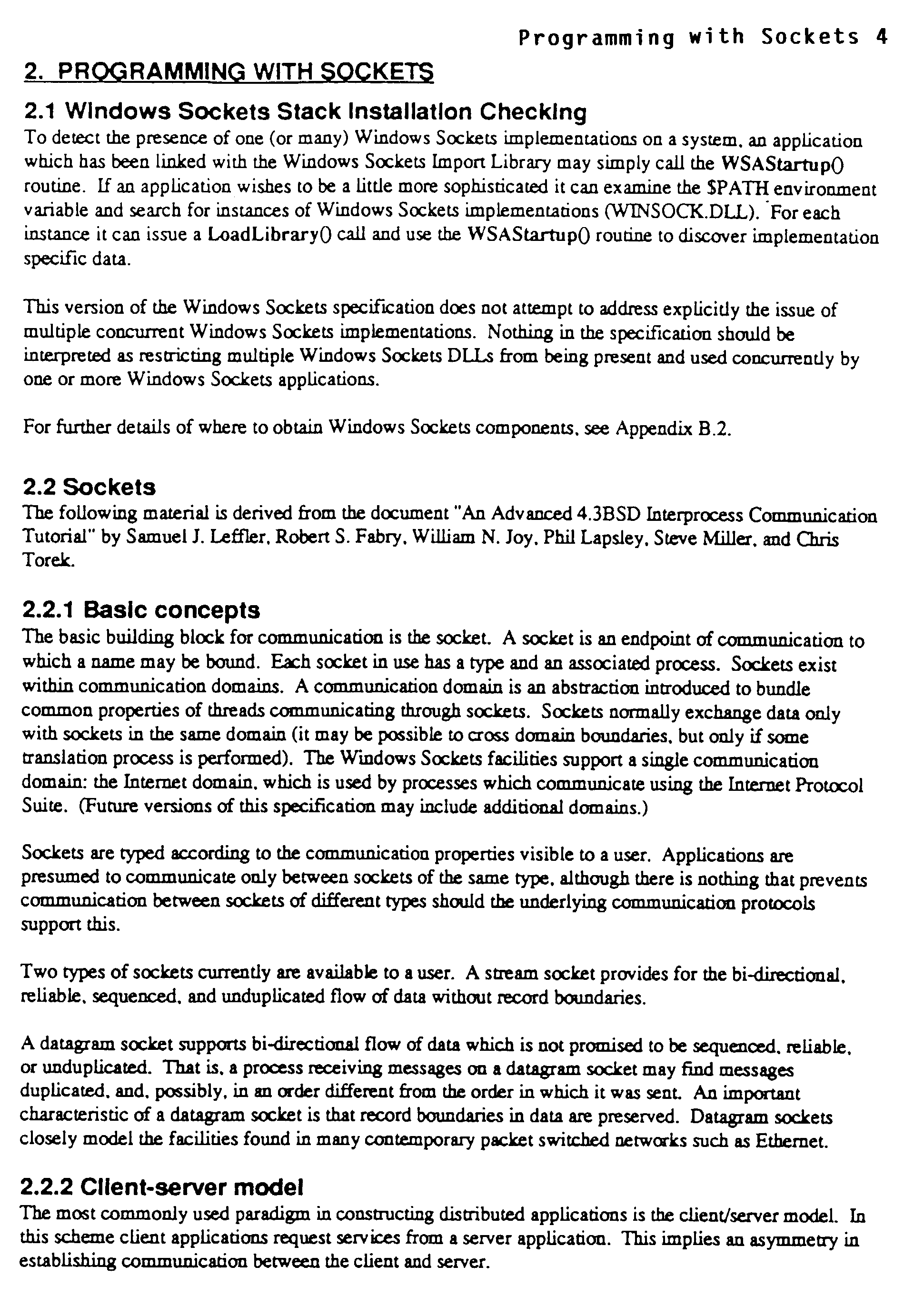

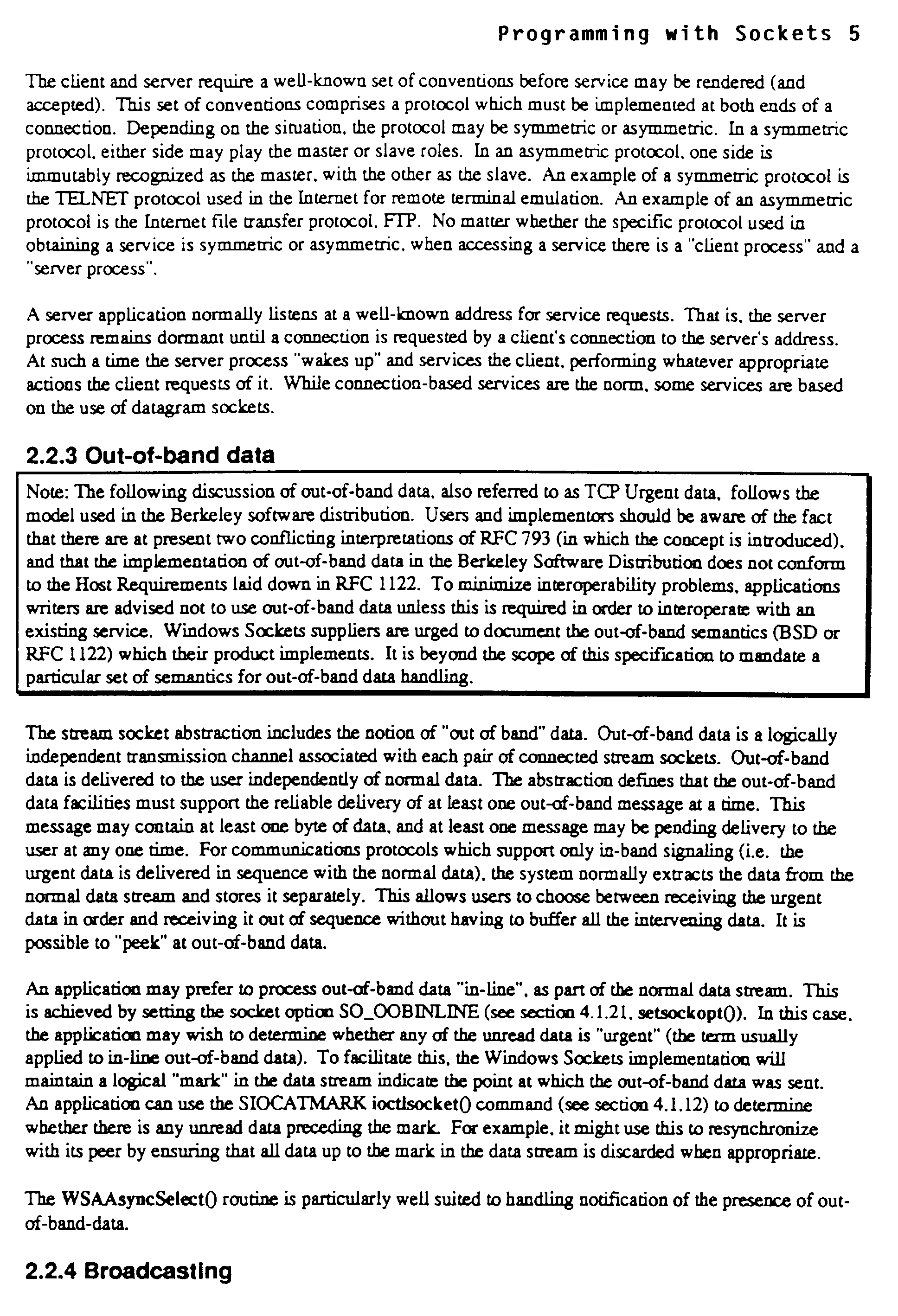

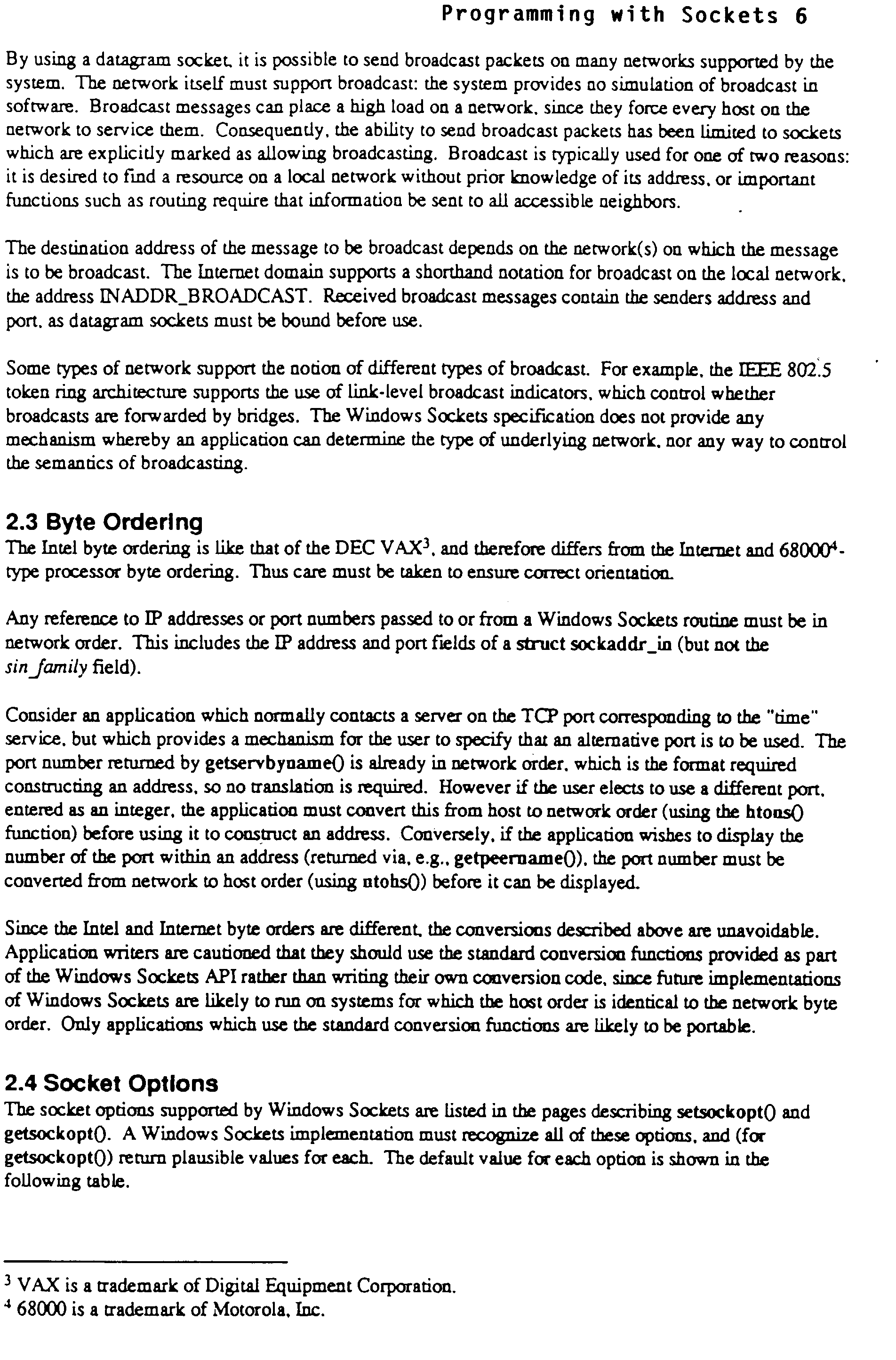

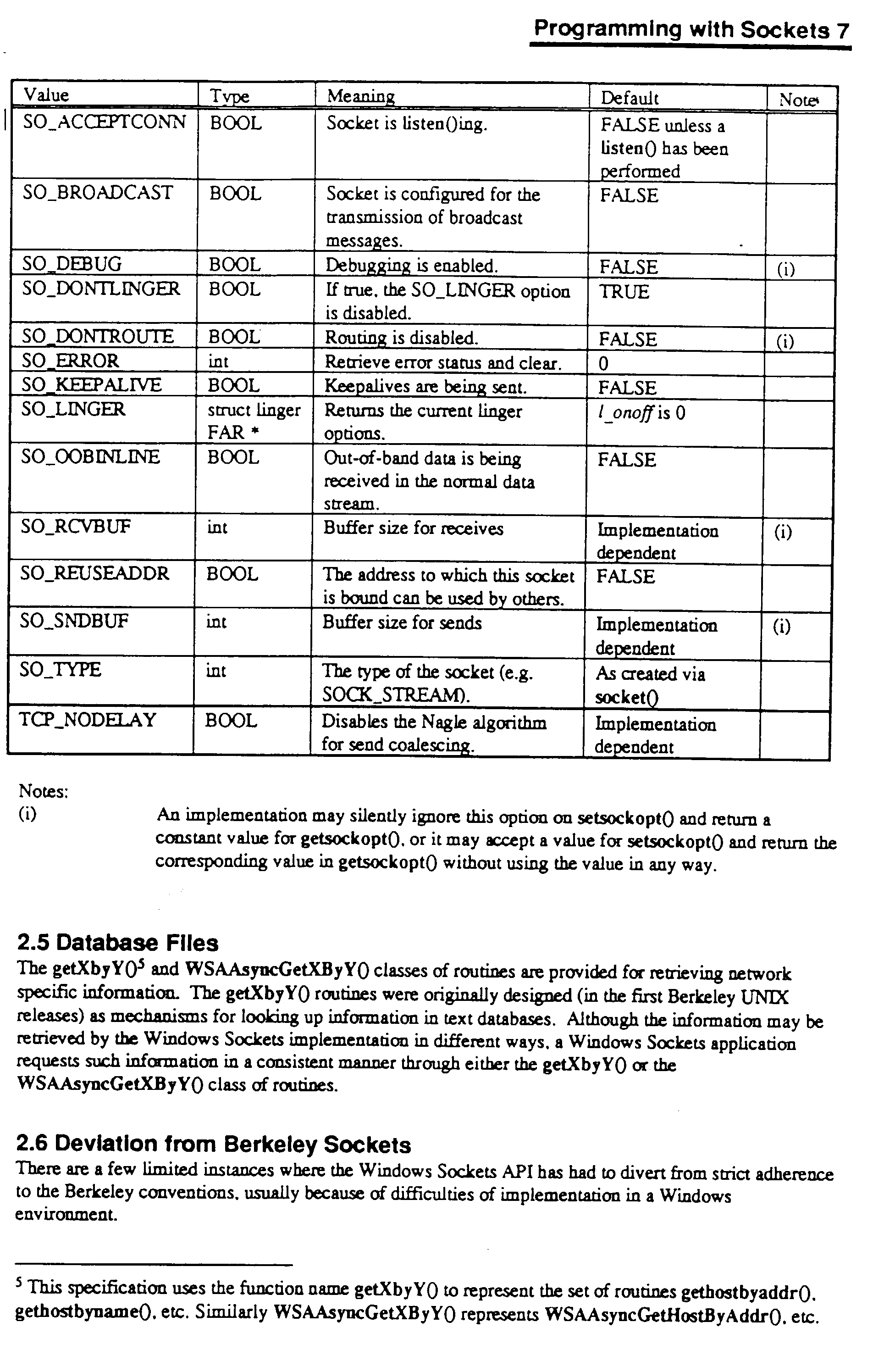

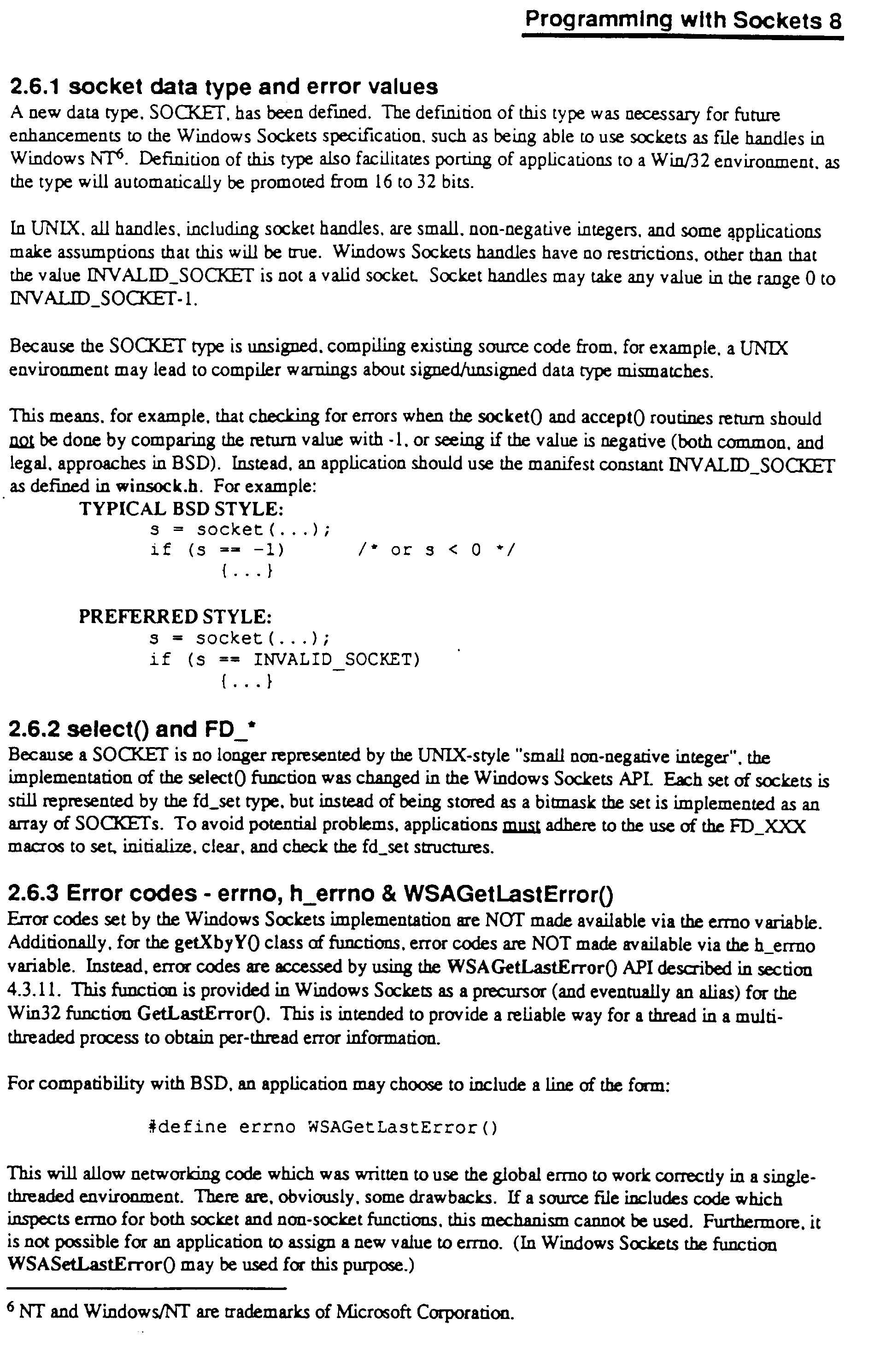

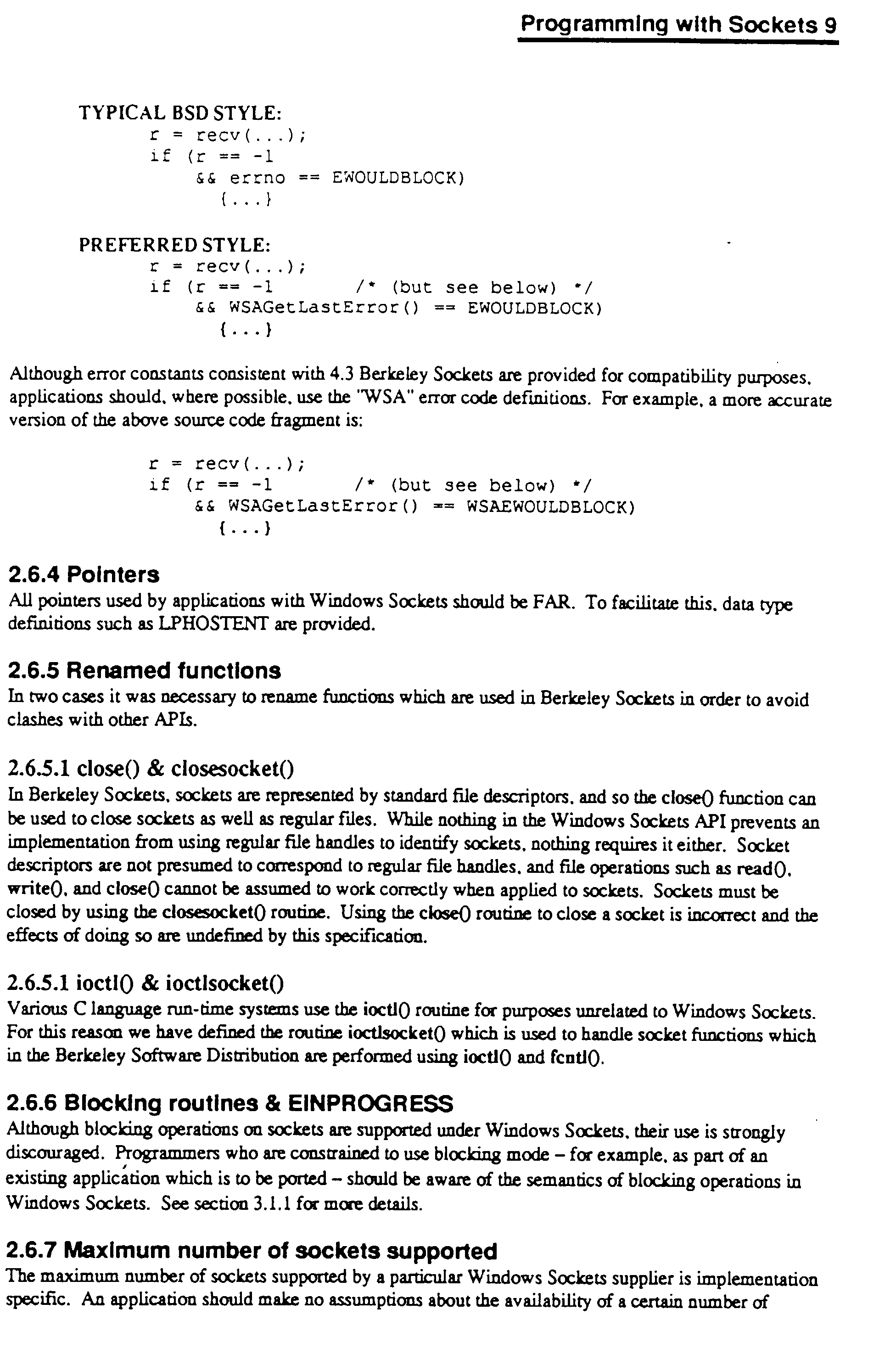

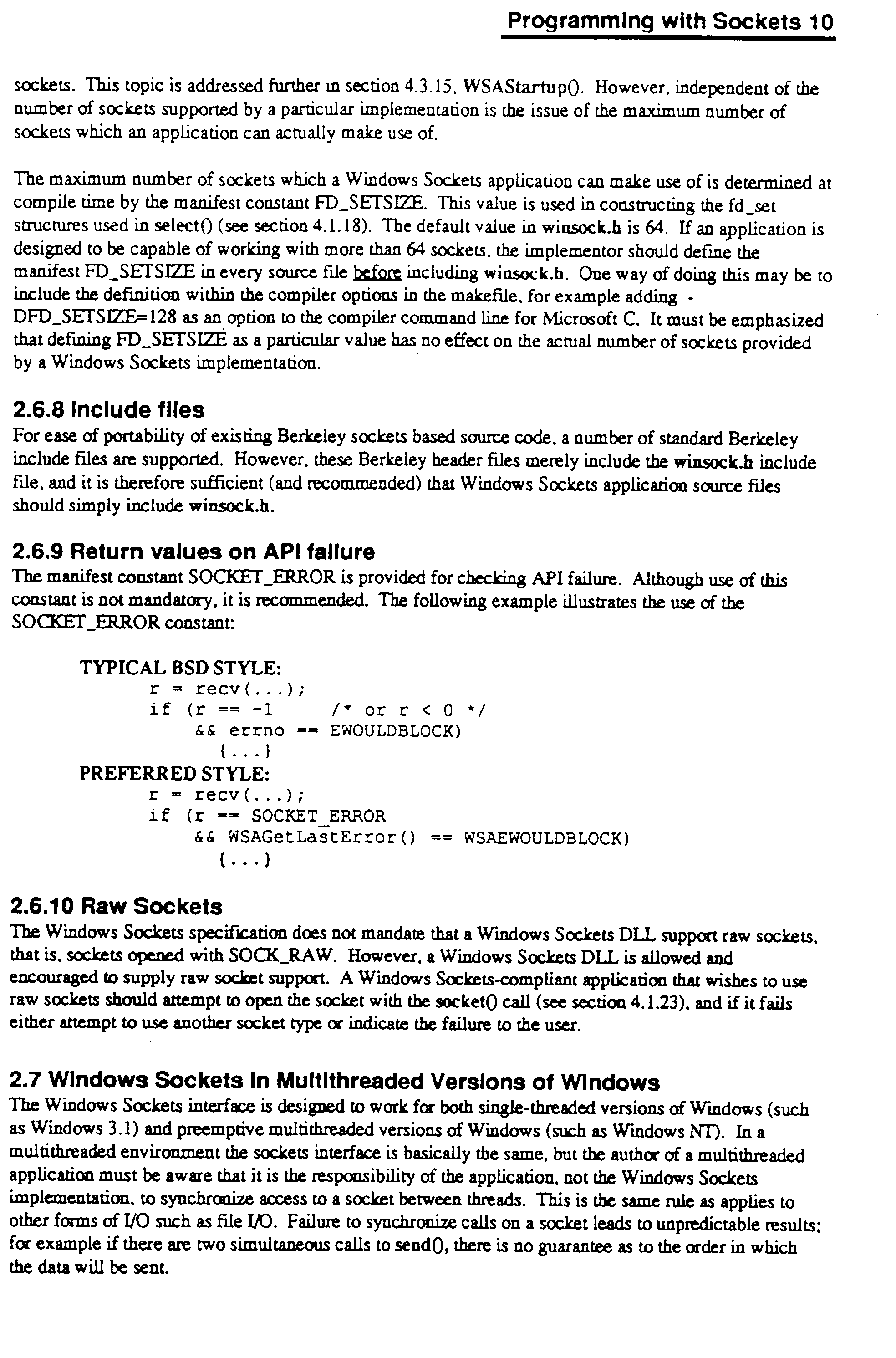

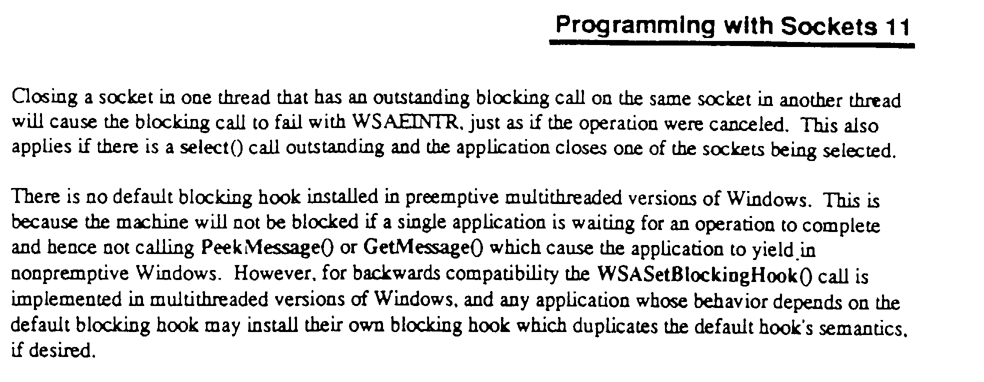

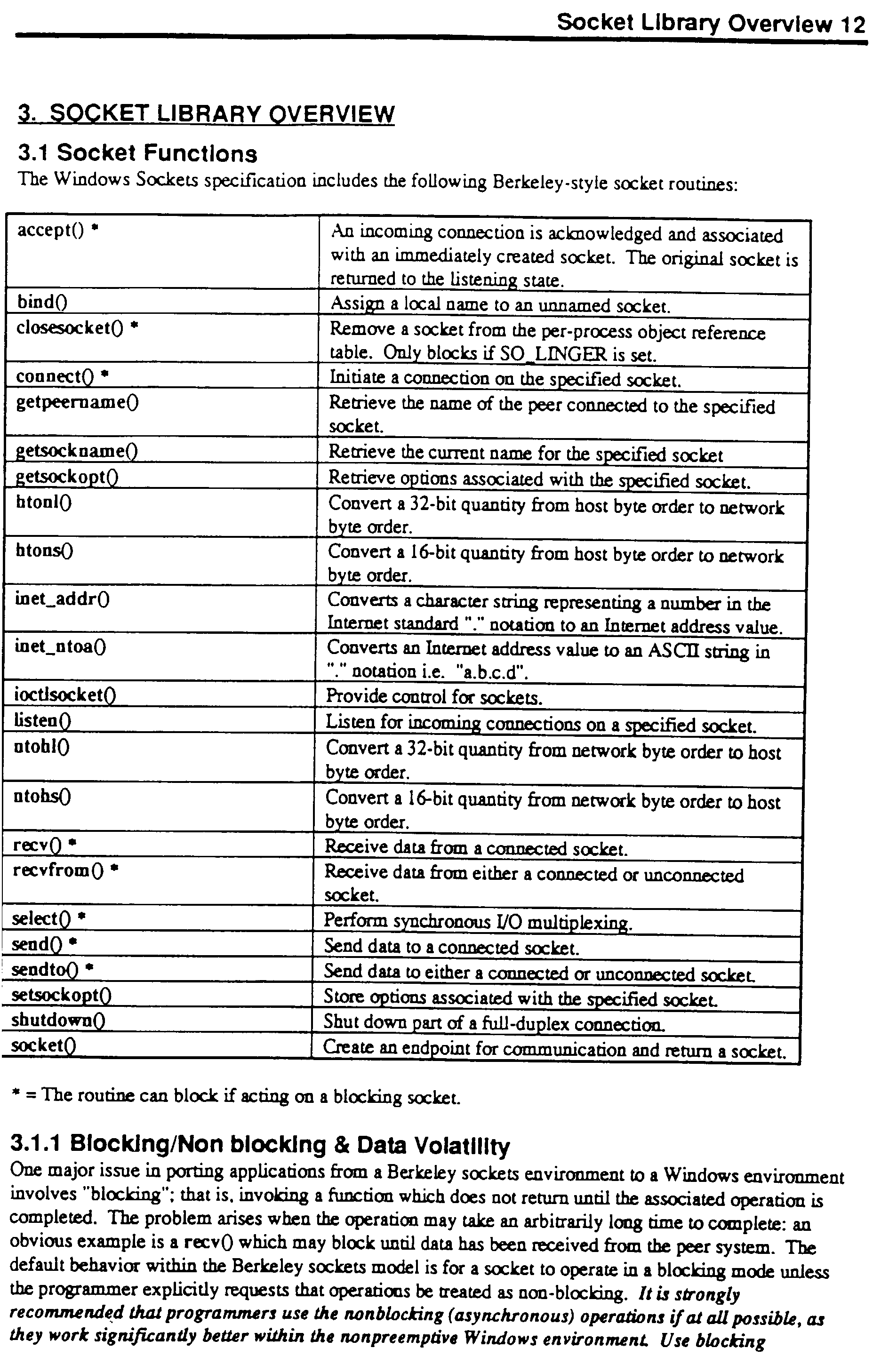

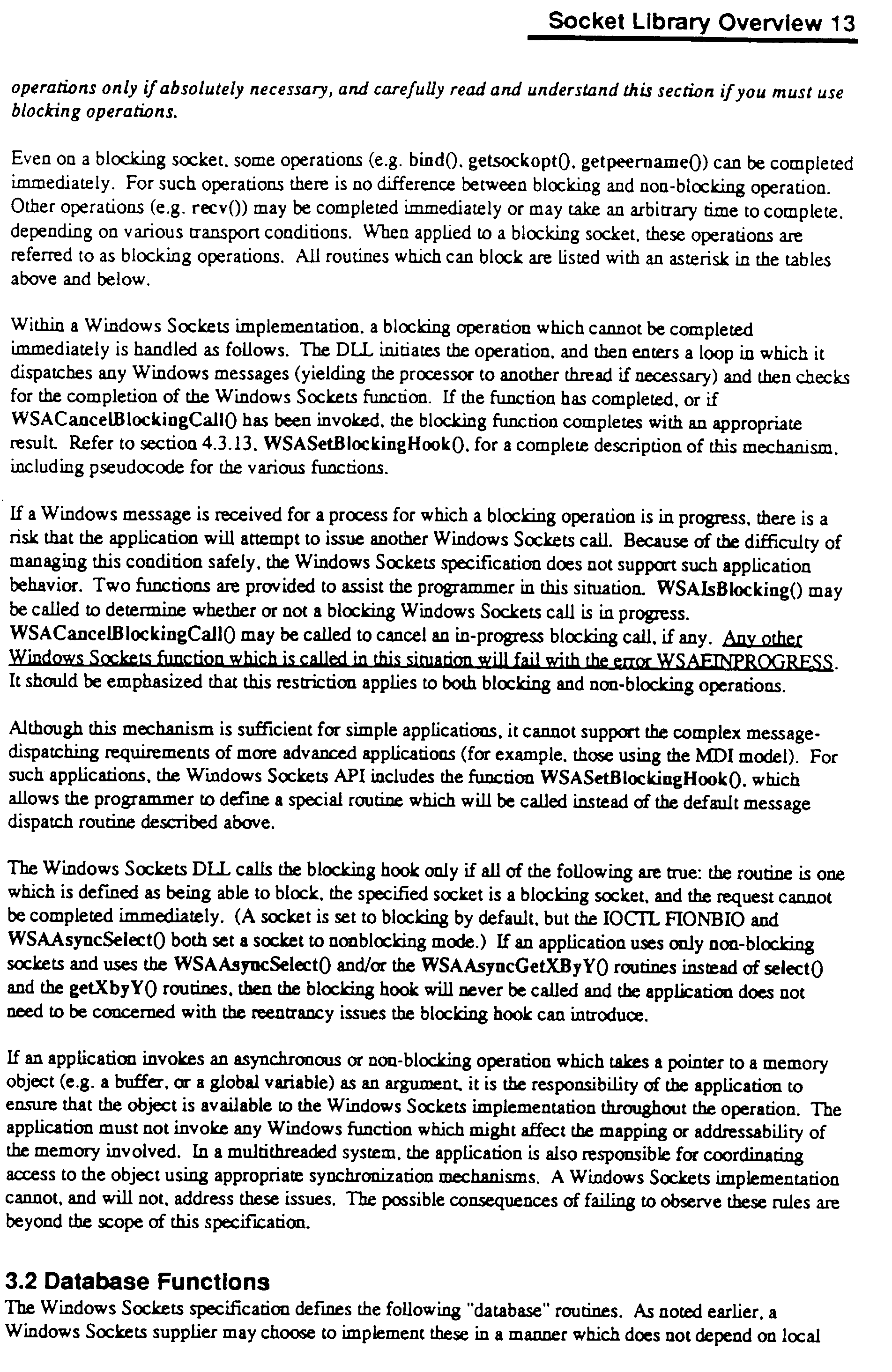

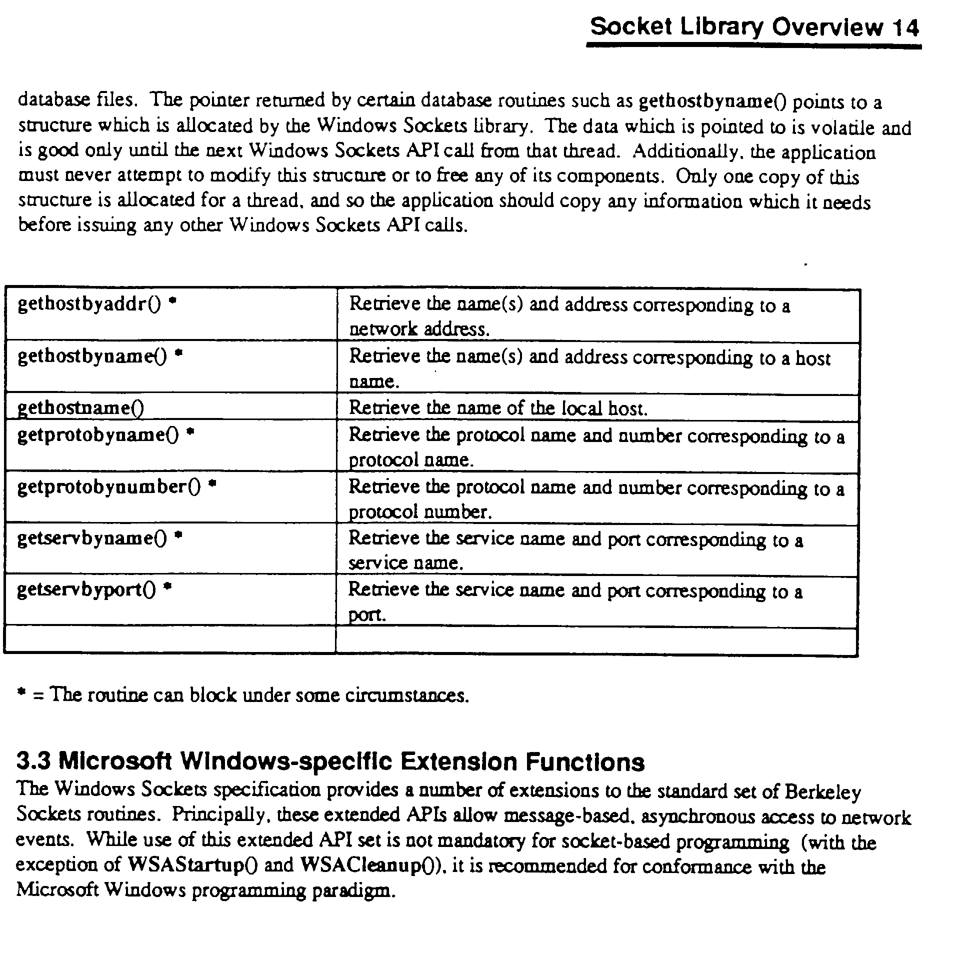

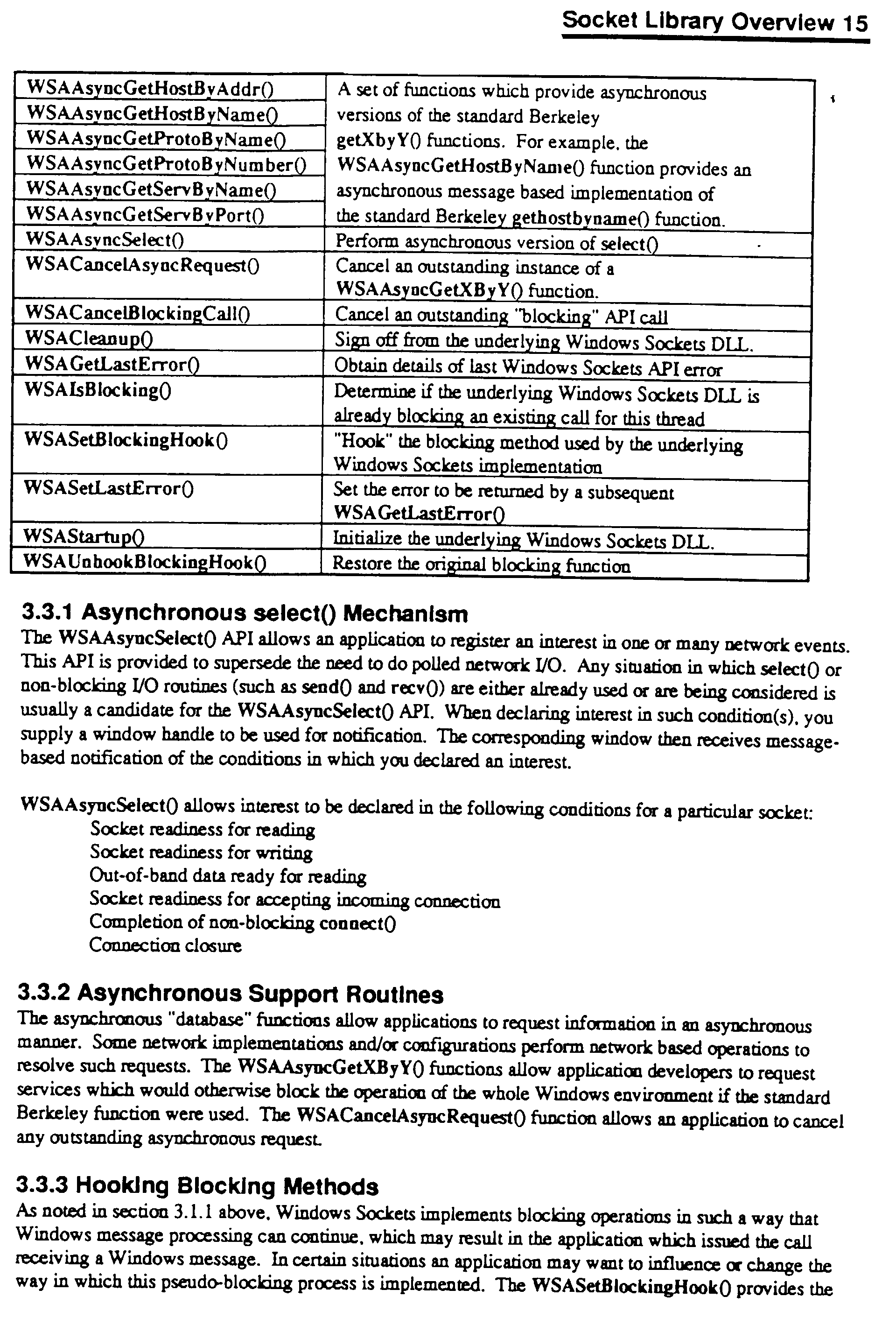

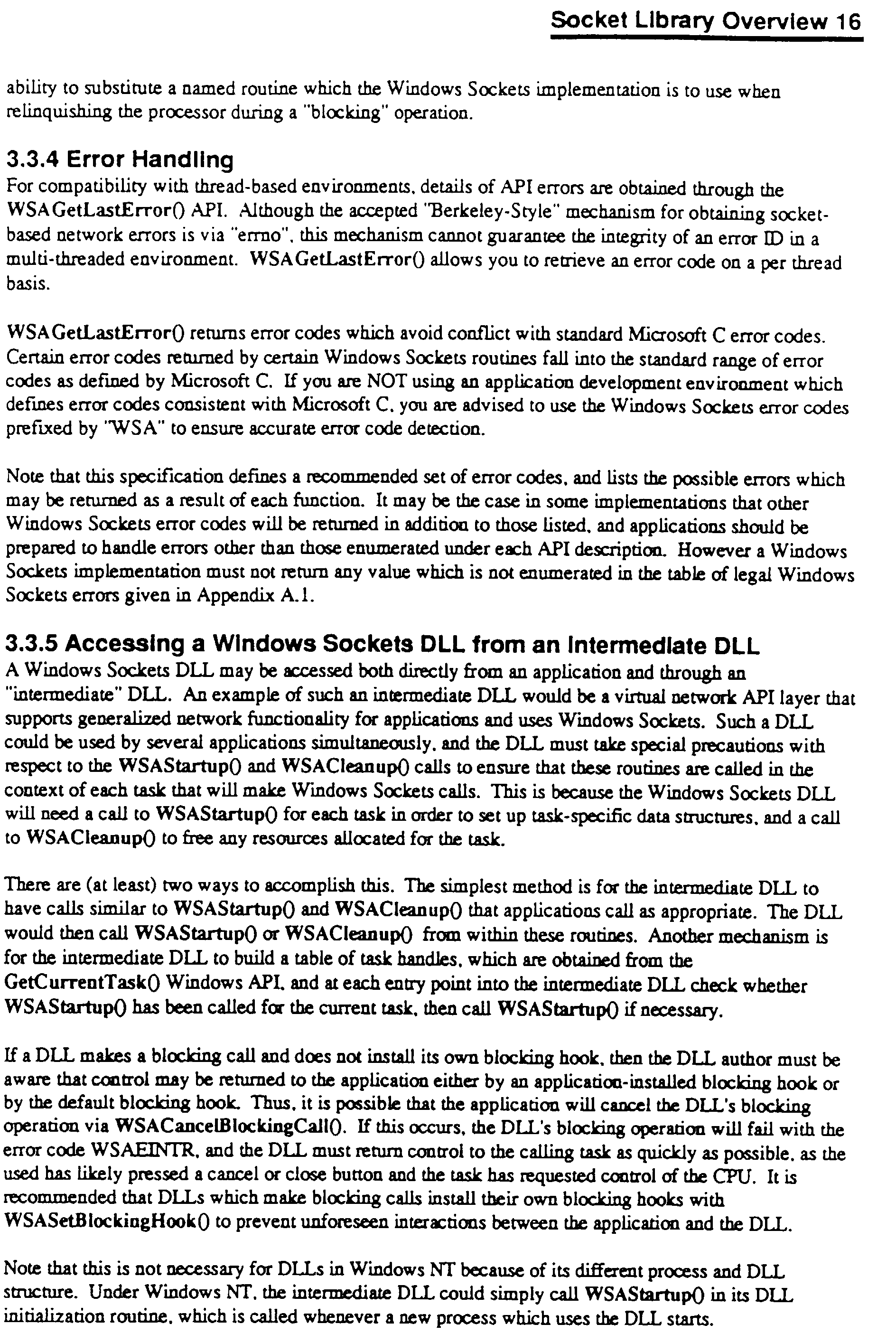

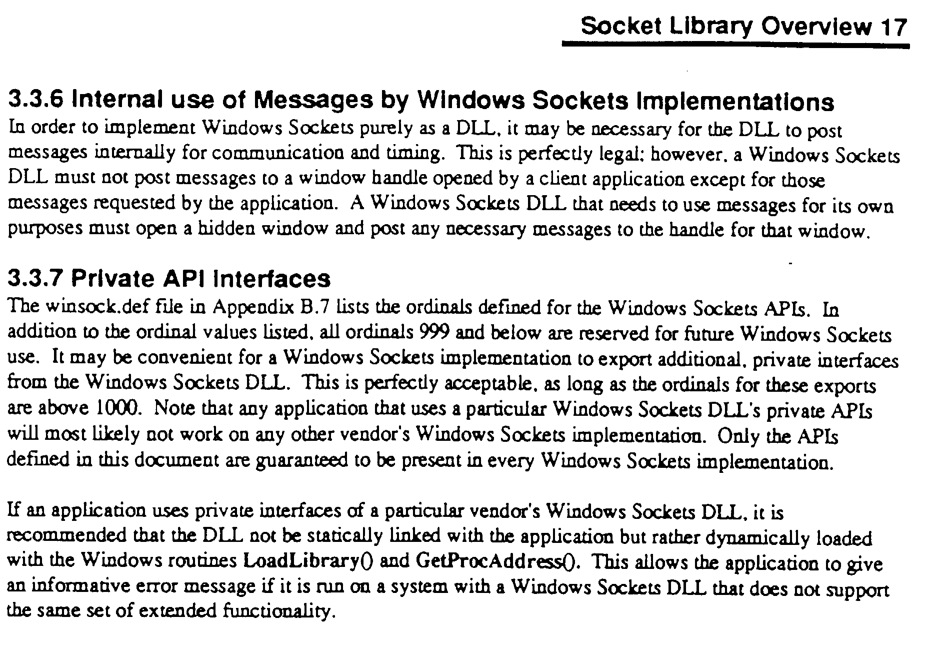

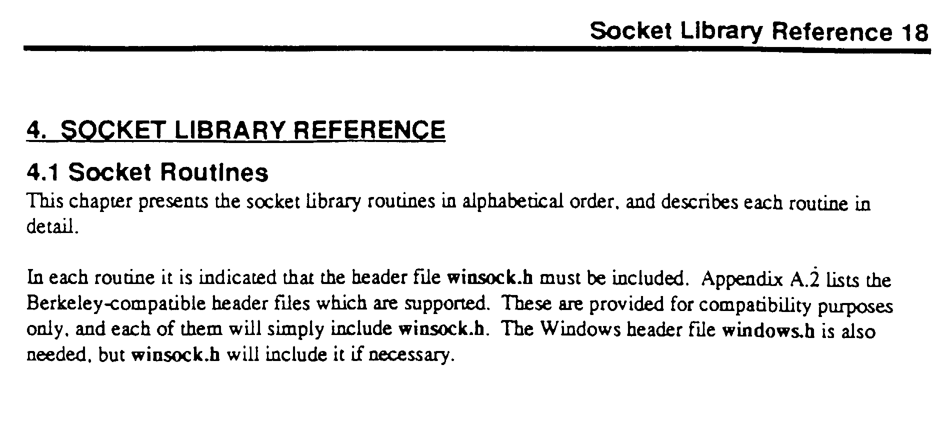

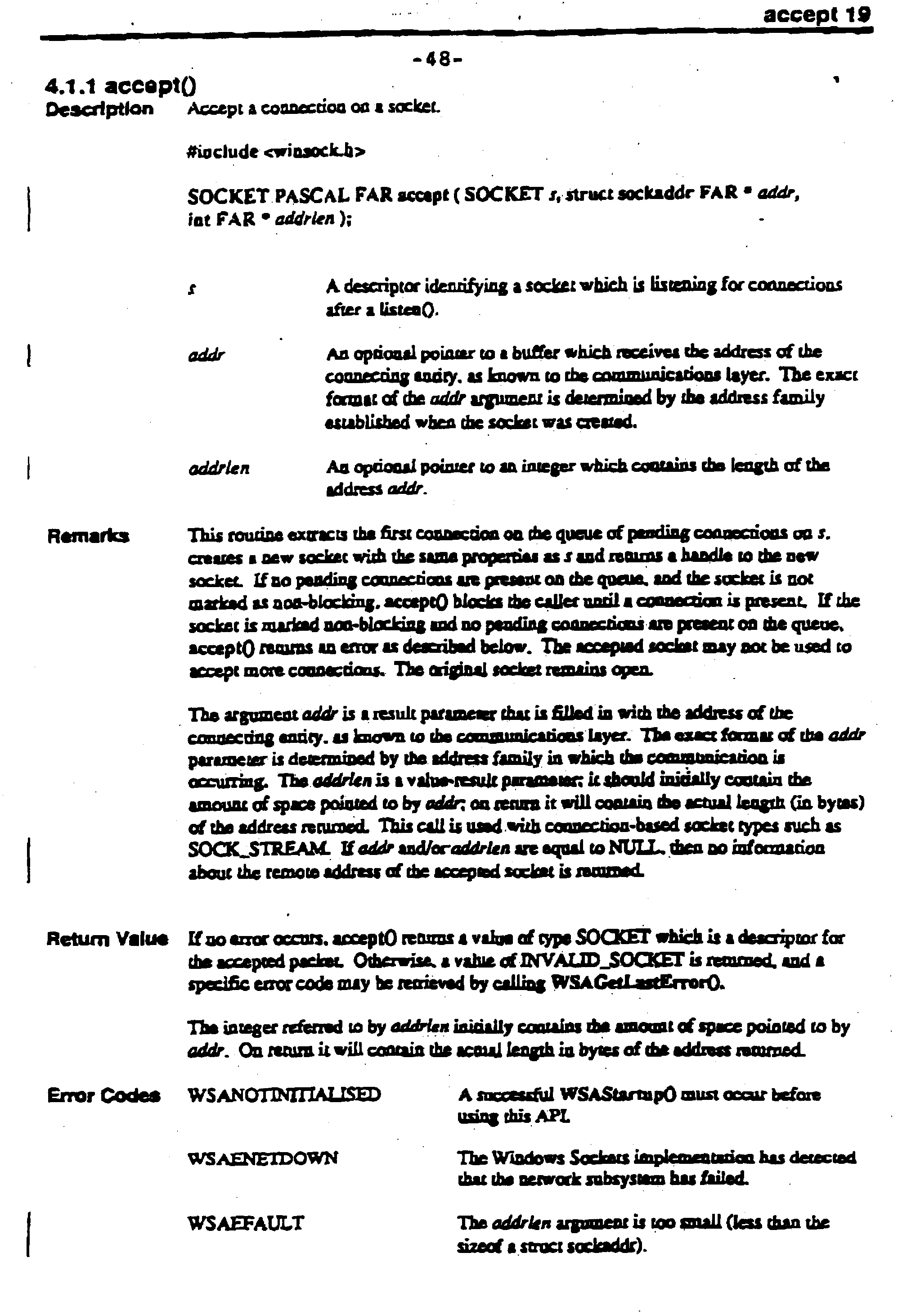

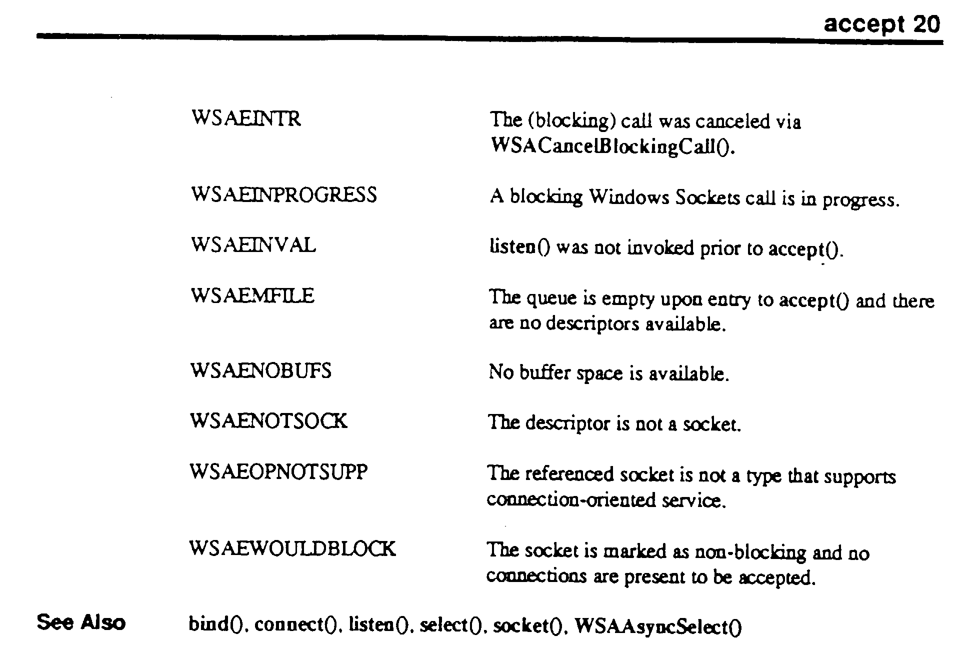

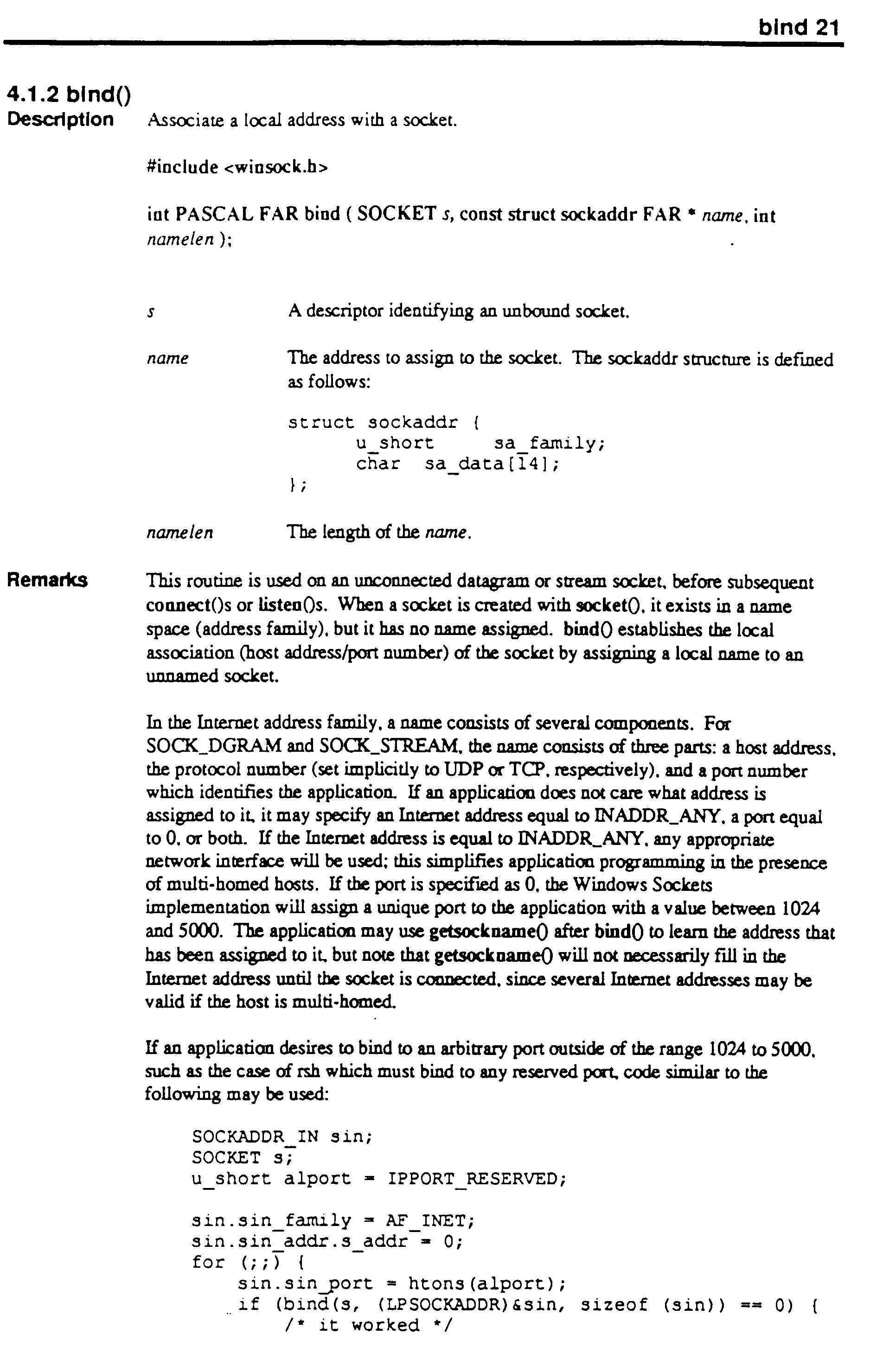

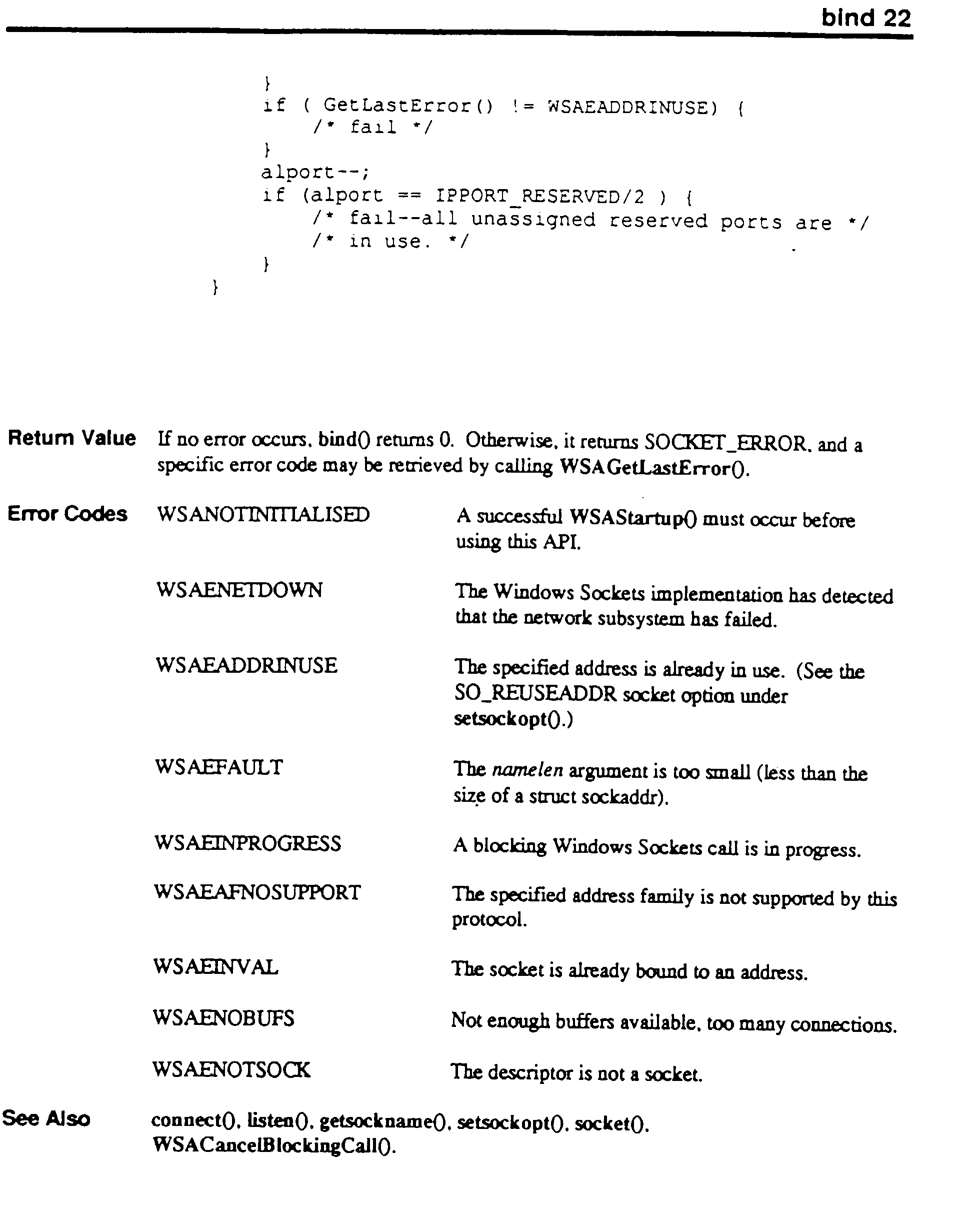

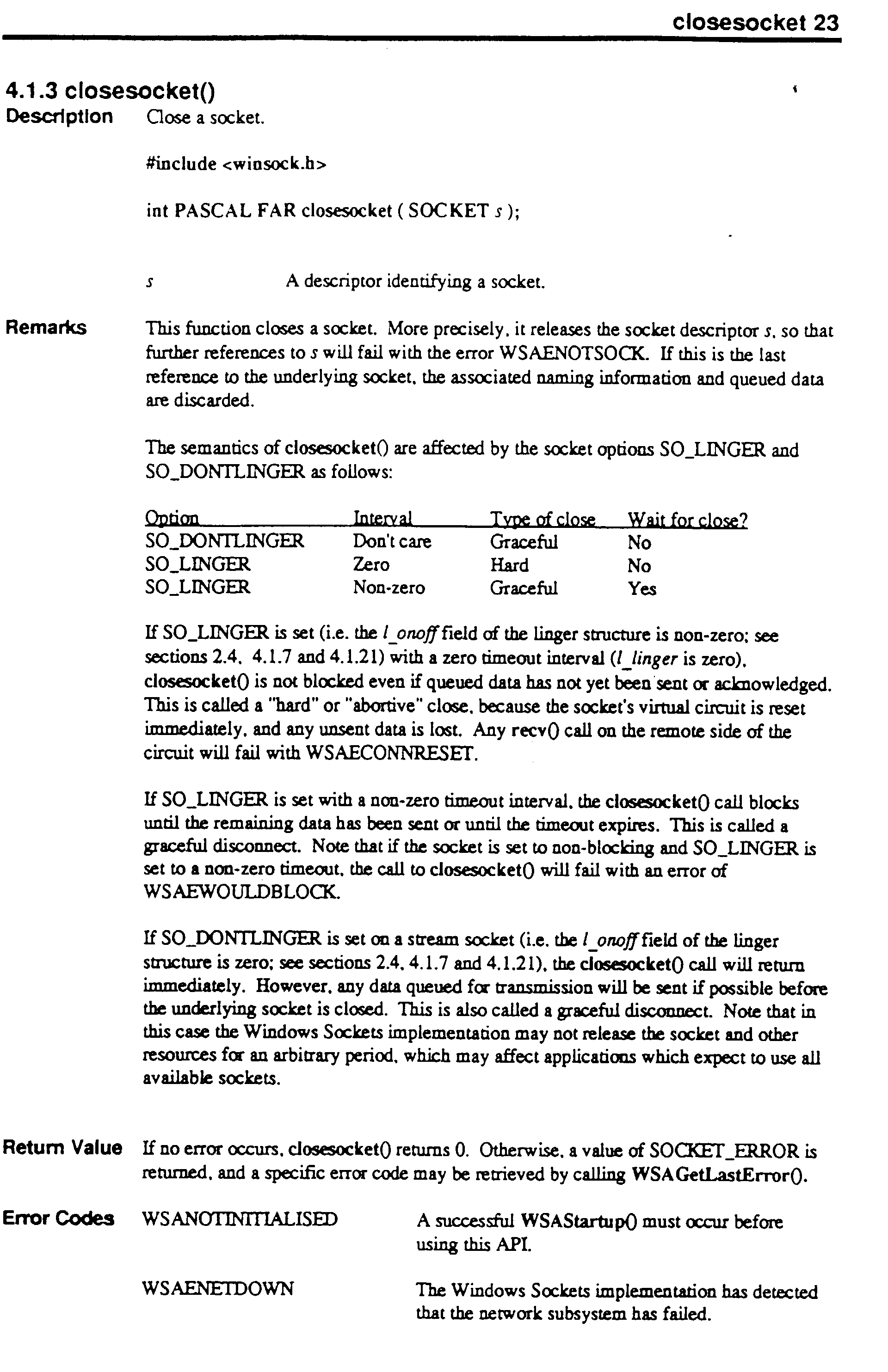

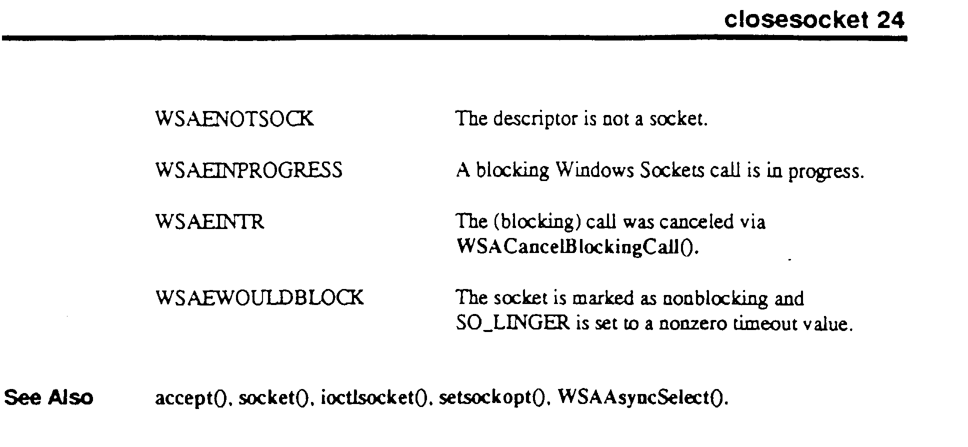

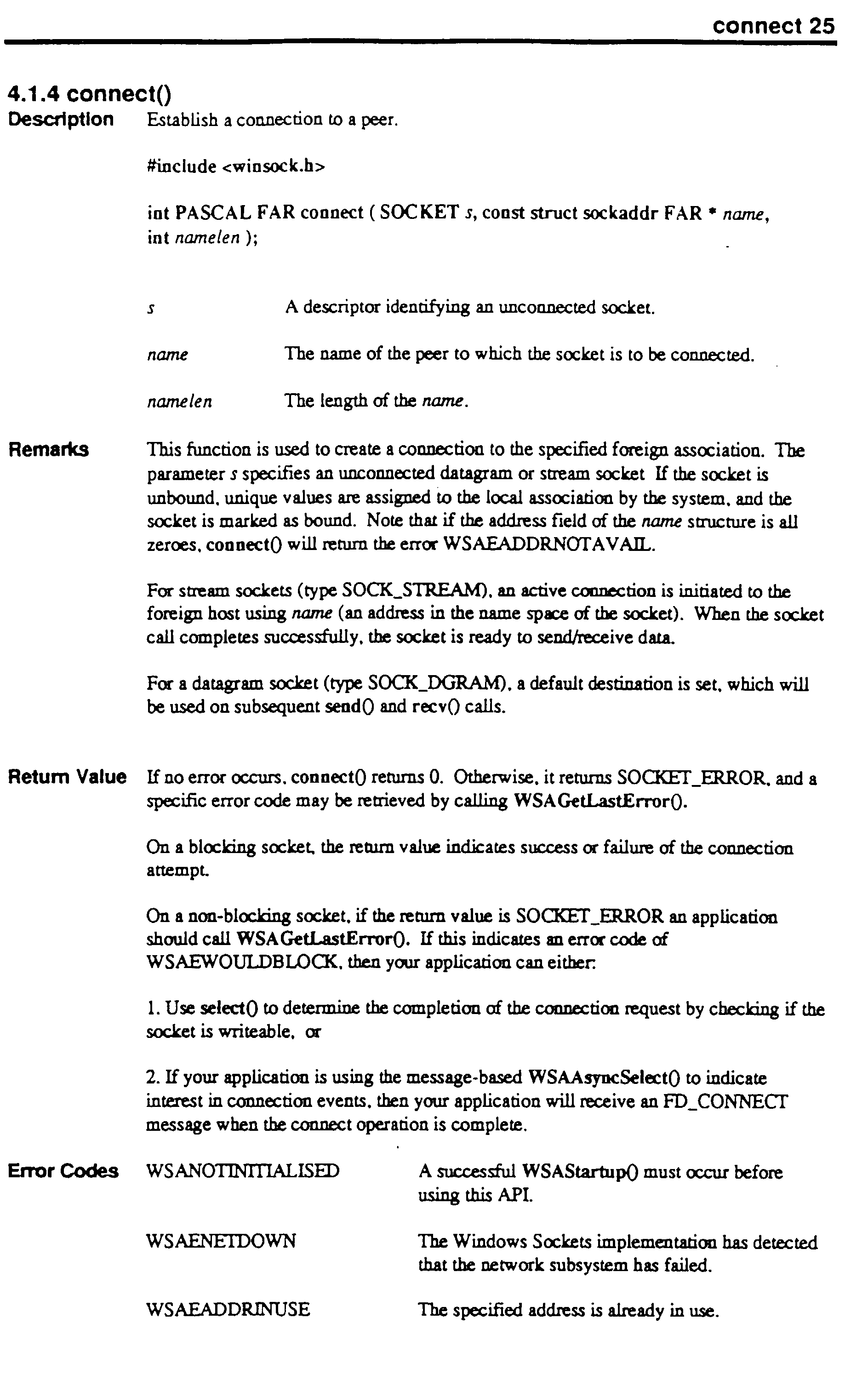

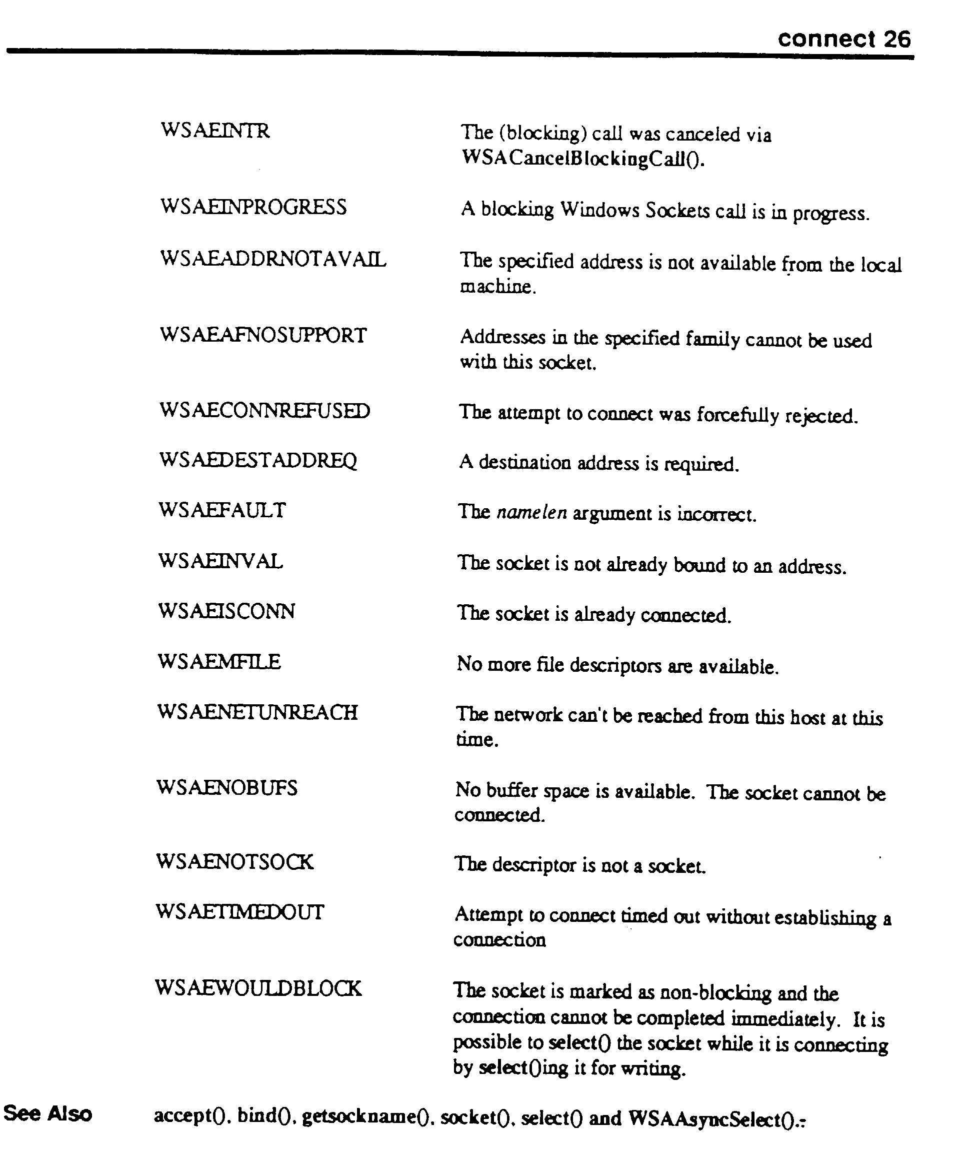

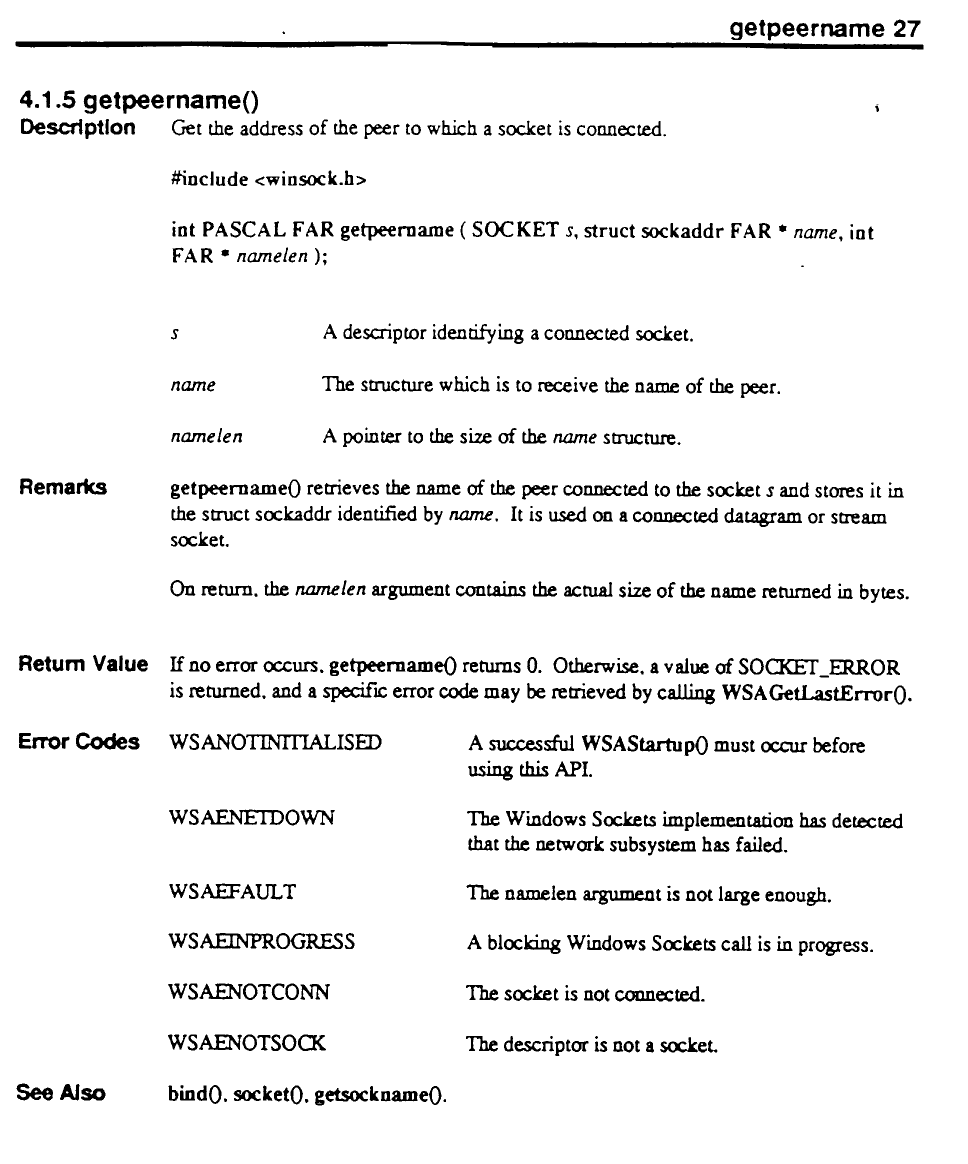

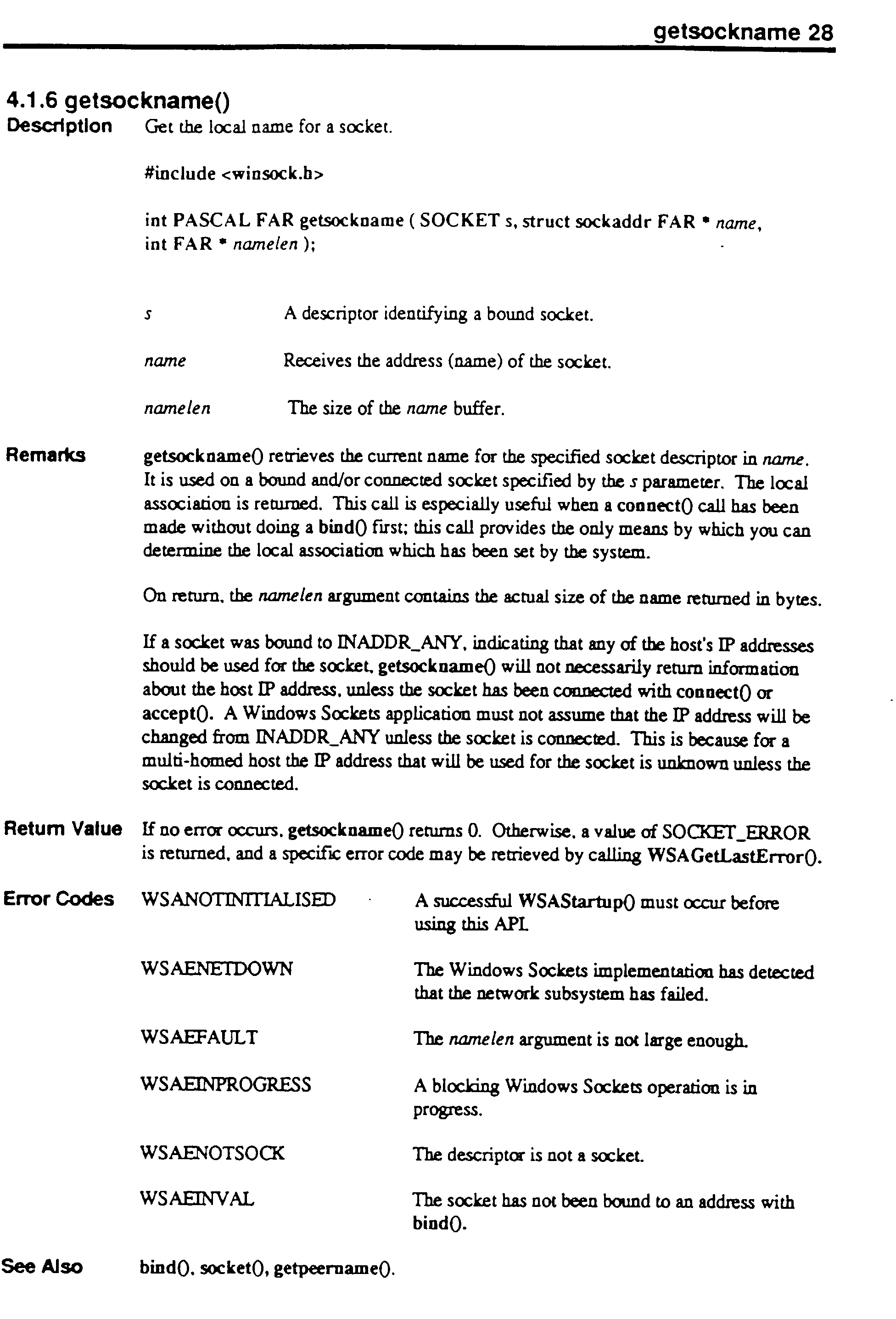

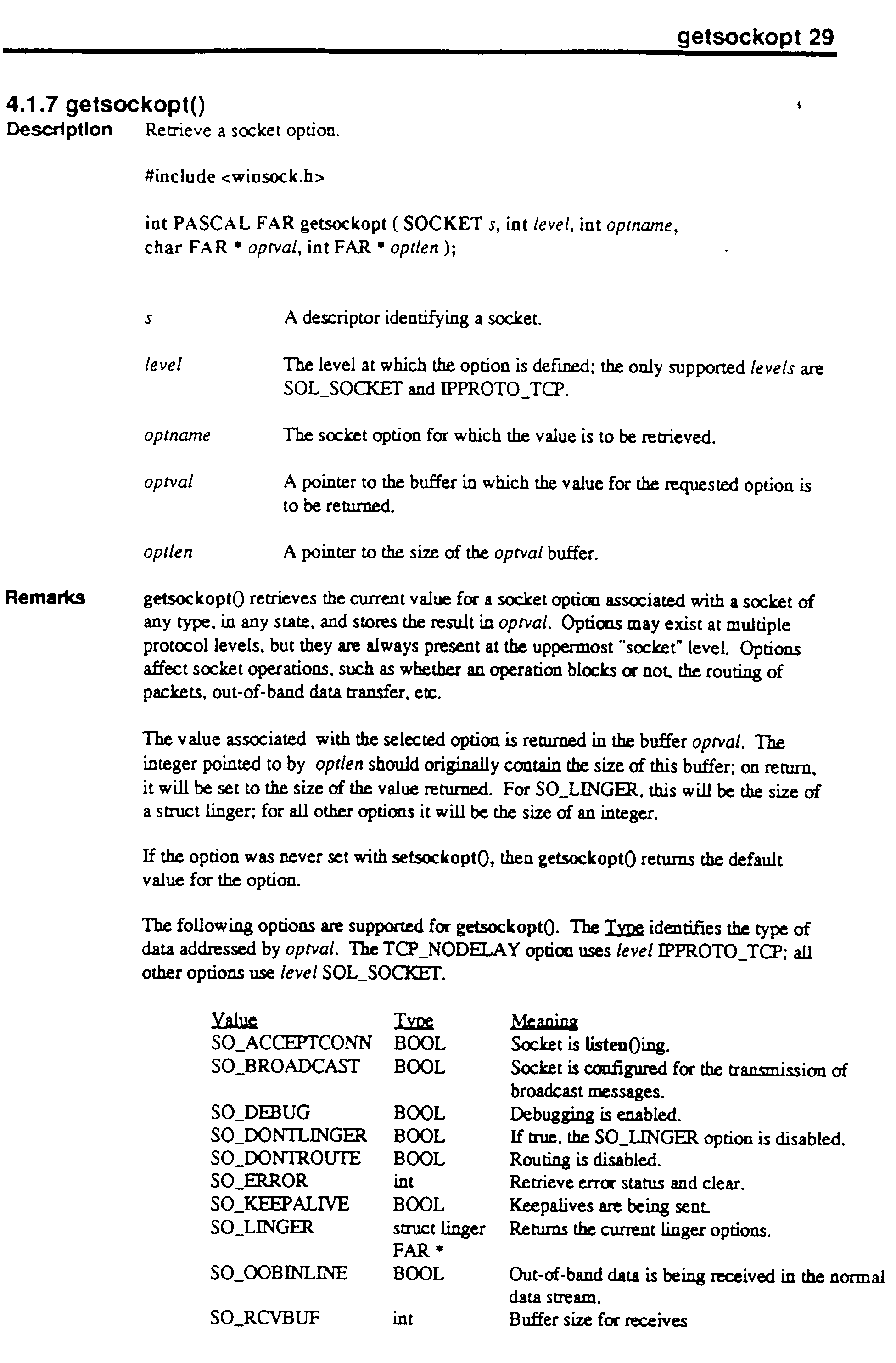

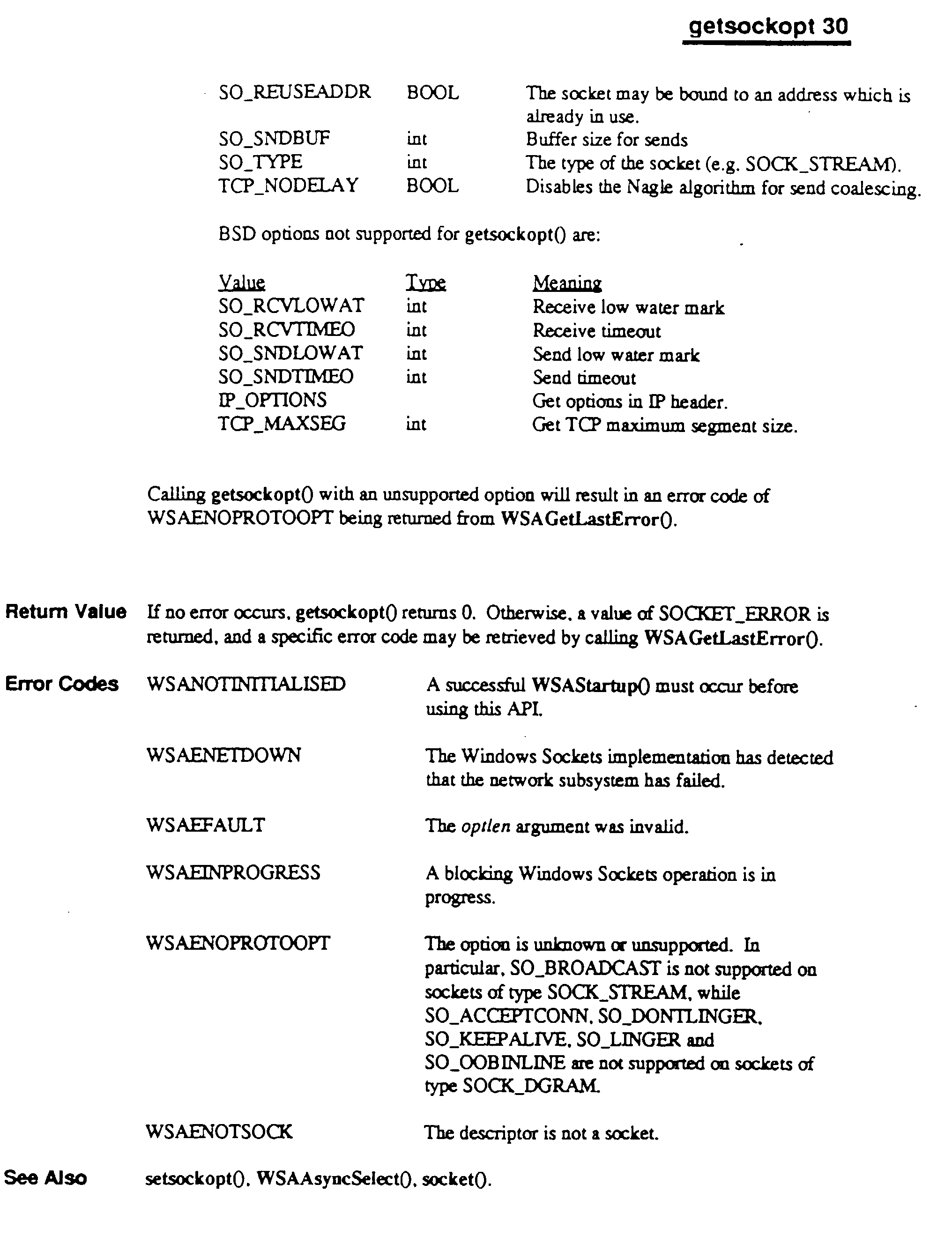

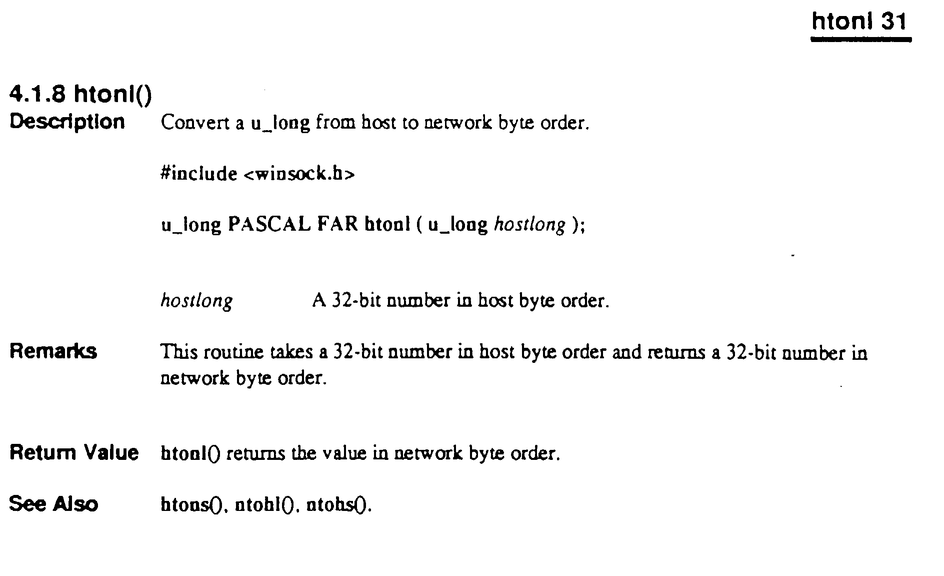

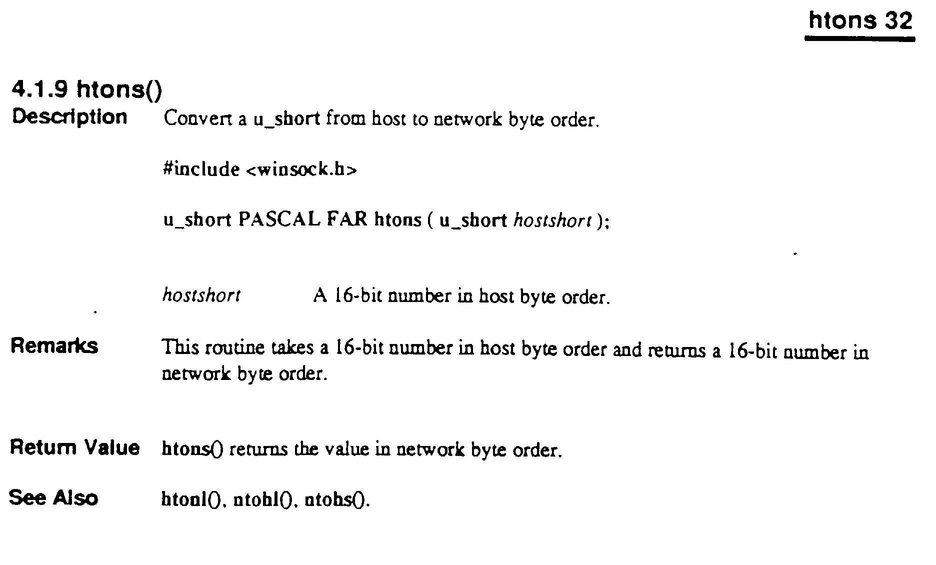

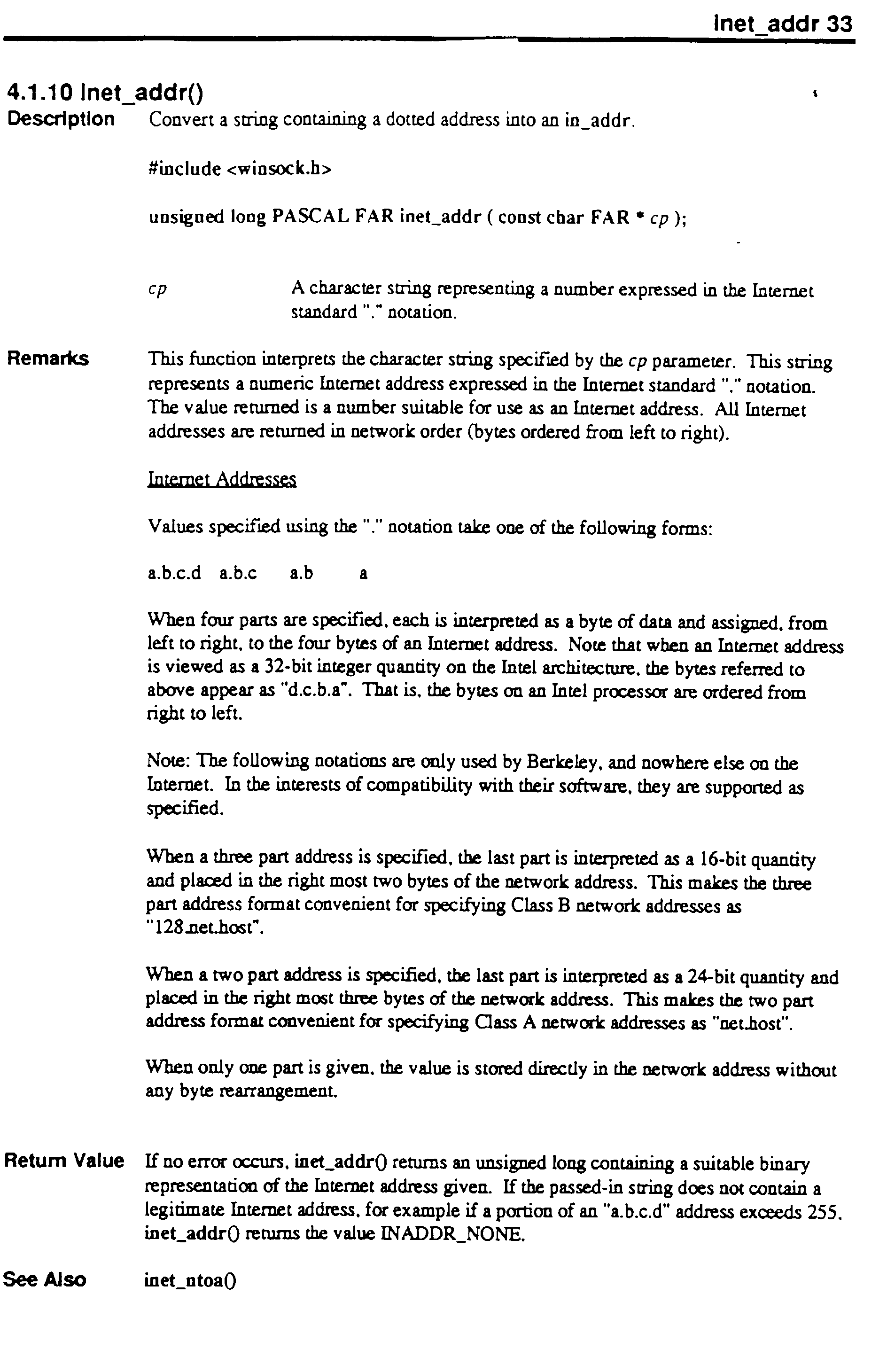

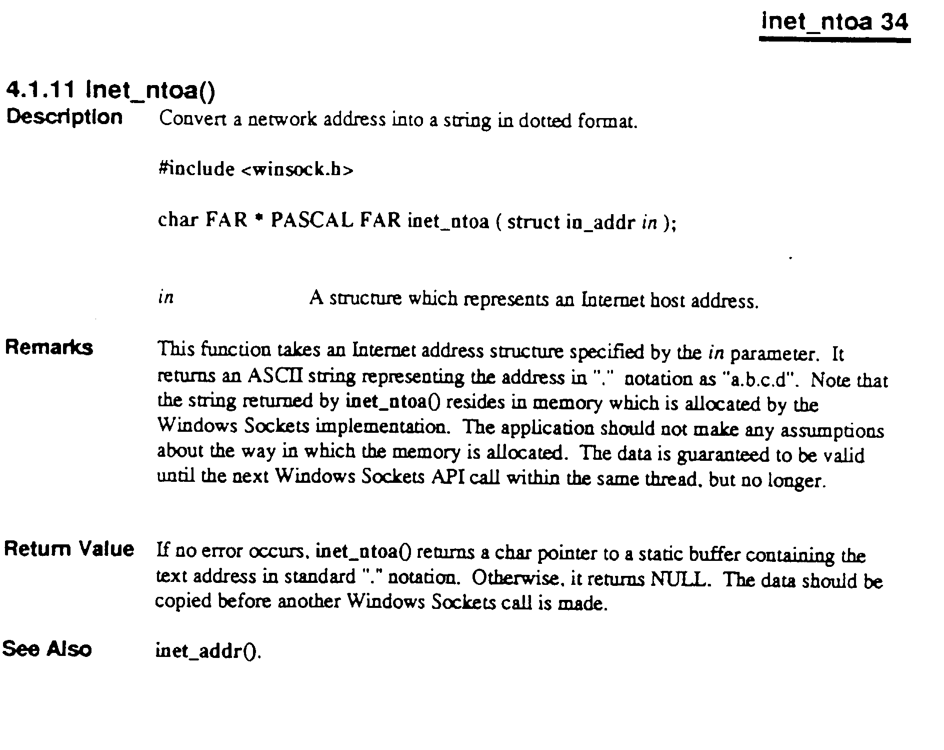

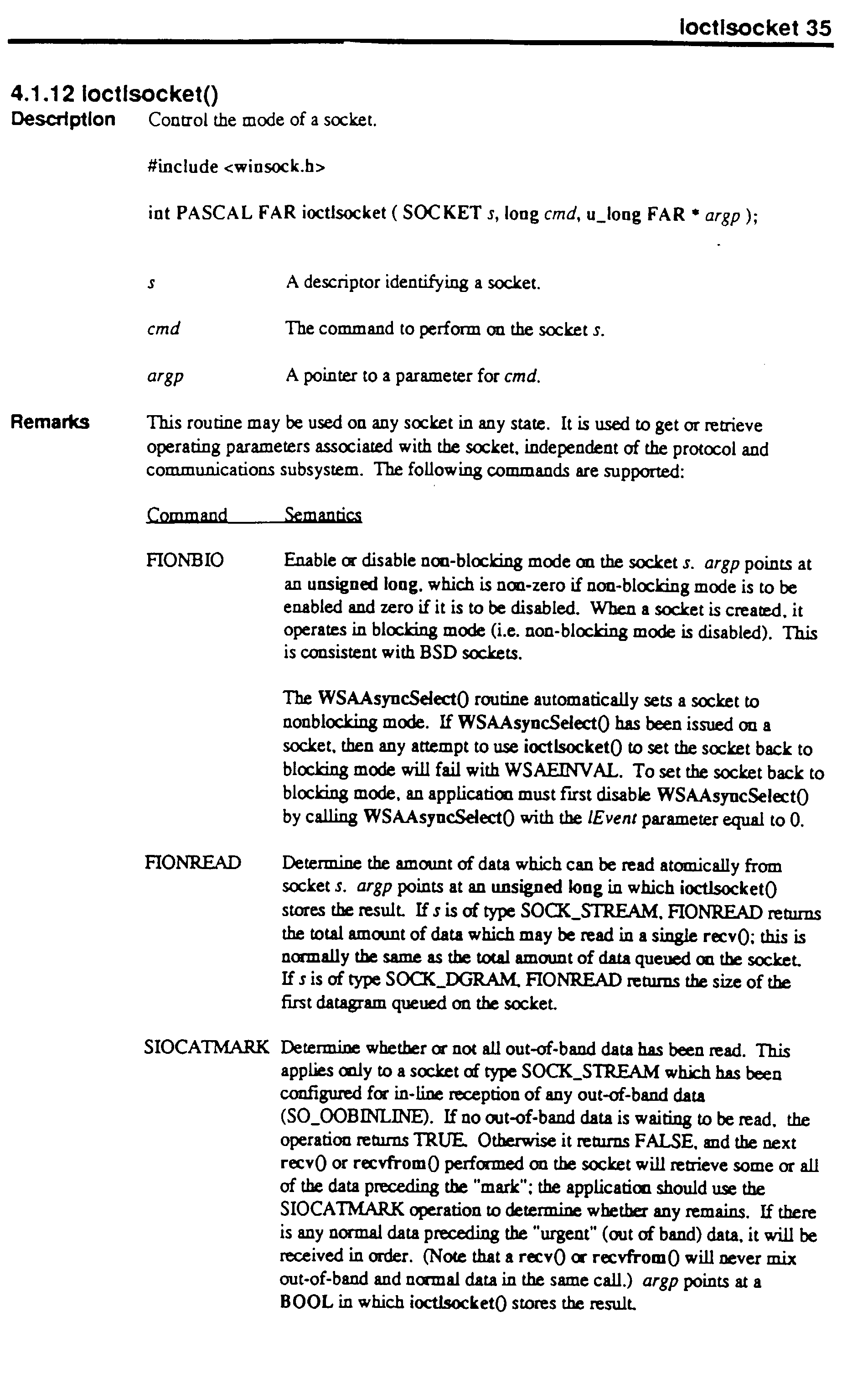

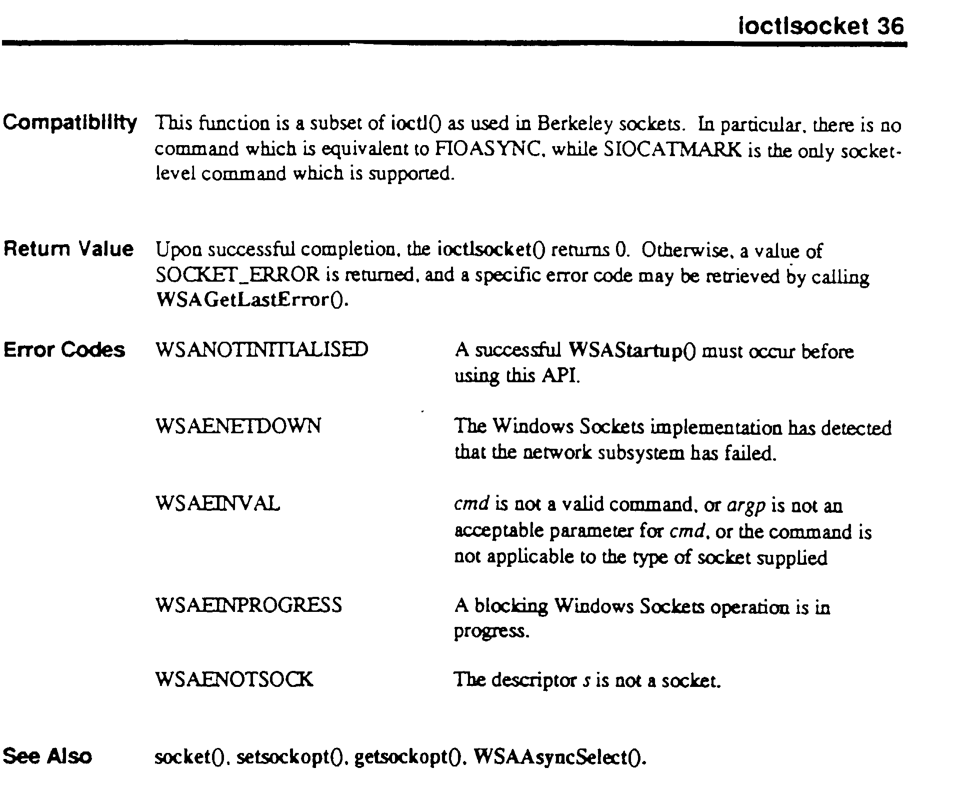

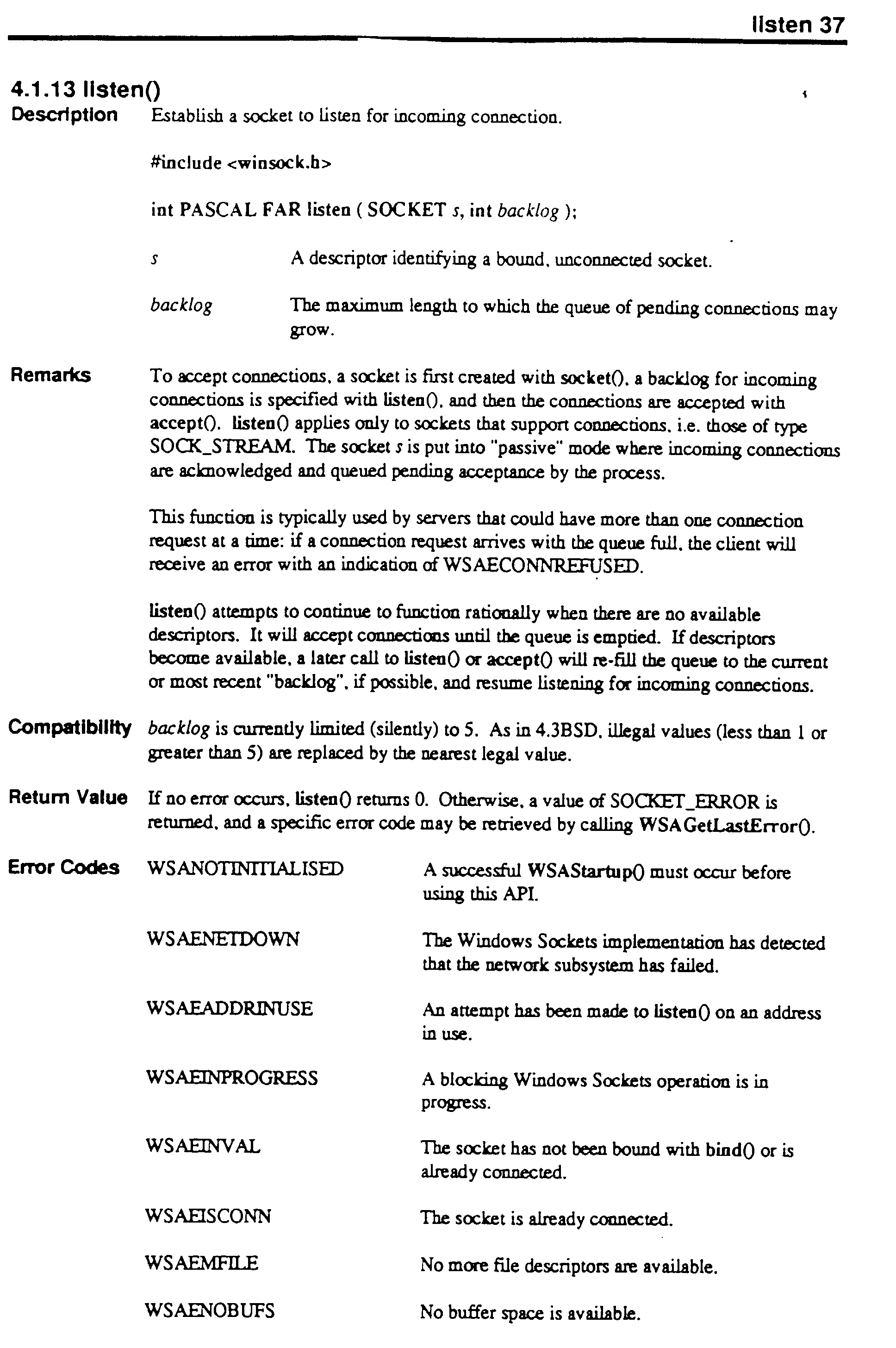

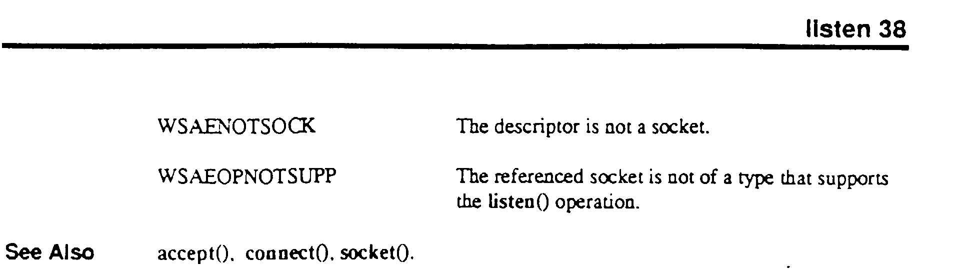

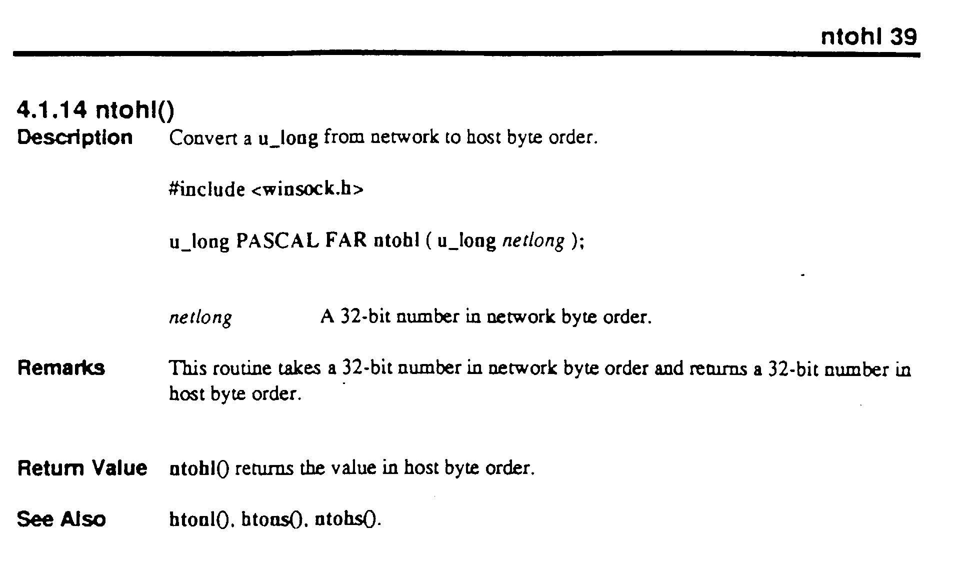

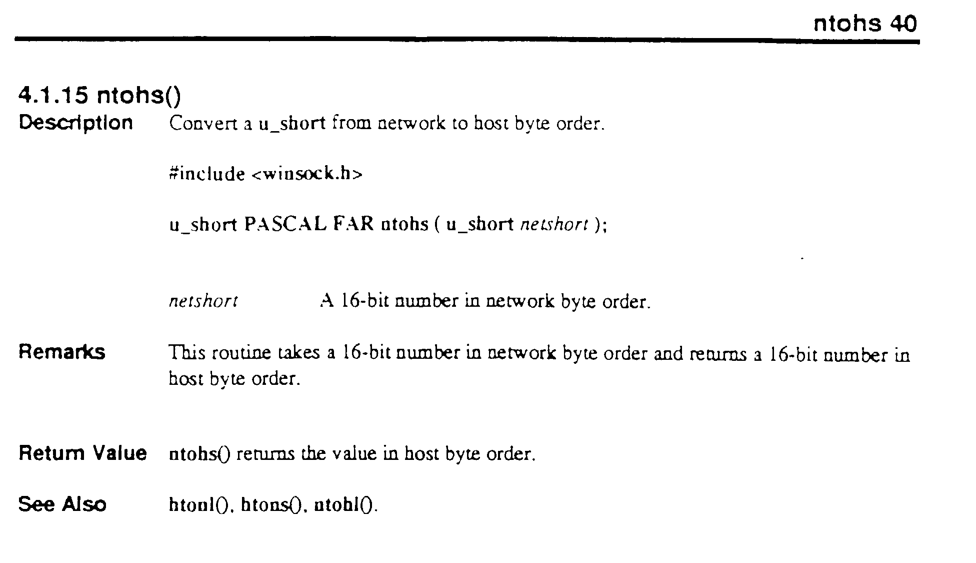

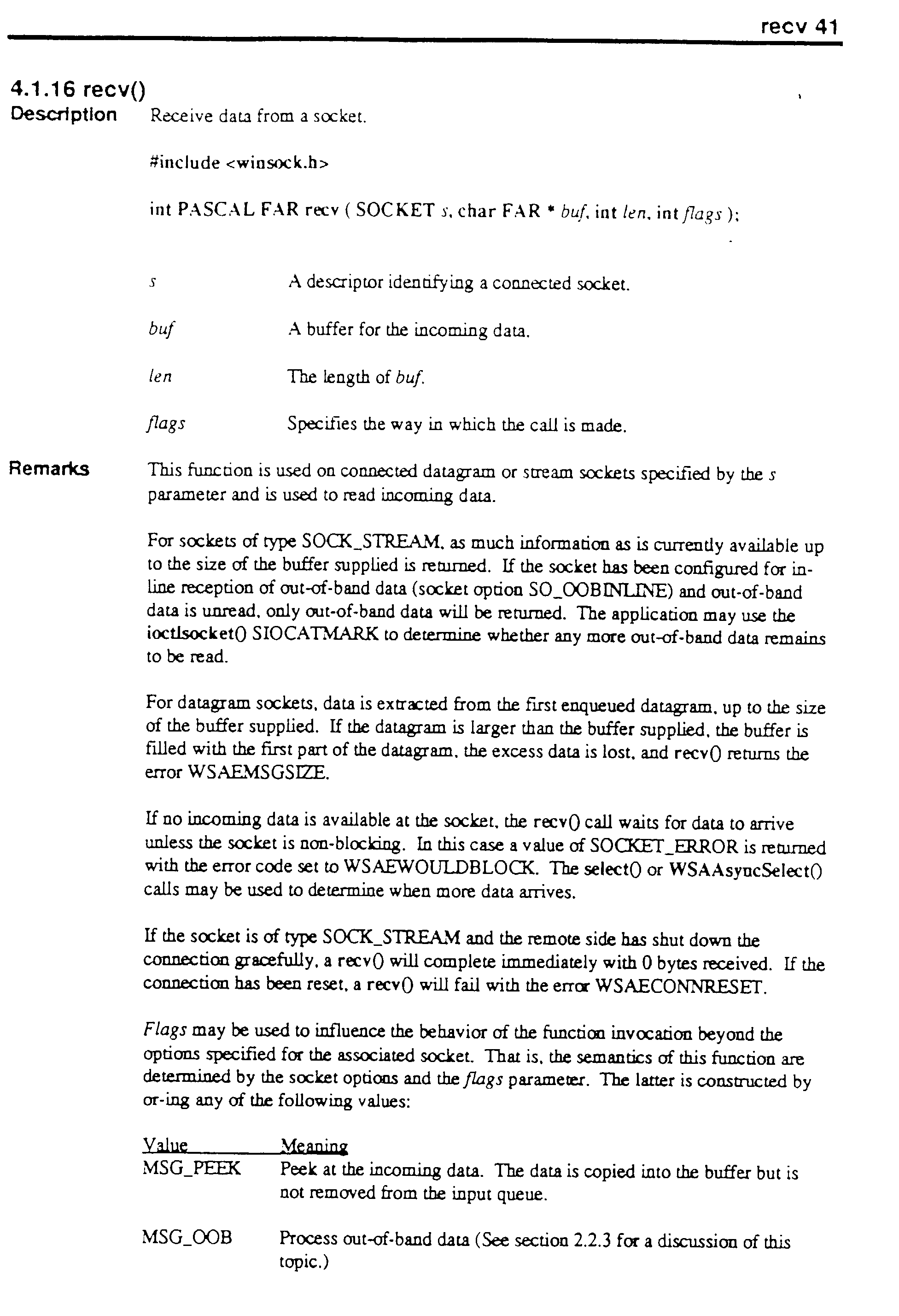

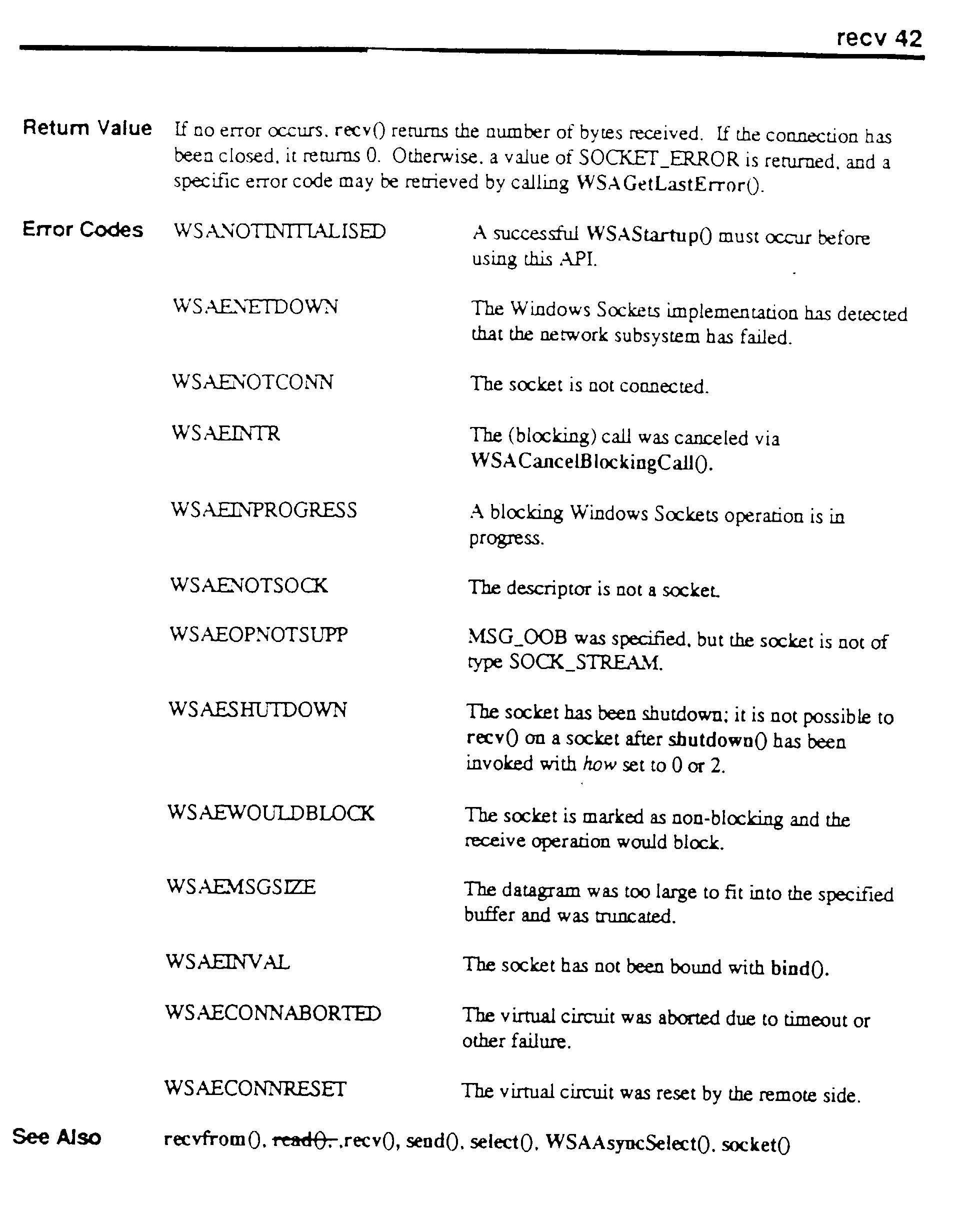

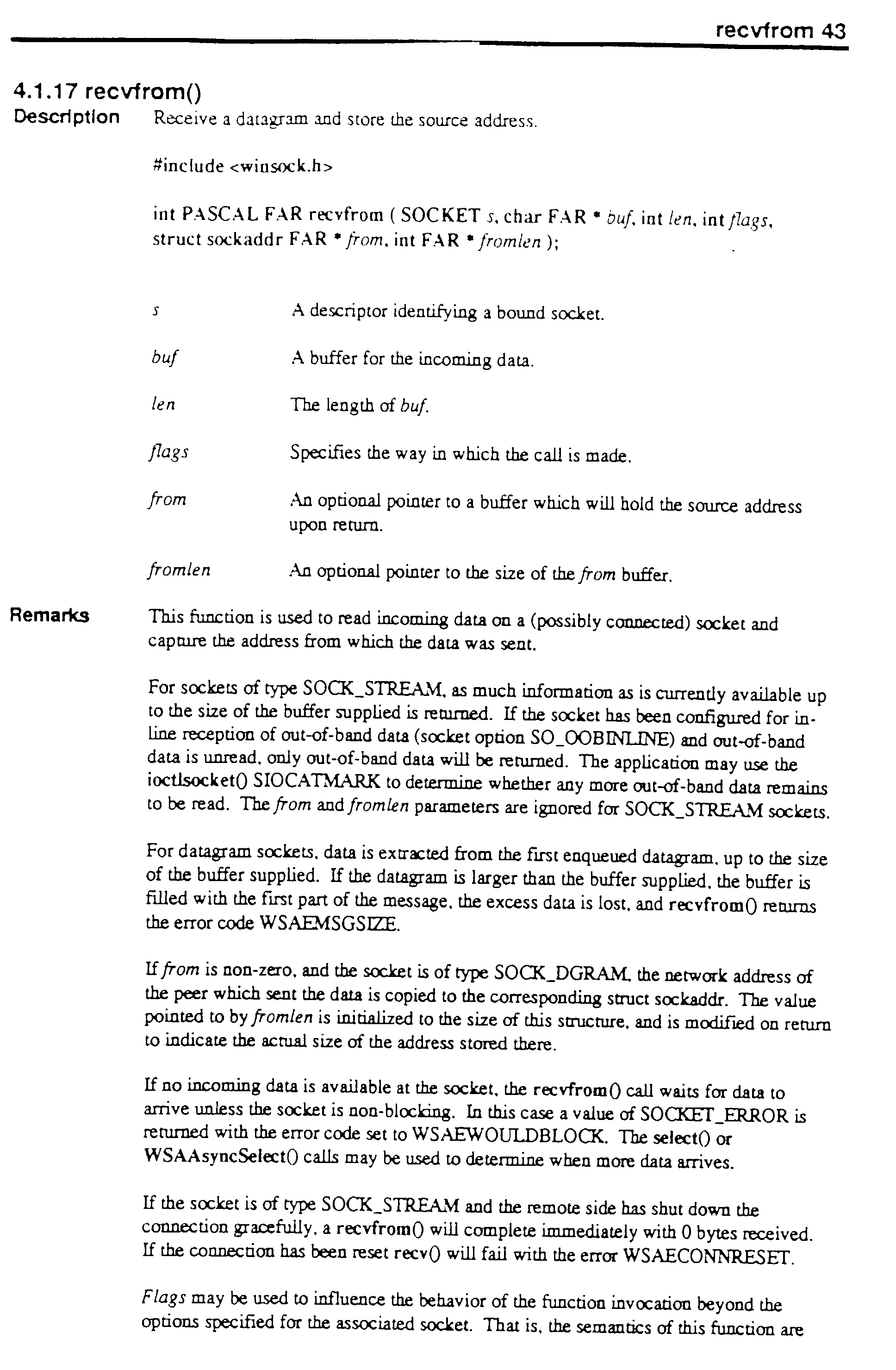

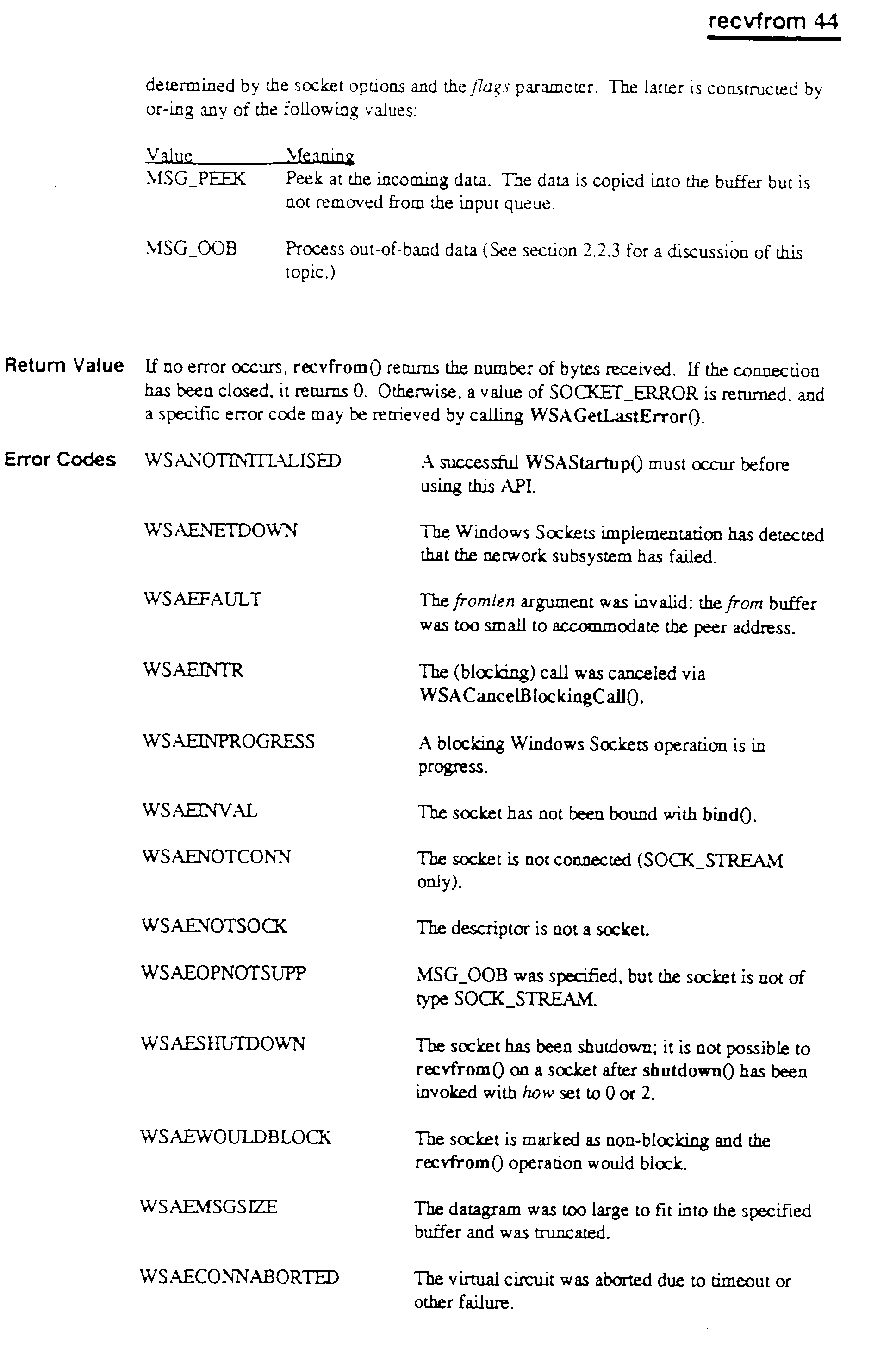

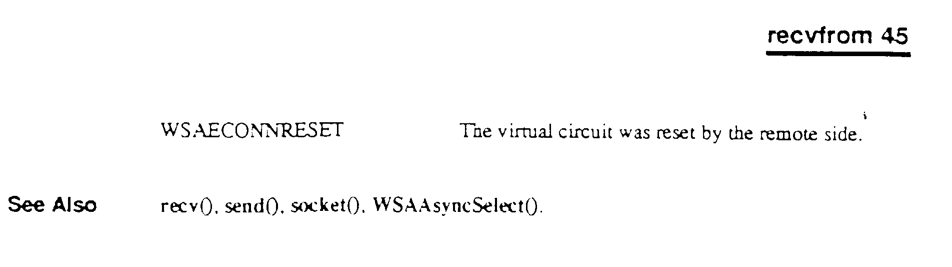

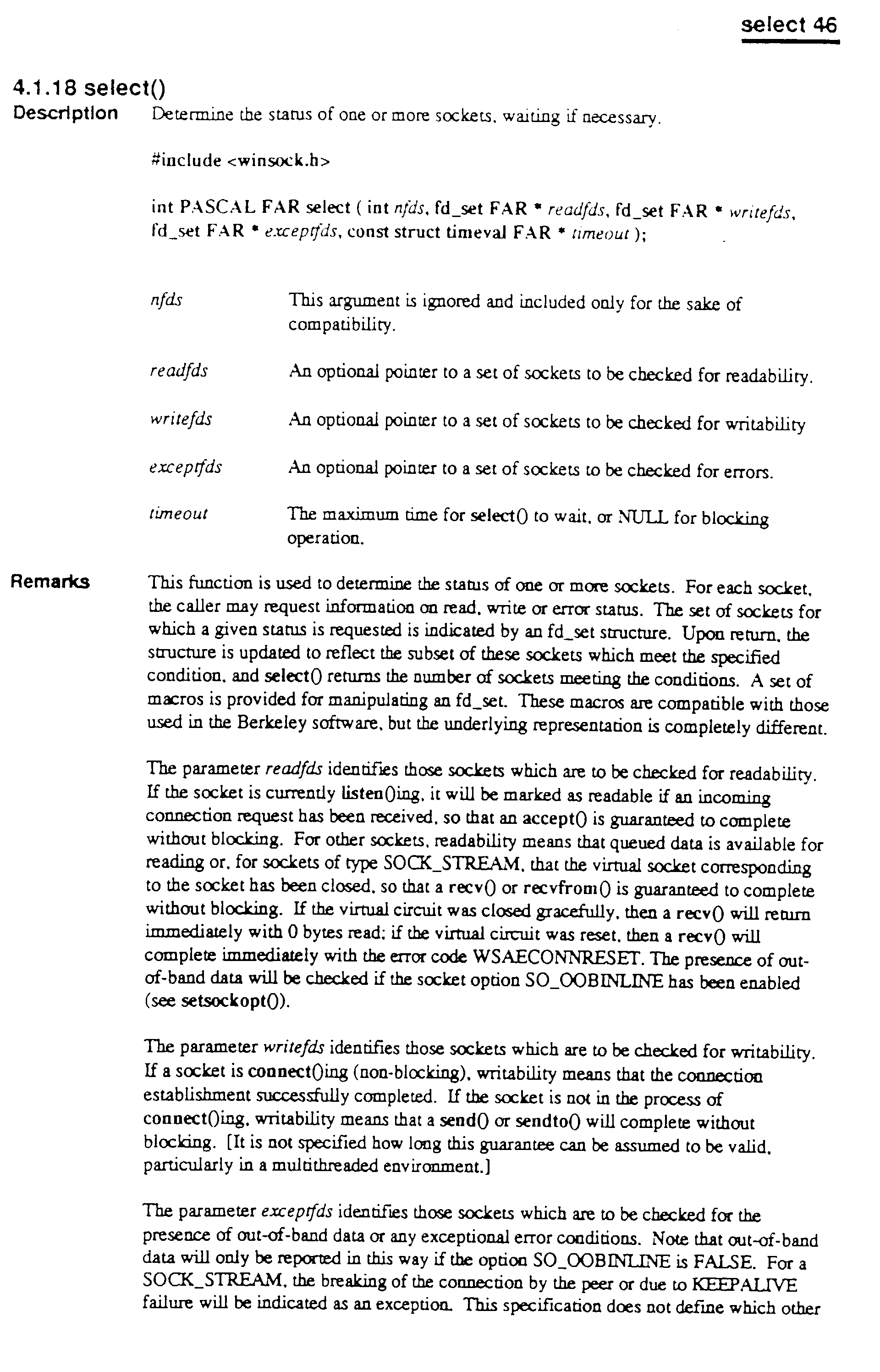

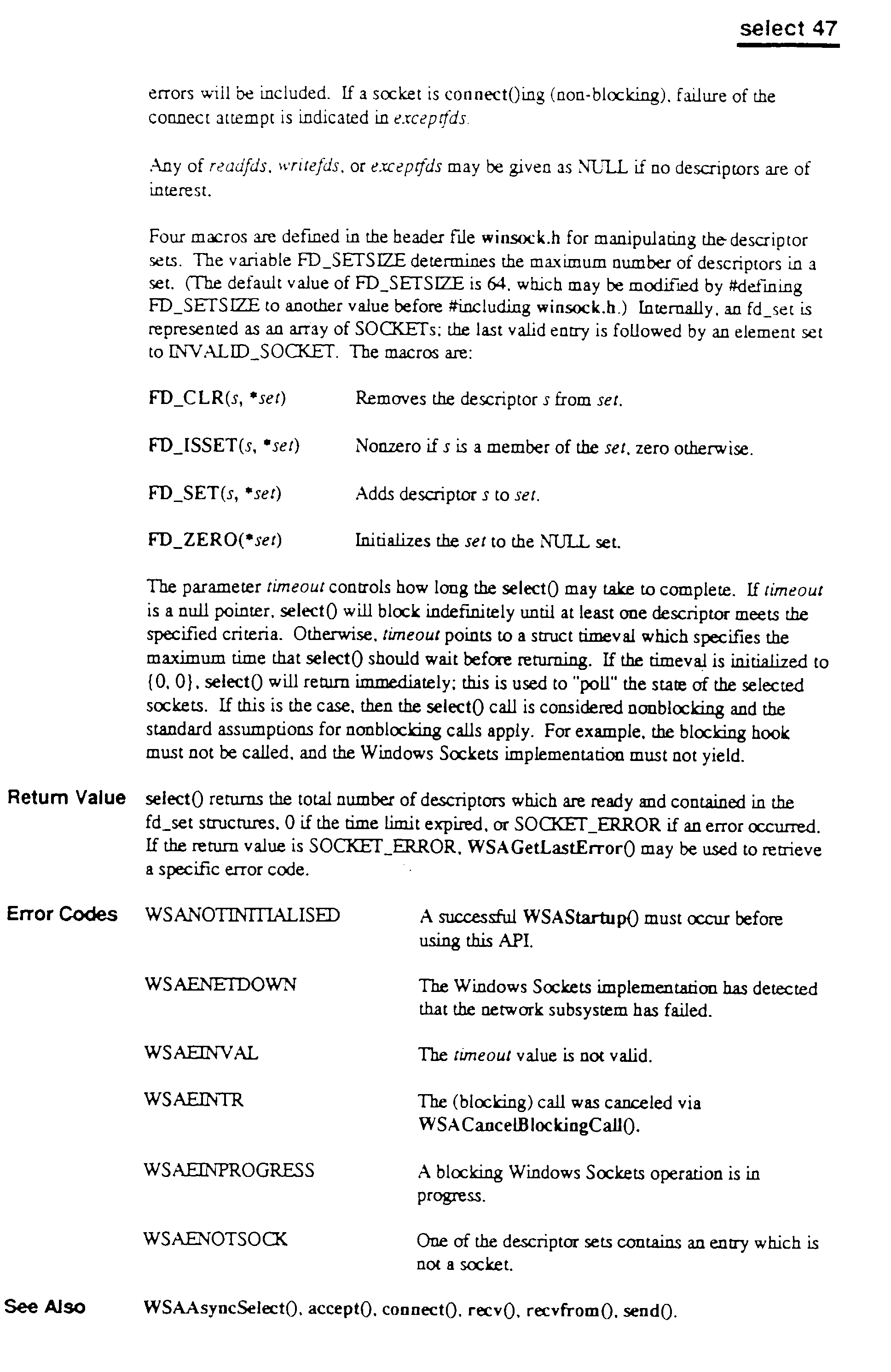

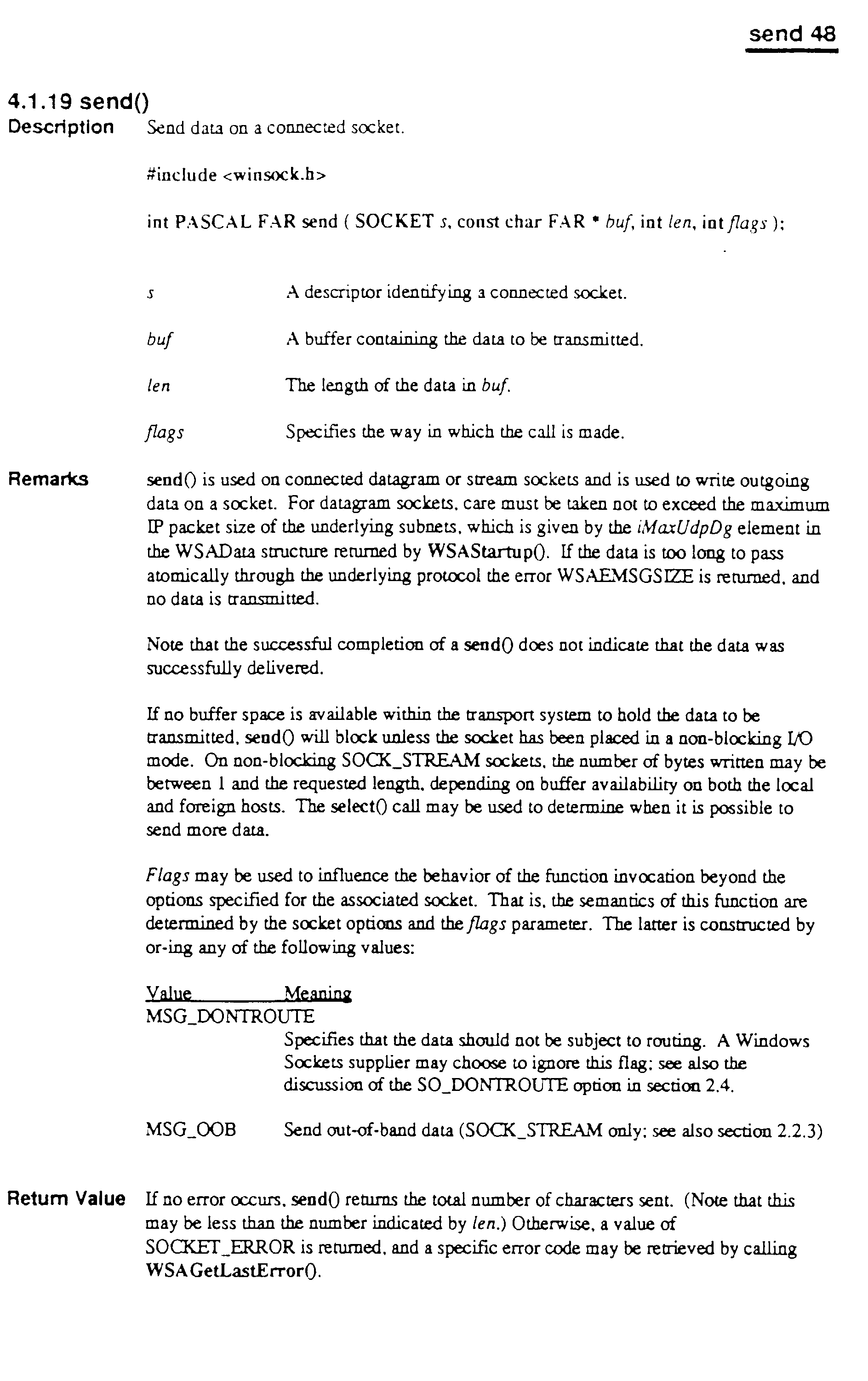

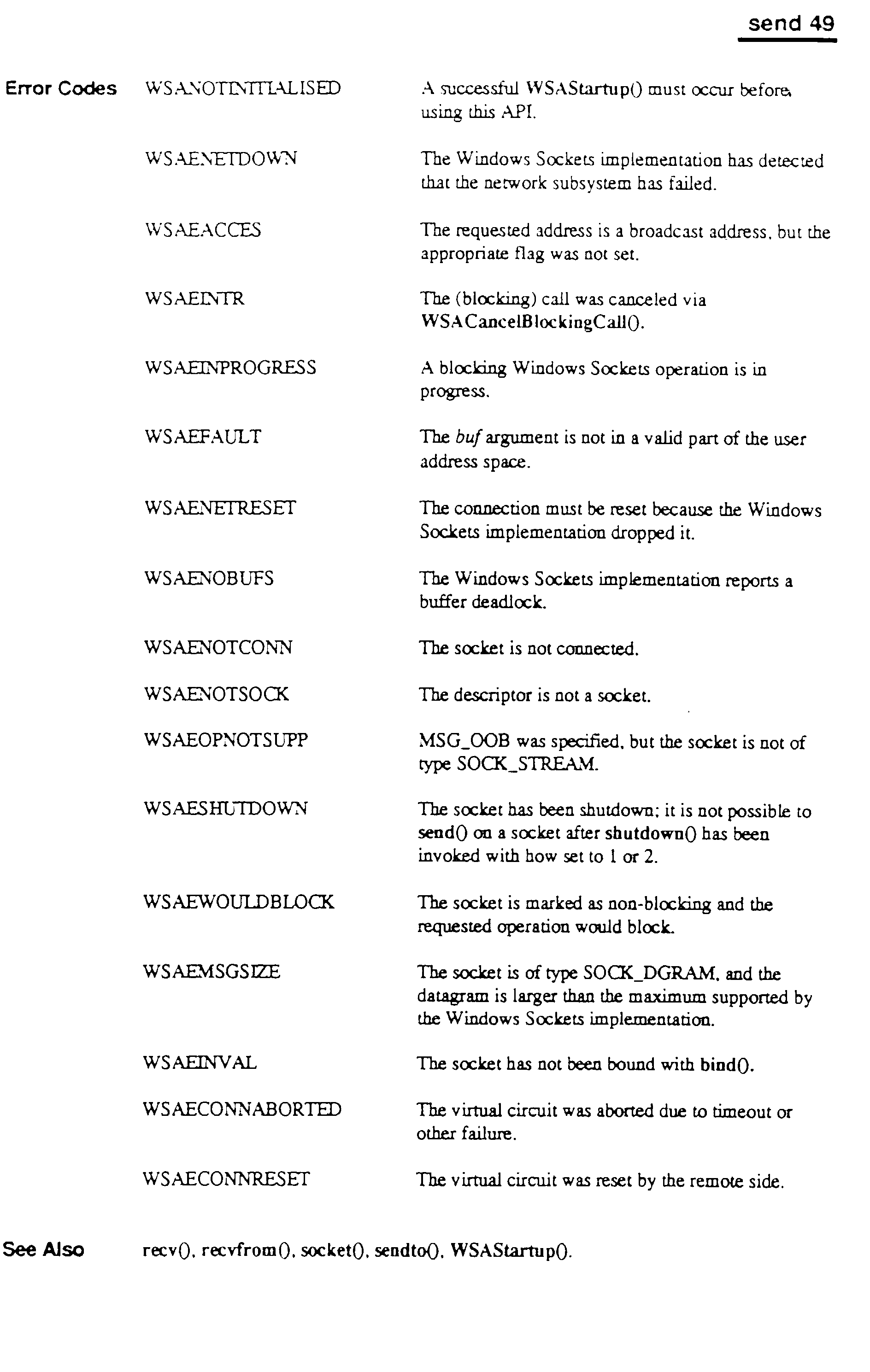

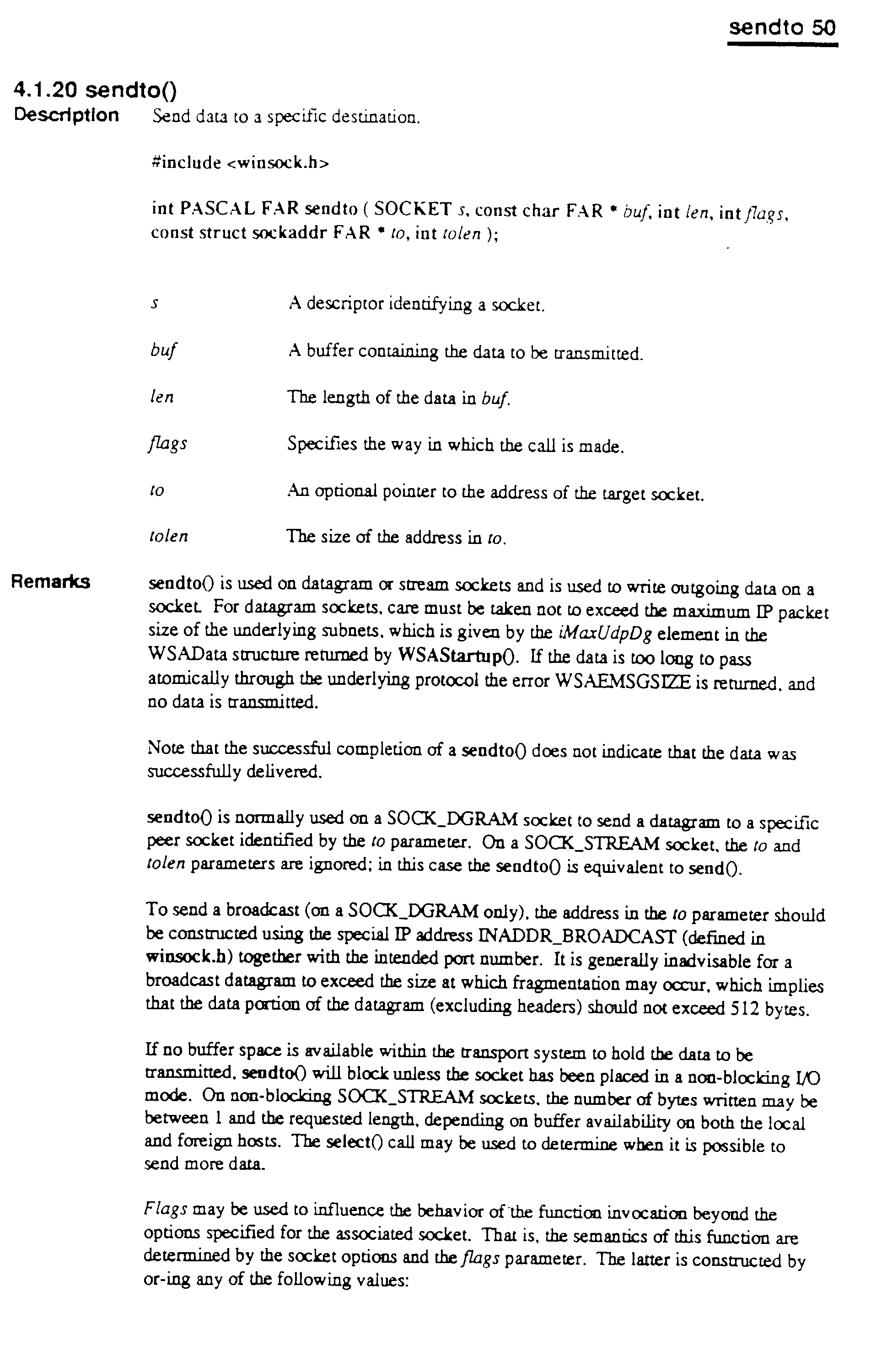

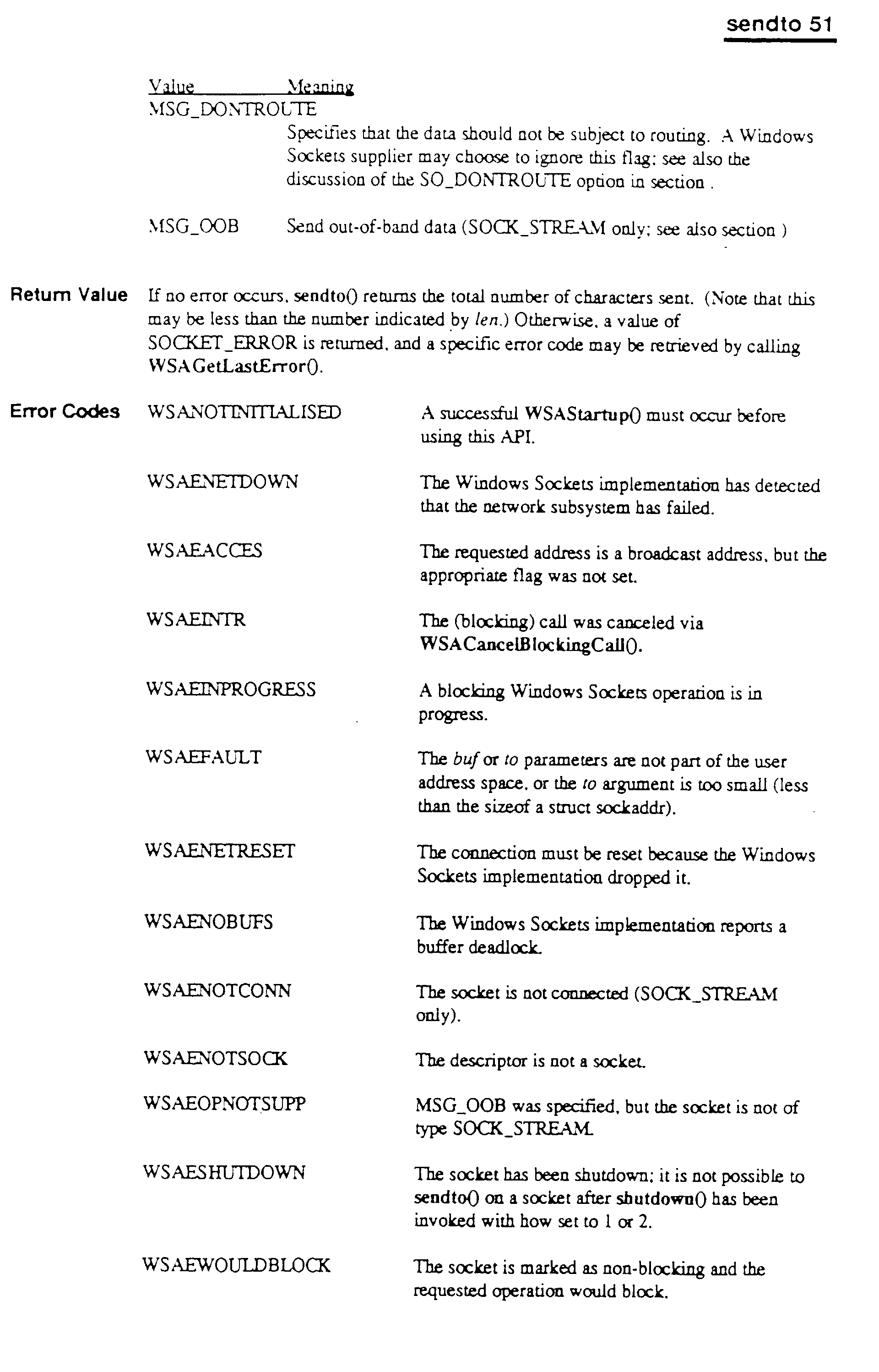

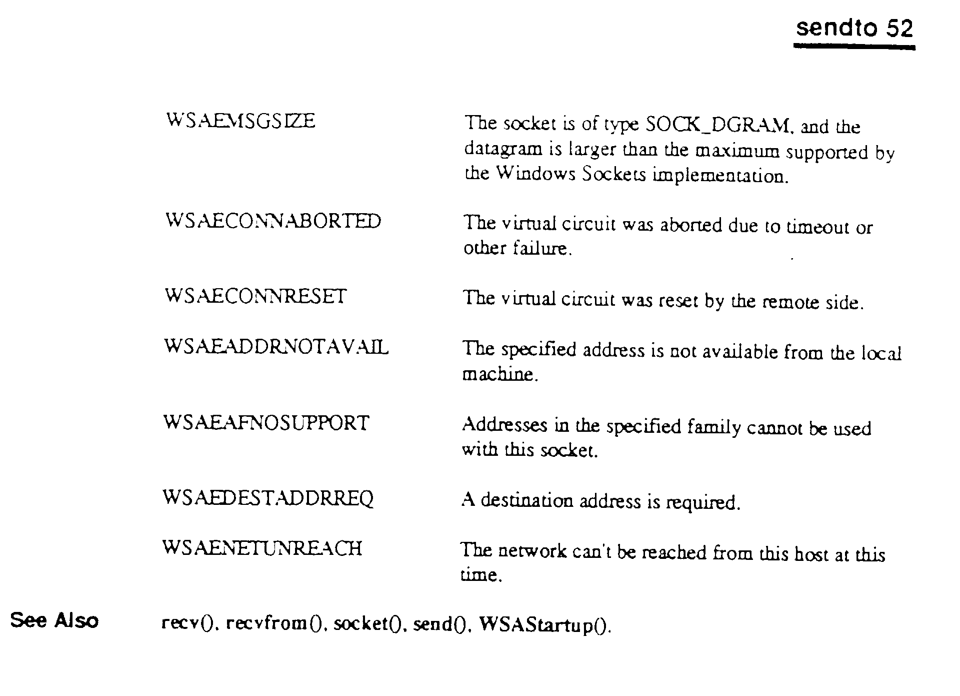

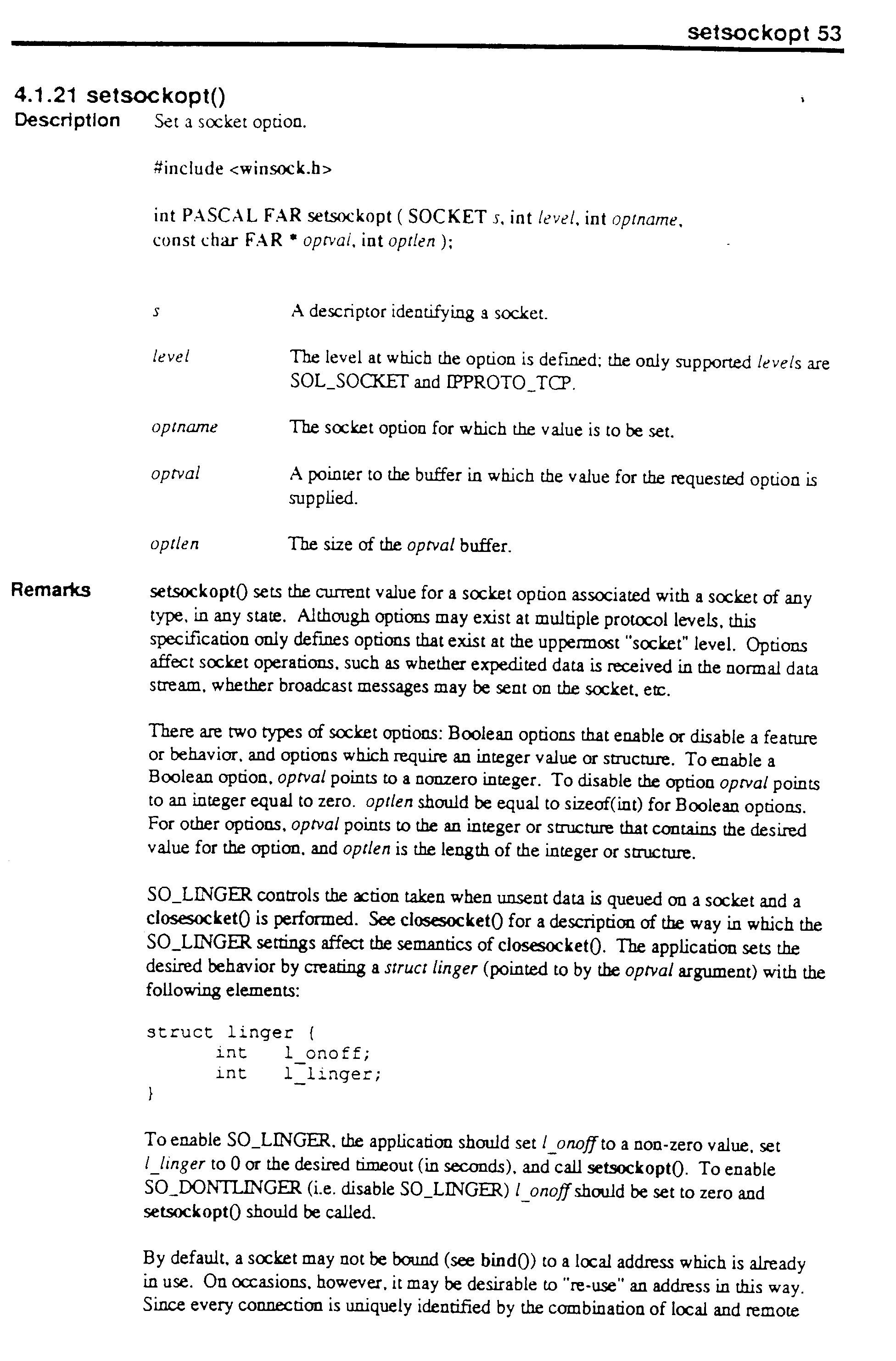

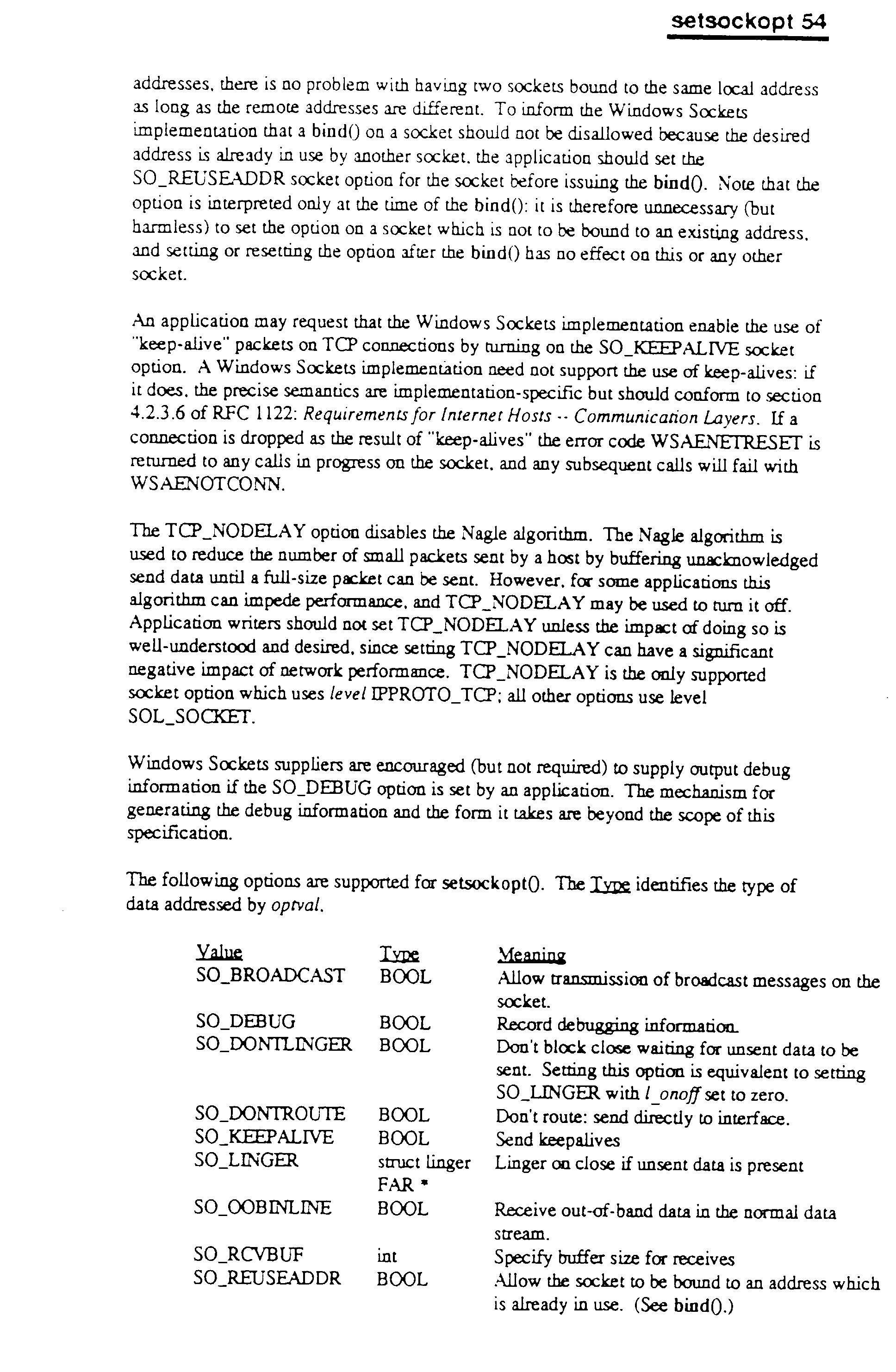

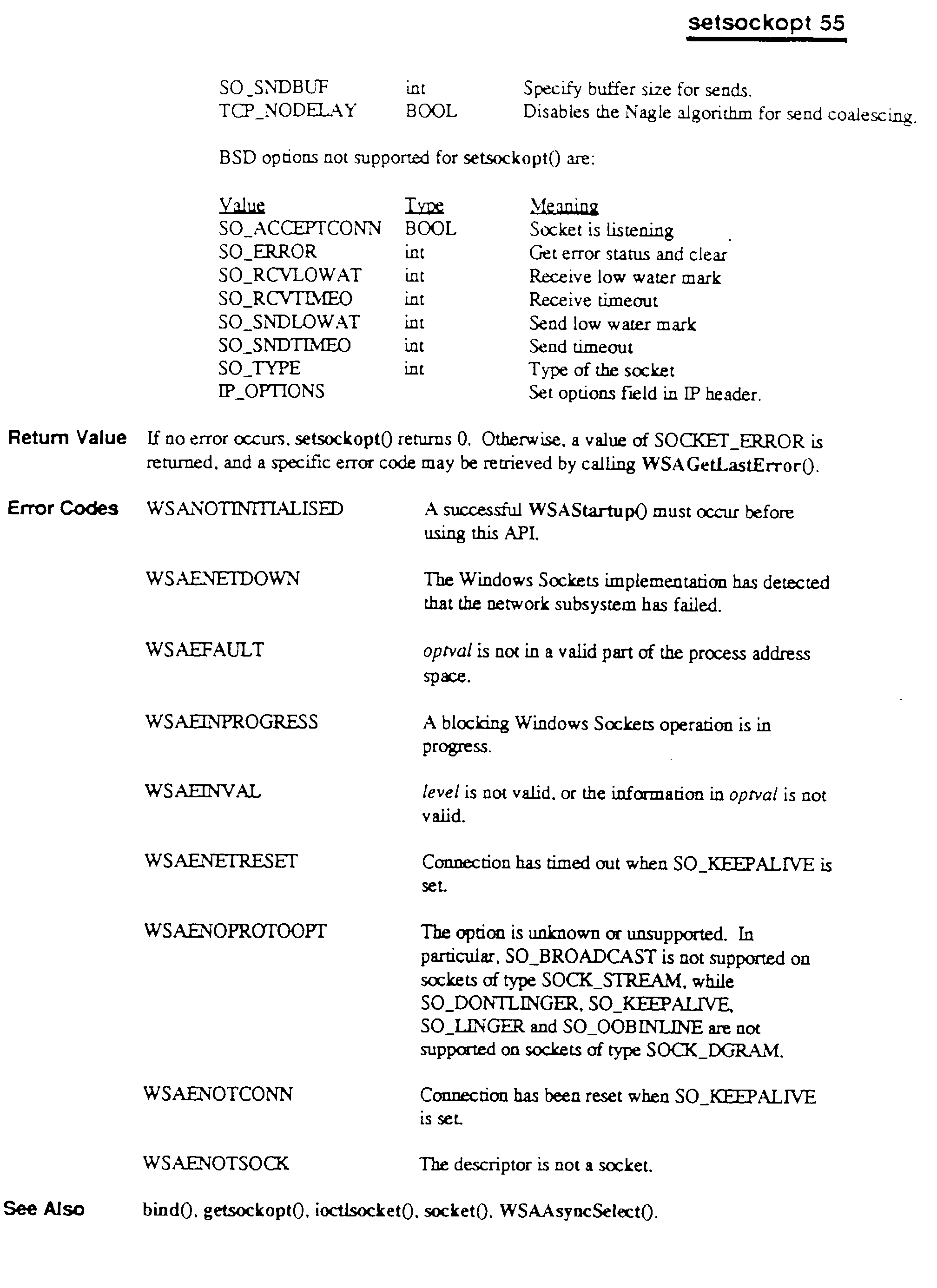

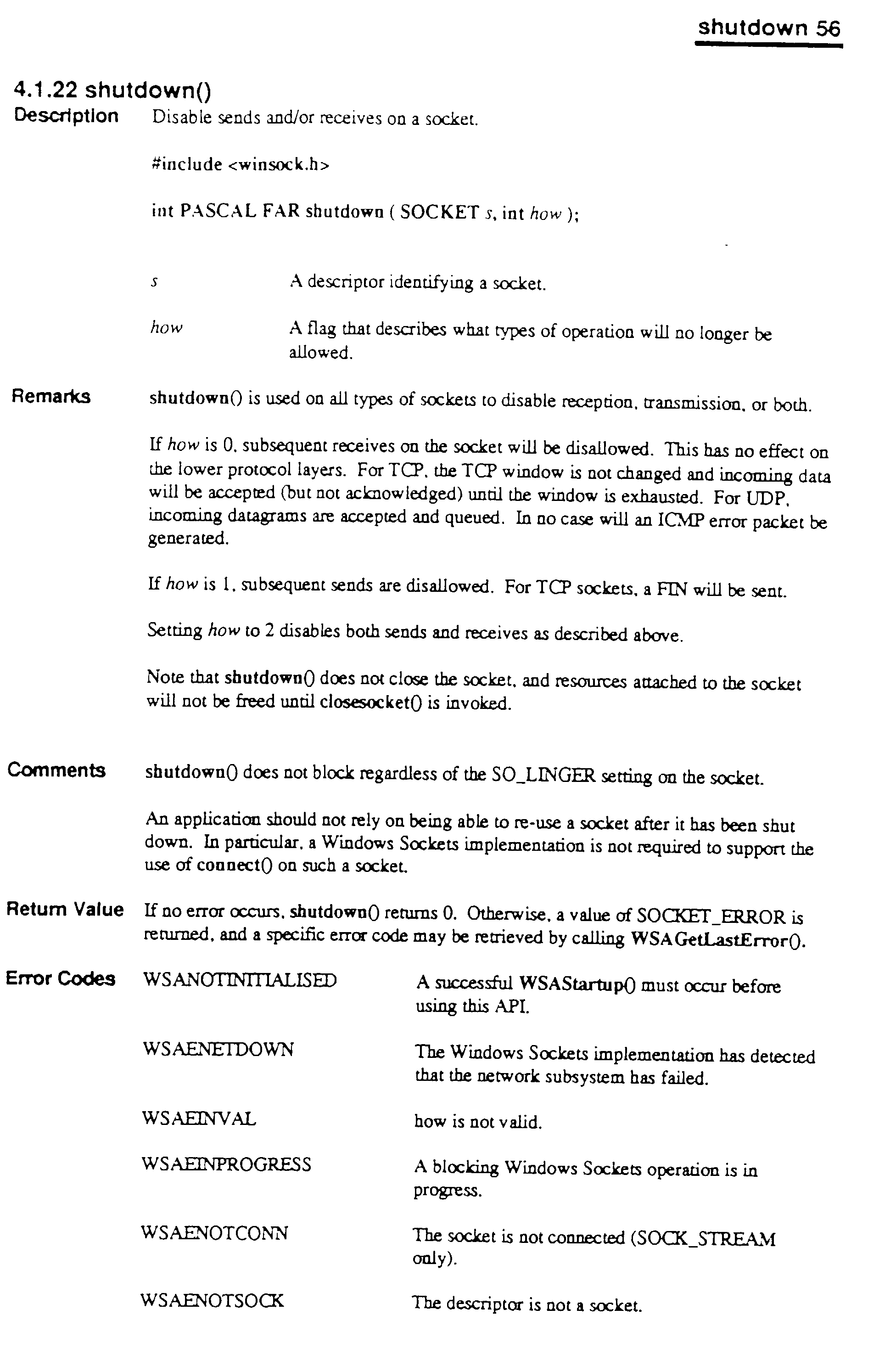

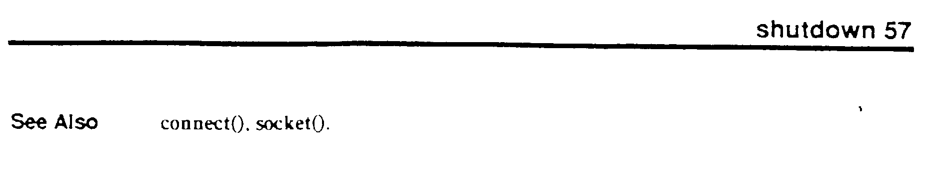

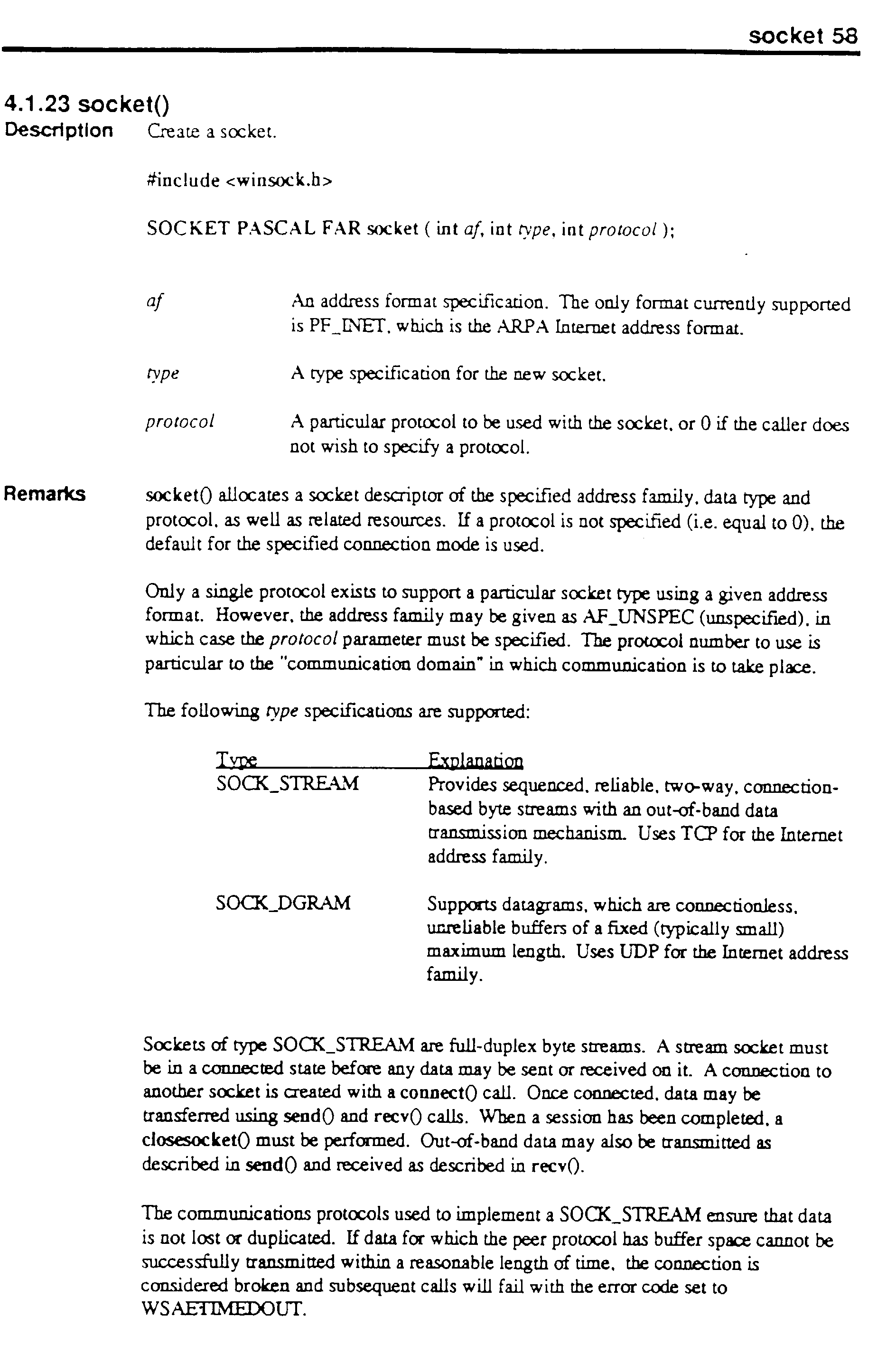

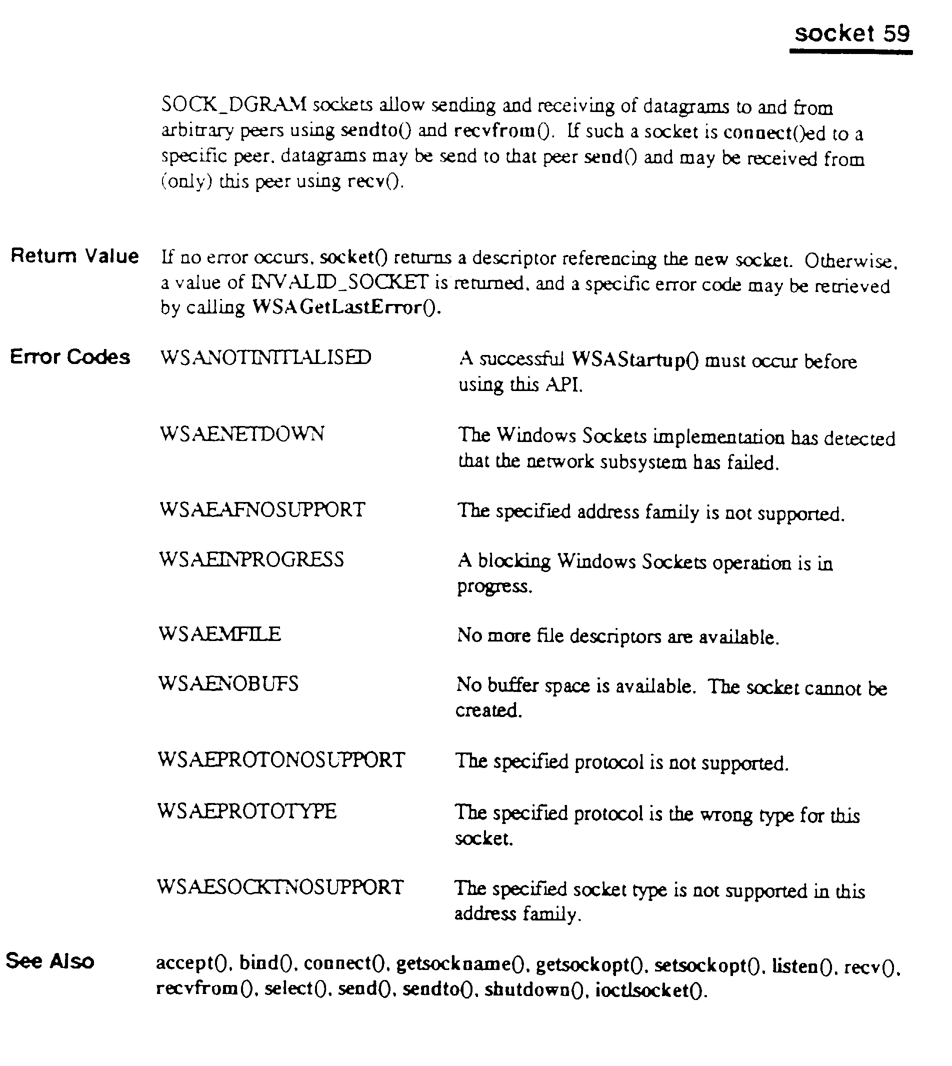

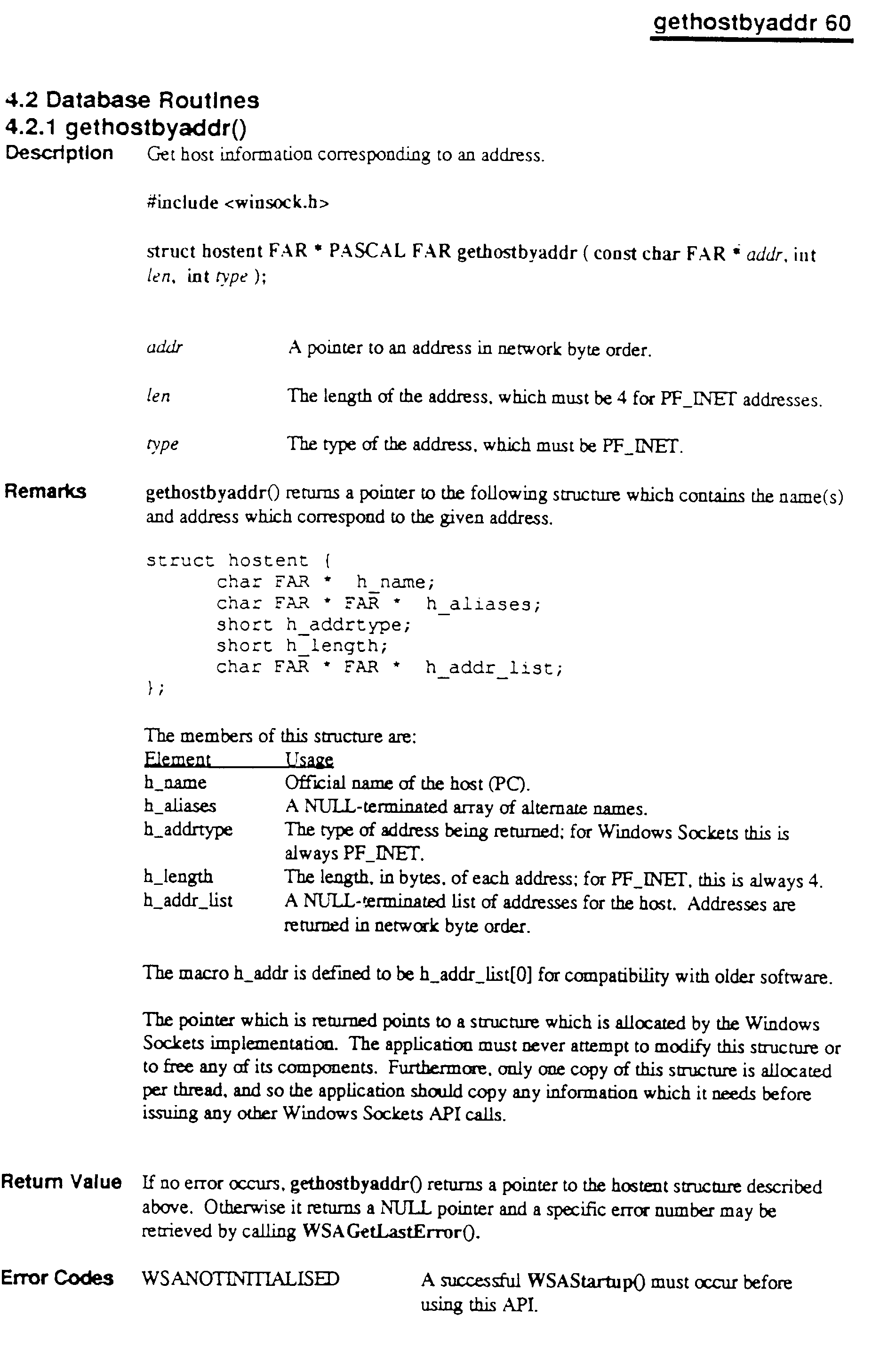

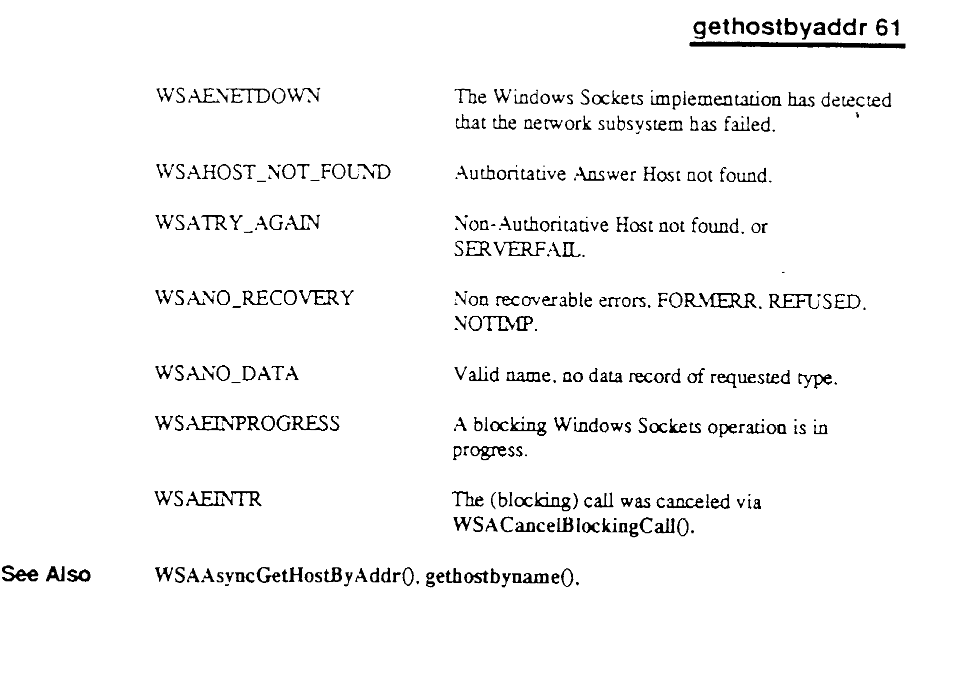

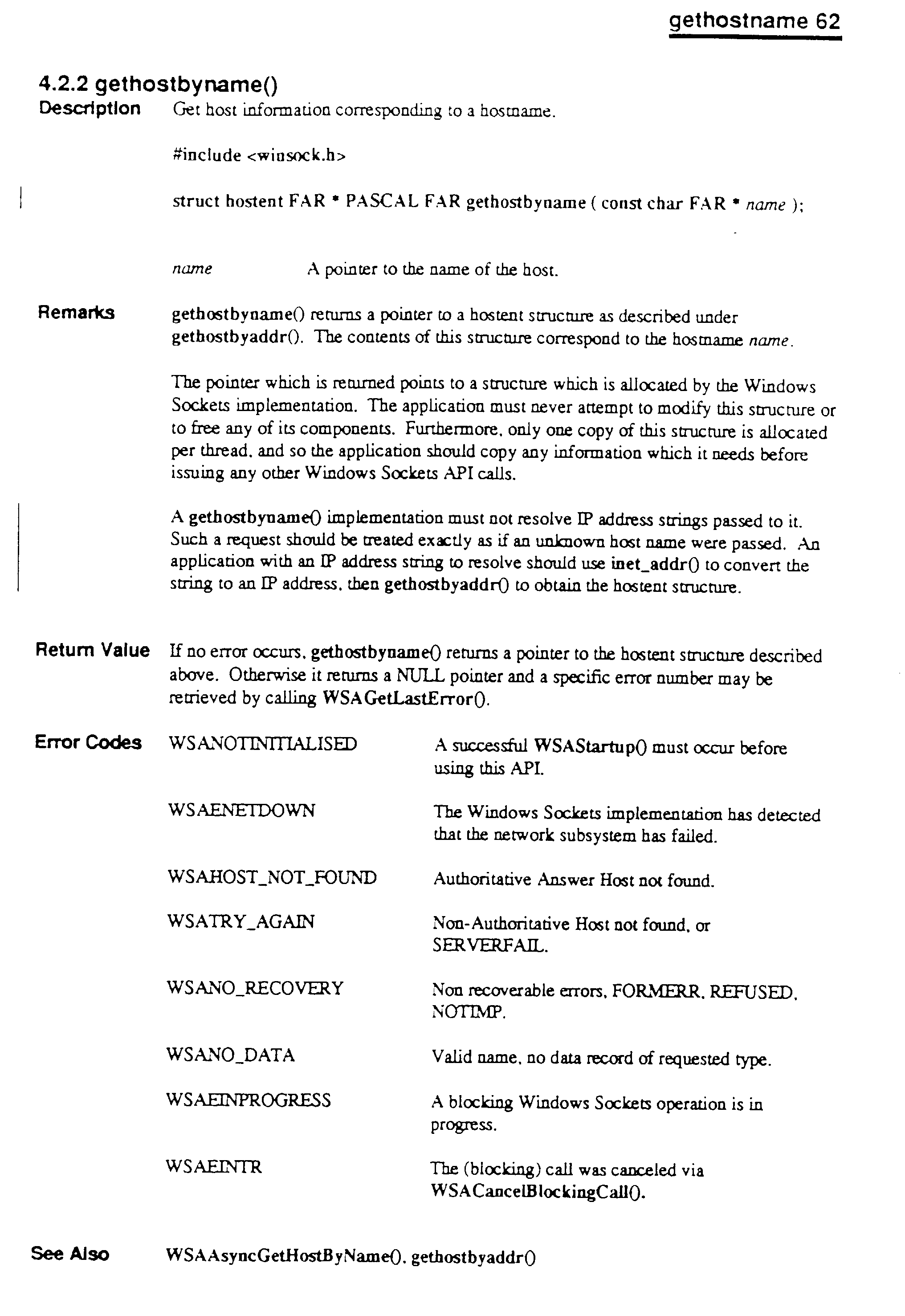

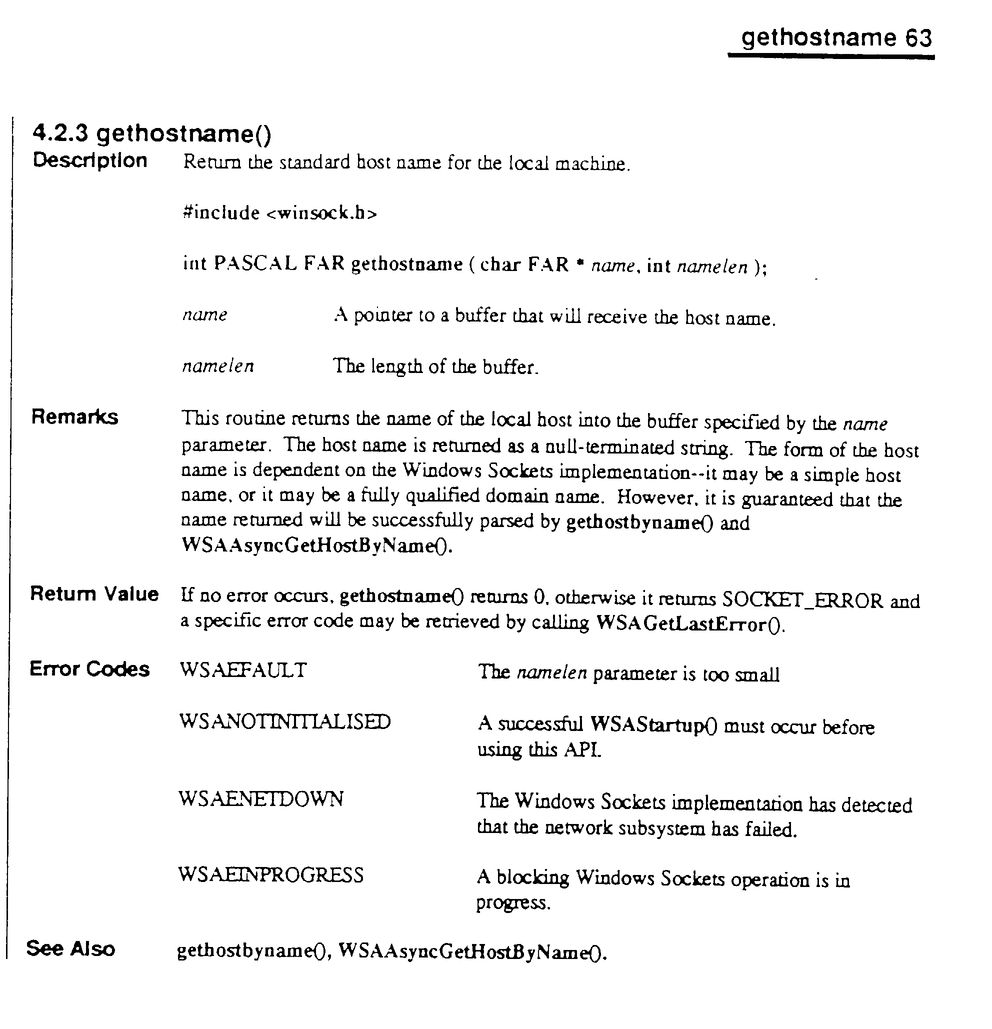

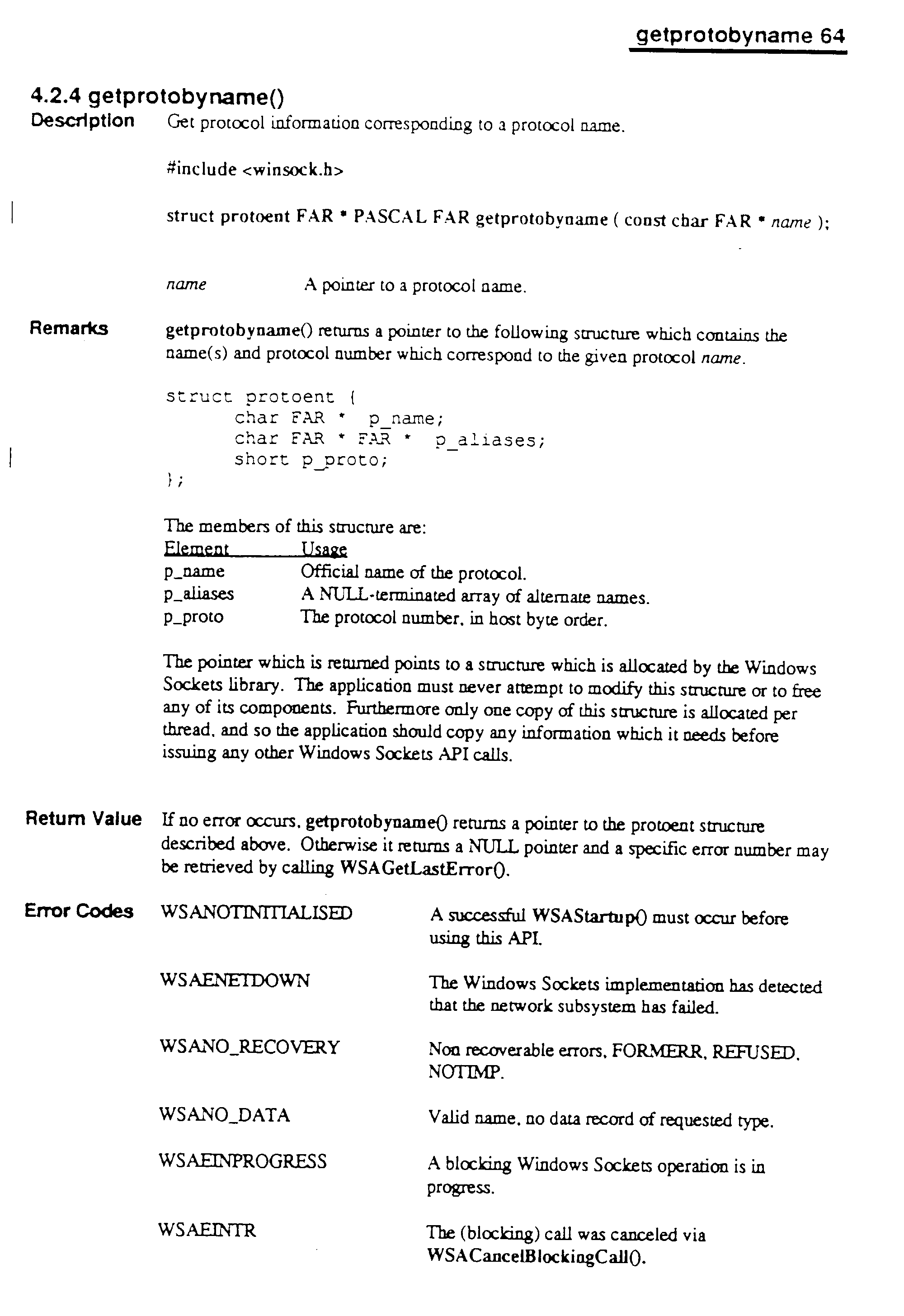

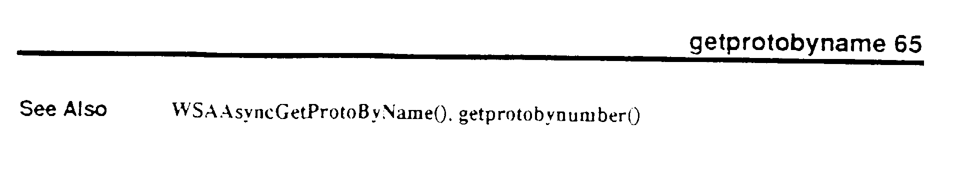

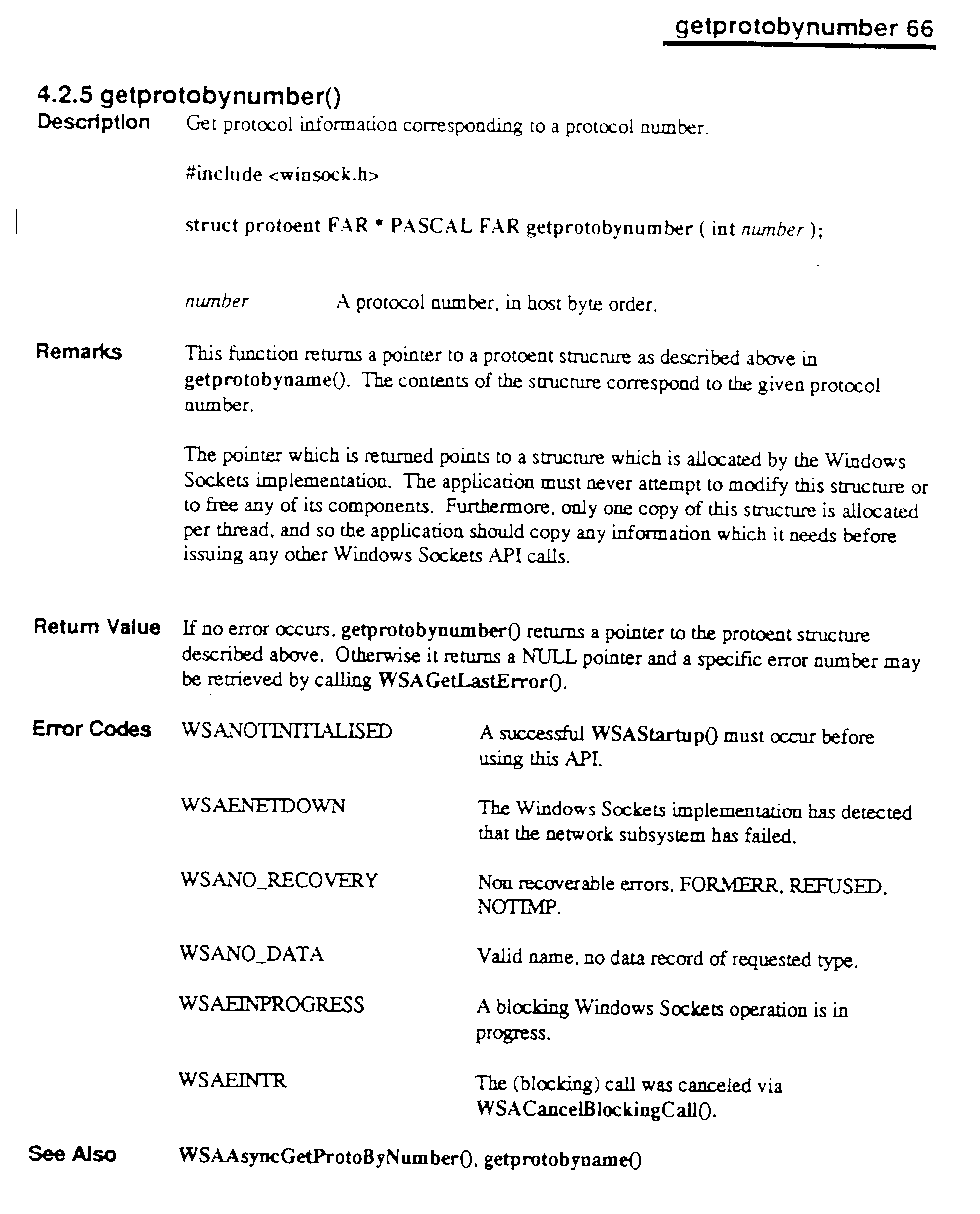

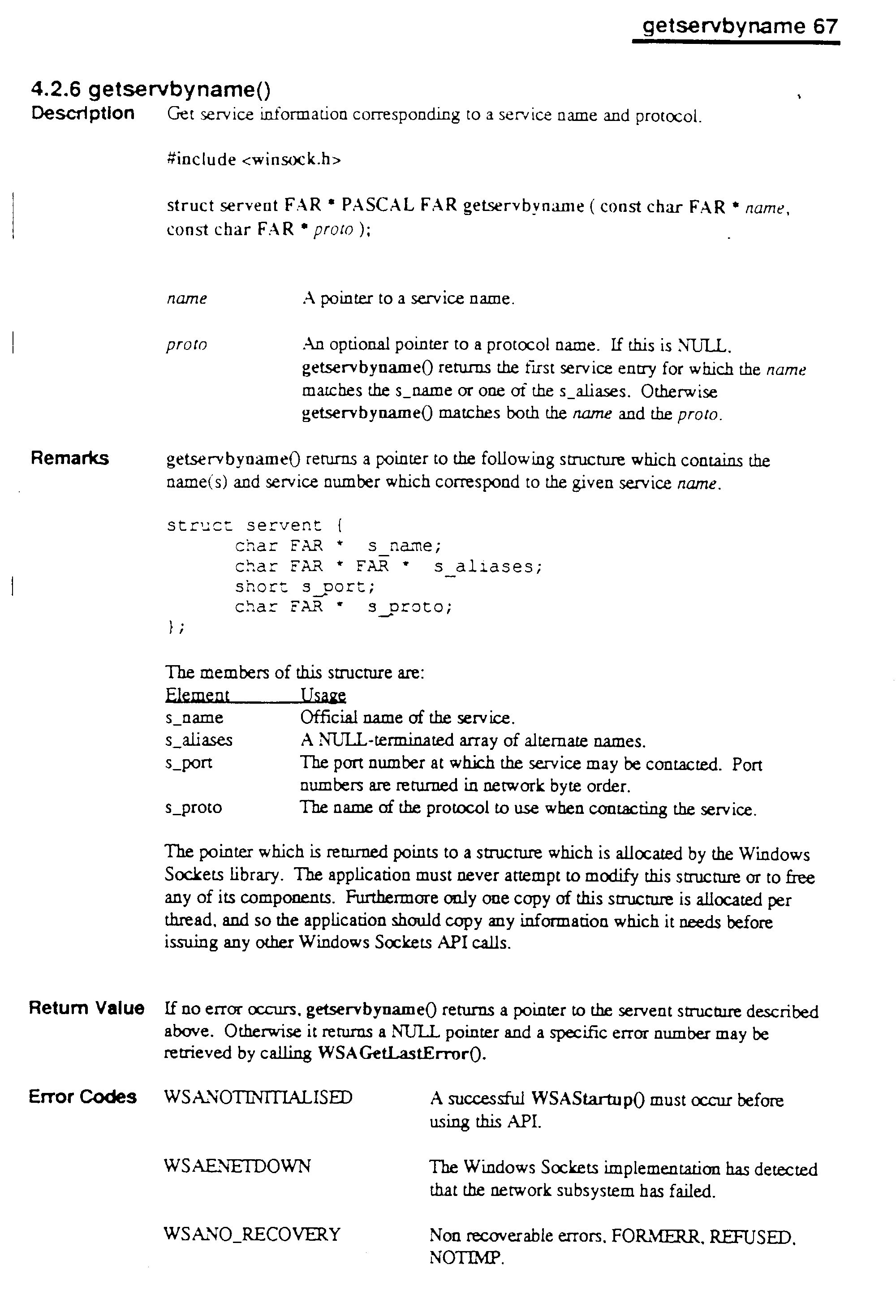

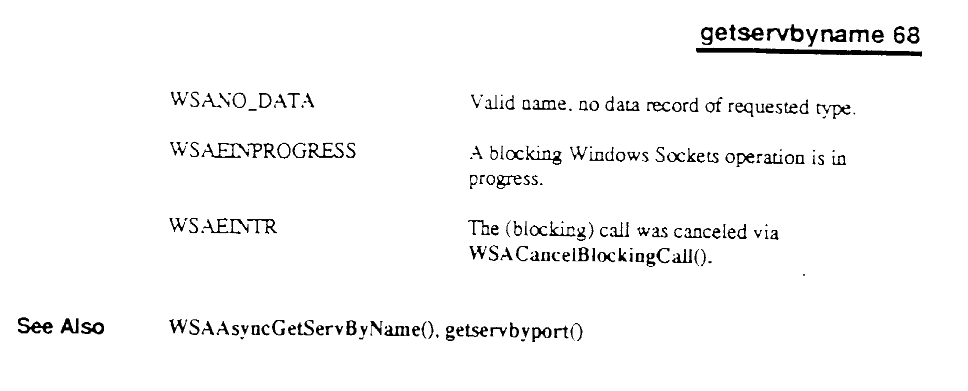

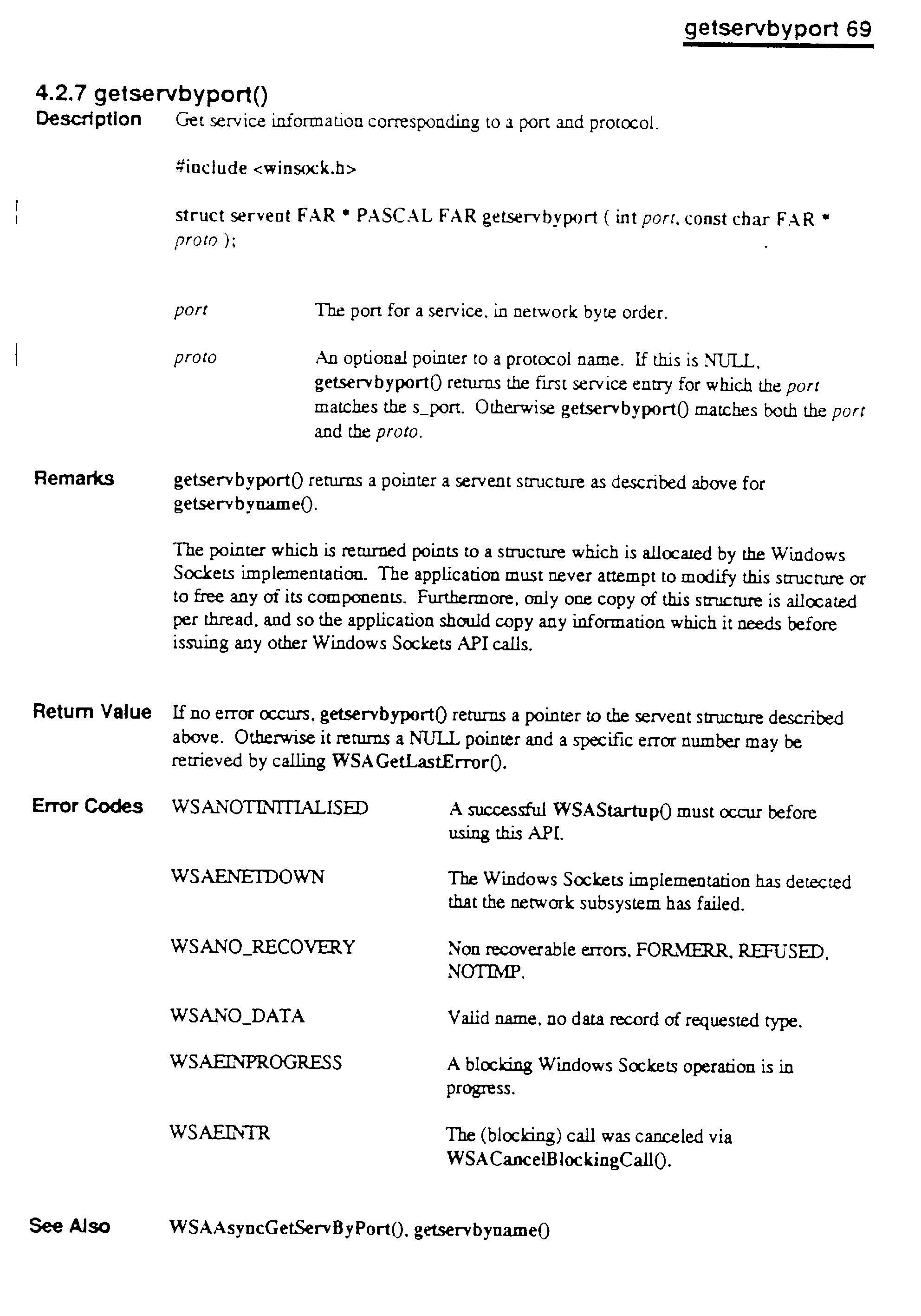

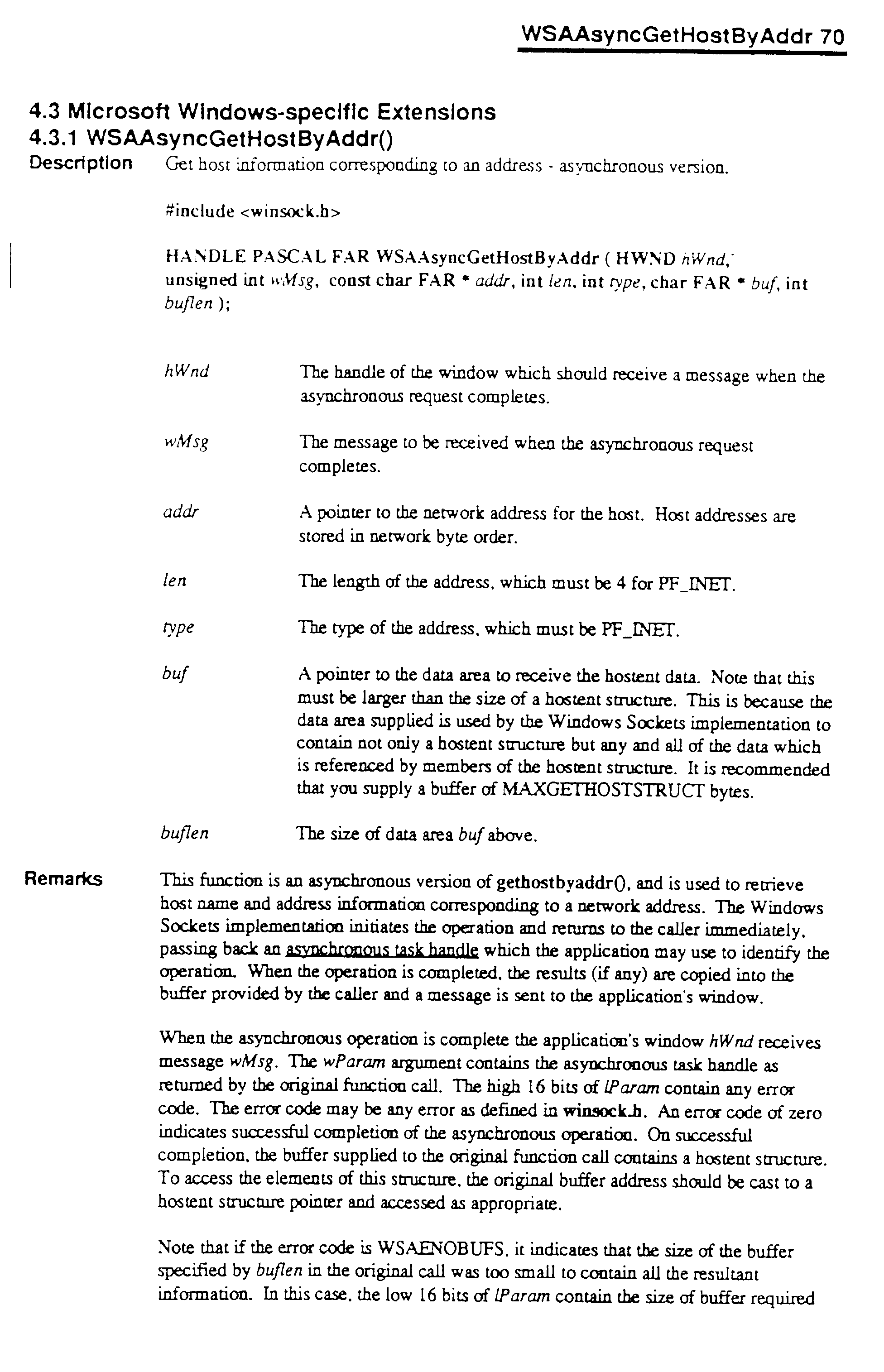

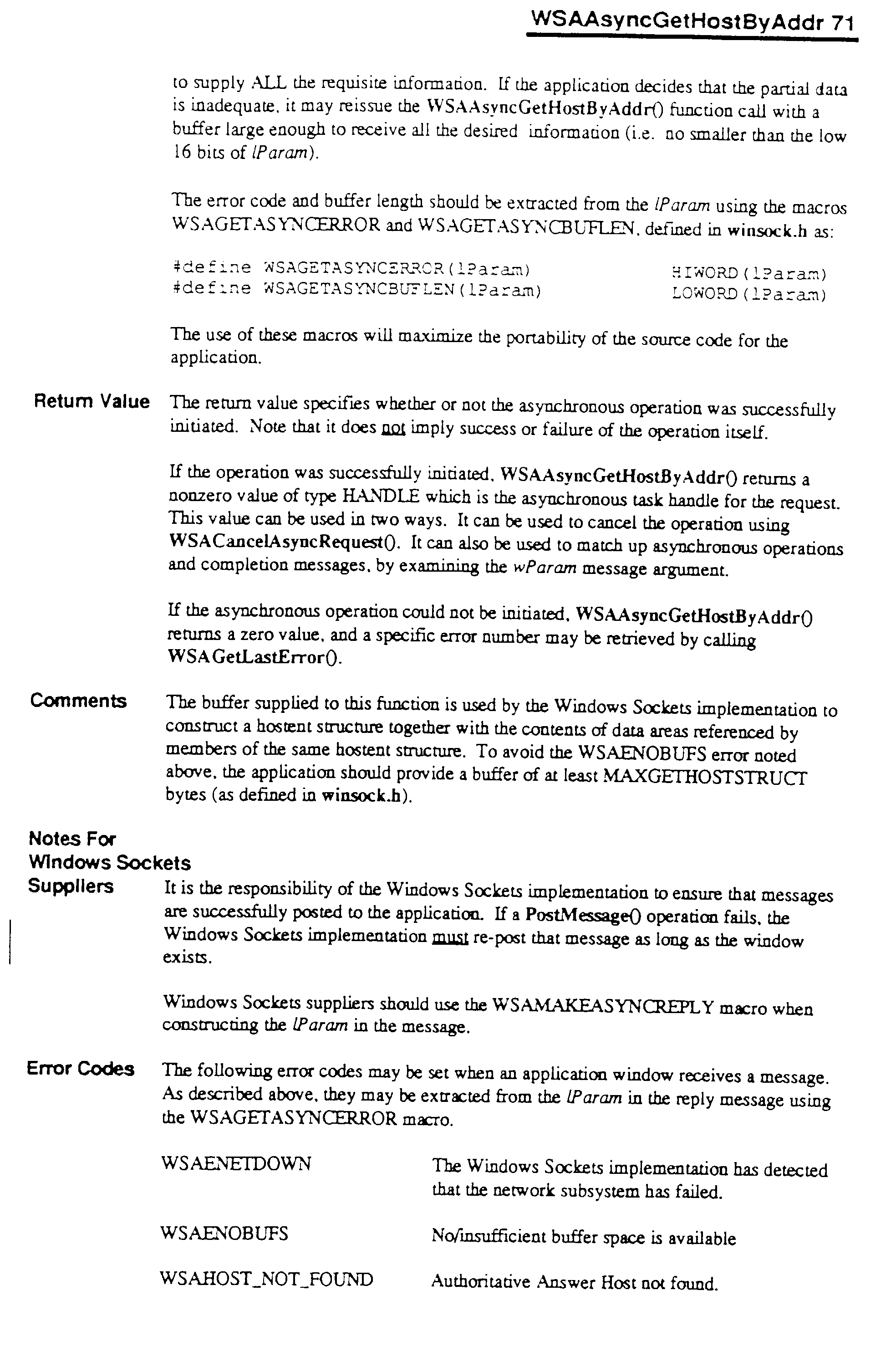

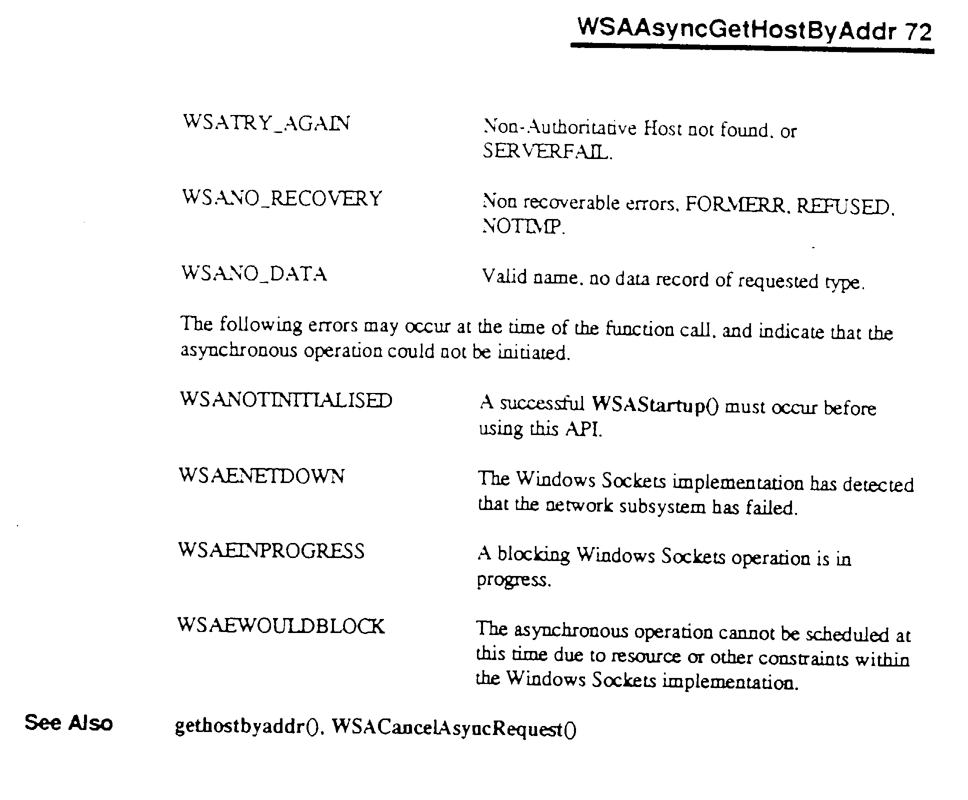

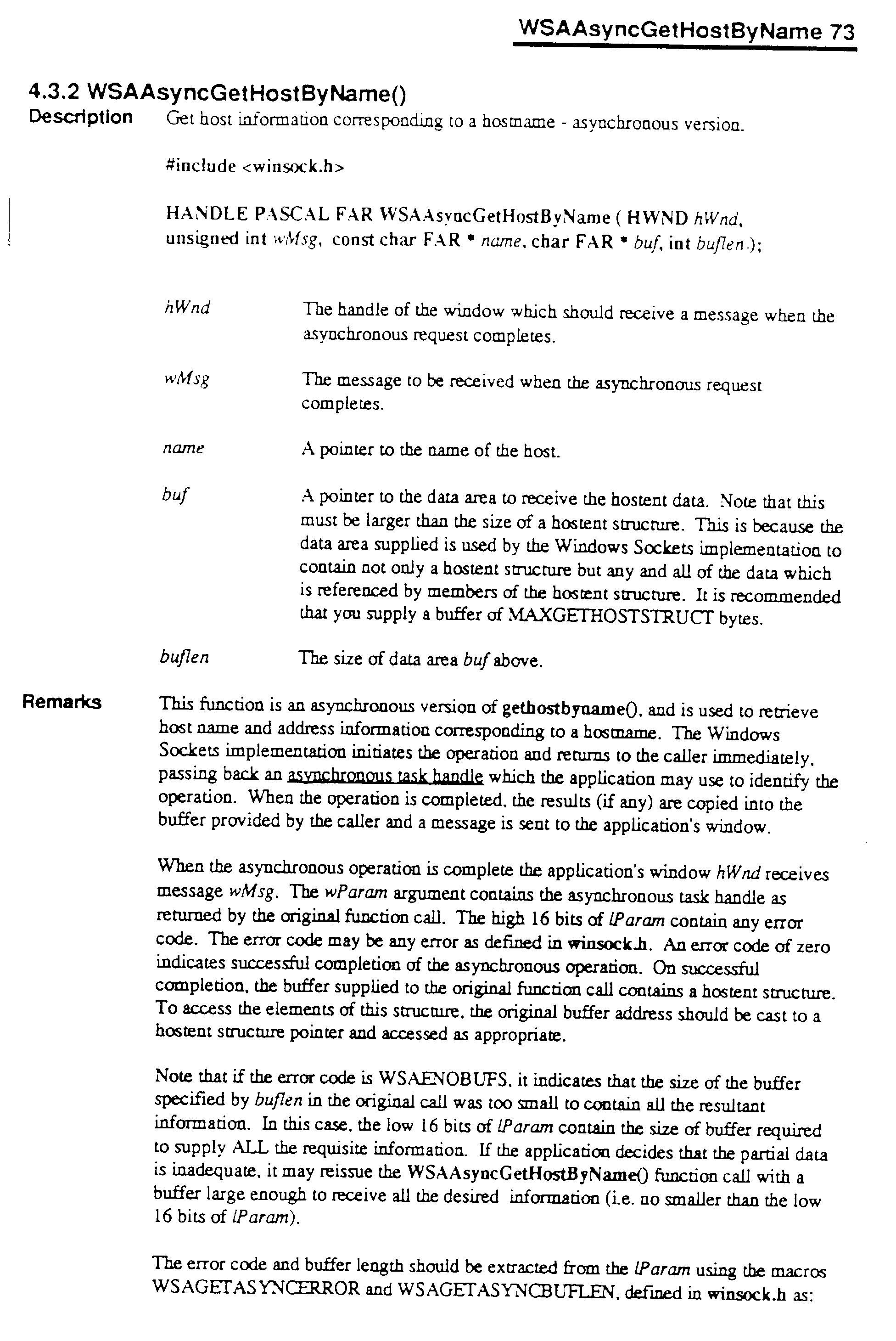

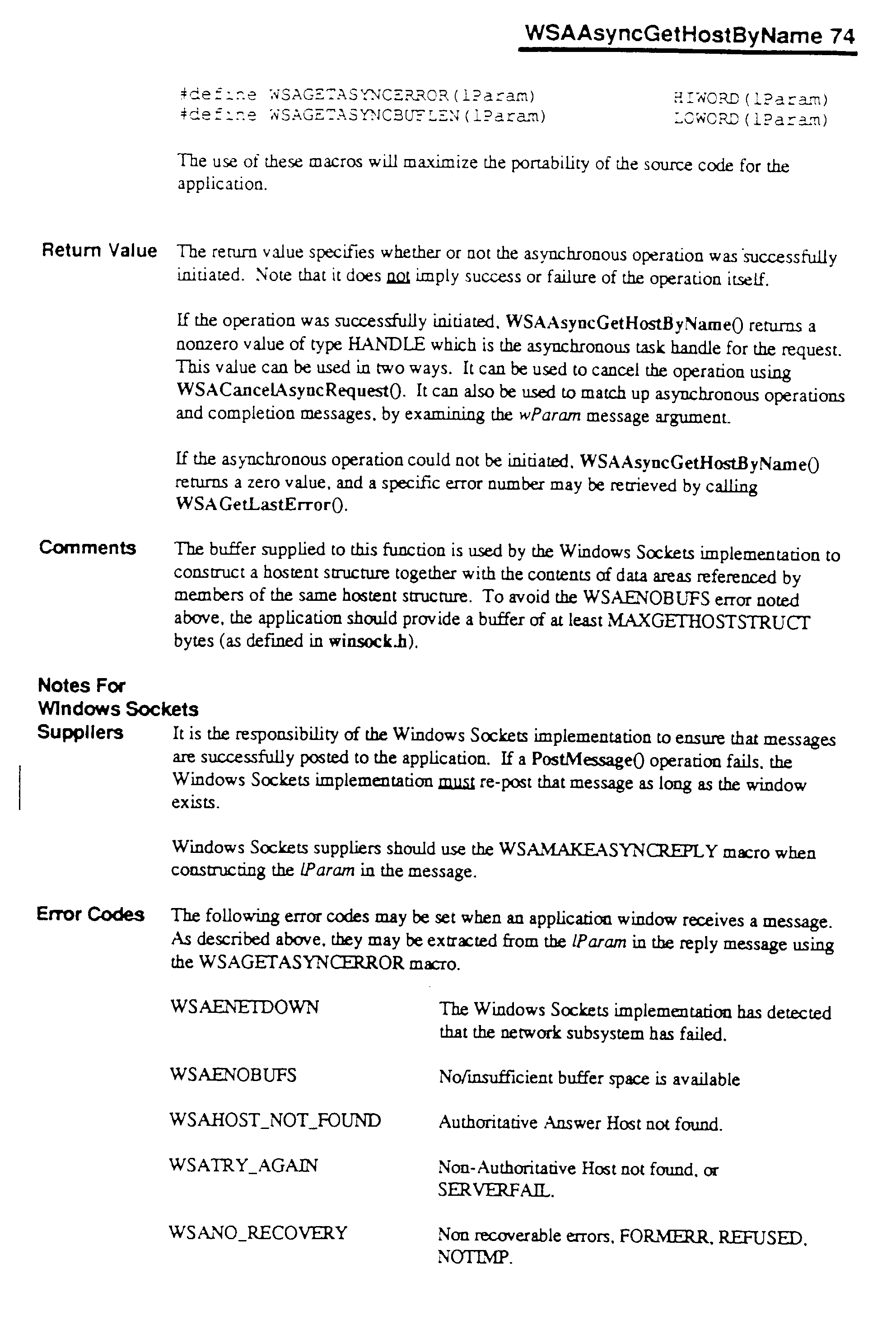

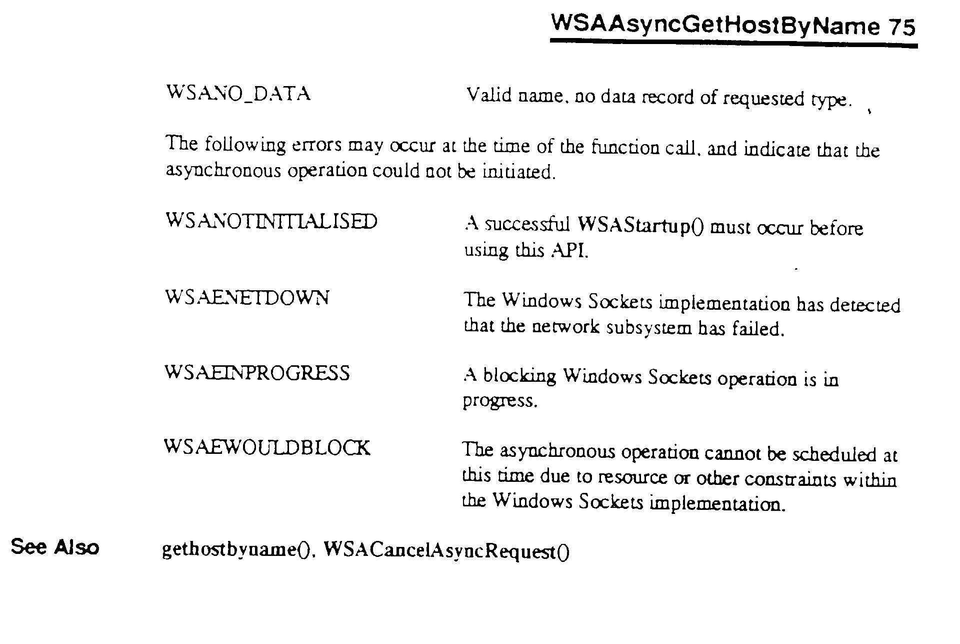

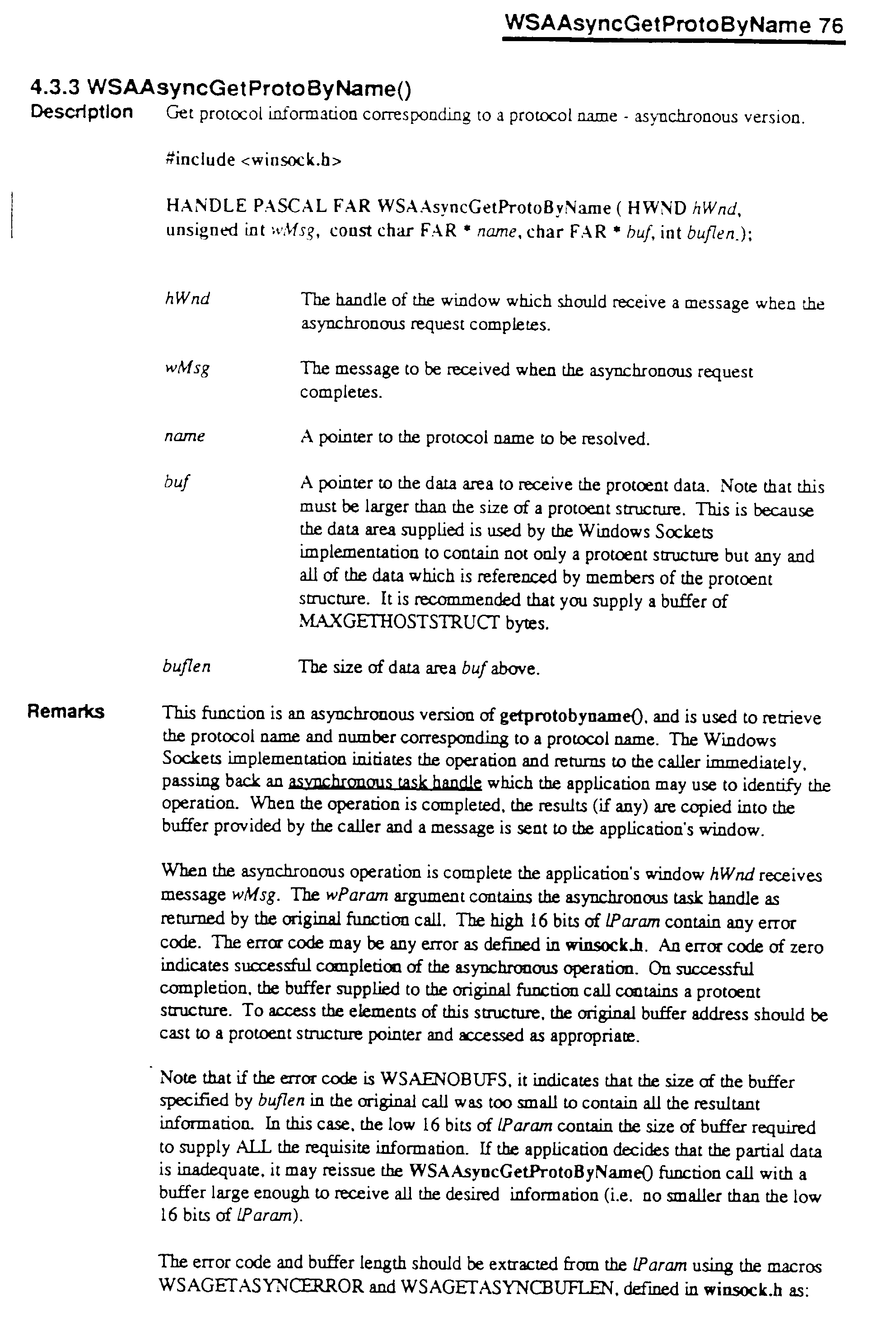

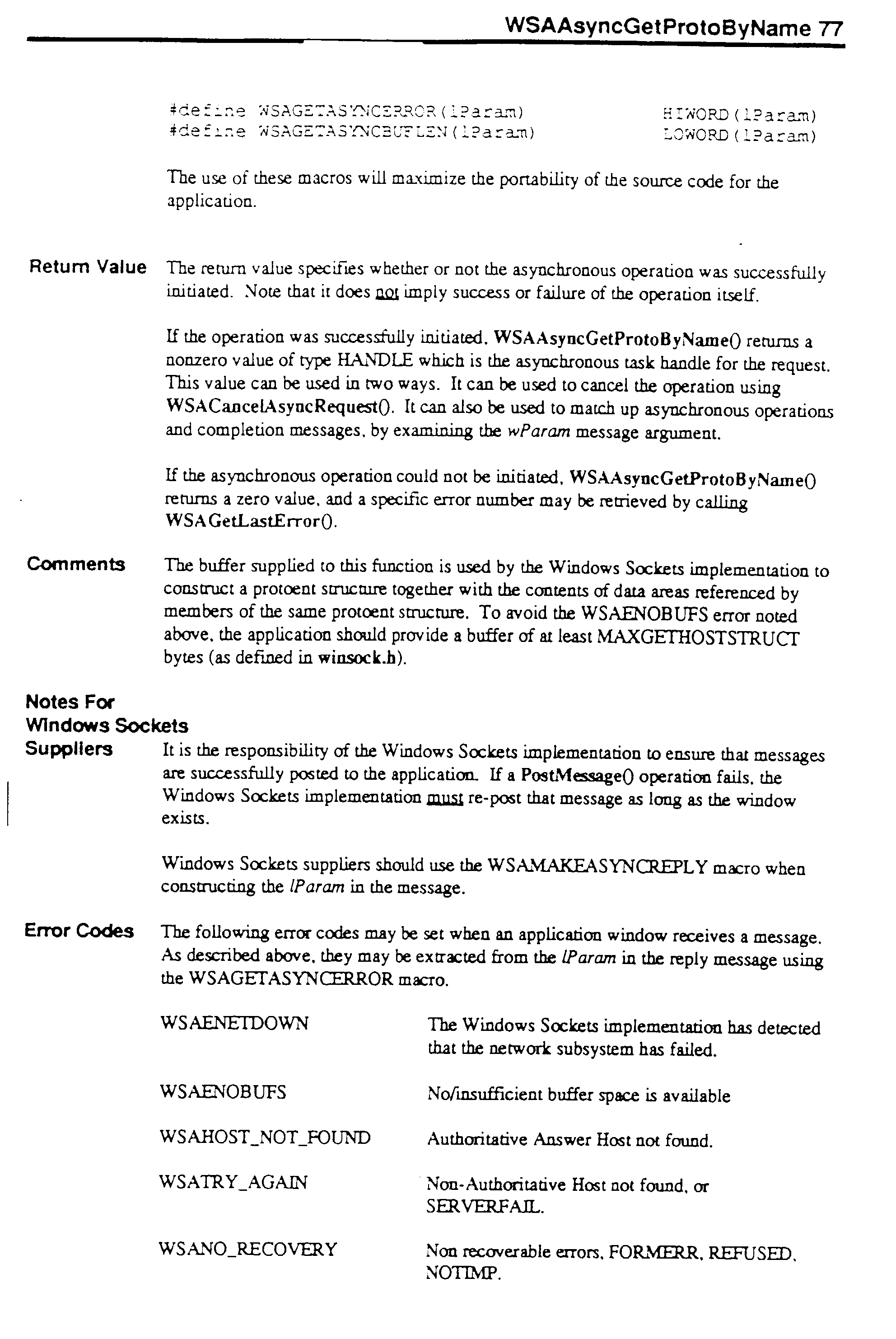

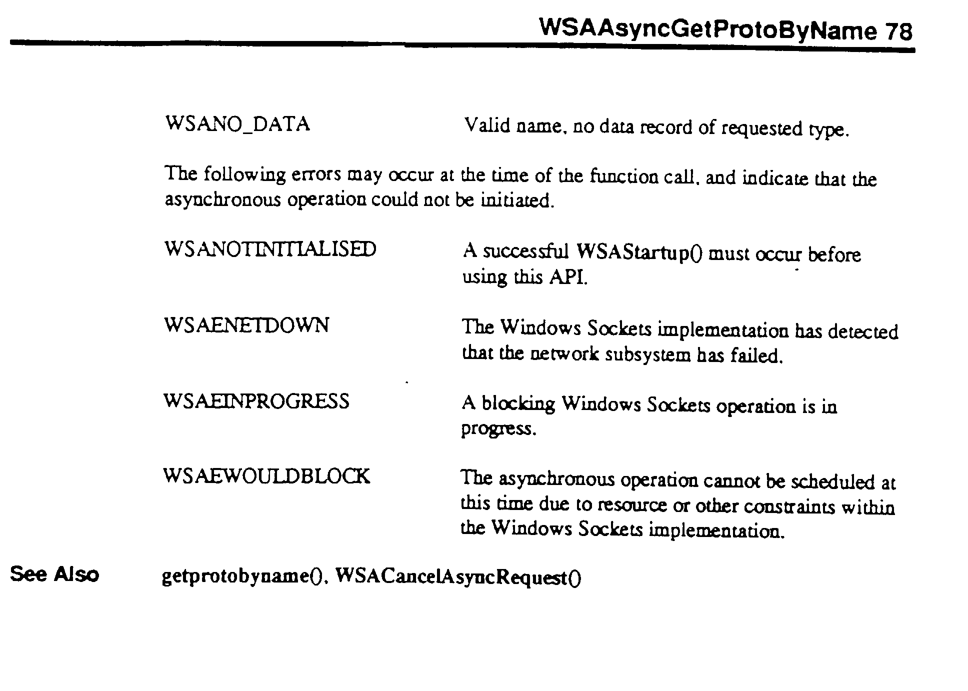

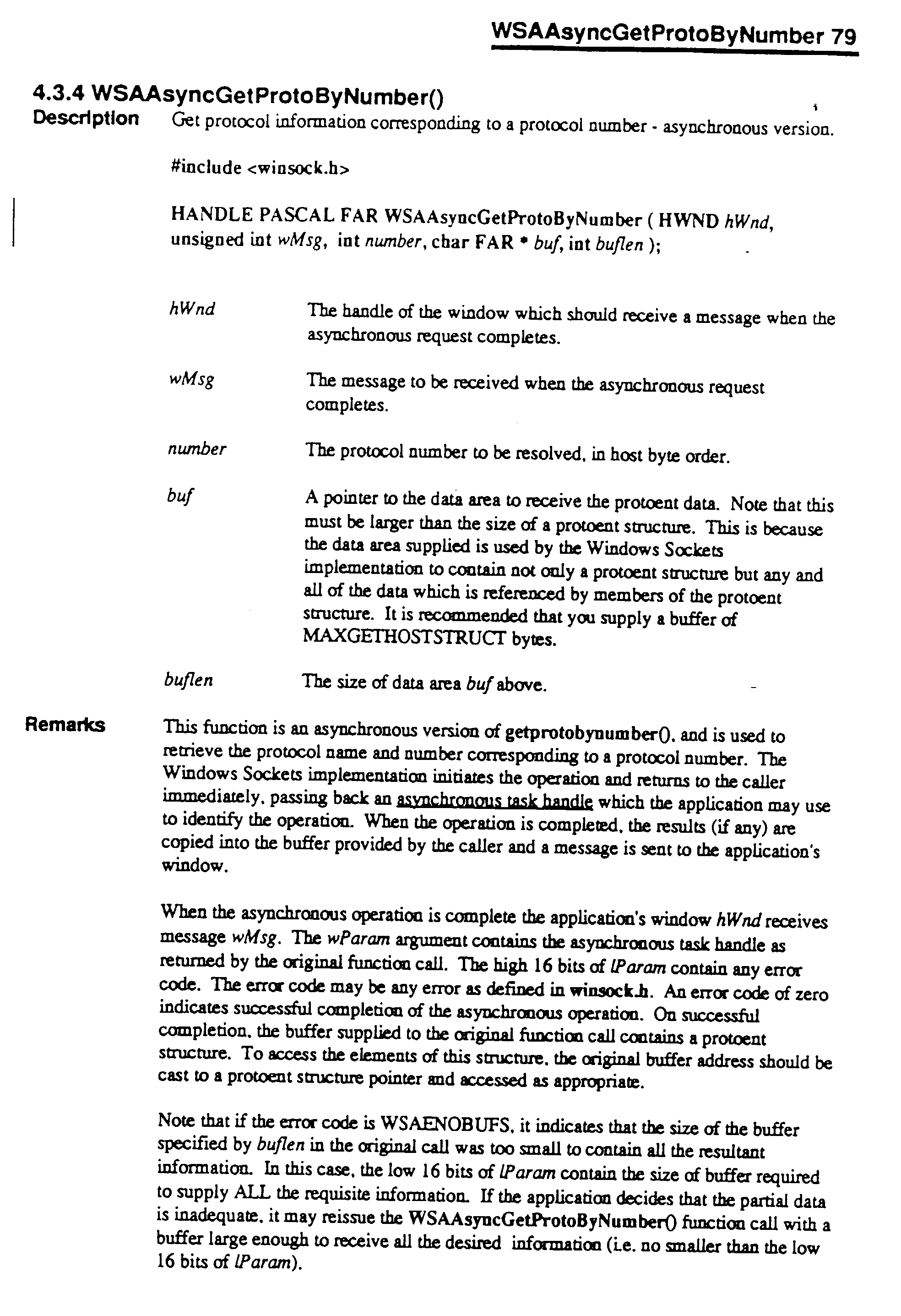

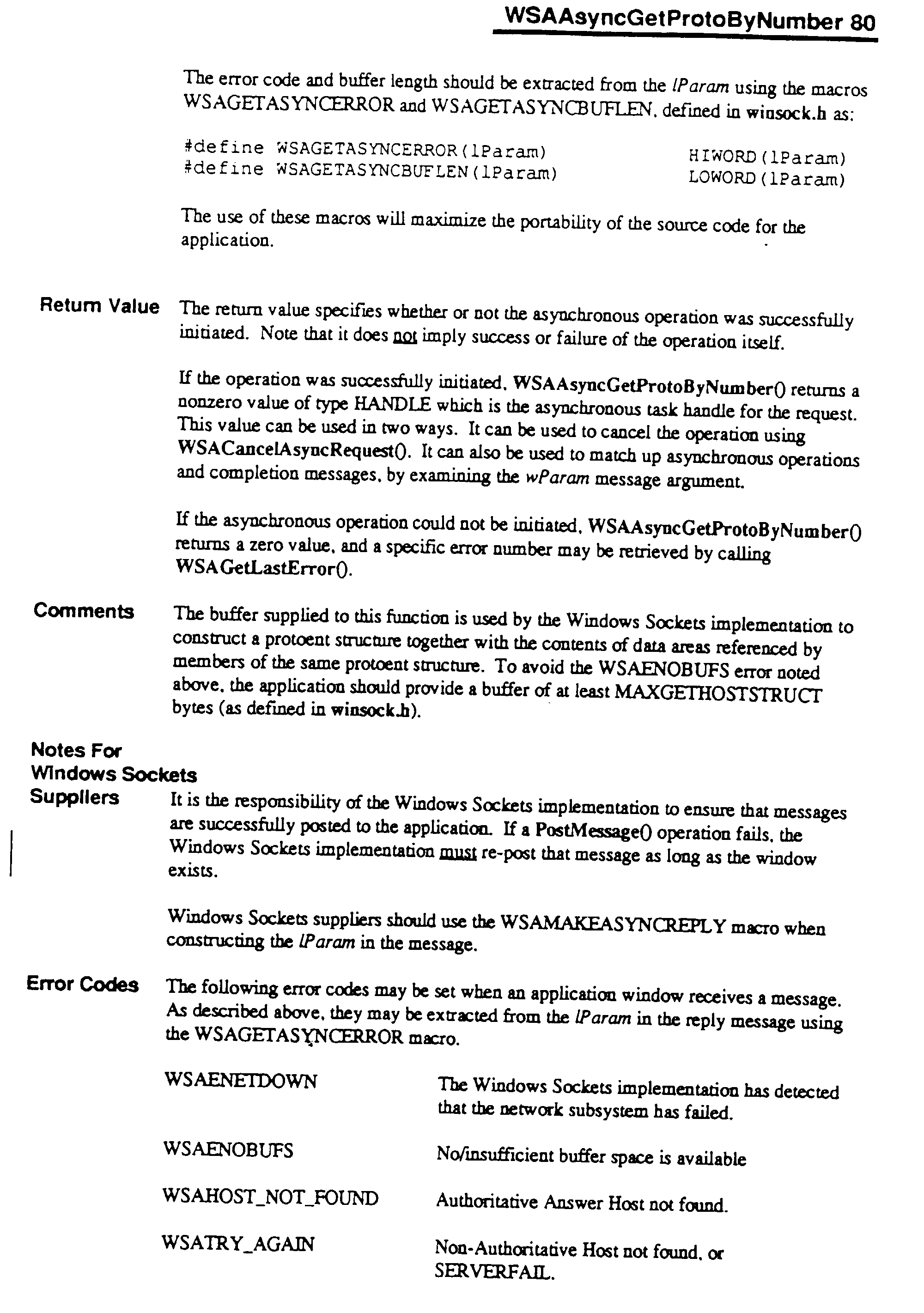

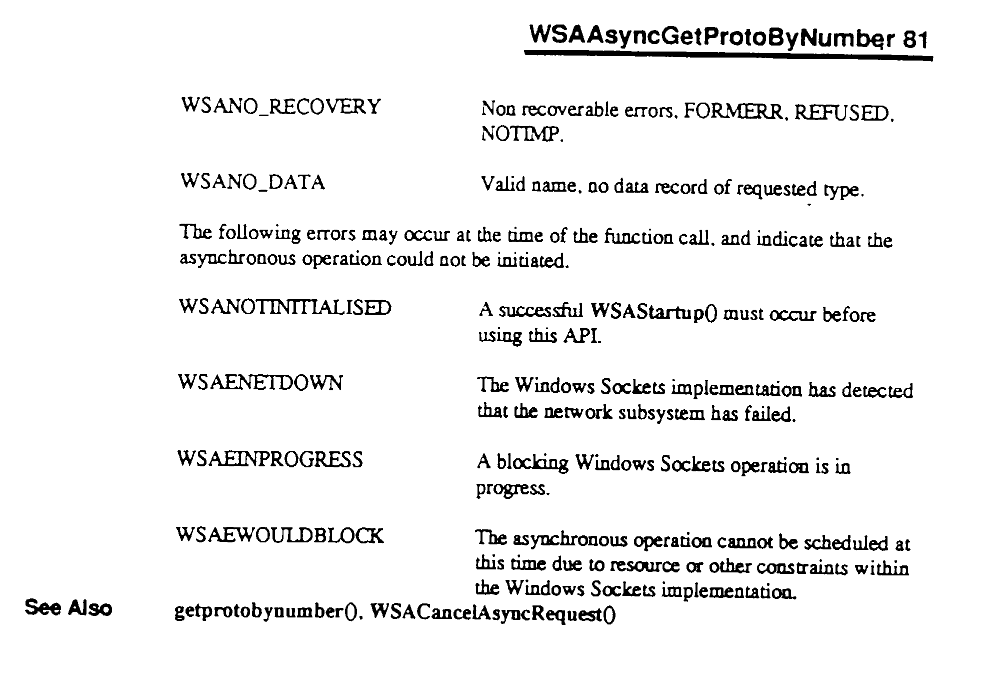

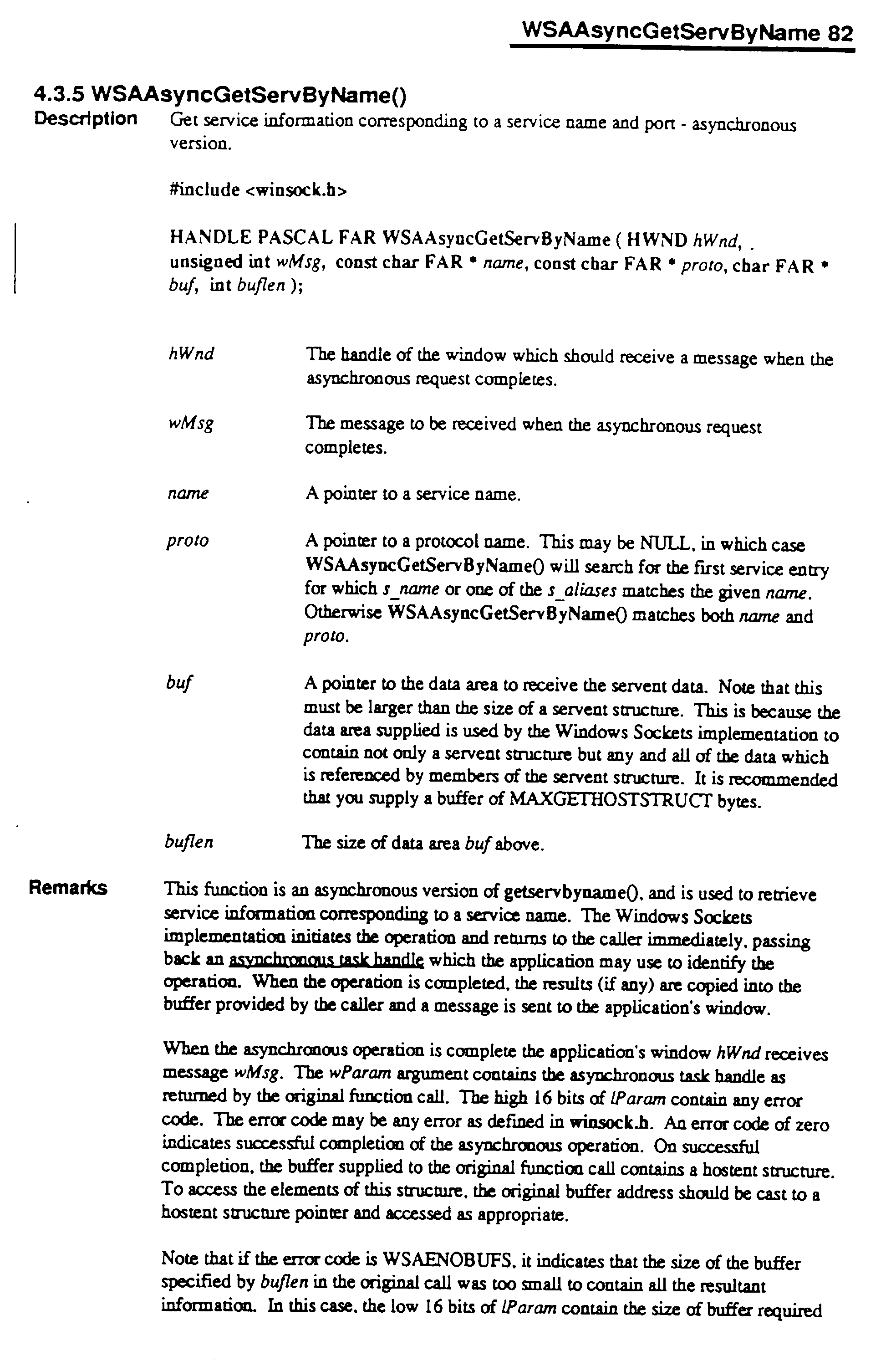

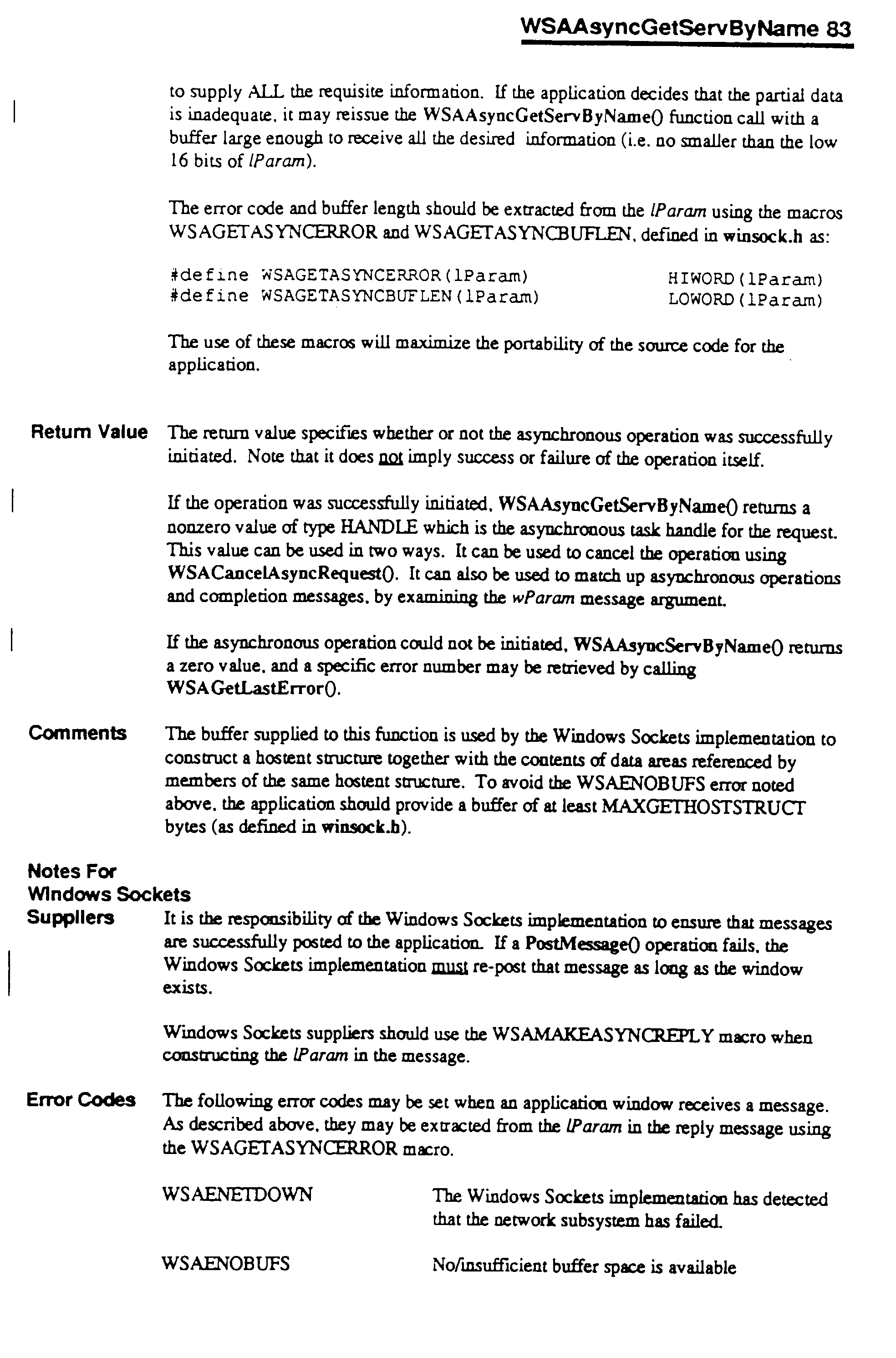

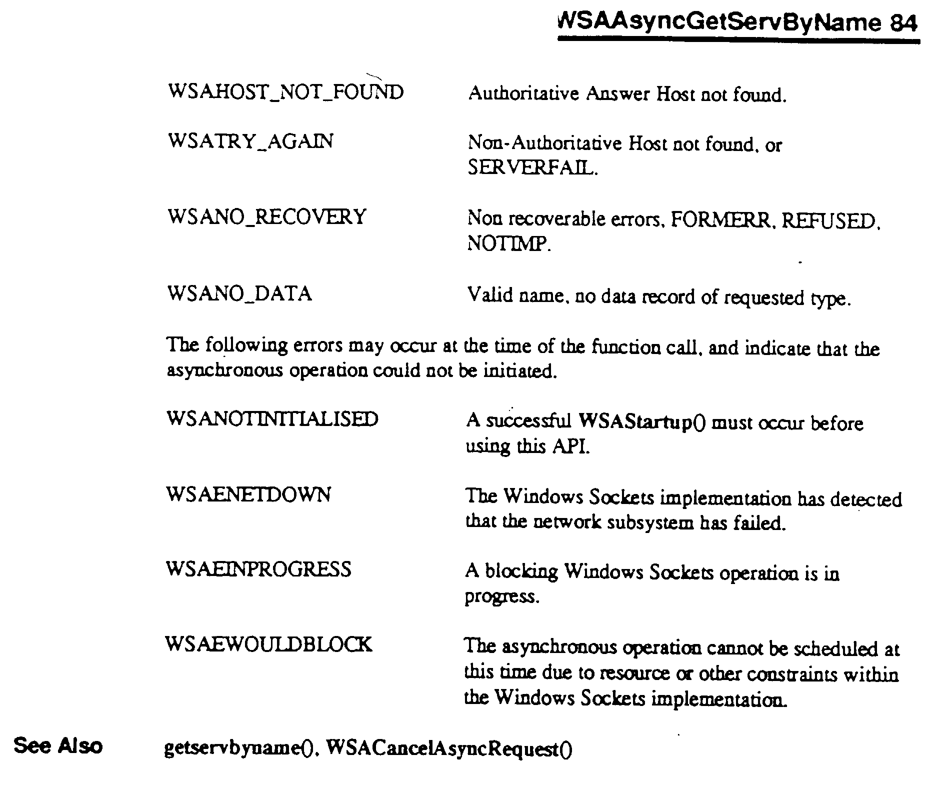

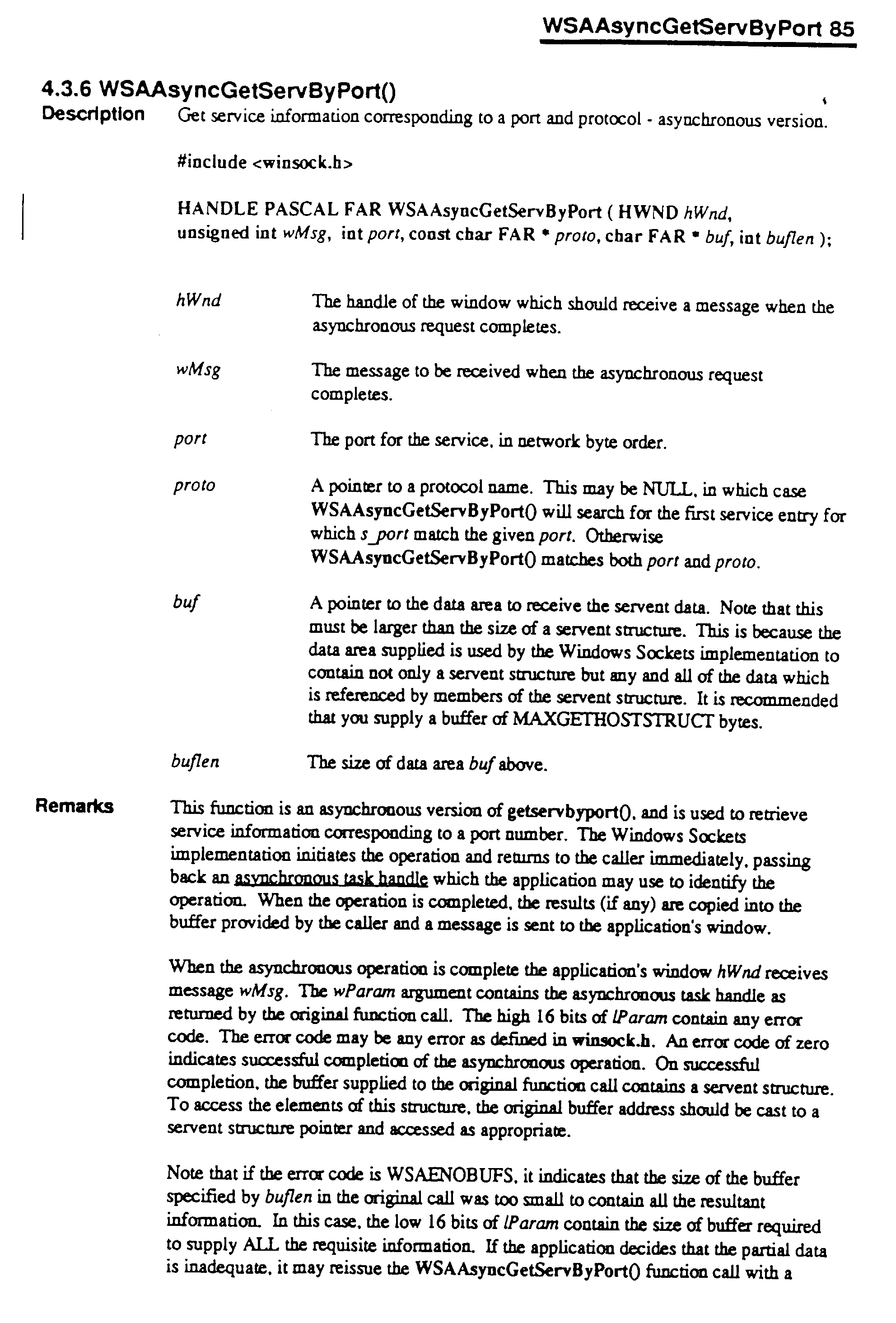

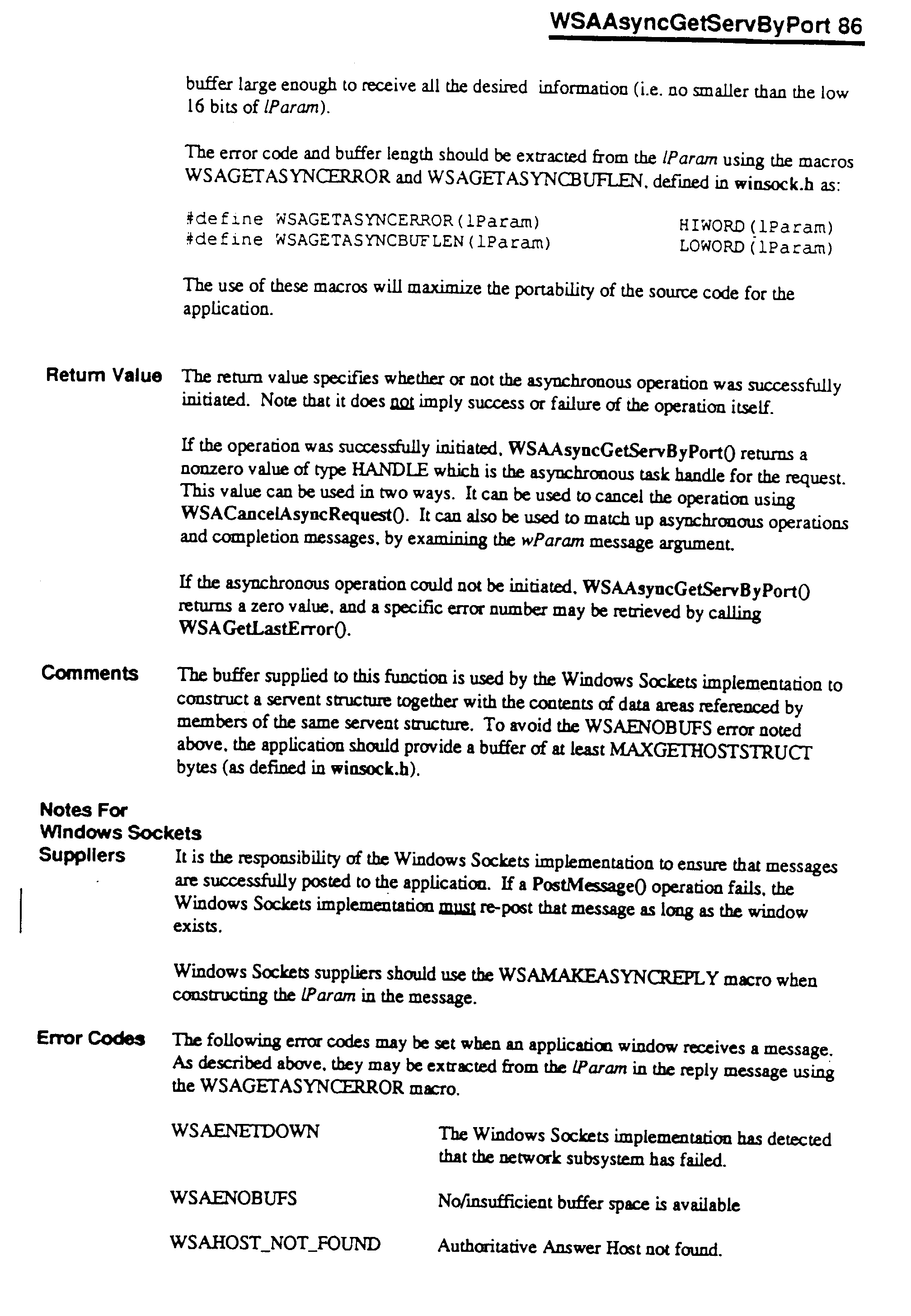

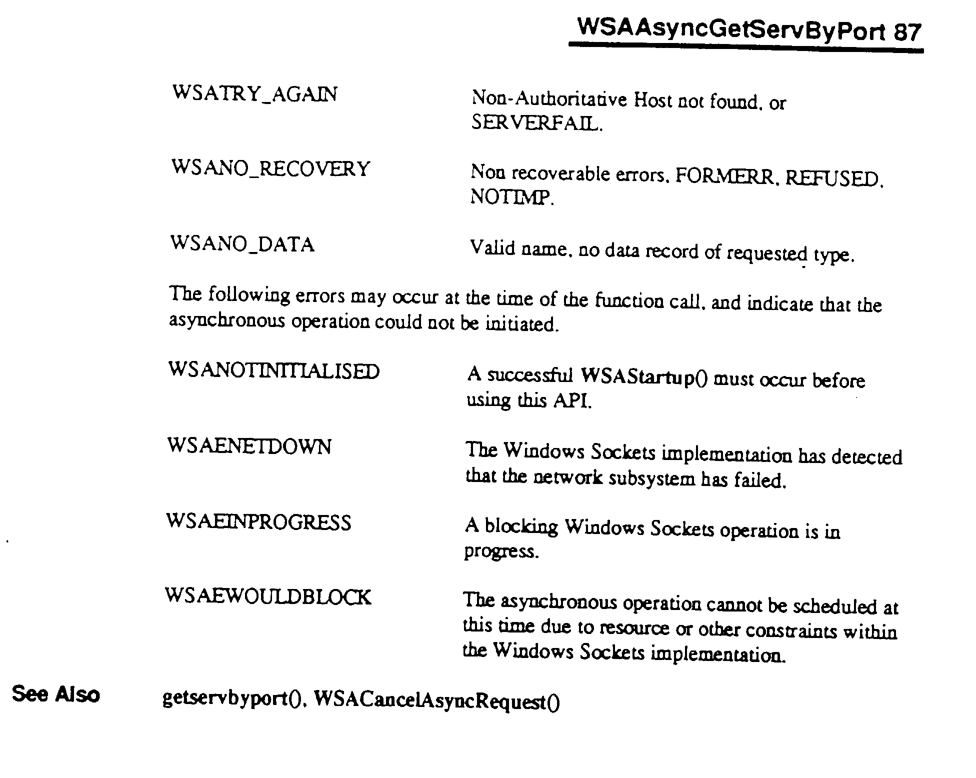

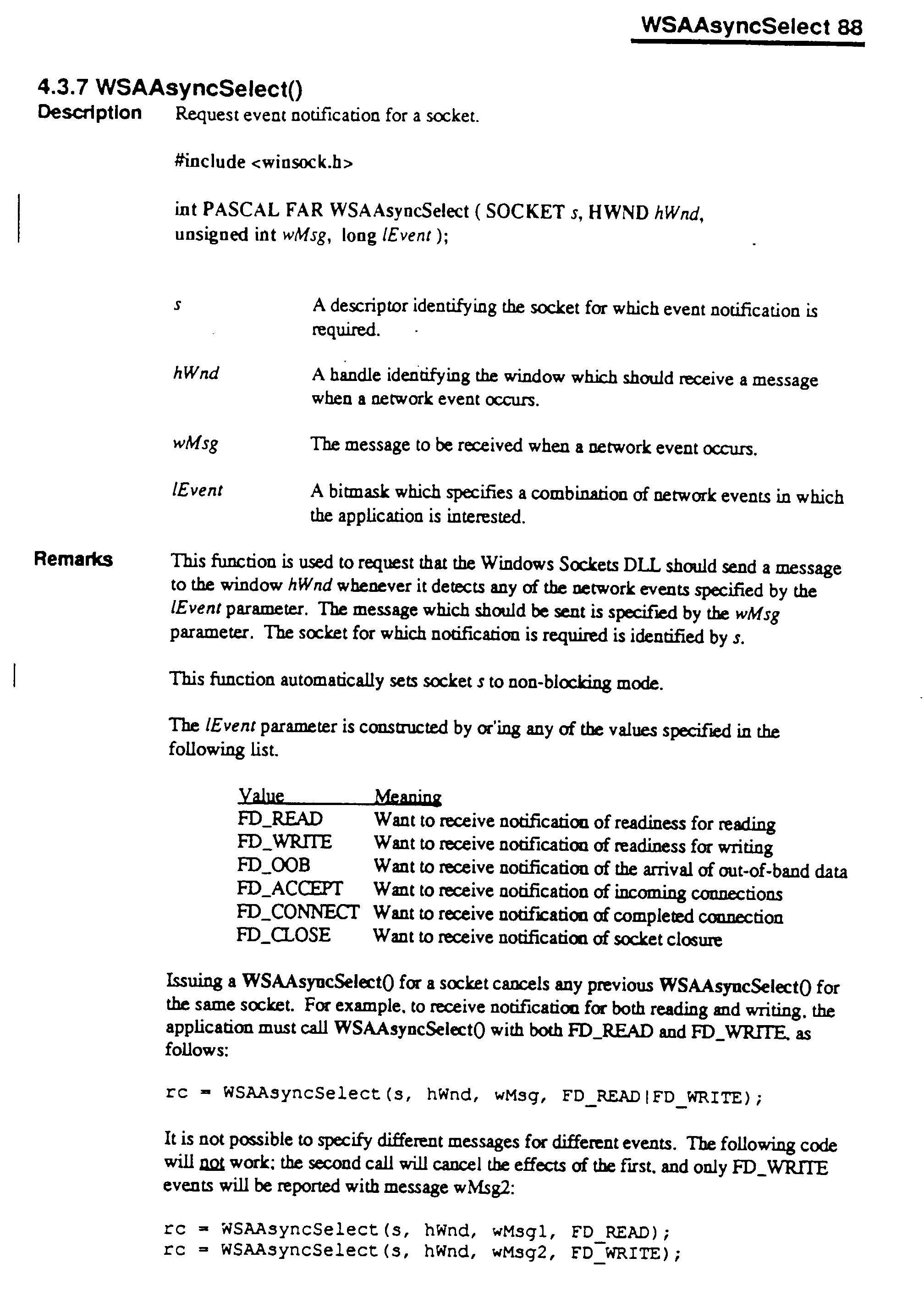

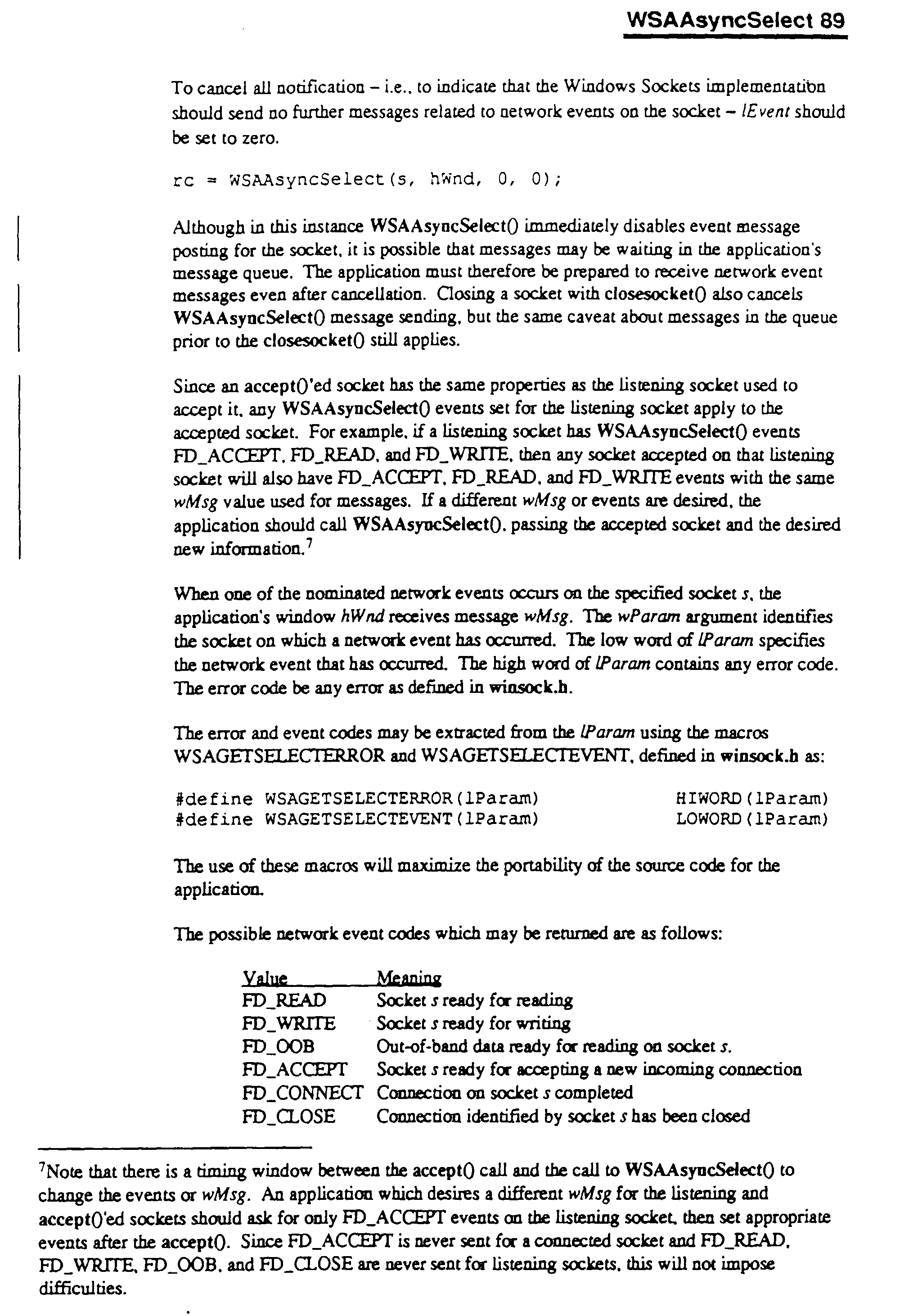

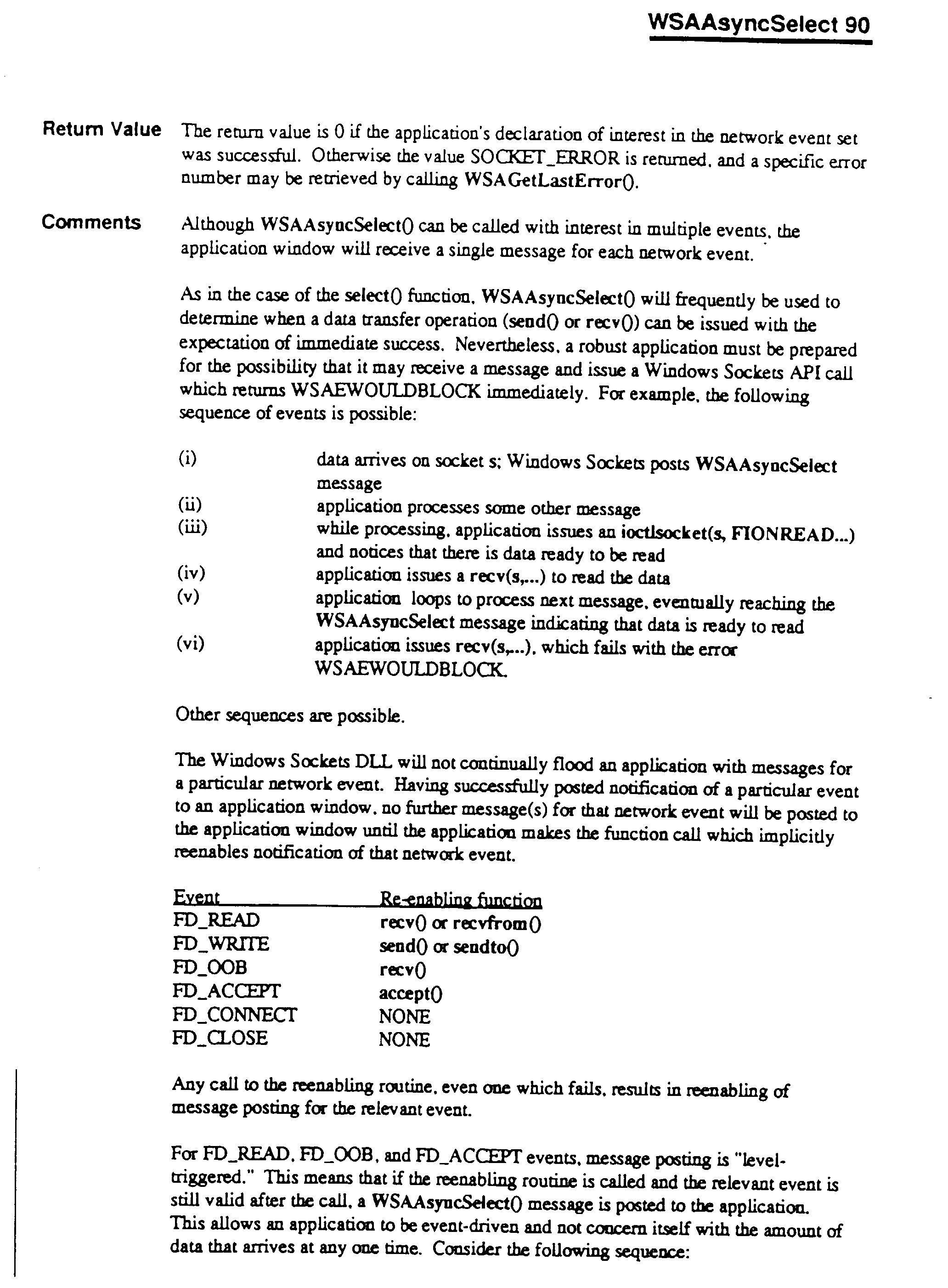

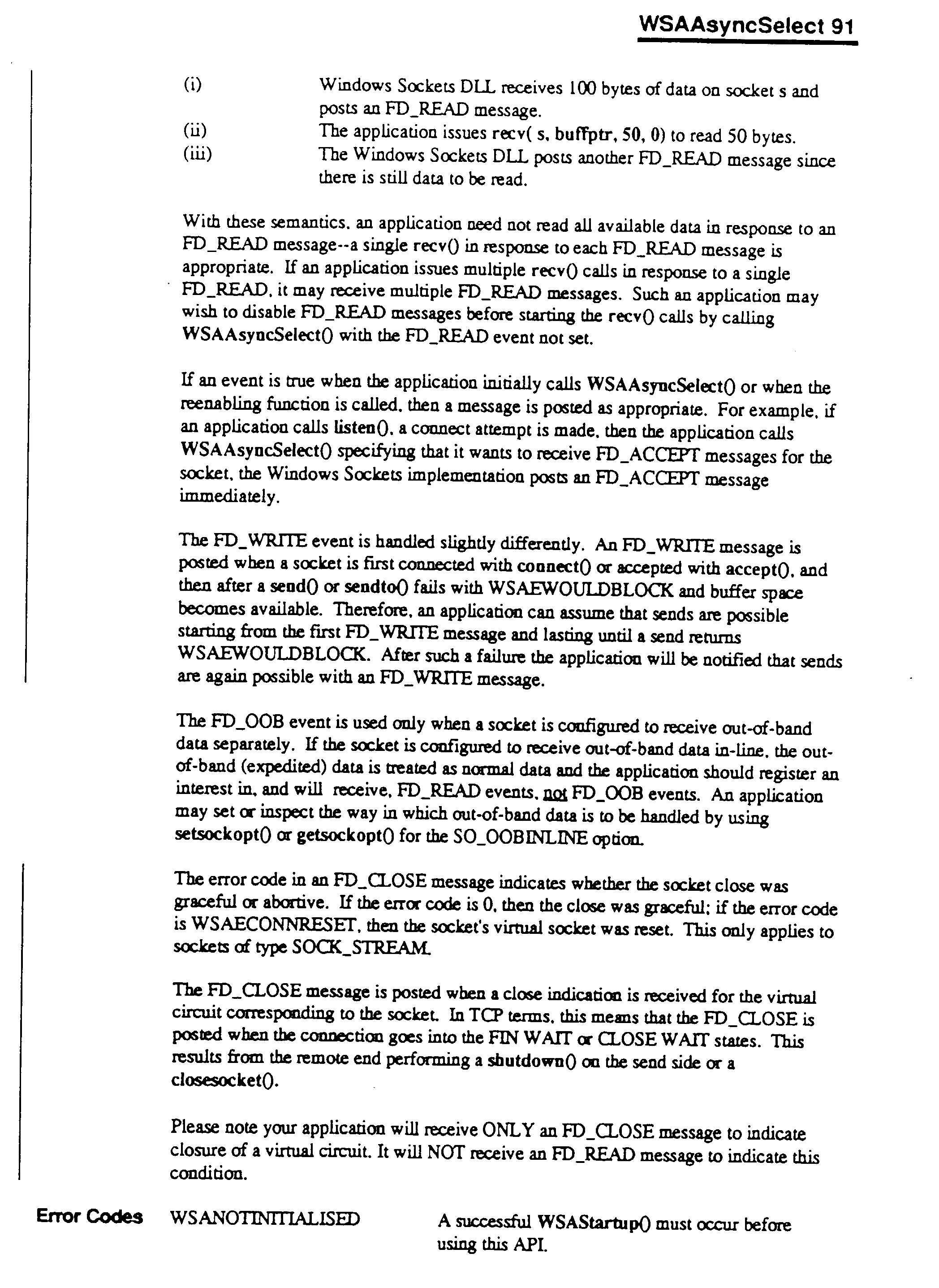

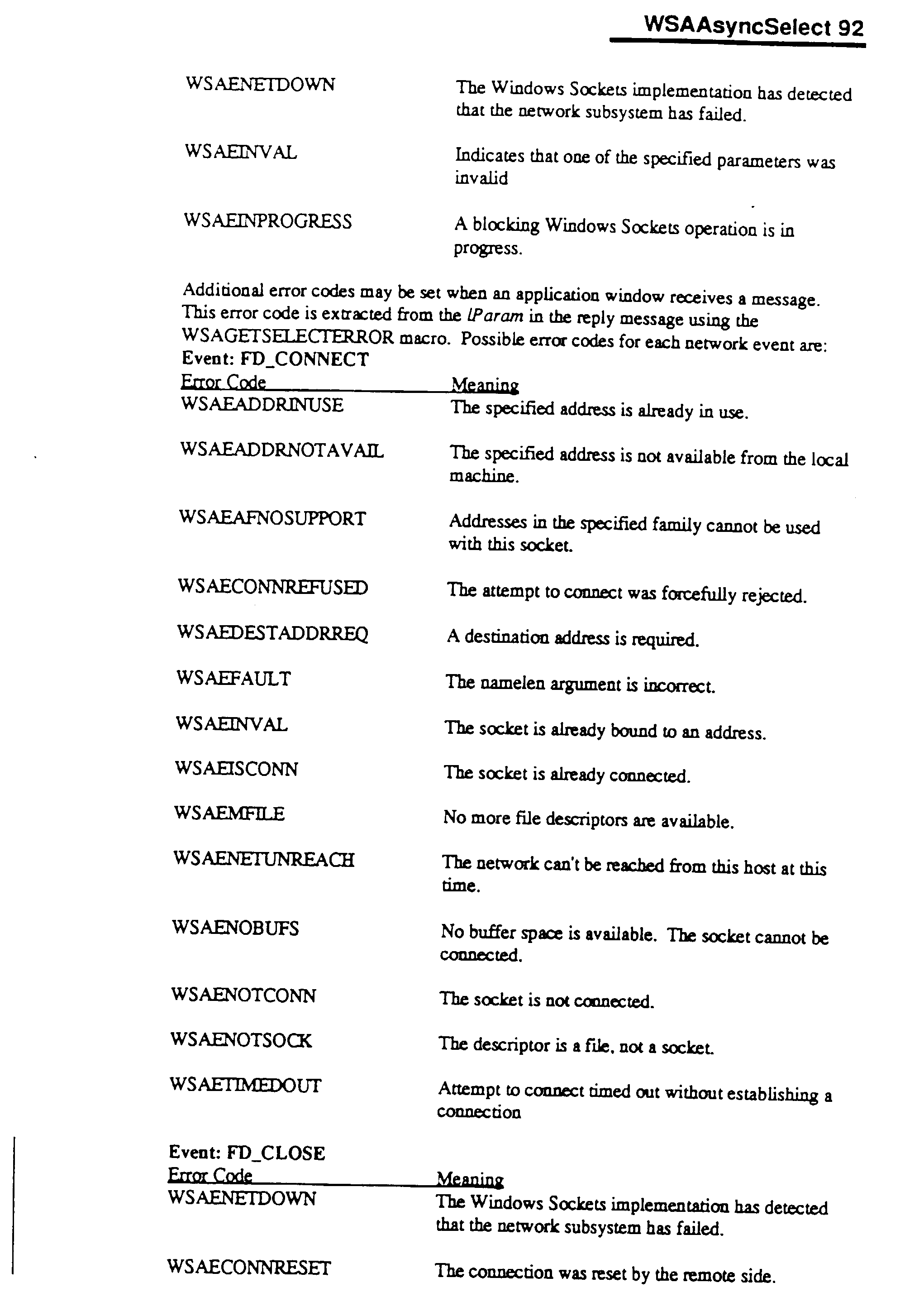

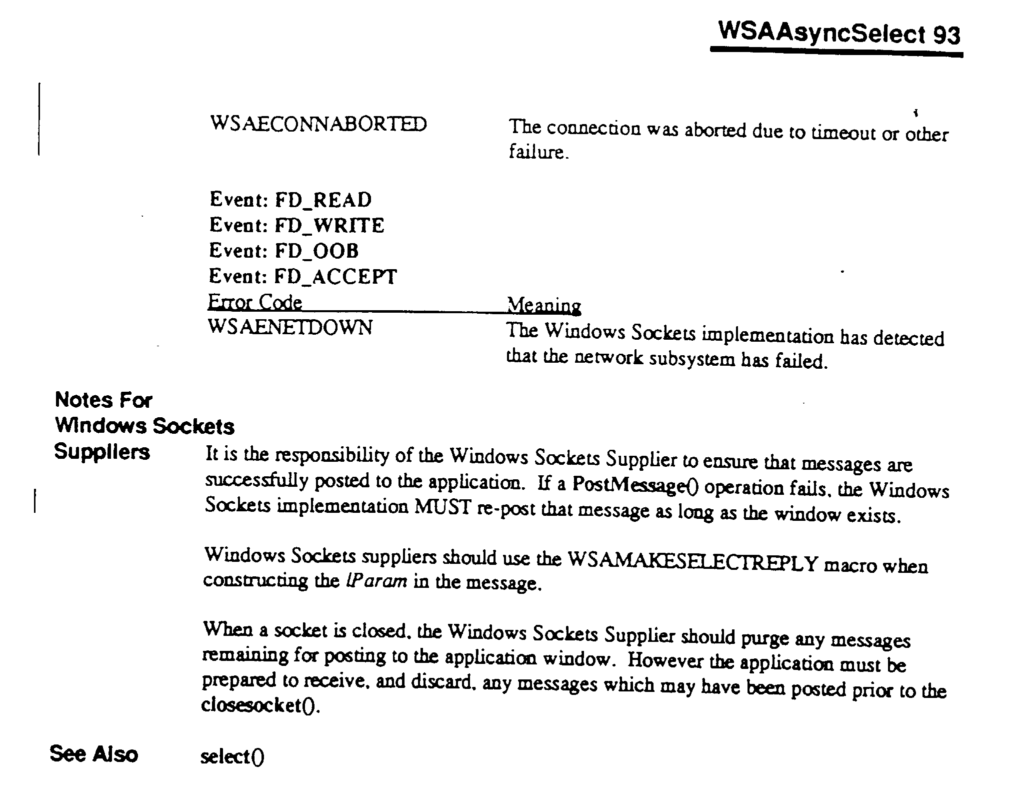

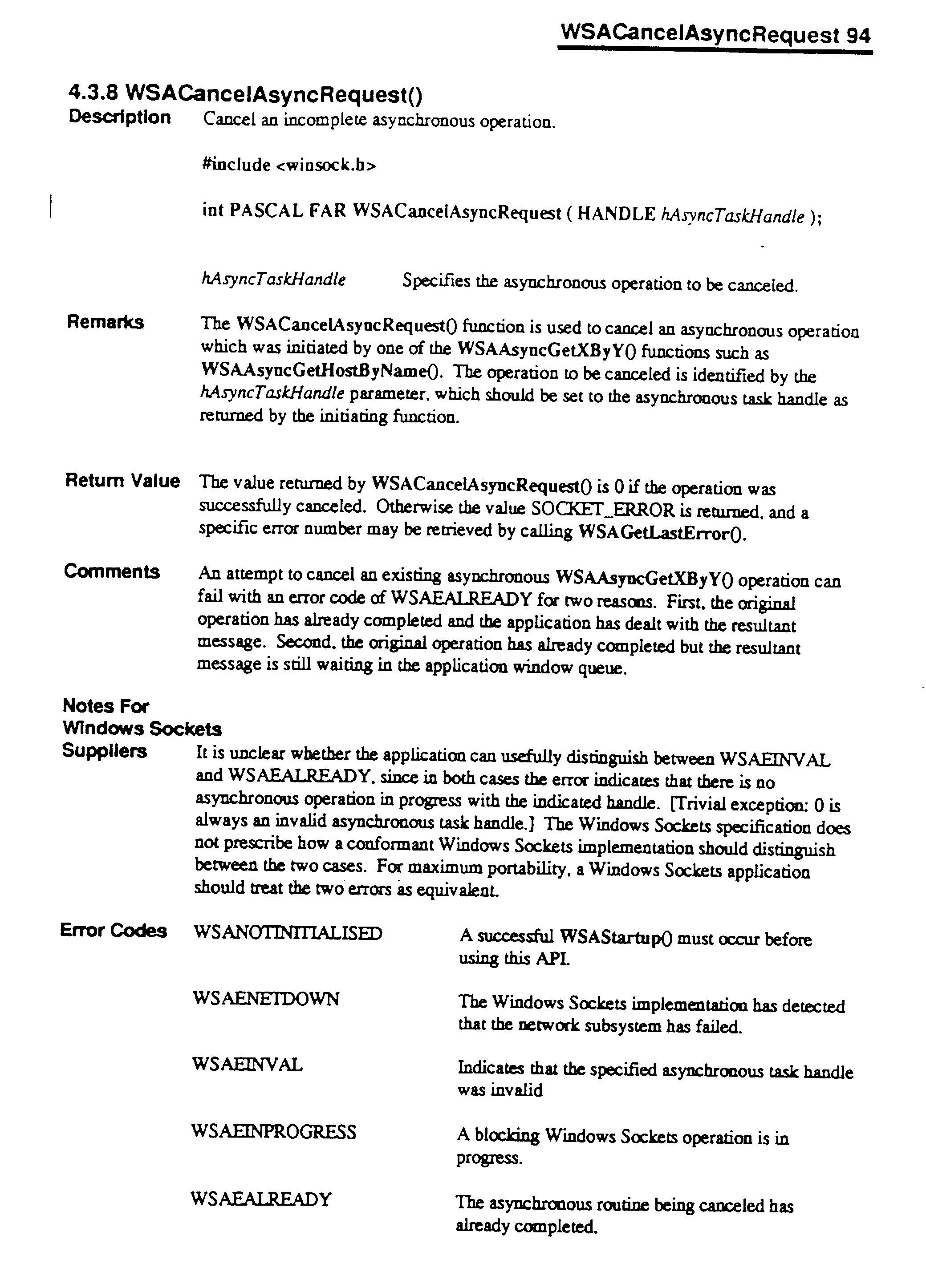

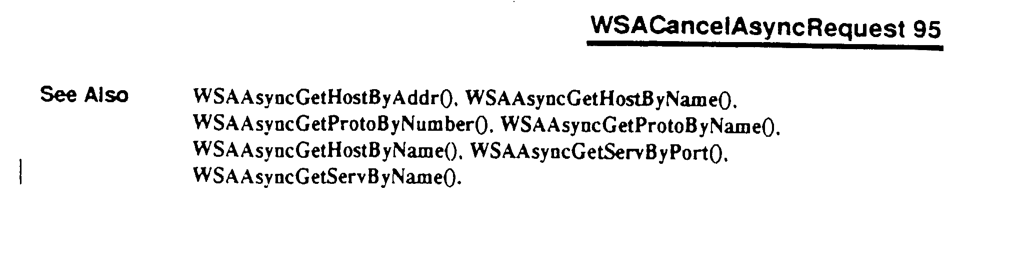

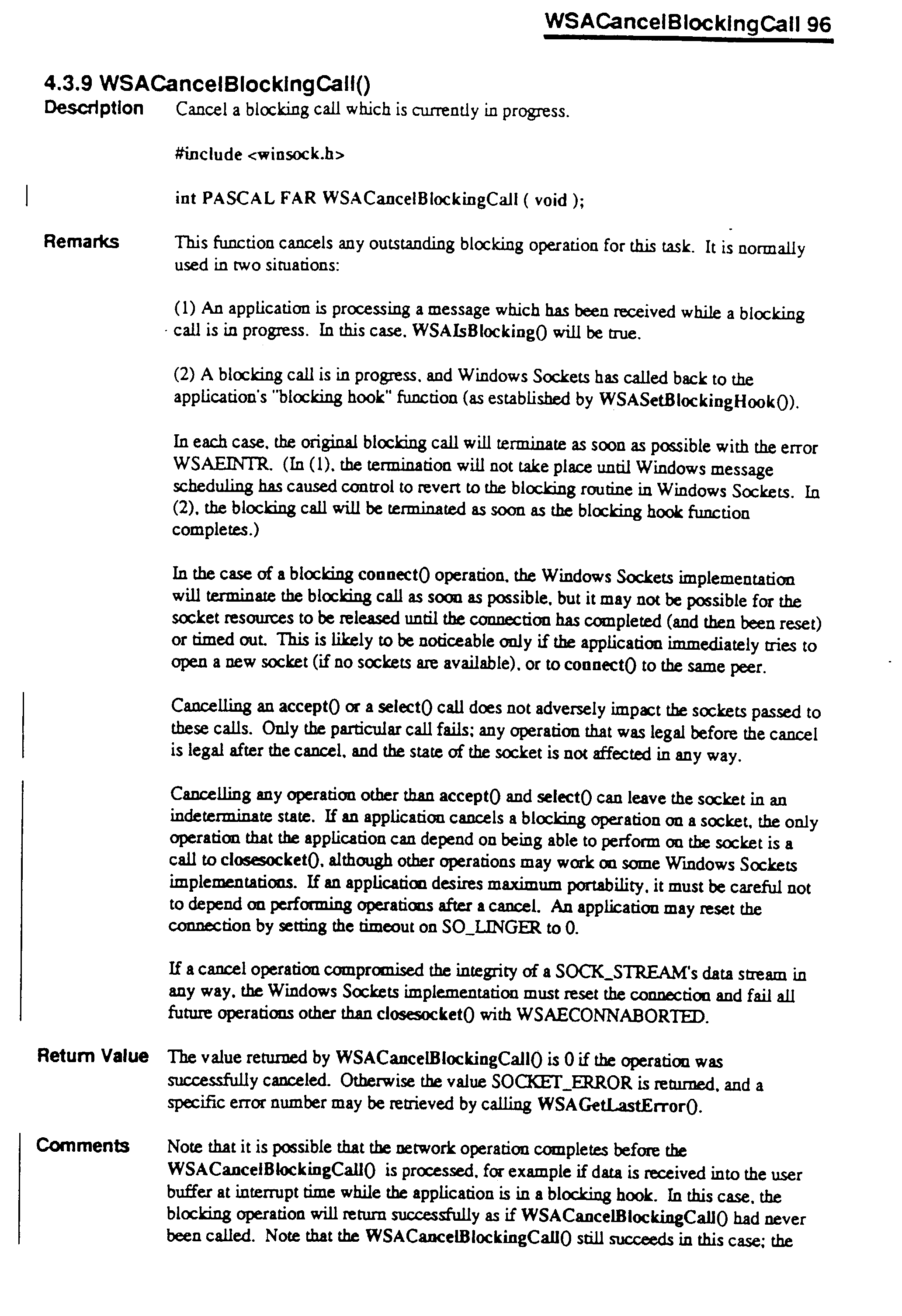

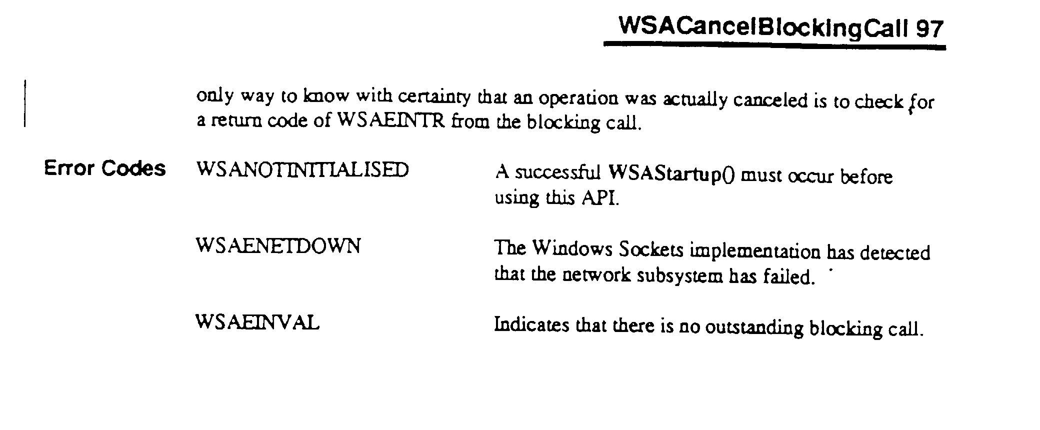

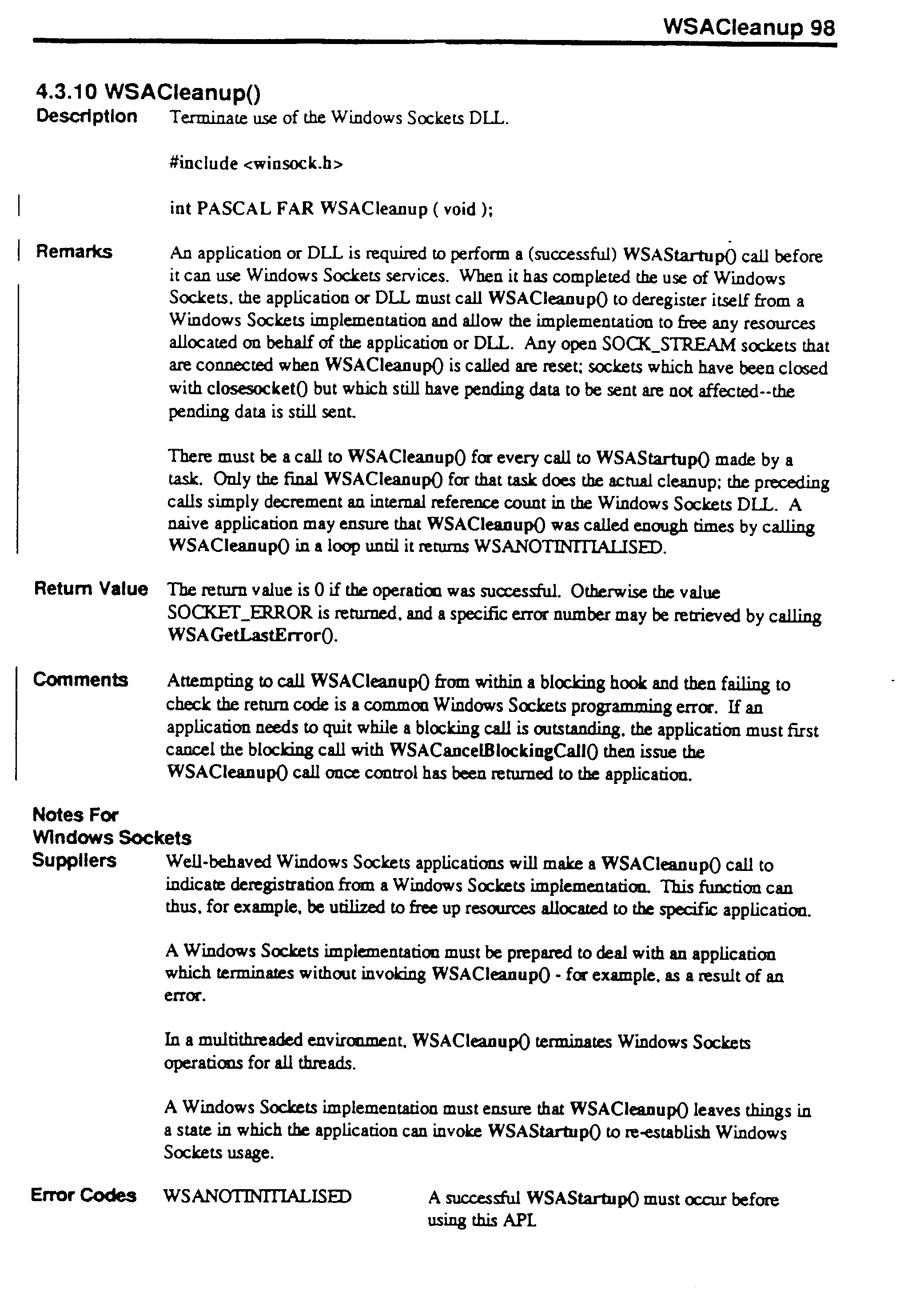

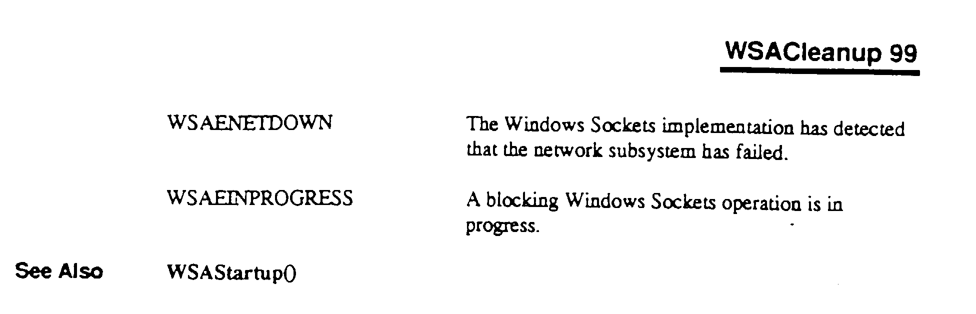

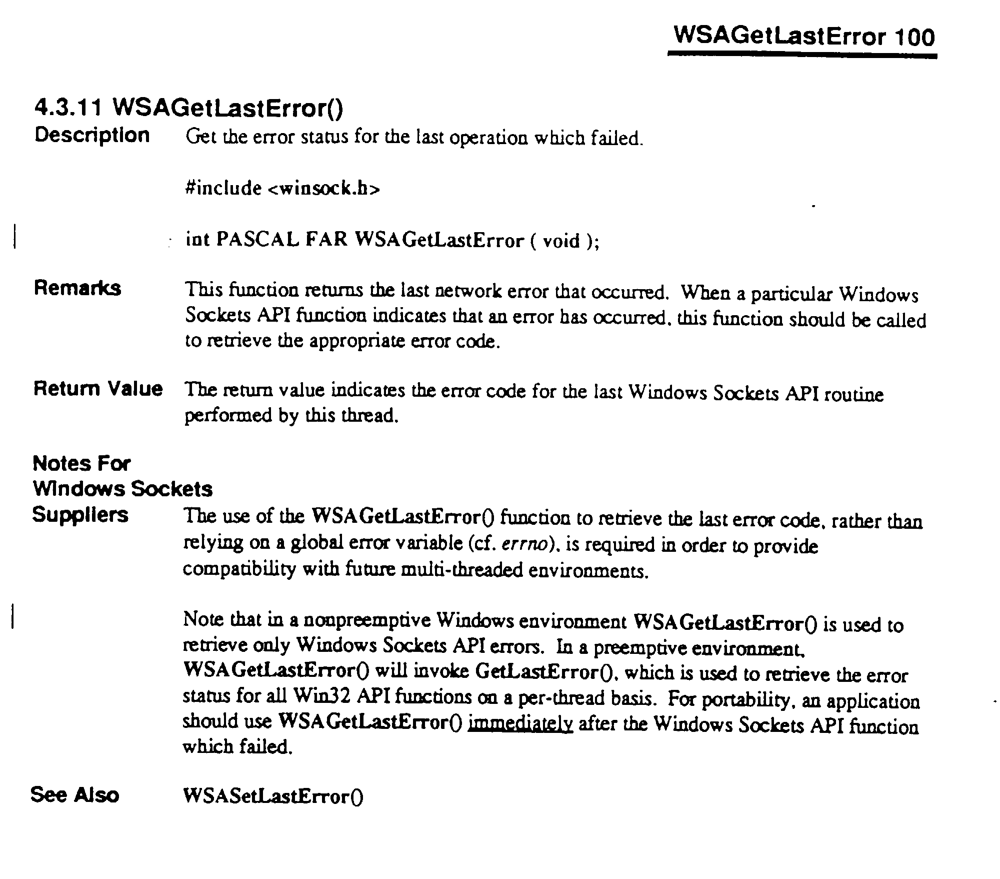

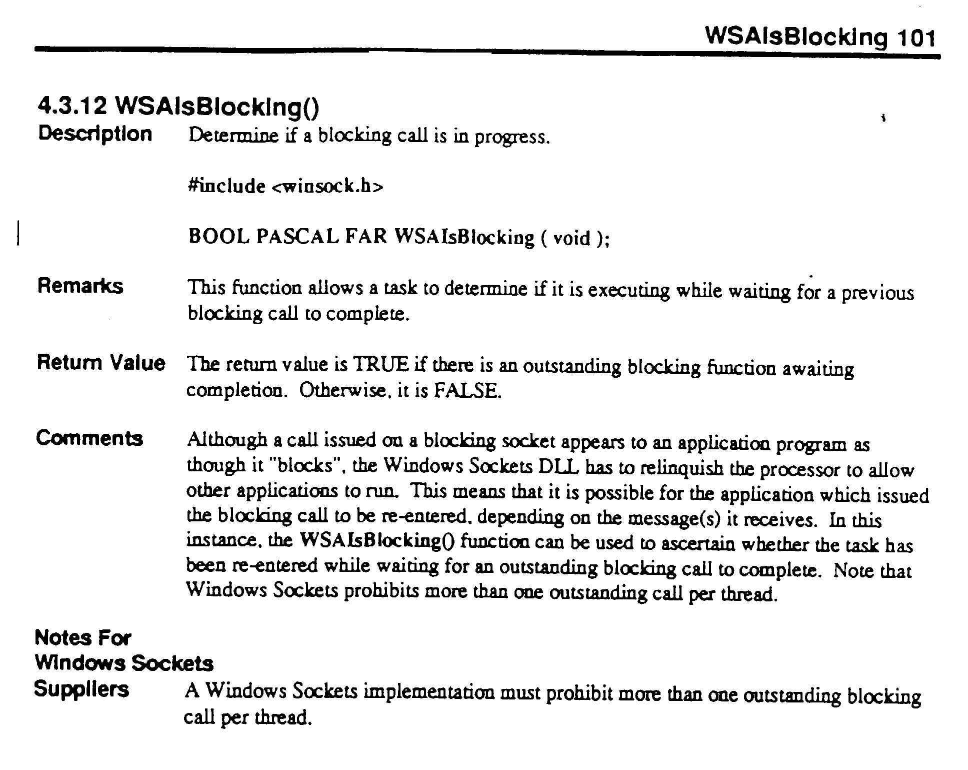

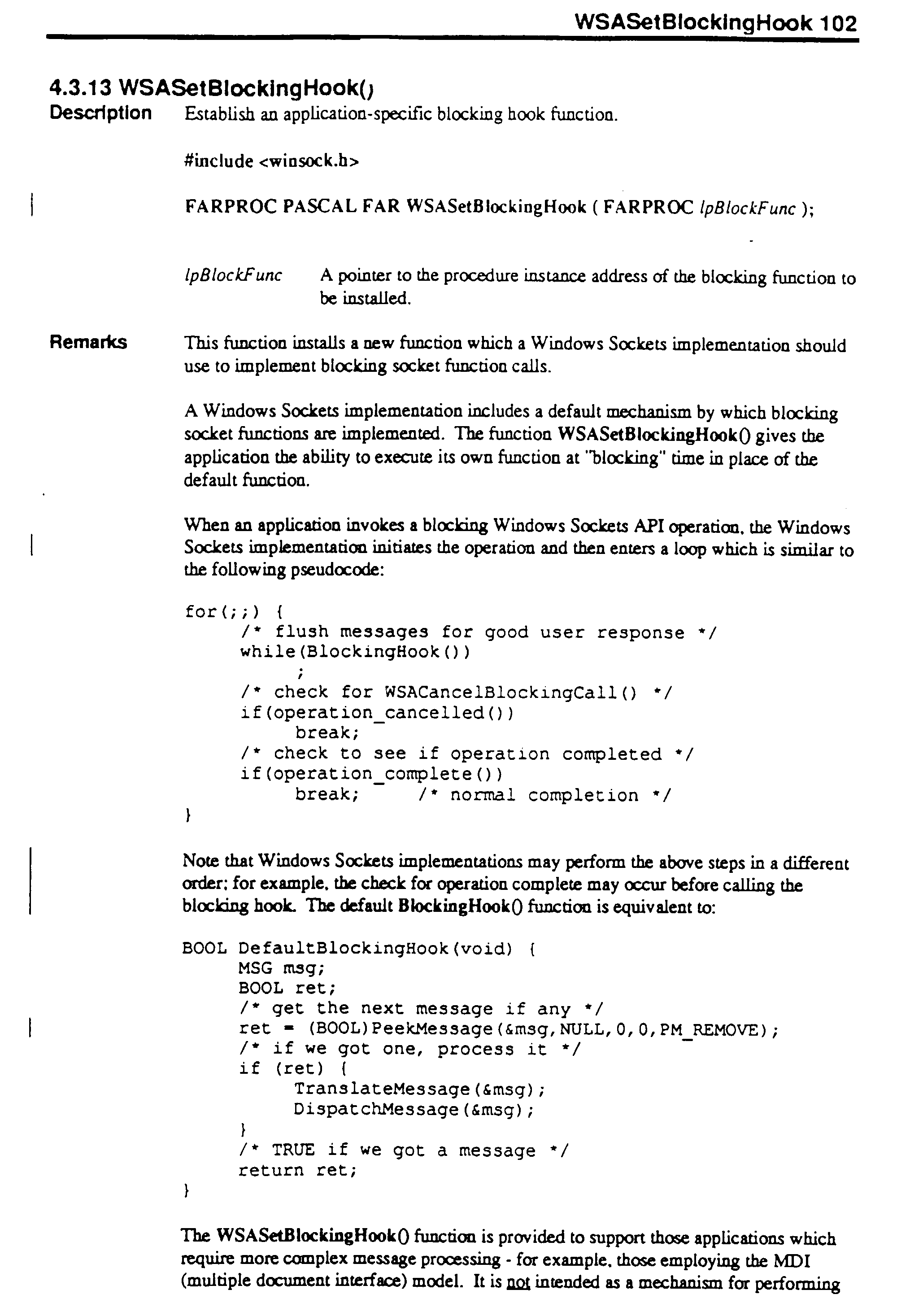

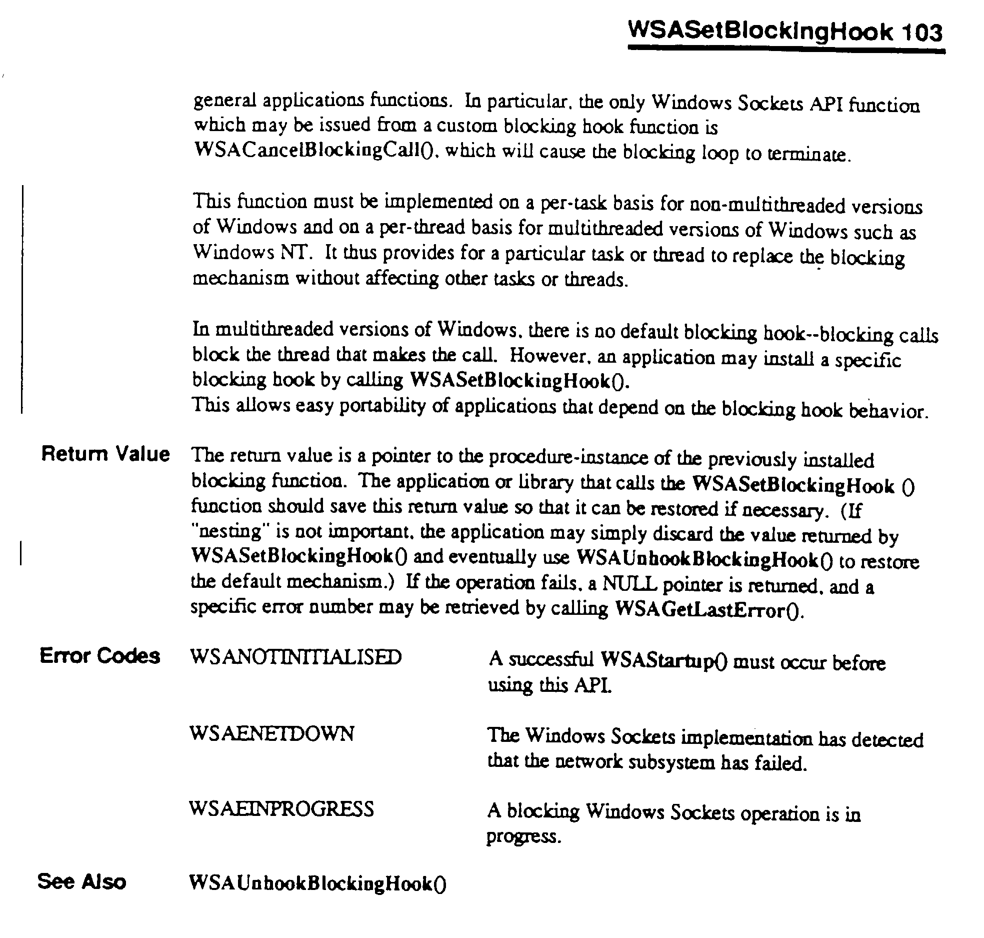

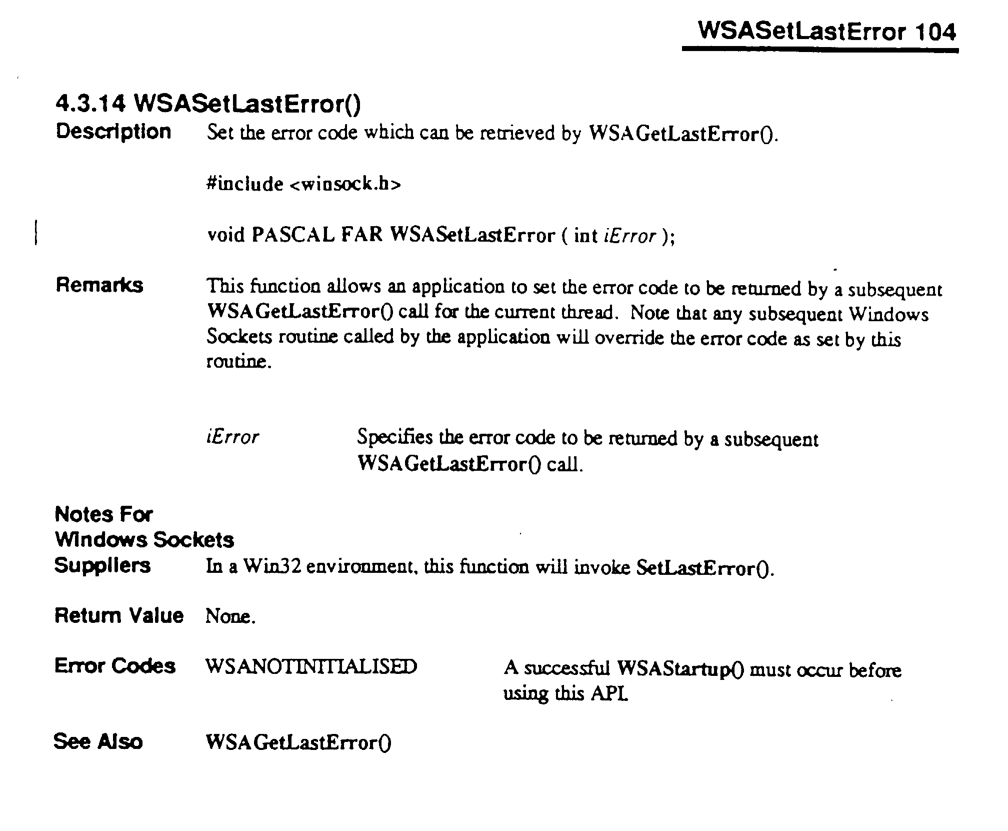

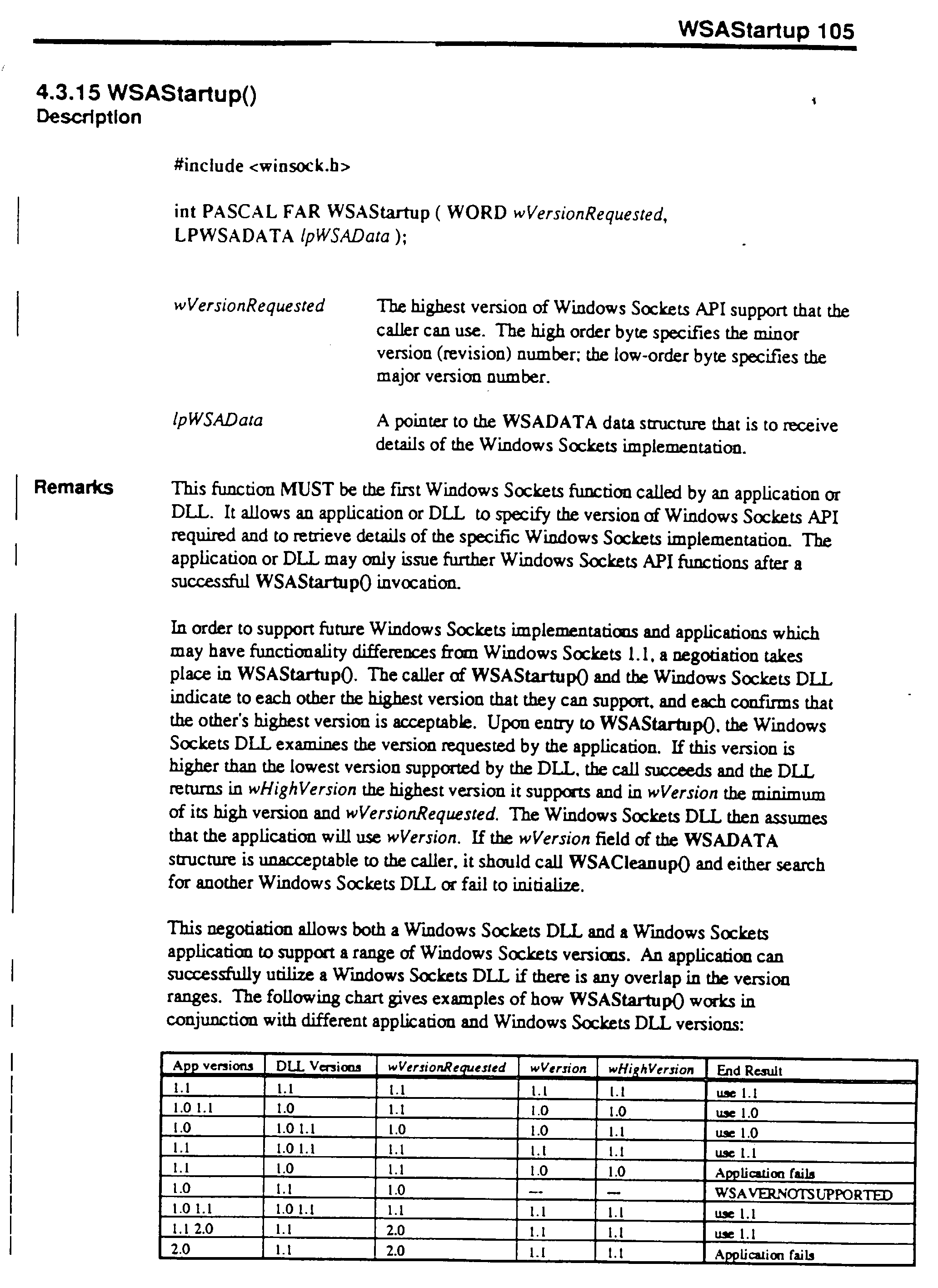

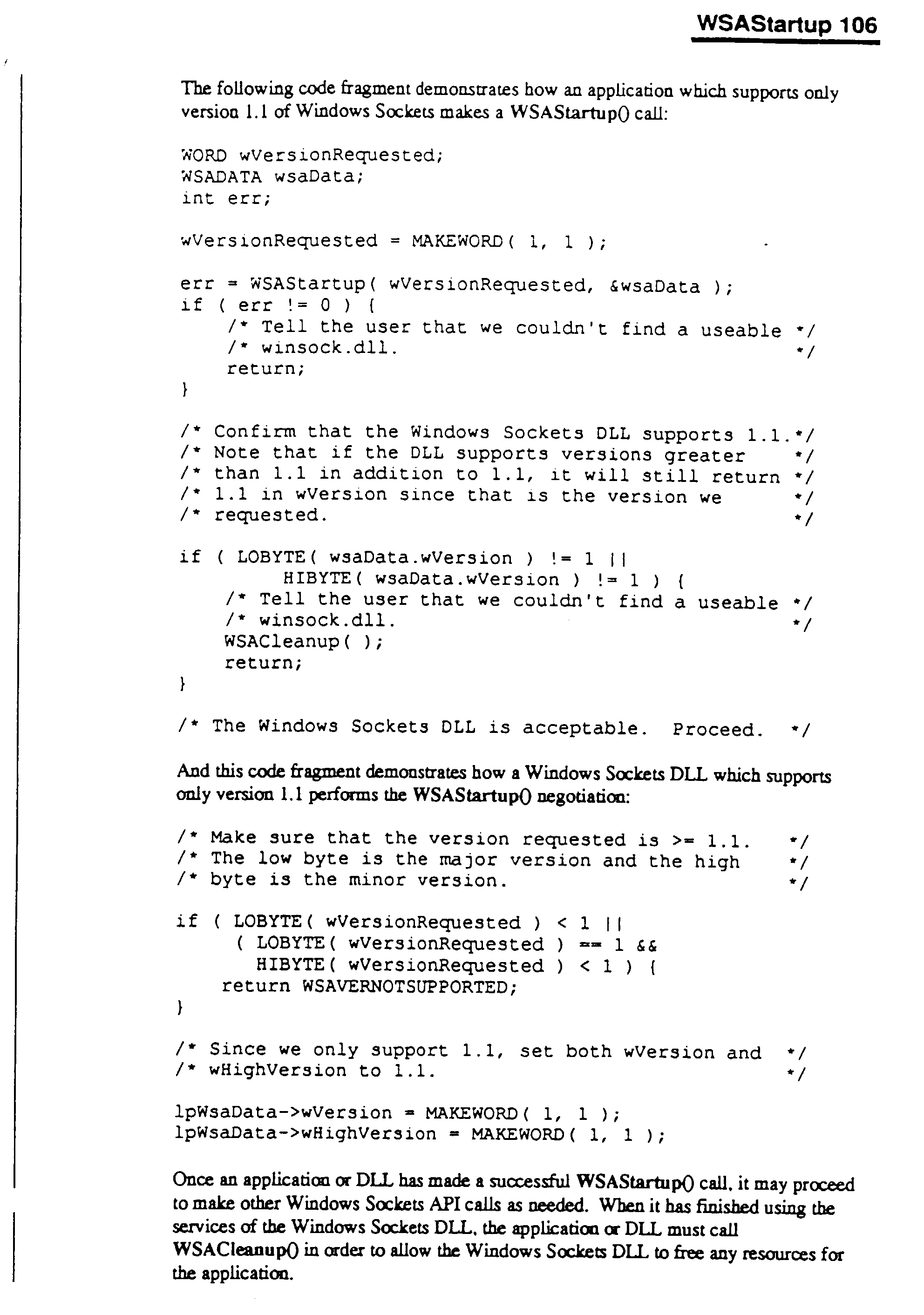

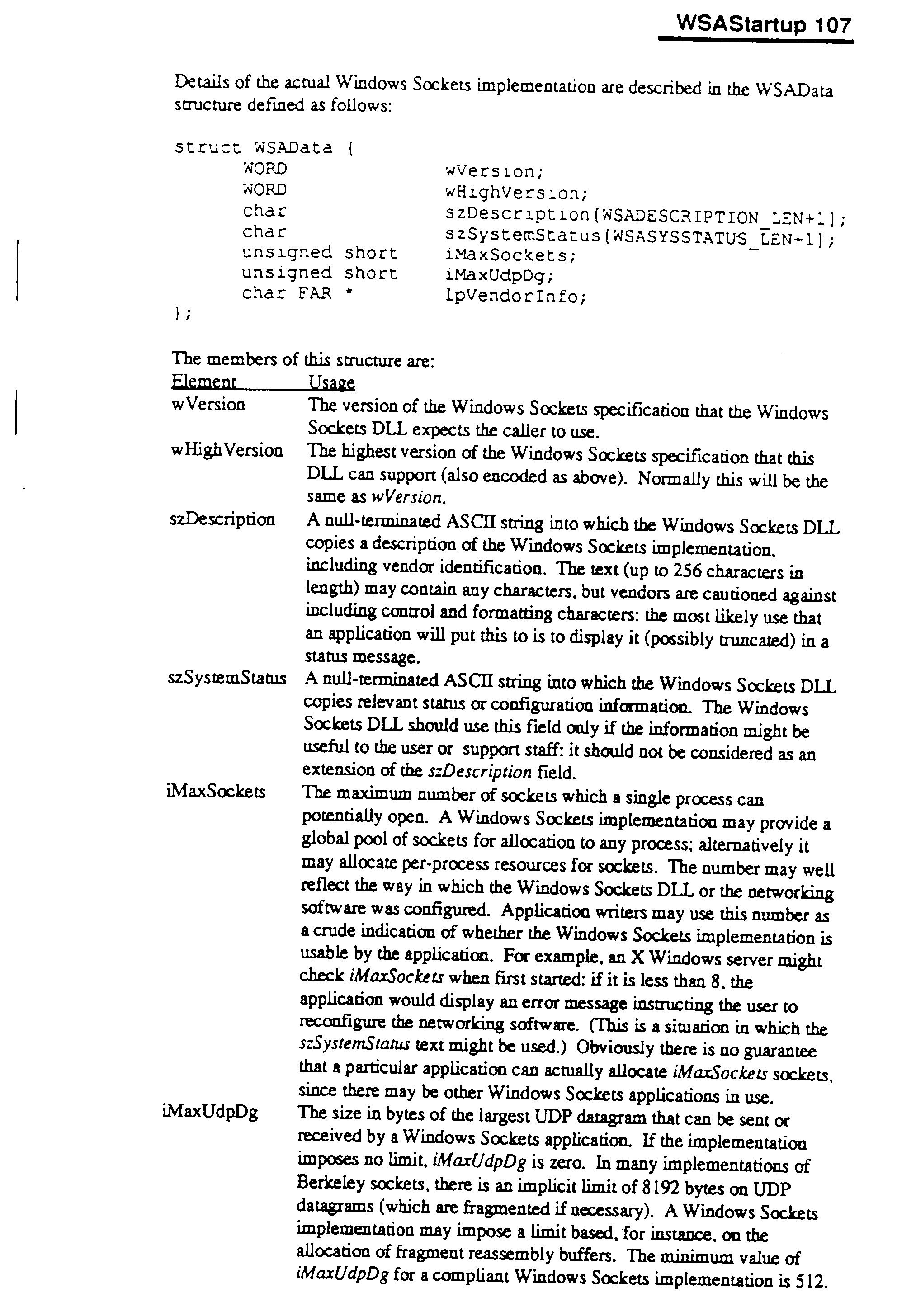

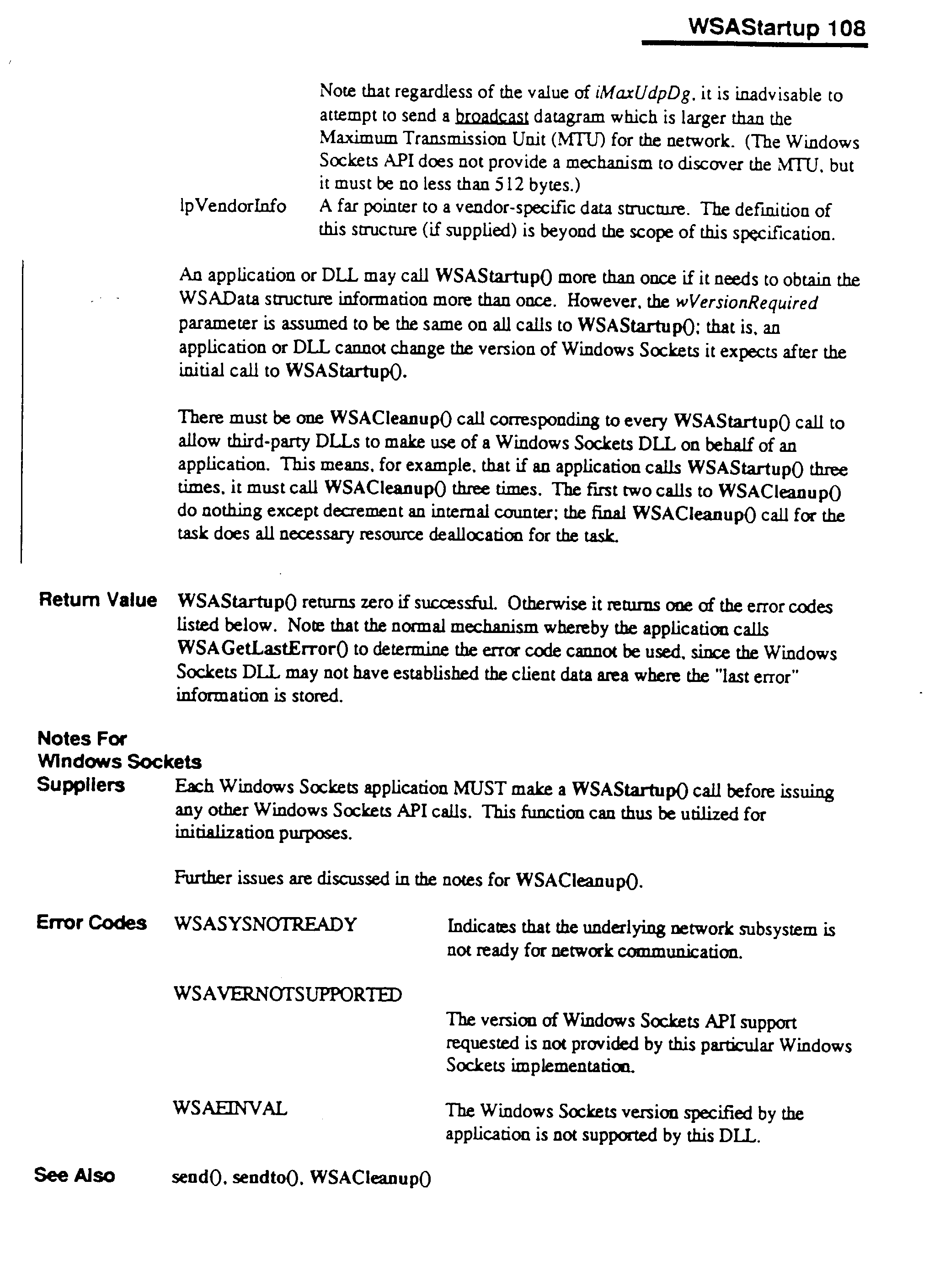

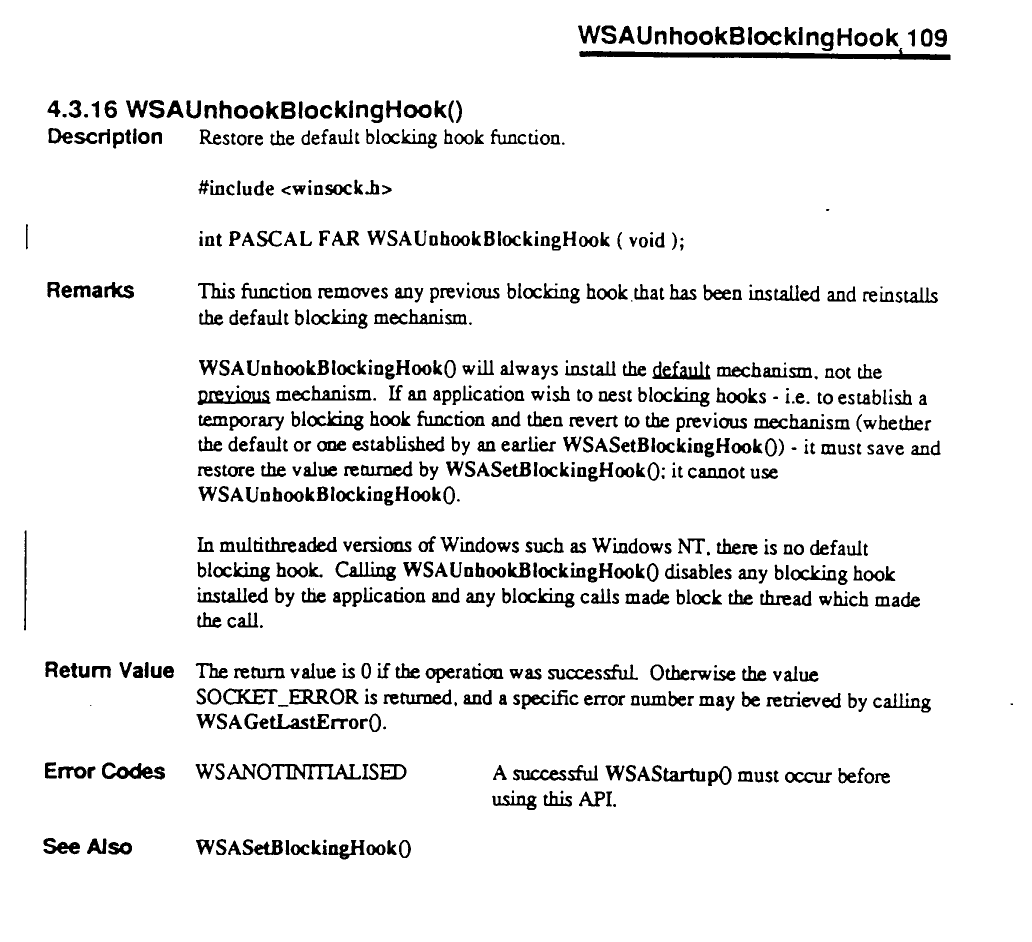

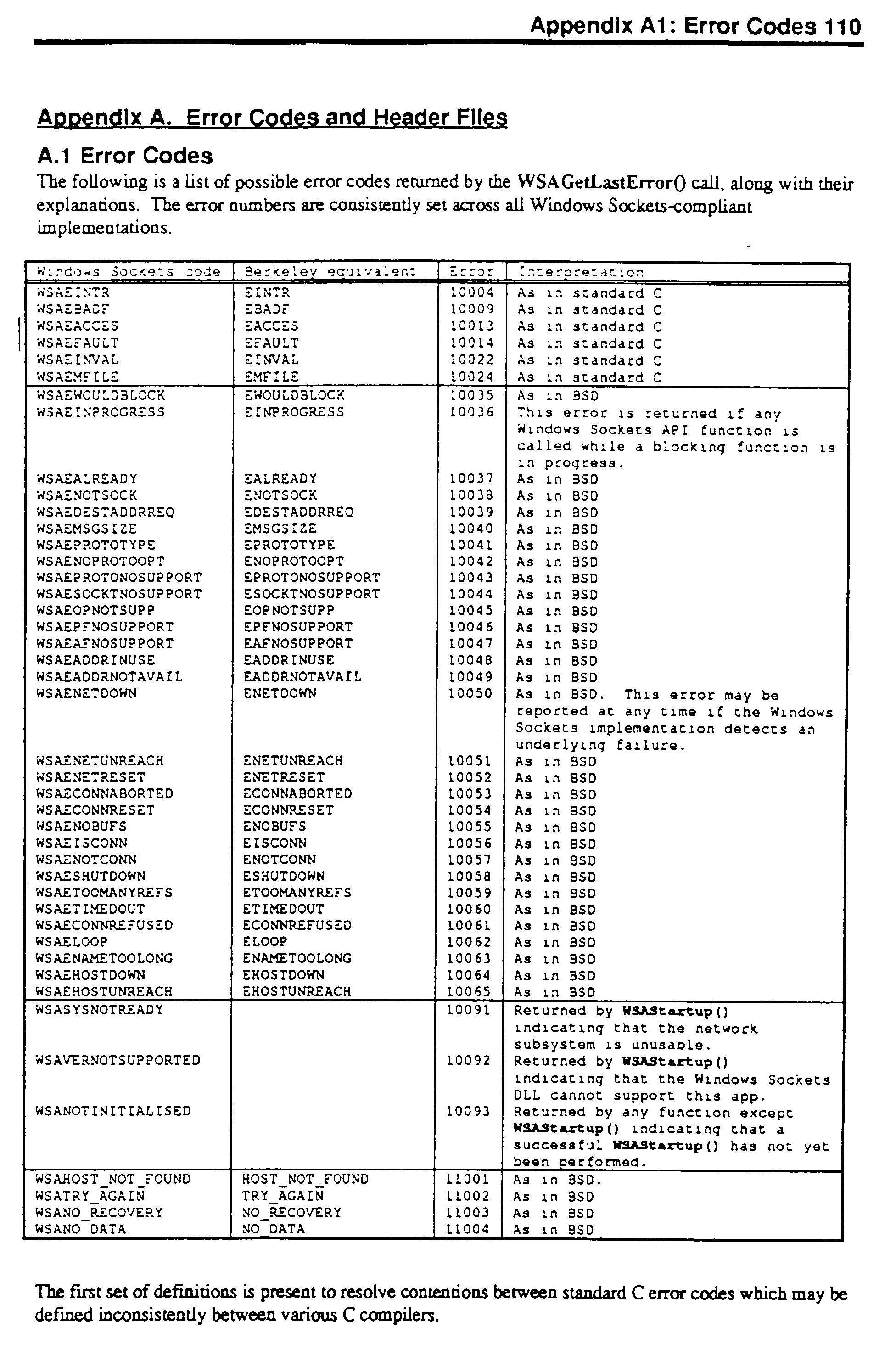

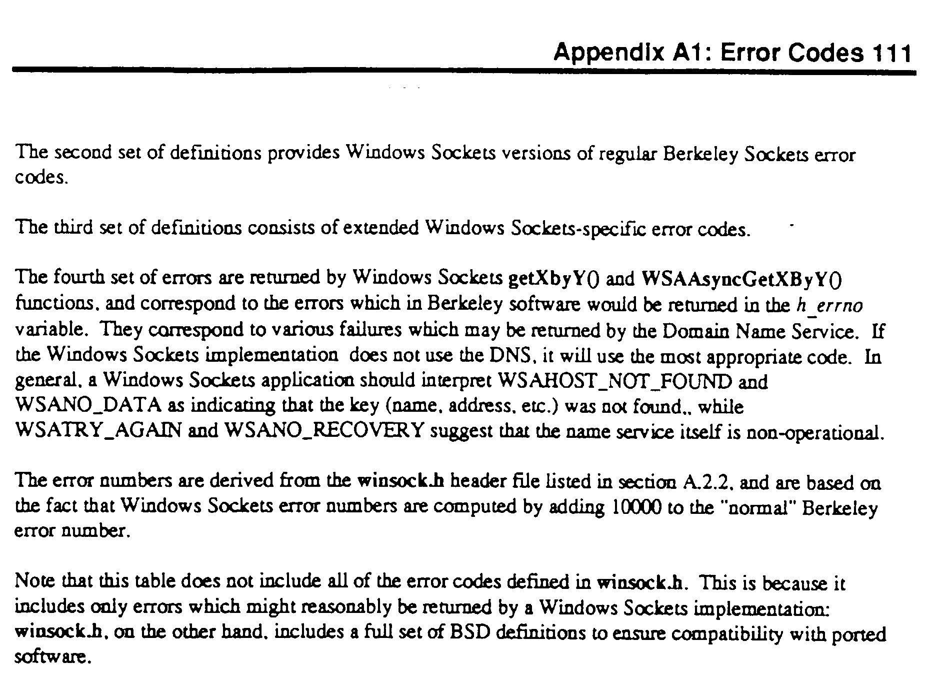

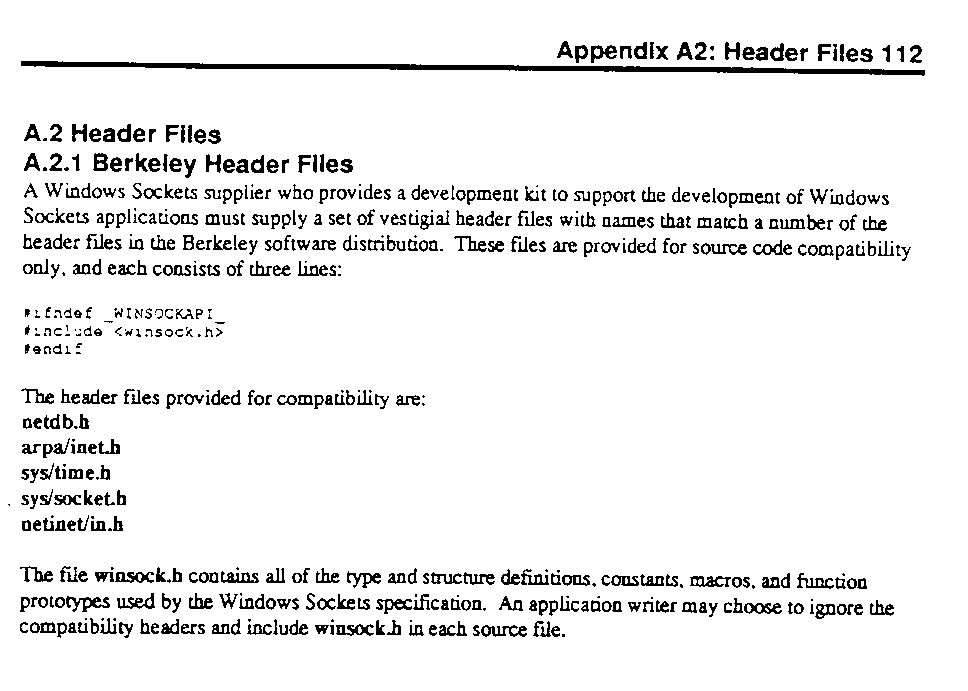

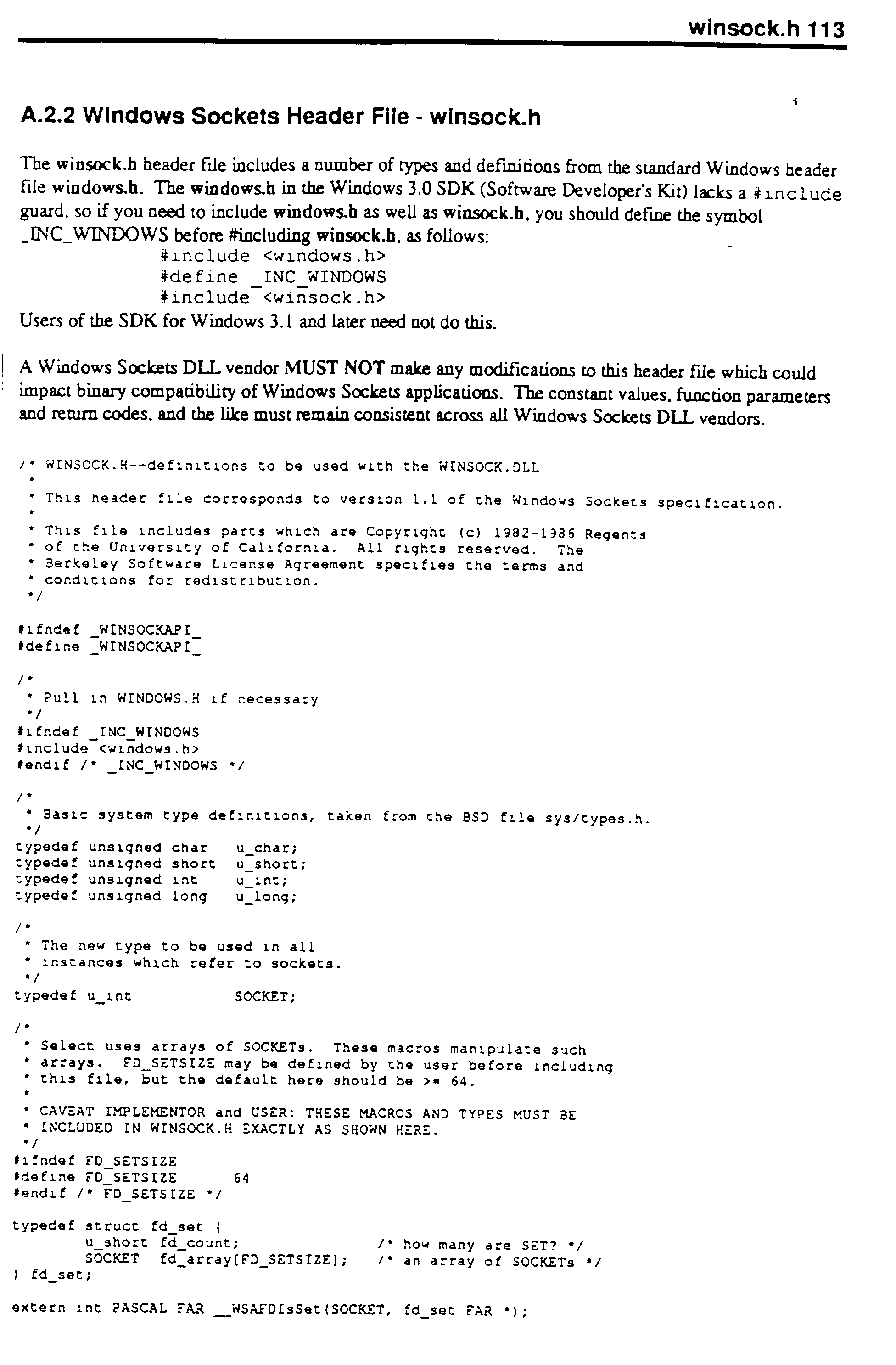

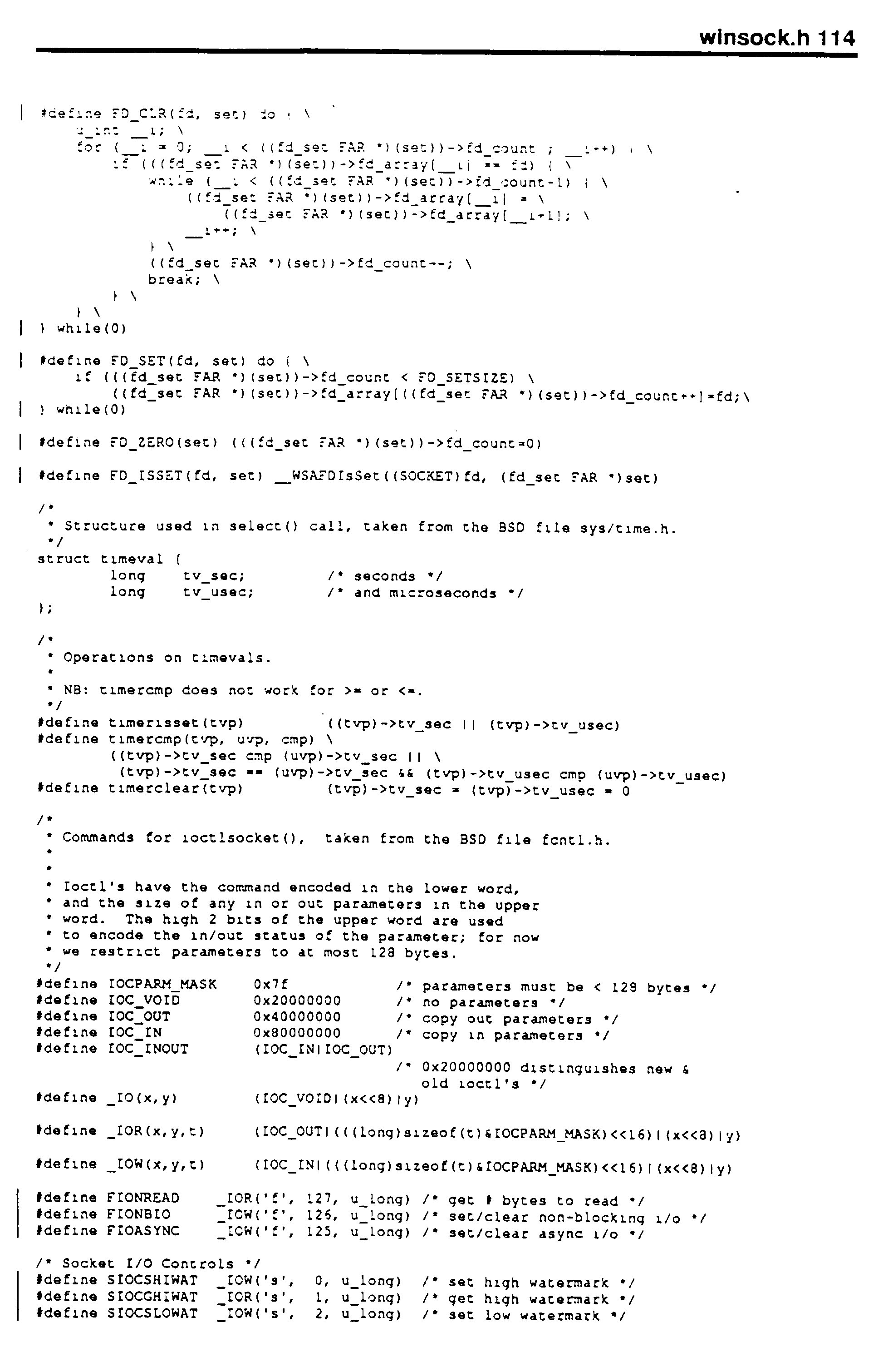

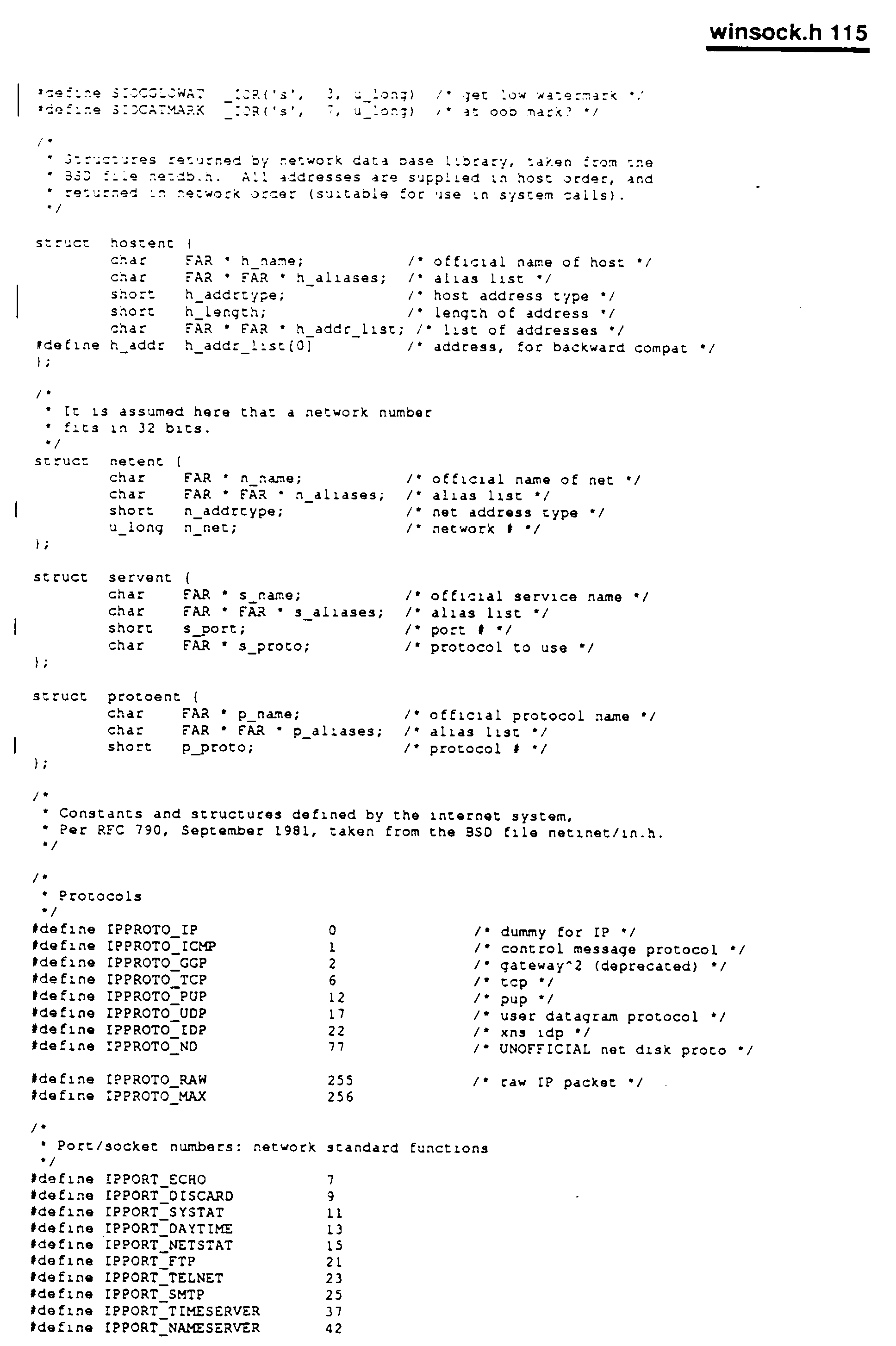

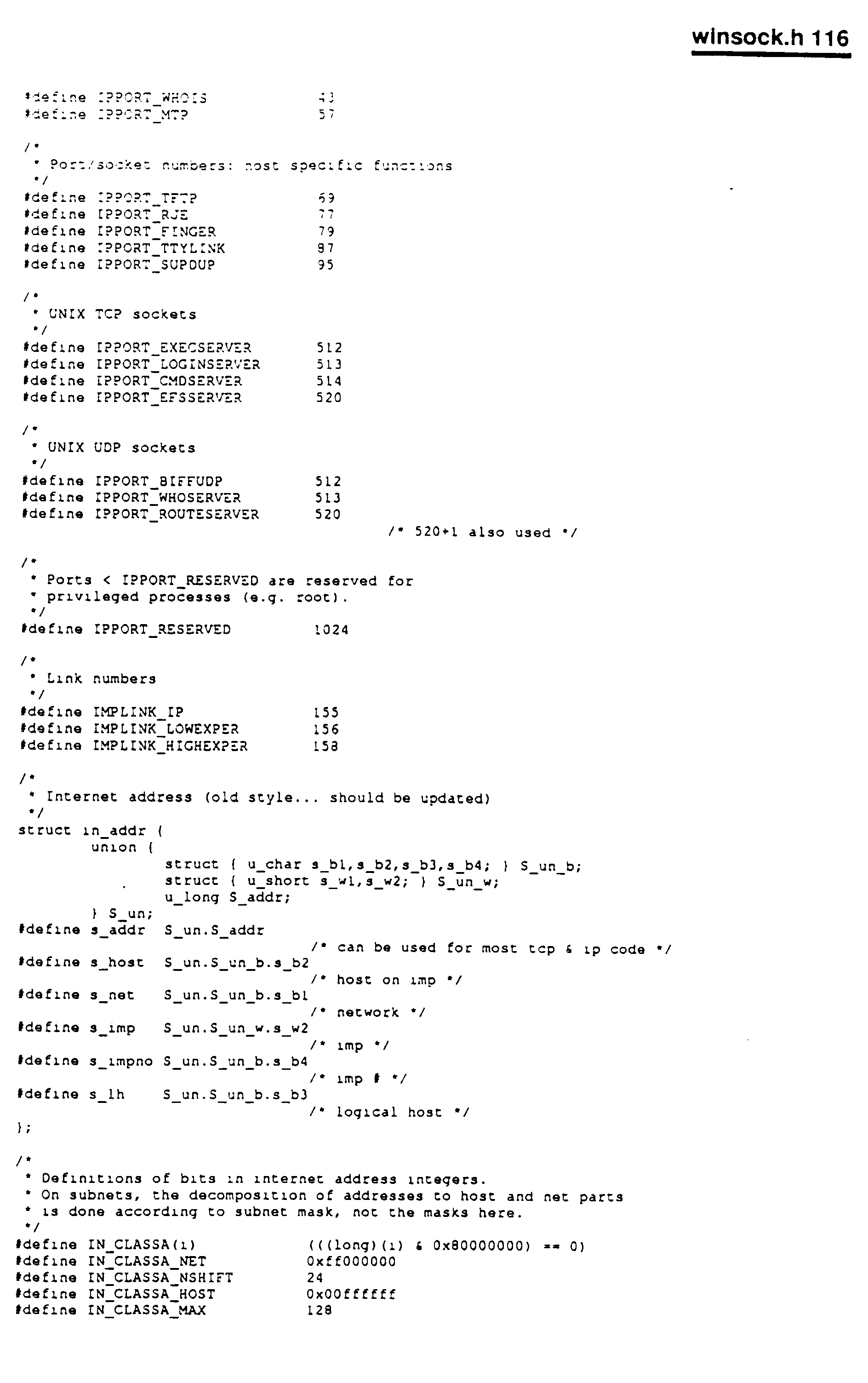

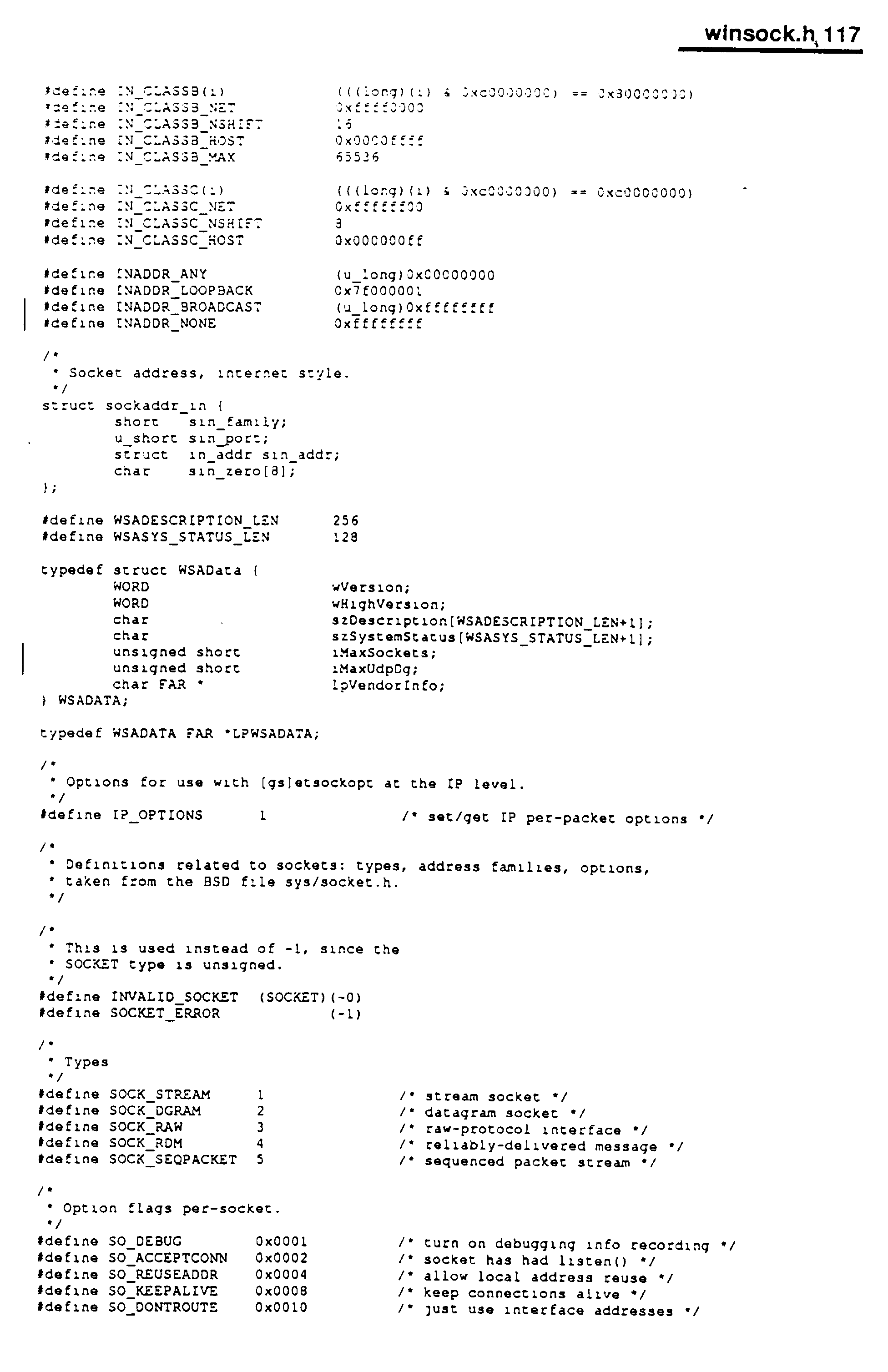

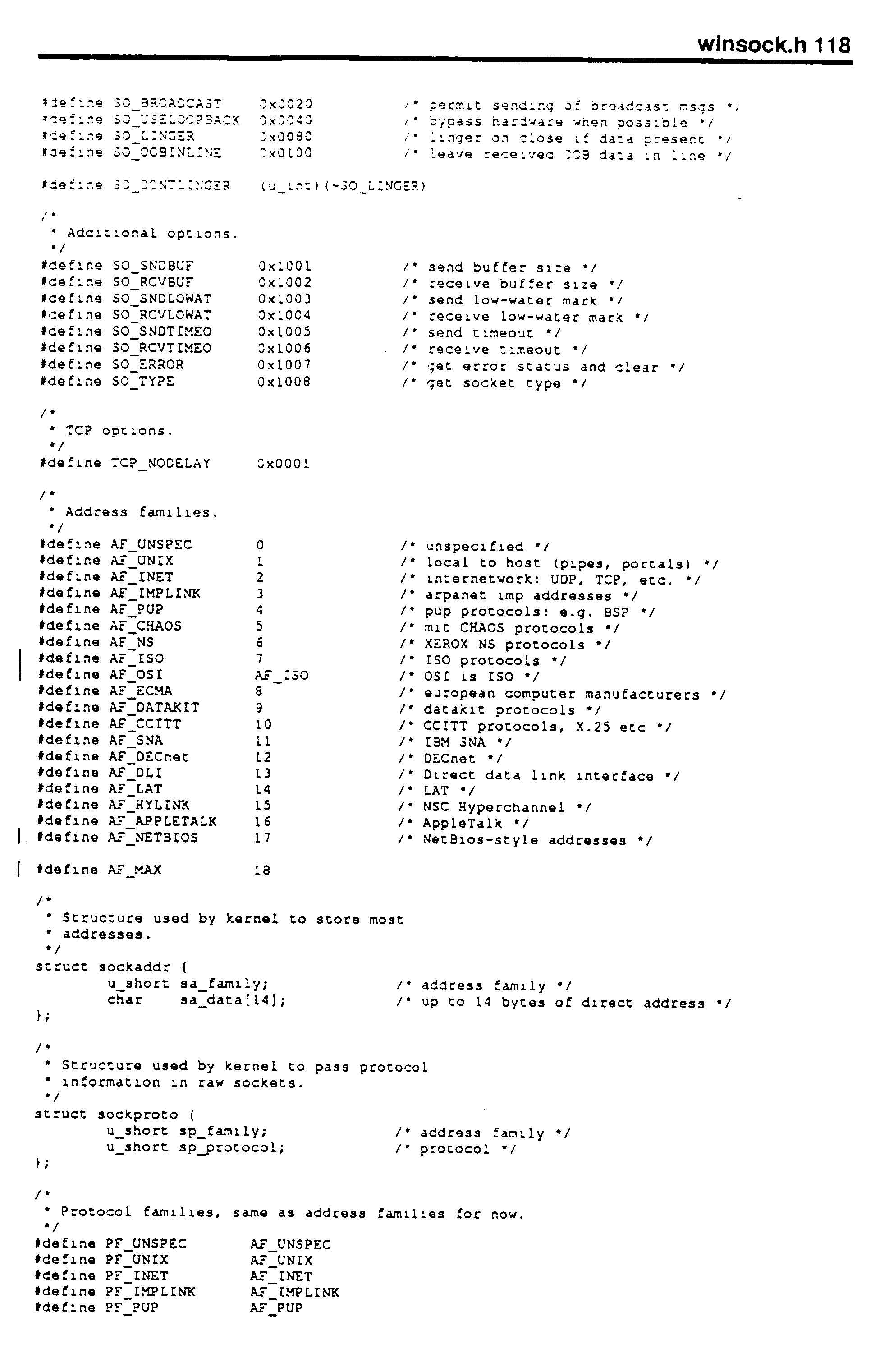

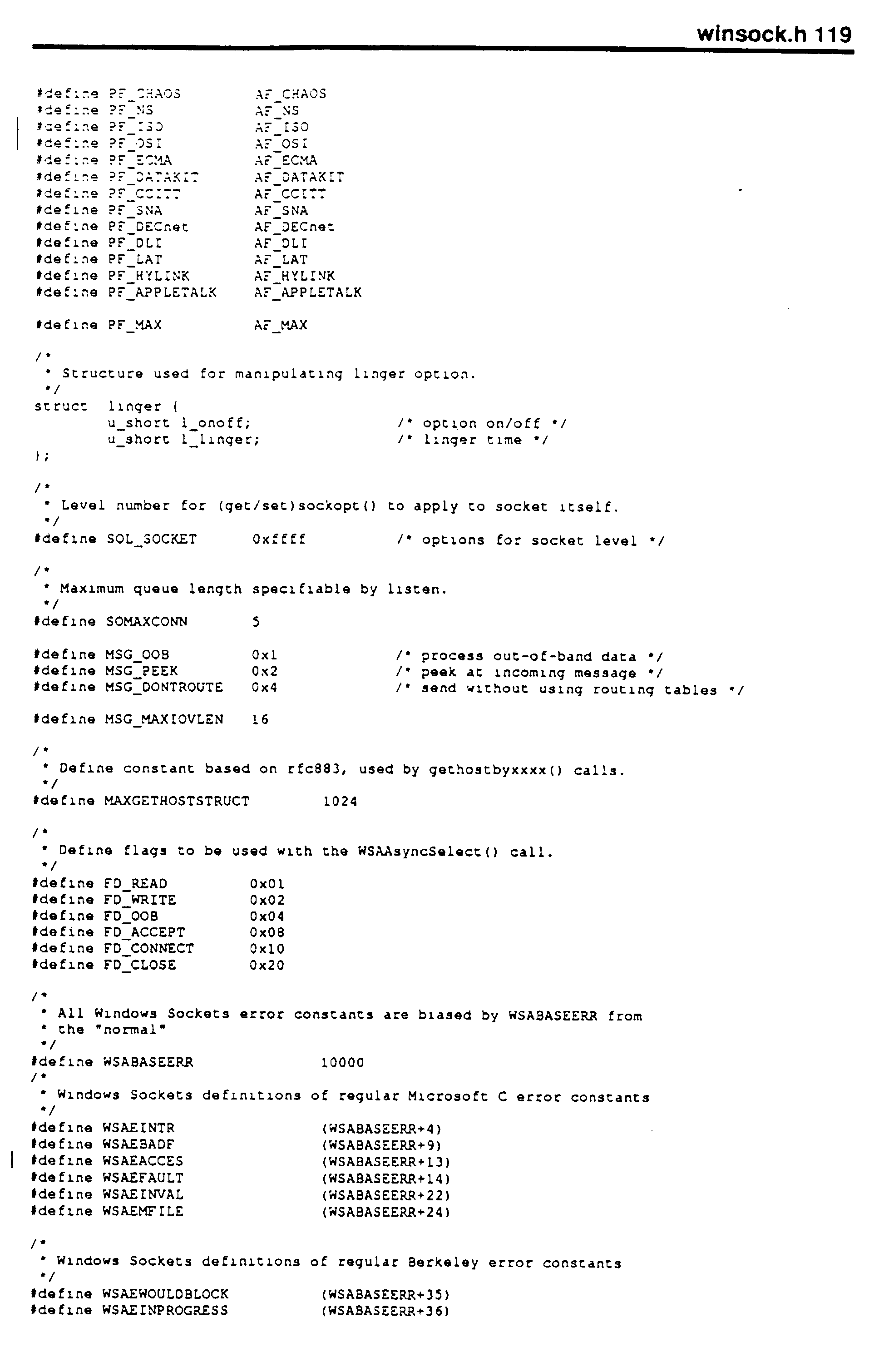

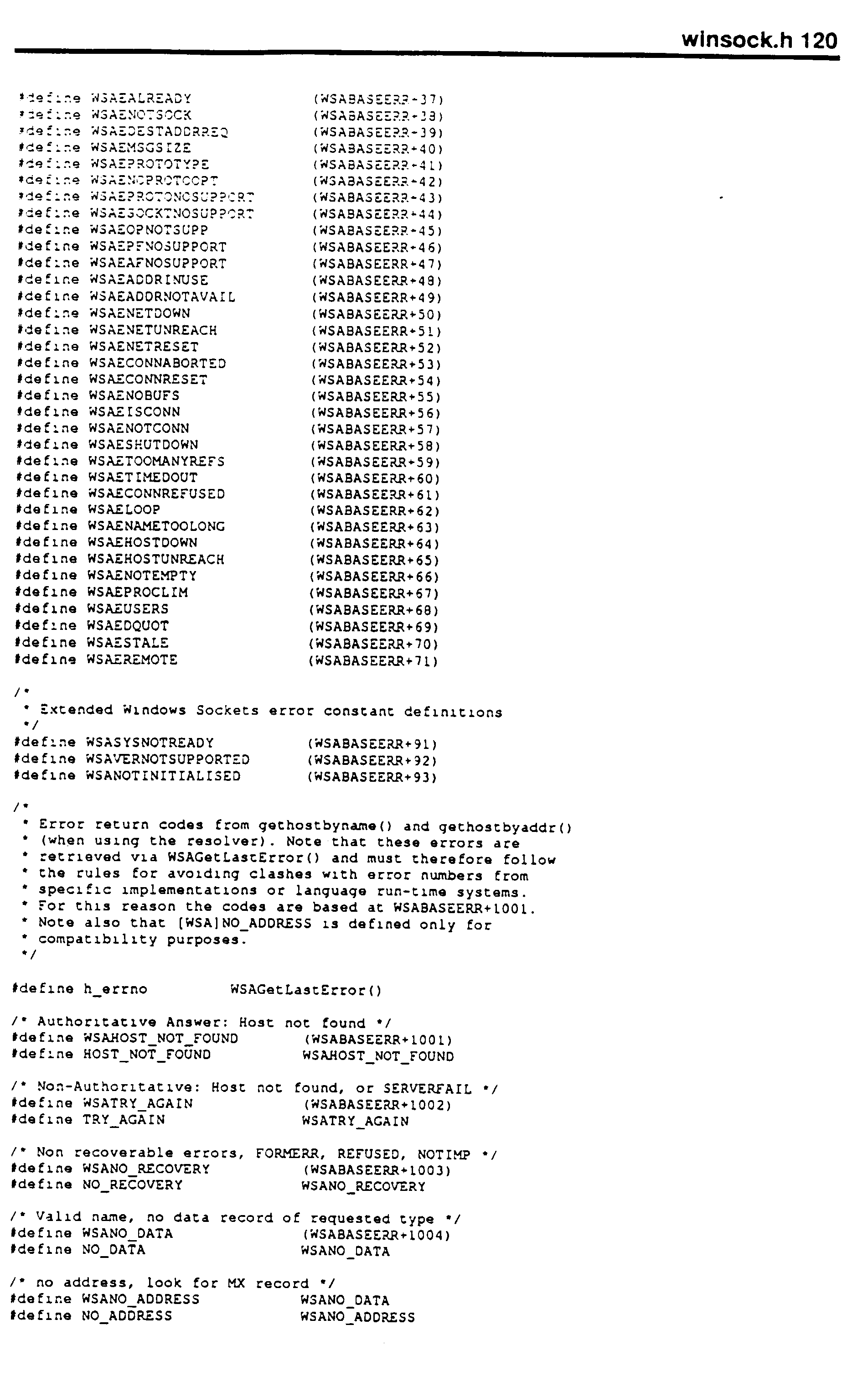

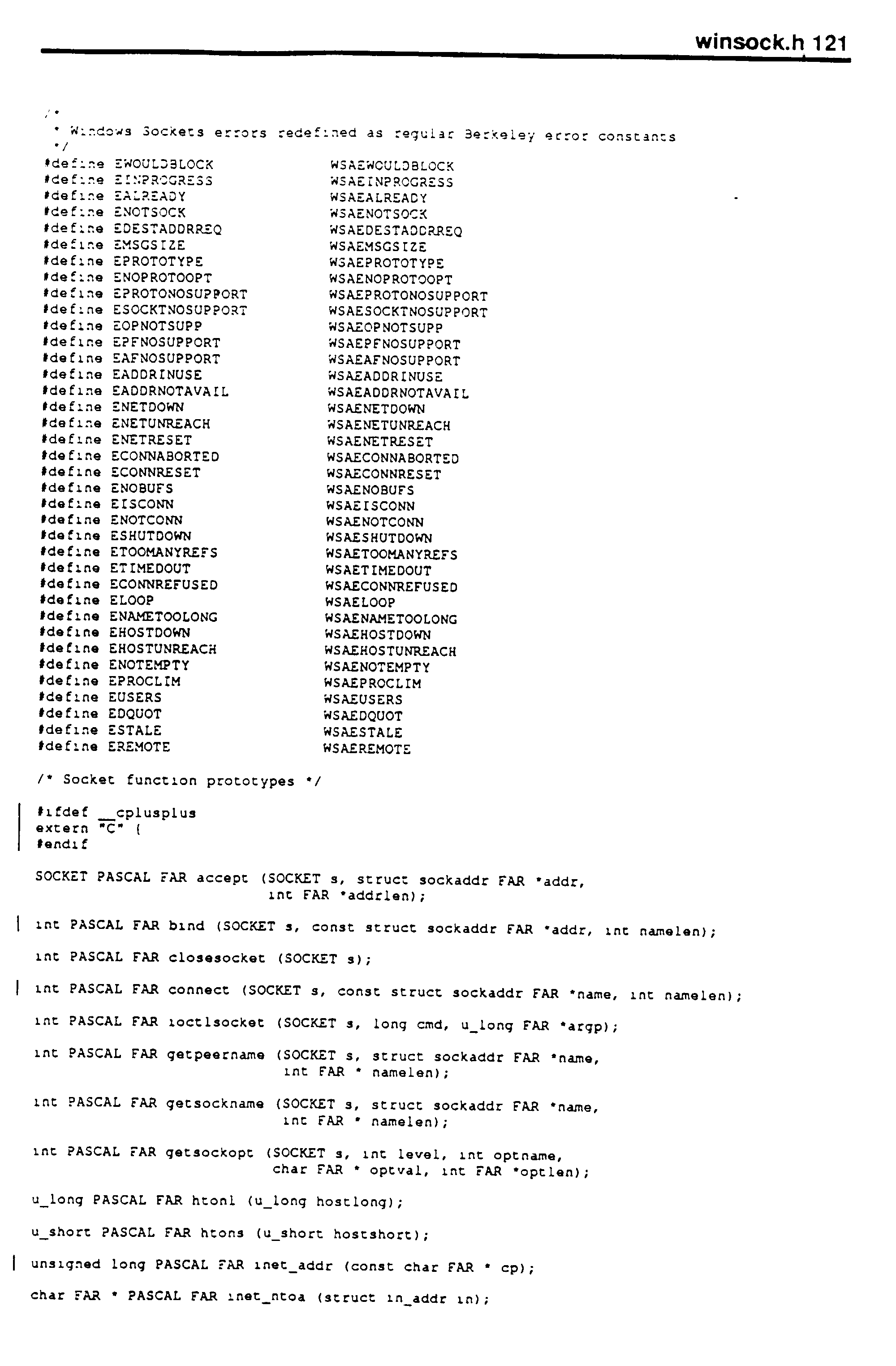

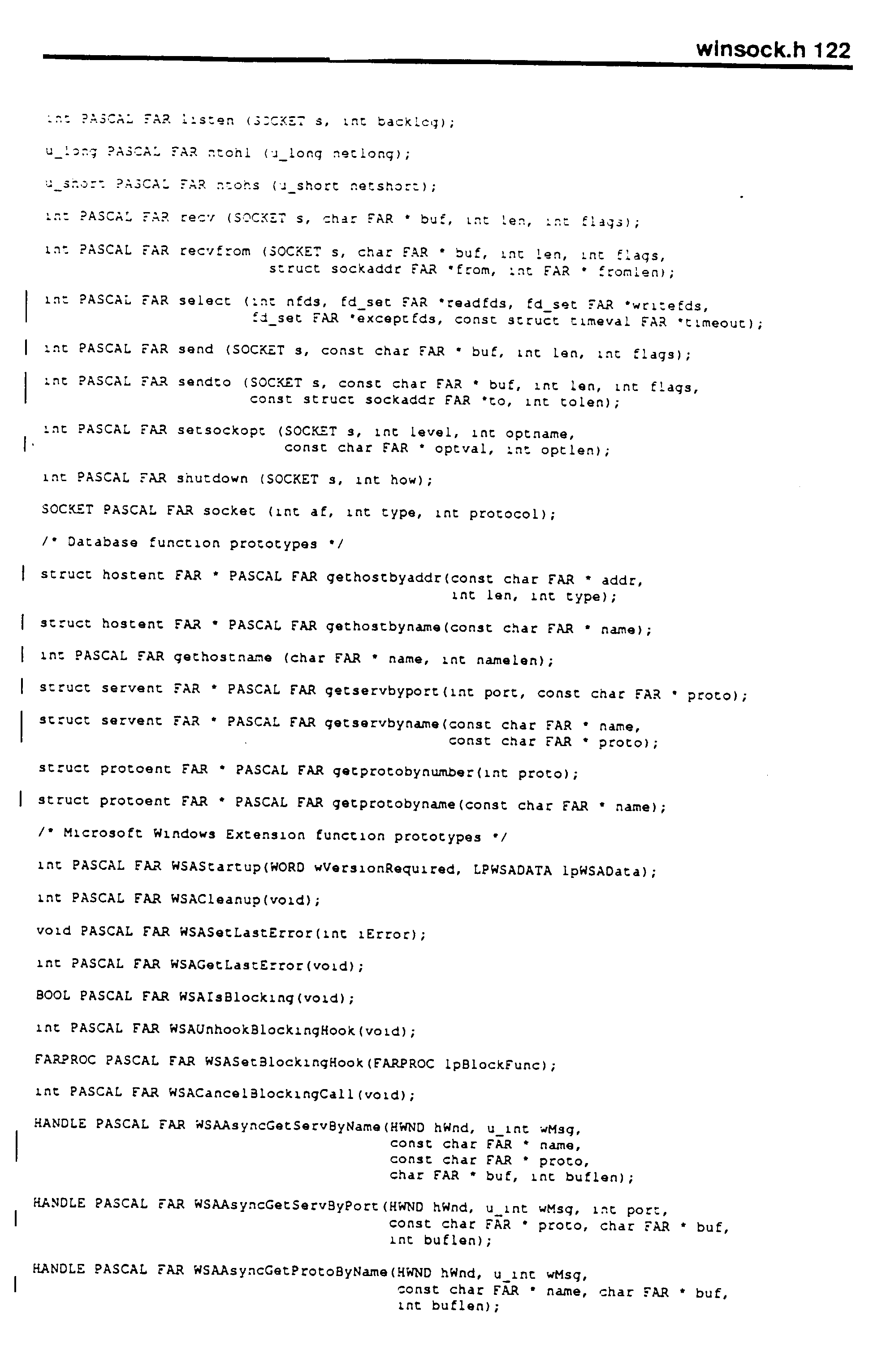

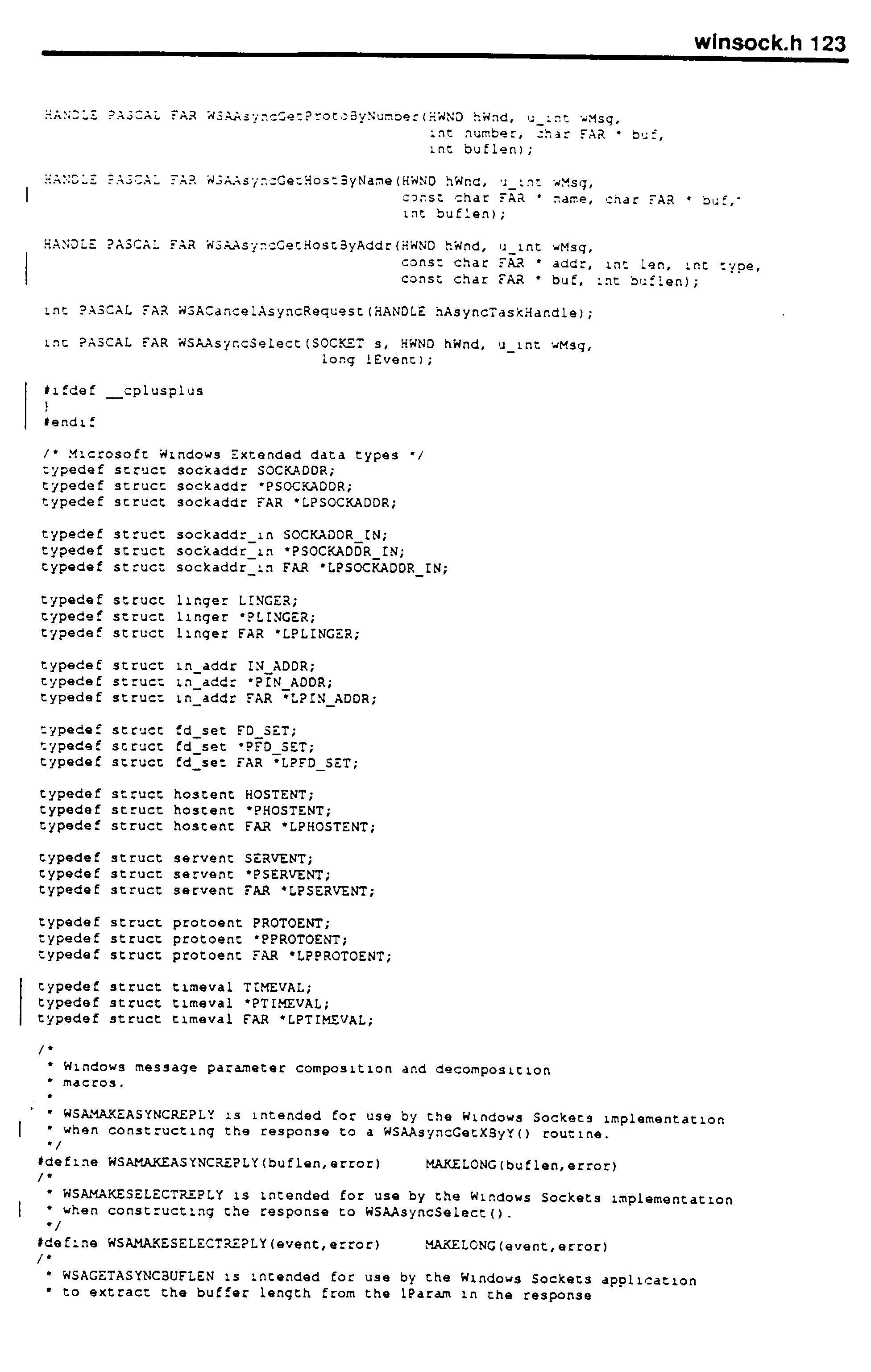

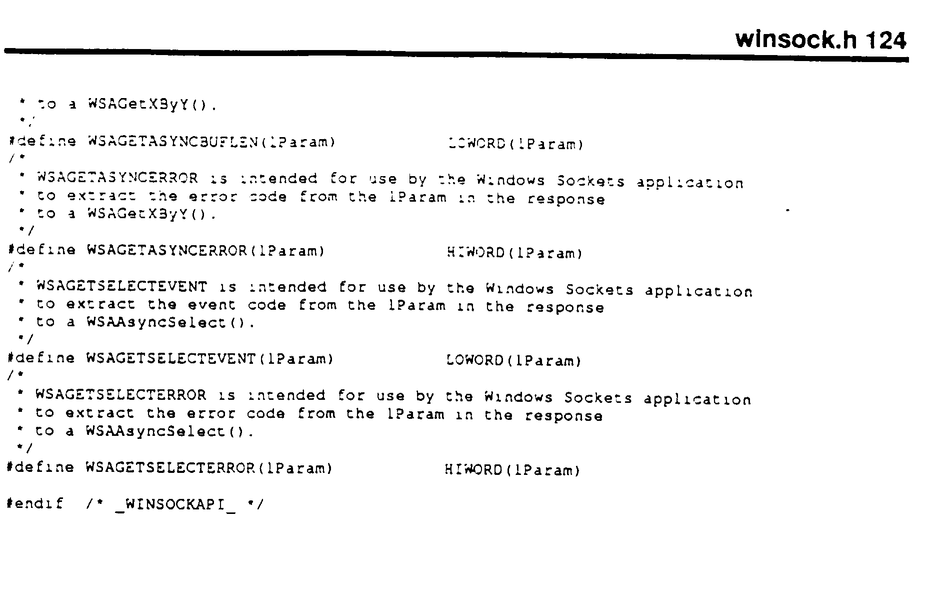

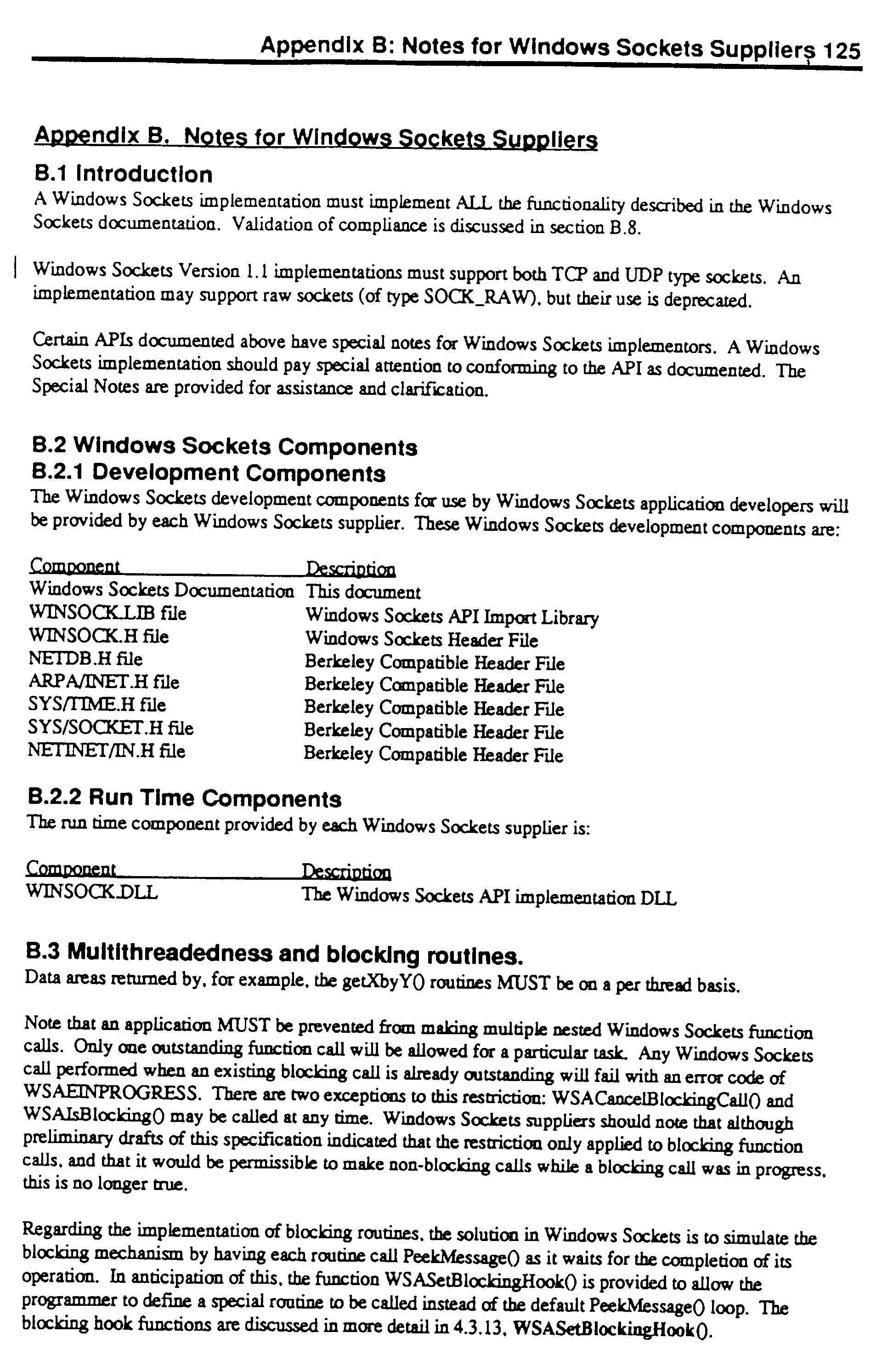

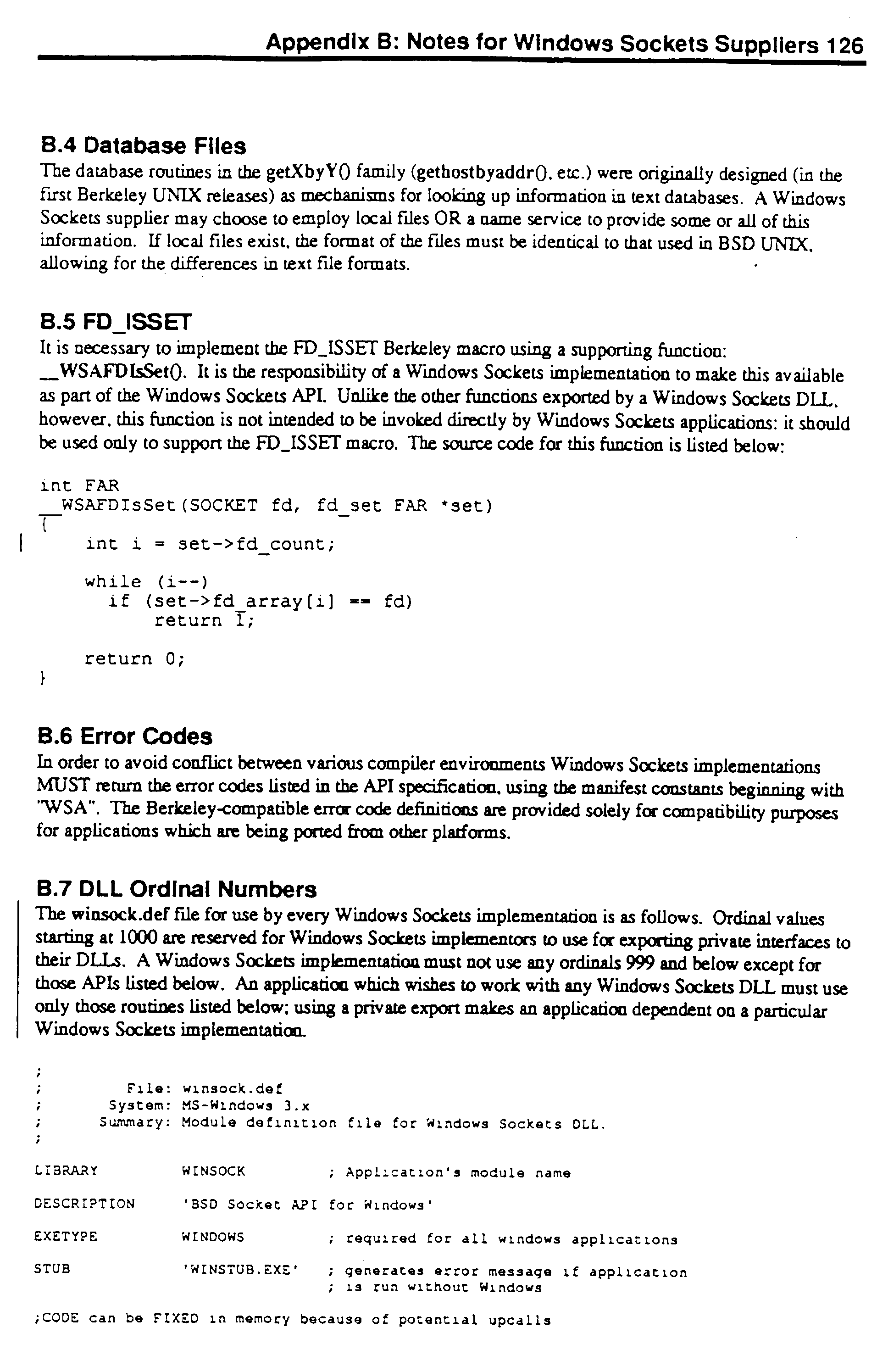

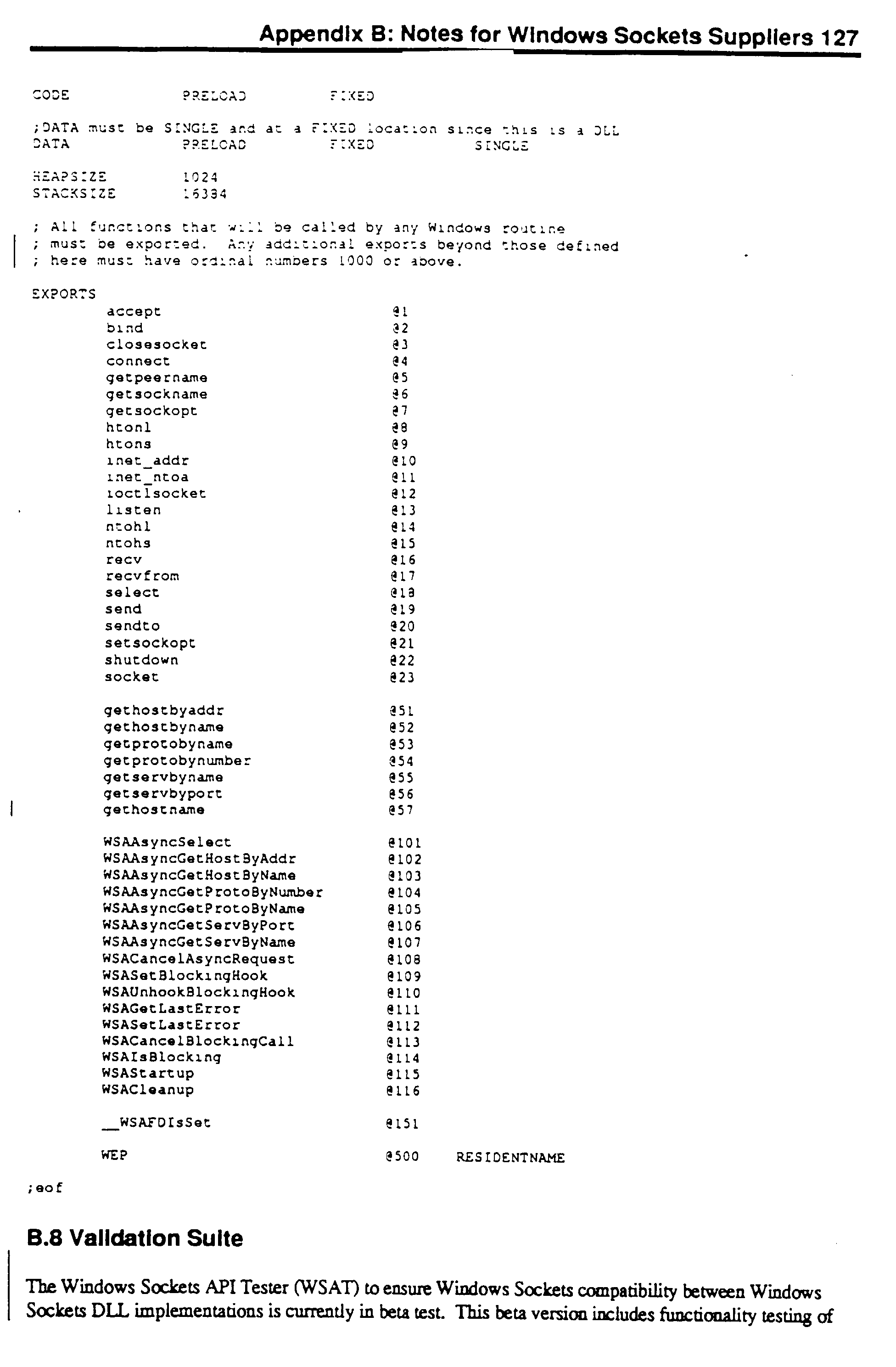

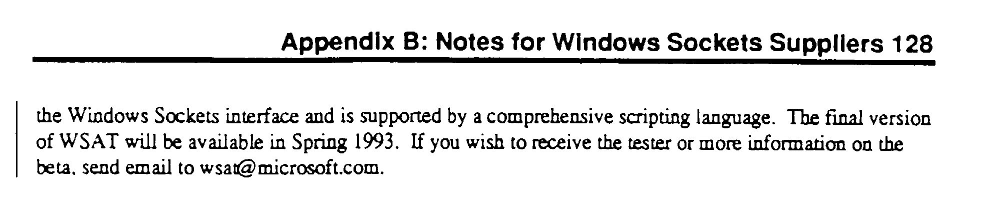

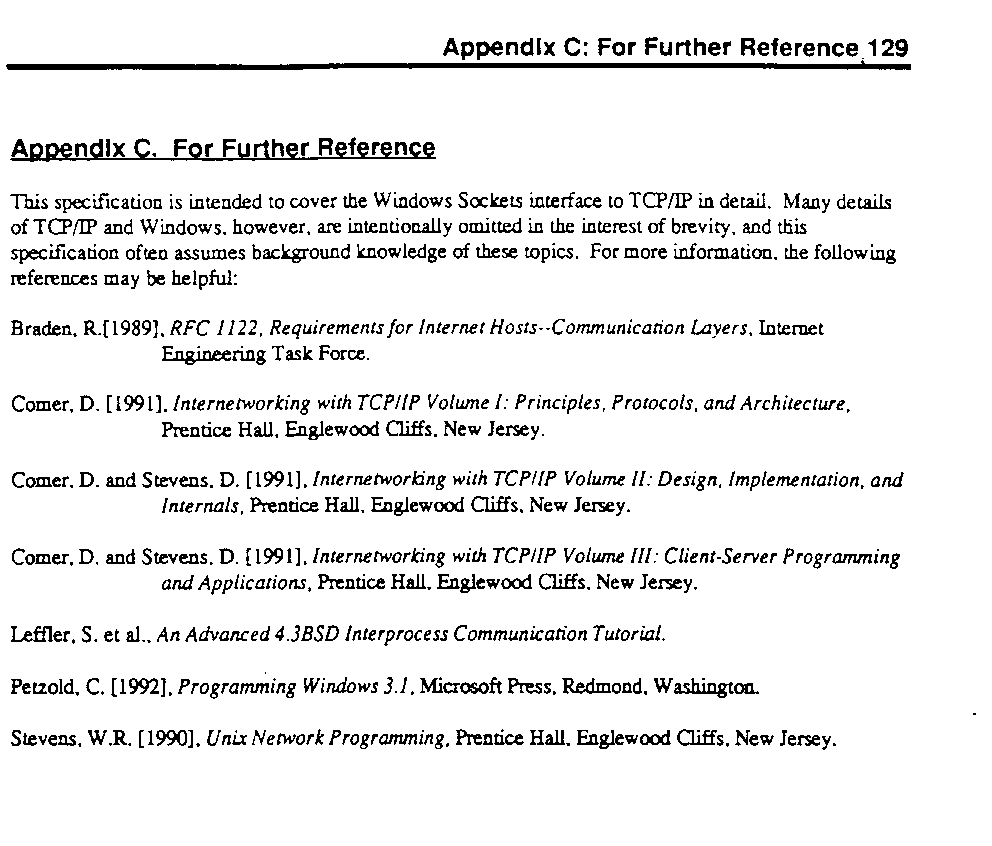

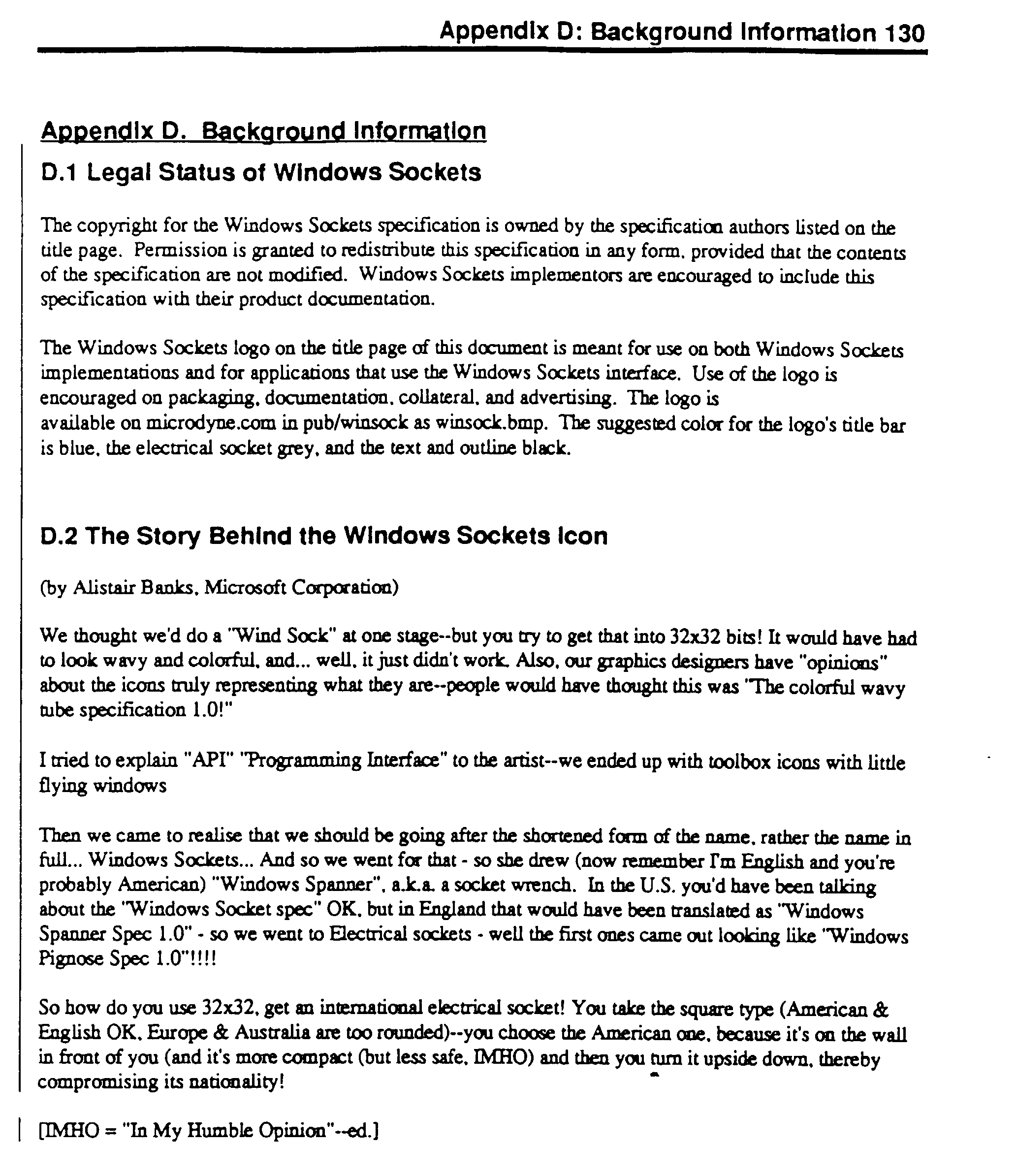

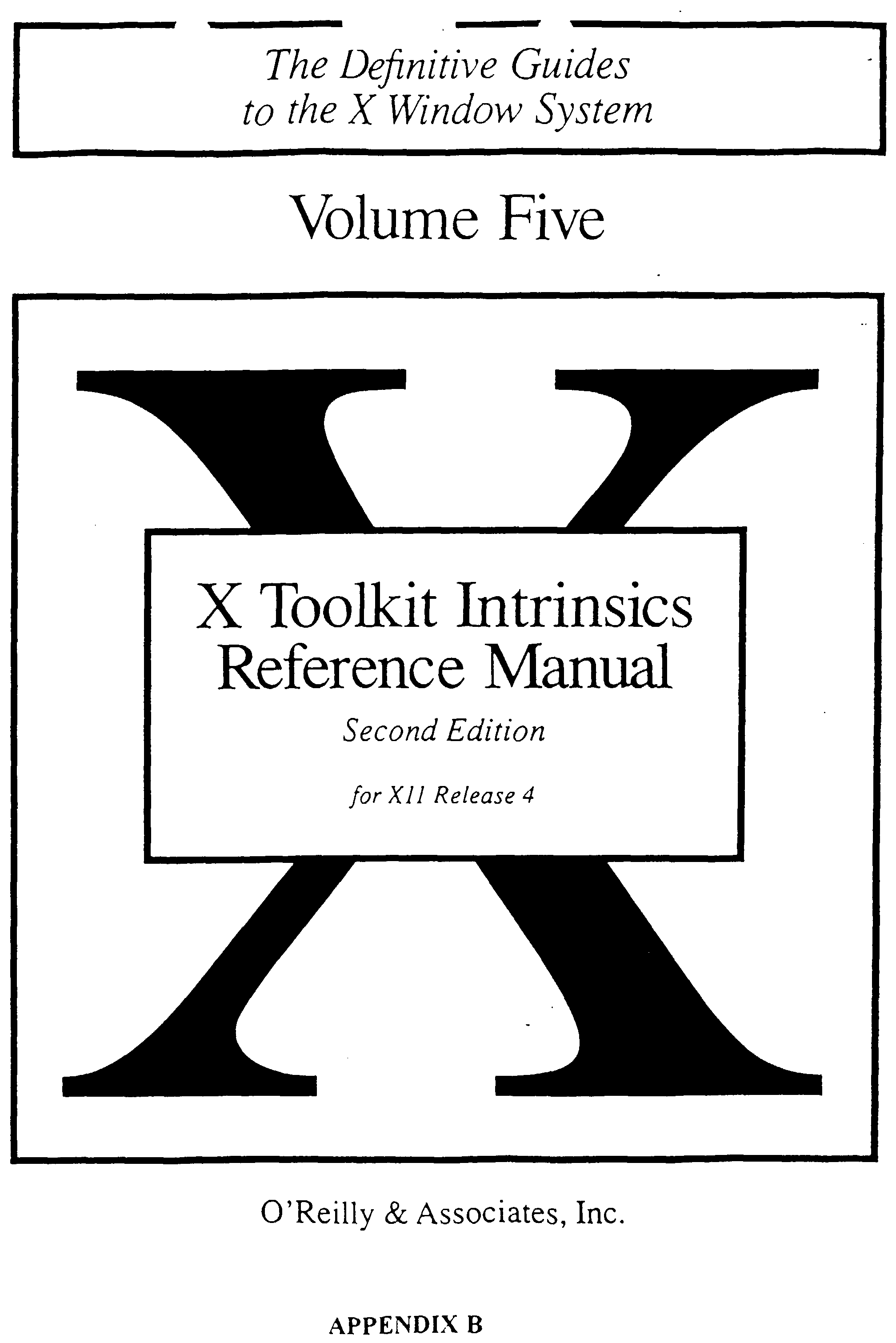

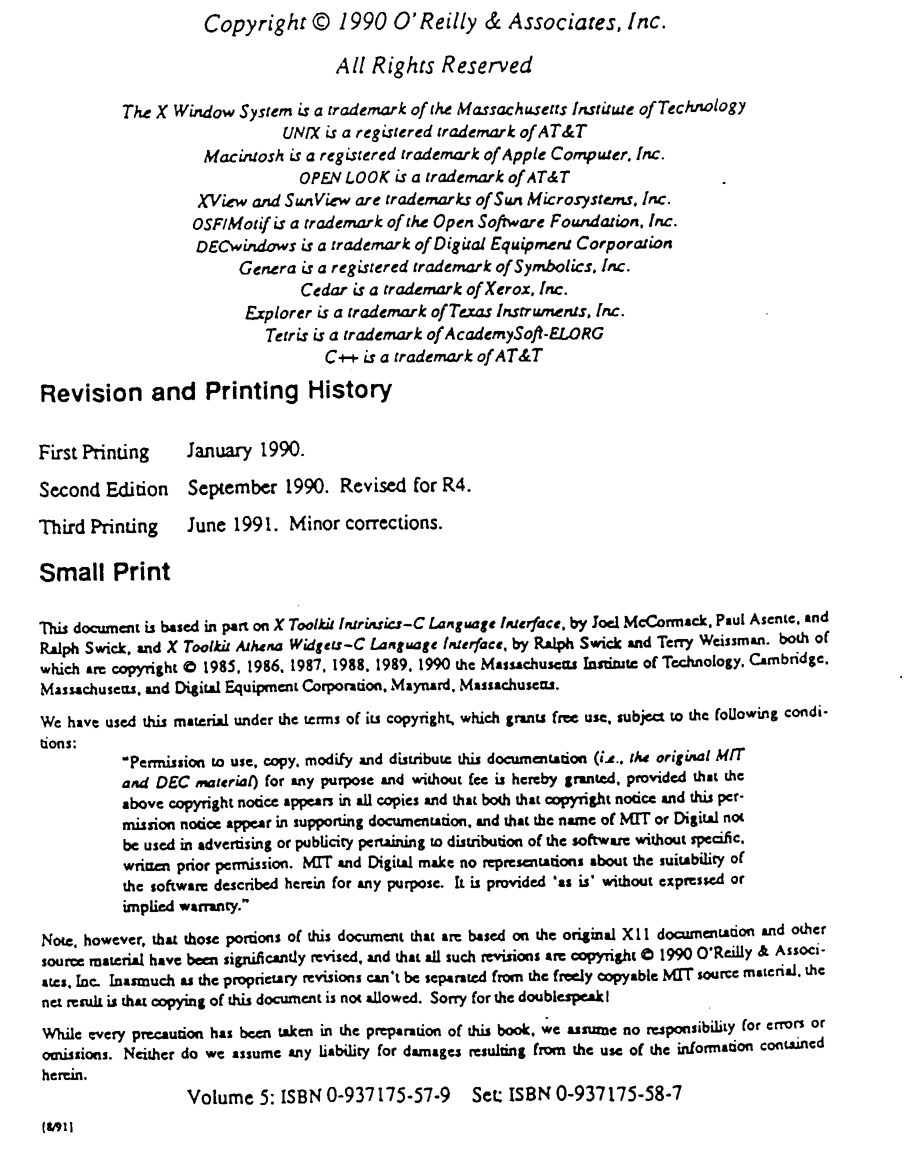

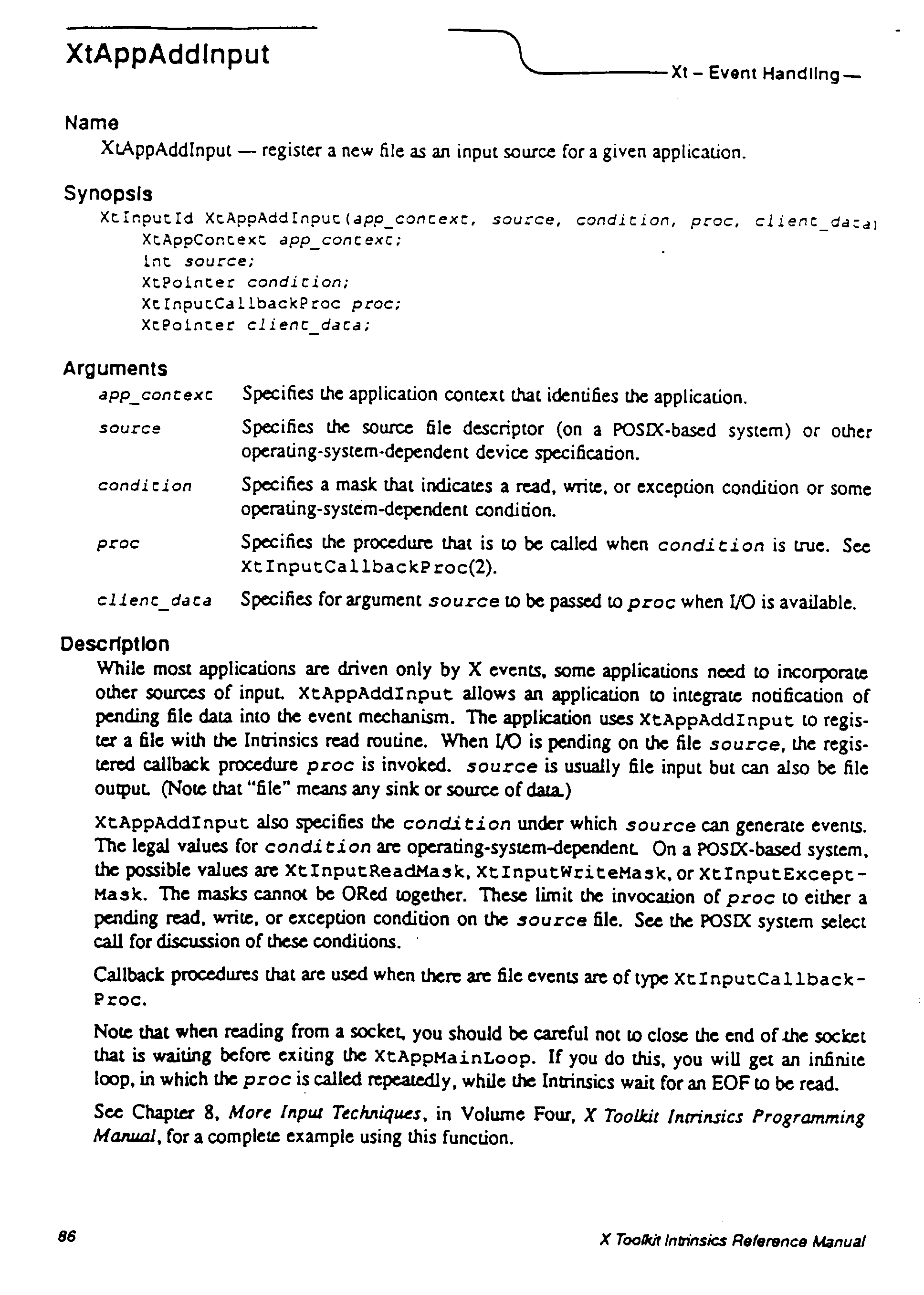

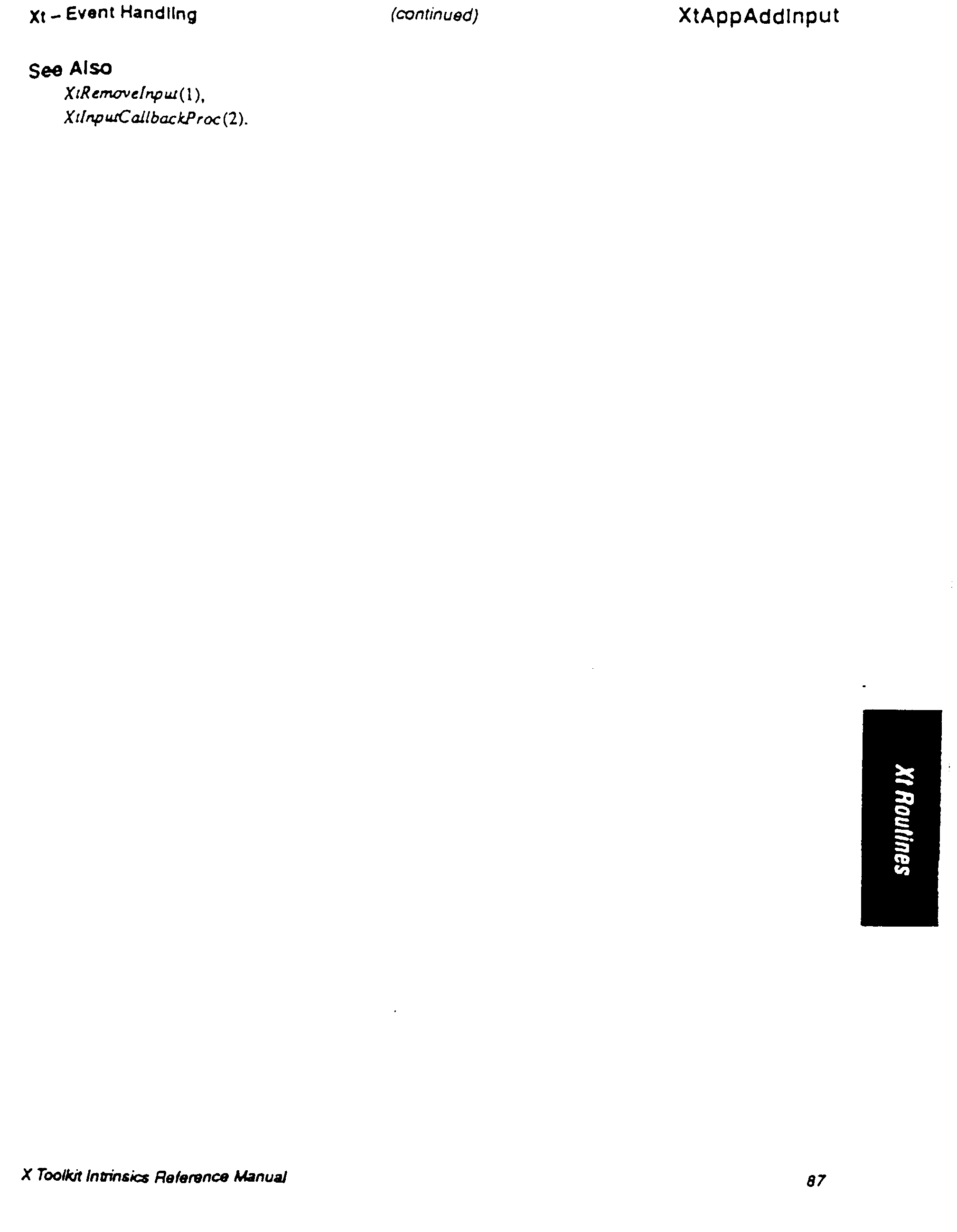

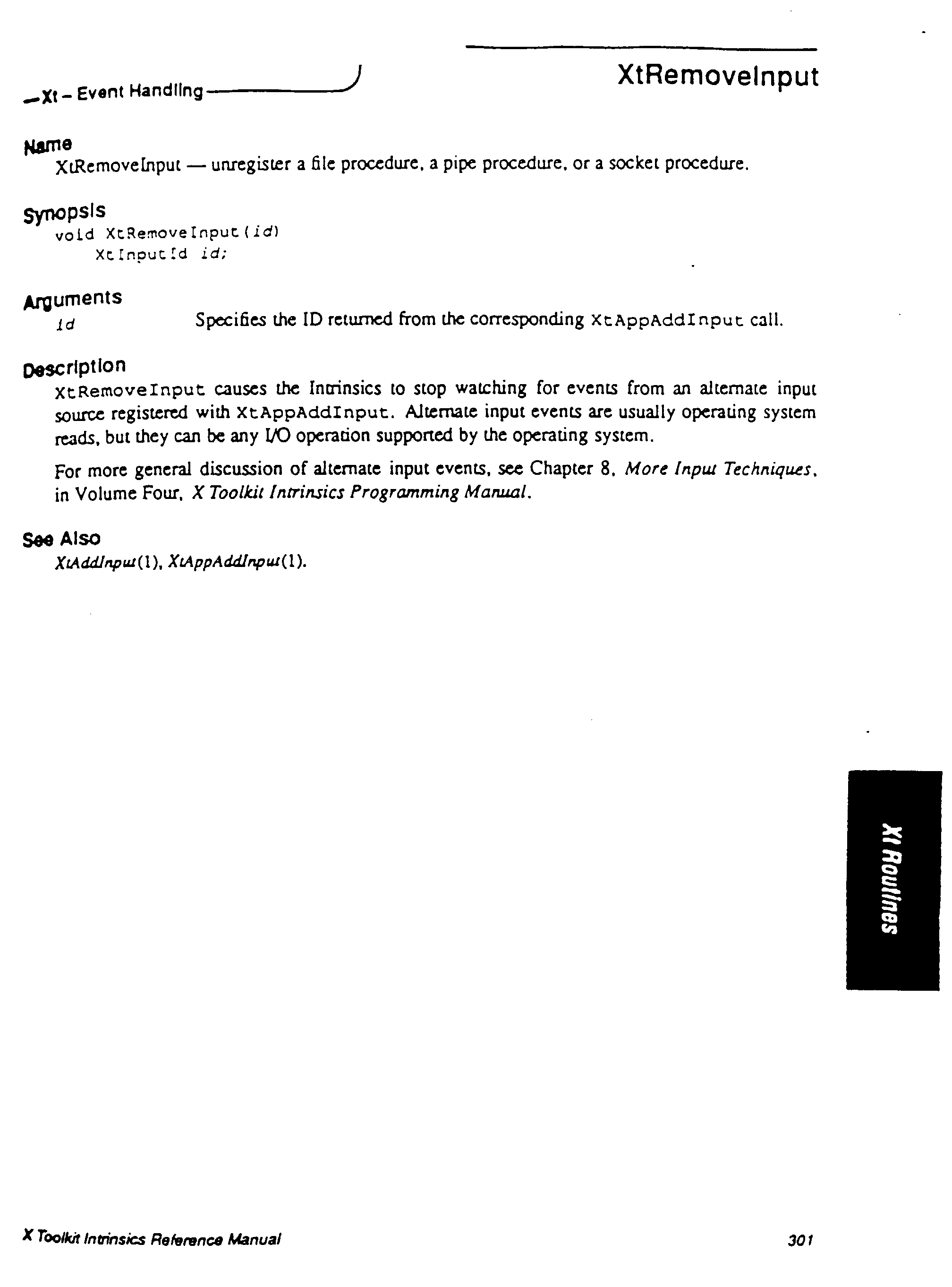

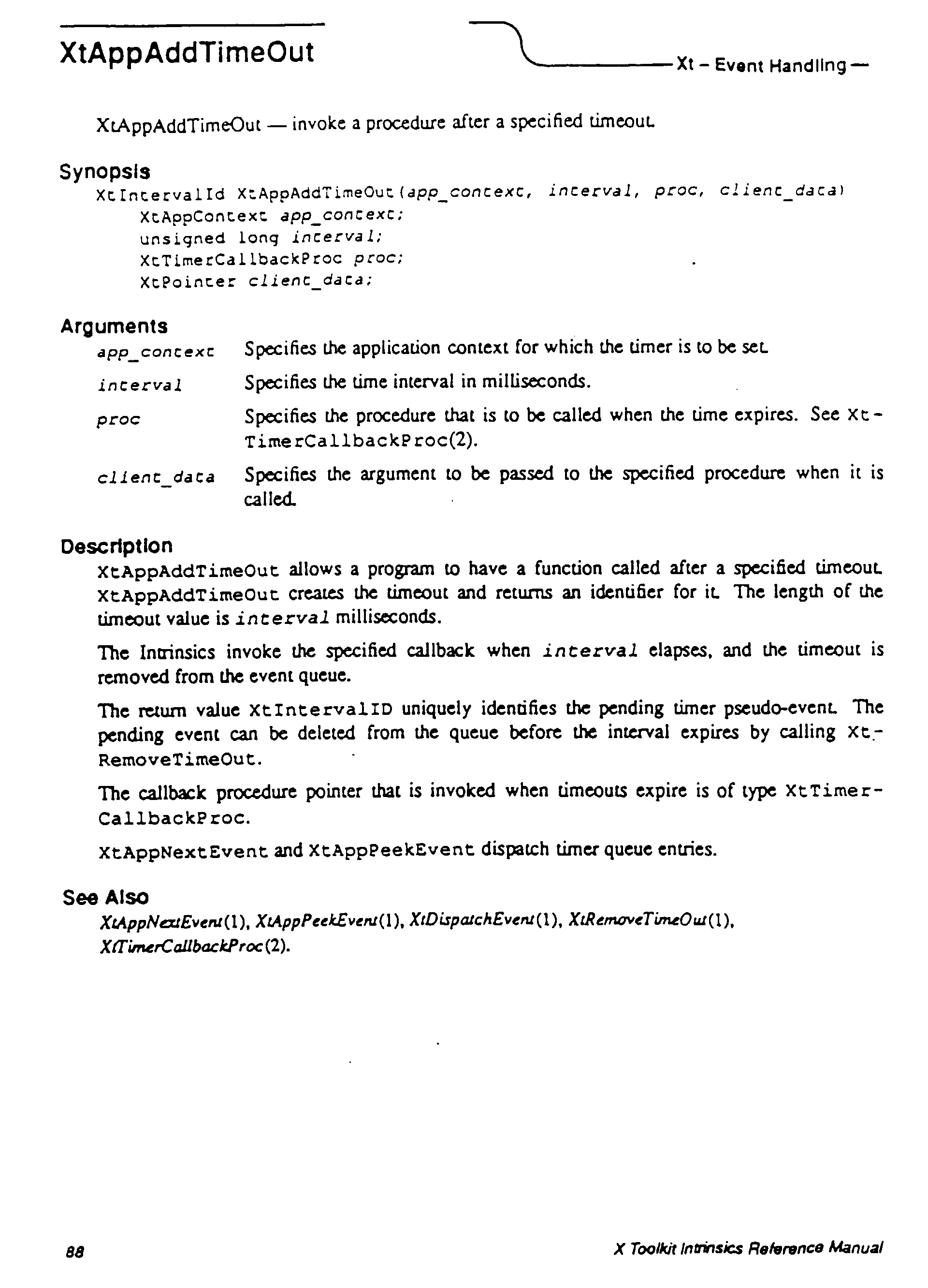

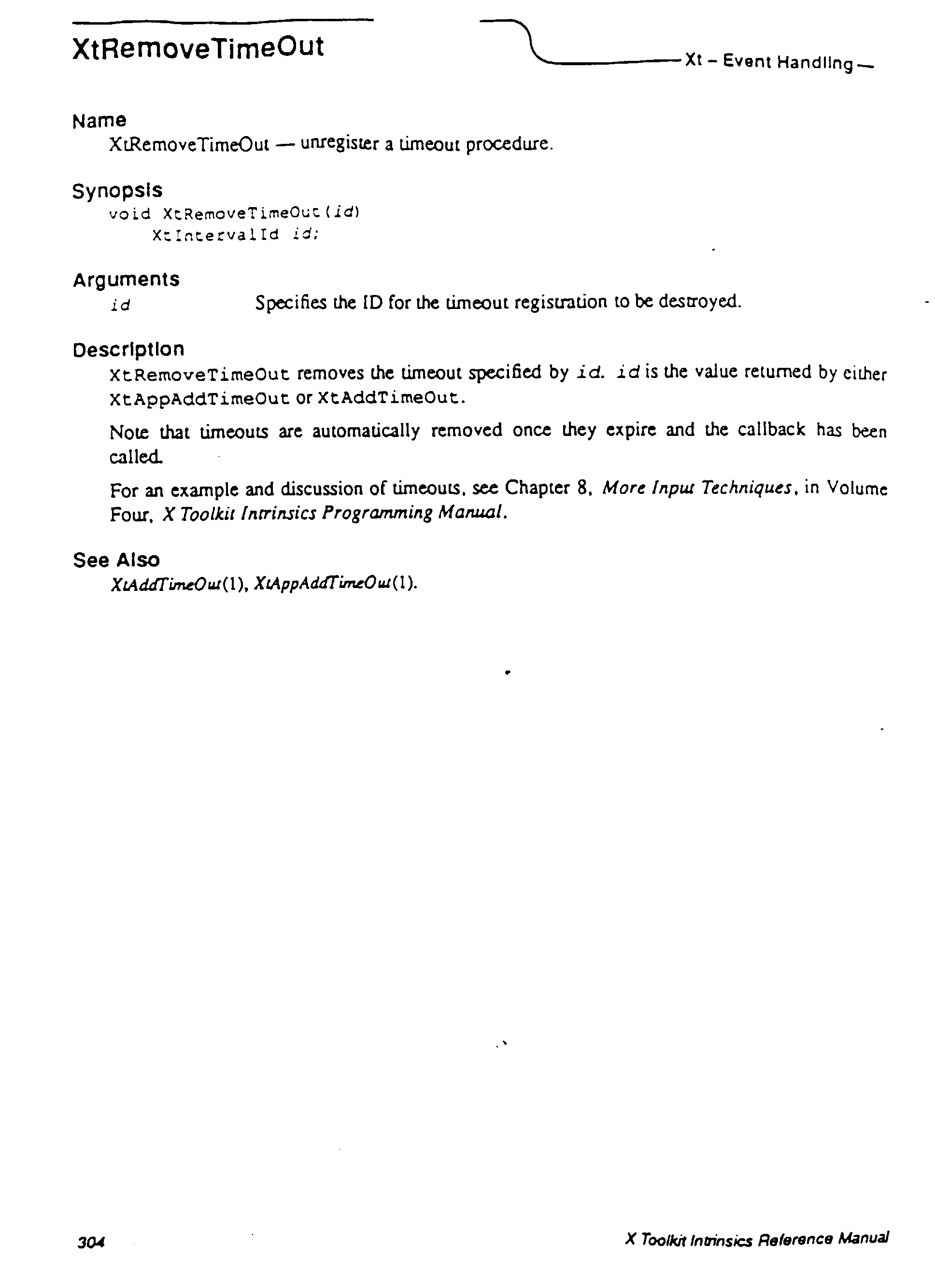

## Claims

1. A computer system comprising:
A. at least one applications program for performing predetermined processing operations, the applications program issuing WinSock socket calls;
B. a Unix operating system API for providing, in response to Unix socket calls, Unix socket services in connection with at least one socket connection to another computer system over a network; and
C. a WinSock socket driver for receiving WinSock socket calls from said applications program and emulating said WinSock socket calls in connection with Unix socket calls to said Unix operating system API.

2. A computer system as defined in claim 1 in which said Unix operating system API provides Unix socket services in a blockable pre-emptive multi-tasking manner.

3. A computer system as defined in claim 1 in which said WinSock socket driver emulates at least one WinSock socket call in a non-blockable non-pre-emptive multi-tasking manner.

4. A computer system as defined in claim 3 in which said WinSock socket driver emulates said at least one WinSock socket call in connection with a blockable Unix socket call, the blockable Unix socket call having a duration parameter specifying a duration over which a specified operation to be performed, the blockable Unix socket call blocking other operations for the duration, the WinSock socket driver including:
A. a timer for enabling generation of a timing indication at the end of a timing interval corresponding to the duration specified by the duration parameter;
B. a blockable call issuer for issuing the blockable Unix socket call with a duration parameter specifying an instantaneous duration thereby enabling the specified operation to be performed instantaneously; and
C. a non-blockable iteration control element for, in a series of iterations, enabling the blockable call issuer to issue the blockable call until the timer generates the timing indication, the non-blockable control element being non-pre-emptively interruptible during each iteration while the blockable call is not being executed thereby to facilitate emulation of the WinSock socket call in a non-blockable manner.

5. A computer system as defined in claim 4, the WinSock socket driver operating in connection with a pre-emptive multi-tasking operating system program which provides a timer call, the timer enabling generation of the timing indication by using the timer call with a timer call duration corresponding to the duration specified by the duration parameter.

6. A computer system as defined in claim 5 in which the pre-emptive multi-tasking operating system program is the Unix operating system program with XWindows extensions.

7. A computer system as defined in claim 6 in which the timer call comprises the XWindows XtAppAddTimeOut() call.

8. A computer system as defined in claim 4, in which the computer system establishes socket network connections with at least one other computer over a network, the applications program using the non-blockable call to obtain information as to the status ofa said network socket connection.

9. A computer system as defined in claim 8 in which blockable call provides information as to a said network socket connection.

10. A computer system as defined in claim 4 in which the WinSock socket call is a WinSock Synchronous Select call, and the blockable Unix socket call is a Unix Synchronous Select call.

11. A computer system as defined in claim 3 in which said WinSock socket driver emulates said at least one WinSock socket call in connection with a non-blockable Unix/XWindows extension call for determining the occurrence ofa predetermined event, as determined by the WinSock socket call, in said computer system, the WinSock socket driver including:
A. a call issuer for issuing the non-blockable Unix/XWindows extension call and providing a call acknowledgment to the applications program; and
B. a response receiver for later receiving a response from the Unix/XWindows extension call and providing the response to the applications program
thereby to provide that the computer system executes the WinSock socket call in a non-blocking manner.

12. A computer system as defined in claim 11 in which said non-blockable Unix/XWindows extension call comprises an XtAppAddInput() call.

13. A method of operating a computer system, comprising the steps of:
A. enabling at least one applications program to performs predetermined processing operations, the applications program issuing WinSock socket calls;
B. emulating the WinSock socket calls to generate Unix socket calls; and
C. enabling a Unix operating system API to provide, in response to Unix socket calls, Unix socket services in connection with at least one socket connection to another computer system over a network.

14. A method as defined in claim 13 in which said Unix socket calls operate in a blockable pre-emptive multi-tasking manner.

15. A method as defined in claim 13 in which at least one said WinSock socket call is emulated in a non-blockable non-pre-emptive multi-tasking manner.

16. A method as defined in claim 15 in which said at least one WinSock socket call is emulated in connection with a blockable Unix socket call, the blockable Unix socket call having a duration parameter specifying a duration over which a specified operation to be performed, the blockable Unix socket call blocking other operations for the duration, the WinSock socket call being emulated in accordance with the steps of:
A. enabling generation ofa timing indication at the end of a timing interval corresponding to the duration specified by the duration parameter;
B. issuing the blockable Unix socket call with a duration parameter specifying an instantaneous duration thereby enabling the specified operation to be performed instantaneously; and
C. in a series of iterations, enabling the blockable call issuer to issue the blockable call until the timer generates the timing indication, the non-blockable control element being non-pre-emptively interruptible during each iteration while the blockable call is not being executed thereby to facilitate emulation of the WinSock socket call in a non-blockable manner.

17. A method as defined in claim 16, in which the emulation step is performed in connection with a pre-emptive multi-tasking operating system program which provides a timer call, the generation of the timing indication being enabled by using the timer call with a timer call duration corresponding to the duration specified by the duration parameter.

18. A method as defined in claim 17 in which the pre-emptive multi-tasking operating system program is the Unix operating system program with XWindows extensions.

19. A method as defined in claim 18 in which the timer call comprises the XWindows XtAppAddTimeOut() call.

20. A method as defined in claim 16, in which the computer system establishes socket network connections with at least one other computer over a network, the non-blockable call being used to obtain information as to the status of a said network socket connection.

21. A method as defined in claim 20 in which blockable call provides information as to a said network socket connection.

22. A method as defined in claim 16 in which the WinSock socket call is a WinSock Synchronous Select call, and the blockable Unix socket call is a Unix Synchronous Select call.

23. A method as defined in claim 15 in which said at least one WinSock socket call is emulated in connection with a non-blockable Unix/XWindows extension call for determining the occurrence of a predetermined event, as determined by the WinSock socket call, in said computer system, the WinSock socket driver including:
A. issuing the non-blockable Unix/XWindows extension call and providing a call acknowledgment to the applications program; and
B. later receiving a response from the Unix/XWindows extension call and providing the response to the applications program;
thereby to provide that the computer system executes the WinSock socket call in a non-blocking manner.

24. A method as defined in claim 23 in which said non-blockable Unix/XWindows extension call comprises an XtAppAddInput() call.

25. A WinSock socket driver for use in connection with a Unix operating system API, the WinSock socket driver receiving WinSock socket calls from an applications program and emulating them using calls to the Unix operating system API, the WinSock socket driver including:
A. a WinSock call verification element for, in response to receipt of a WinSock call from said applications program, verifying the emulatability of the received WinSock call,
B. an emulation element for issuing predetermined Unix operating system API calls as determined by the received WinSock call, and receiving responses generated in response to said Unix operating system API calls;
C. a response generation element for generating a response to said WinSock socket driver call for provision to said applications program.

26. A WinSock socket driver as defined in claim 25 in which said WinSock call verification element, in verifying the emulatabililty of the received WinSock call, verifies any parameters provided in the call.

27. A WinSock socket driver as defined in claim 25 in which said WinSock socket driver emulates said at least one WinSock socket call in connection with a blockable Unix socket call, the blockable Unix socket call having a duration parameter specifying a duration over which a specified operation to be performed, the blockable Unix socket call blocking other operations for the duration, the WinSock socket driver including:
A. a timer for enabling generation of a timing indication at the end of a timing interval corresponding to the duration specified by the duration parameter;
B. a blockable call issuer for issuing the blockable Unix socket call with a duration parameter specifying an instantaneous duration thereby enabling the specified operation to be performed instantaneously; and
C. a non-blockable iteration control element for, in a series of iterations, enabling the blockable call issuer to issue the blockable call until the timer generates the timing indication, the non-blockable control element being non-pre-emptively interruptible during each iteration while the blockable call is not being executed thereby to facilitate emulation of the WinSock socket call in a non-blockable manner.

28. A WinSock socket driver as defined in claim 27, the WinSock socket driver operating in connection with a pre-emptive multi-tasking operating system program which provides a timer call, the timer enabling generation of the timing indication by using the timer call with a timer call duration corresponding to the duration specified by the duration parameter.

29. A WinSock socket driver as defined in claim 28 in which the pre-emptive multi-tasking operating system program is the Unix operating system program with XWindows extensions.

30. A WinSock socket driver as defined in claim 29 in which the timer call comprises the XWindows XtAppAddTimeOut() call.

31. A WinSock socket driver as defined in claim 27, in which the computer system establishes socket network connections with at least one other computer over a network, the applications program using the non-blockable call to obtain information as to the status of a said network socket connection.

32. A WinSock socket driver as defined in claim 31 in which blockable call provides information as to a said network socket connection.

33. A WinSock socket driver as defined in claim 27 in which the WinSock socket call is a WinSock Synchronous Select call, and the blockable Unix socket call is a Unix Synchronous Select call.

34. A WinSock socket driver as defined in claim 26 in which said WinSock socket driver emulates said at least one WinSock socket call in connection with a non-blockable Unix/XWindows extension call for determining the occurrence of a predetermined event, as determined by the WinSock socket call, in said computer system, the WinSock socket driver including:
A. a call issuer for issuing the non-blockable Unix/XWindows extension call and providing a call acknowledgment to the applications program; and
B. a response receiver for later receiving a response from the Unix/XWindows extension call and providing the response to the applications program
thereby to provide that the computer system executes the WinSock socket call in a non-blocking manner.

35. A WinSock socket driver as defined in claim 34in which said non-blockable Unix/XWindows extension call comprises an XtAppAddInput() call.

36. A method for emulating WinSock socket calls from an applications program in connection with a Unix operating system API, the method including the steps of:
A. verifying, in response to receipt of a WinSock call from said applications program, the emulatability of the received WinSock call,
B. issuing predetermined Unix operating system API calls as determined by the received WinSock call, and receiving responses generated in response to said Unix operating system API calls;
C. generating a response to said WinSock socket driver call for provision to said applications program.

37. A method as defined in claim 36 in which, during the verification step, any parameters provided in the call are verified.

38. A method as defined in claim 36 in which at least one said WinSock socket call is emulated in a non-blockable non-pre-emptive multi-tasking manner.

39. A method as defined in claim 38 in which said at least one WinSock socket call is emulated in connection with a blockable Unix socket call, the blockable Unix socket call having a duration parameter specifying a duration over which a specified operation to be performed, the blockable Unix socket call blocking other operations for the duration, the WinSock socket call being emulated in accordance with the steps of:
A. enabling generation ofa timing indication at the end of a timing interval corresponding to the duration specified by the duration parameter;
B. issuing the blockable Unix socket call with a duration parameter specifying an instantaneous duration thereby enabling the specified operation to be performed instantaneously; and
C. in a series of iterations, enabling the blockable call issuer to issue the blockable call until the timer generates the timing indication, the non-blockable control element being non-pre-emptively interruptible during each iteration while the blockable call is not being executed thereby to facilitate emulation of the WinSock socket call in a non-blockable manner.

40. A method as defined in claim 39 in which the emulation step is performed in connection with a pre-emptive multi-tasking operating system program which provides a timer call, the generation of the timing indication being enabled by using the timer call with a timer call duration corresponding to the duration specified by the duration parameter.

41. A method as defined in claim 40 in which the pre-emptive multi-tasking operating system program is the Unix operating system program with XWindows extensions.

42. A method as defined in claim 41 in which the timer call comprises the XWindows XtAppAddTimeOut() call.

43. A method as defined in claim 39, in which the computer system establishes socket network connections with at least one other computer over a network, the non-blockable call being used to obtain information as to the status ofa said network socket connection.

44. A method as defined in claim 43 in which blockable call provides information as to a said network socket connection.

45. A method as defined in claim 39 in which the WinSock socket call is a WinSock Synchronous Select call, and the blockable Unix socket call is a Unix Synchronous Select call.

46. A method as defined in claim 38 in which said at least one WinSock socket call is emulated in connection with a non-blockable Unix/XWindows extension call for determining the occurrence of a predetermined event, as determined by the WinSock socket call, in said computer system, the WinSock socket driver including:
A. issuing the non-blockable Unix/XWindows extension call and providing a call acknowledgment to the applications program; and
B. later receiving a response from the Unix/XWindows extension call and providing the response to the applications program;
thereby to provide that the computer system executes the WinSock socket call in a non-blocking manner.

47. A method as defined in claim 46 in which said non-blockable Unix/XWindows extension call comprises an XtAppAddInputO call.

48. For use in connection with a computer, a non-pre-emptive multi-tasking emulator for emulating a blockable call issued by an applications program, the blockable call having a duration parameter specifying a duration over which a specified operation to be performed, the blockable call blocking other operations for the duration, the emulator emulating the blockable call in a non-blocking manner, the emulator comprising;
A. a timer for enabling generation of a timing indication at the end of a timing interval corresponding to the duration specified by the duration parameter;
B. a blockable call issuer for issuing the blockable call with a duration parameter specifying an instantaneous duration thereby enabling the specified operation to be performed instantaneously; and
C. a non-blockable iteration control element for, in a series of iterations, enabling the blockable call issuer to issue the blockable call until the timer generates the timing indication, the non-blockable control element being non-pre-emptively interruptible during each iteration while the blockable call is not being executed.

49. An emulator as defined claim 48 in which the blockable call operates in a polling mode in which it performs the operation instantaneously and a non-polling mode in which it performs the operation over a selected period of time, the mode being indicated by the duration parameter, the blockable call issuer issuing the blockable call using the duration parameter which indicates the polling mode.

50. An emulator as defined in claim 48 in which the blockable call is executed by a pre-emptive multi-tasking operating system program.

51. An emulator as defined in claim 50 in which the pre-emptive multi-tasking operating system program is the Unix operating system program.

52. An emulator as defined in claim 48, the emulator operating in connection with a pre-emptive multi-tasking operating system program which provides a timer call, the timer enabling generation of the timing indication by using the timer call with a timer call duration corresponding to the duration specified by the duration parameter.

53. An emulator as defined in claim 52 in which the pre-emptive multi-tasking operating system program is the Unix operating system program with XWindows extensions.

54. An emulator as defined in claim 48 in which the computer establishes socket network connections with at least one other computer over a network, the applications program using the non-blockable call to obtain information as to the status of a said network socket connection.

55. An emulator as defined in claim 54 in which blockable call provides information as to a said network socket connection.

56. A method of controlling a computer to emulate, in a non-pre-emptive multi-tasking manner, a blockable call, the blockable call having a duration parameter specifying a duration over which a specified operation to be performed, the blockable call blocking other operations for the duration, the blockable call being emulated in a non-blocking manner, the method comprising the steps of:
A. enabling generation of a timing indication at the end of a timing interval corresponding to the duration specified by the duration parameter;
B. issuing the blockable call with a duration parameter specifying an instantaneous duration thereby enabling the specified operation to be performed instantaneously; and
C. in a series of iterations, enabling the issuance of the blockable call until the timing indication is generated, the operations being non-pre-emptively interruptible during each iteration while the blockable call is not being executed.

57. A method as defined claim 56 in which the blockable call operates in a polling mode in which it performs the operation instantaneously and a non-polling mode in which it performs the operation over a selected period of time, the mode being indicated by the duration parameter, the blockable call being issued using the duration parameter which indicates the polling mode.

58. A method as defined in claim 56 in which the blockable call is executed by a pre-emptive multi-tasking operating system program.

59. A method as defined in claim 58 in which the pre-emptive multi-tasking operating system program is the Unix operating system program.

60. A method as defined in claim 56, the method being performed in connection with a pre-emptive multi-tasking operating system program which provides a timer call, the timing indication by use of the timer call with a timer call duration corresponding to the duration specified by the duration parameter.

61. A method as defined in claim 60 in which the pre-emptive multi-tasking operating system program is the Unix operating system program with XWindows extensions.

62. A method as defined in claim 56, in which the computer establishes socket network connections with at least one other computer over a network, the applications program using the non-blockable call to obtain information as to the status of a said network socket connection.

63. A method as defined in claim 62 in which blockable call provides information as to a said network socket connection.
